(19) Europäisches Patentamt
European Patent Office
Office européen des brevets

(11) EP 3 878 282 A1

(12) **EUROPEAN PATENT APPLICATION**
published in accordance with Art. 153(4) EPC

(43) Date of publication:
**15.09.2021 Bulletin 2021/37**

(21) Application number: **19880090.6**

(22) Date of filing: **01.11.2019**

(51) Int Cl.:
*A01N 47/08* (2006.01) *A01M 1/00* (2006.01)
*A01N 37/24* (2006.01) *A01N 37/50* (2006.01)
*A01N 43/28* (2006.01) *A01N 43/36* (2006.01)
*A01N 43/40* (2006.01) *A01N 43/54* (2006.01)
*A01N 43/56* (2006.01) *A01N 43/60* (2006.01)
*A01N 43/653* (2006.01) *A01N 47/02* (2006.01)
*A01N 47/24* (2006.01) *A01P 3/00* (2006.01)
*A01P 5/00* (2006.01) *A01P 7/04* (2006.01)

(86) International application number:
**PCT/JP2019/042975**

(87) International publication number:
**WO 2020/091031 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.11.2018 JP 2018207711**

(71) Applicant: **Nihon Nohyaku Co., Ltd.**
**Tokyo 104-8386 (JP)**

(72) Inventors:
- **KATO, Yutaka**
  **Kaizuka-shi, Osaka 597-0062 (JP)**
- **TANAKA, Ryosuke**
  **Kawachinagano-shi, Osaka 586-0094 (JP)**

(74) Representative: **Lederer & Keller Patentanwälte Partnerschaft mbB**
**Unsöldstraße 2**
**80538 München (DE)**

# (54) PEST CONTROL AGENT COMPOSITION AND METHOD FOR USING SAME

(57) An object of the present invention is to provide novel means and method for efficiently controlling a harmful organism that is difficult to control by treatment with a single agrochemical compound. This object can be achieved by a harmful organism control composition comprising an active ingredient being a compound represented by the general formula (I):

[Chem. 1]

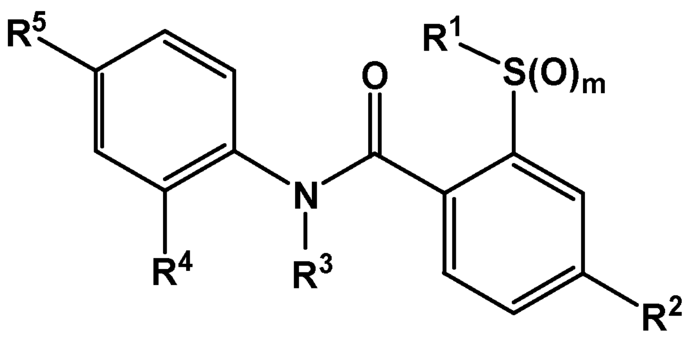

(I)

EP 3 878 282 A1

{wherein $R^1$ represents a $(C_1-C_6)$ alkyl group, $R^2$ represents a halogen atom, a halo $(C_1-C_6)$ alkyl group, or a $(C_3-C_6)$ cycloalkyl group, $R^3$ represents a hydrogen atom or a $(C_1-C_6)$ alkylcarbonyl group, $R^4$ represents a halogen atom, a $(C_1-C_6)$ alkoxy group, or a $(C_1-C_6)$ alkoxycarbonyl group, $R^5$ represents a halogen atom, a $(C_1-C_6)$ alkyl group, a halo $(C_1-C_6)$ alkyl group, a halo $(C_1-C_6)$ alkoxy group, or a $(C_3-C_6)$ cycloalkyl group, and m represents 0, 1, or 2} or a salt thereof; and another active ingredient being one or more other compounds having harmful organism control activity or salts thereof as well as by a method for using the harmful organism control composition.

## Description

### TECHNICAL FIELD

The present invention relates to a harmful organism control composition comprising a first active ingredient which is a compound represented by the general formula (I) shown below or a salt thereof and a second active ingredient which is one or more other compounds having harmful organism control activity, particularly an agricultural and horticultural microbicidal composition, and a method for using the same.

### BACKGROUND ART

The compound which is used as an active ingredient of the present invention and represented by the general formula (I) is reported to an agricultural and horticultural microbicide particularly useful for controlling powdery mildew (see Patent Literature 1, Patent Literature 2, and Patent Literature 3). However, the mode of action by which the compound of the general formula (I) exerts the effect is unknown. Many compounds and active ingredients are known as harmful organism control agents (insecticides, microbicides, herbicides, plant growth regulators, biopesticides, etc.) (see e.g., Non Patent Literature 1 and Non Patent Literature 2). However, it is unknown that specific combinations of the compound of the present invention represented by the general formula (I) and one or more active ingredients having harmful organism control activity etc. produce excellent effect and synergistic effect.

### CITATION LIST

#### Patent Literature

Patent Literature 1: WO 2015/072463
Patent Literature 2: WO 2016/182021
Patent Literature 3: JP-A 2017-226638

#### Non Patent Literature

Non Patent Literature 1:
The Pesticide Manual 17th Edition (British Crop Production Council, 2015)
Non Patent Literature 2:
The IR-4 Project Biopesticide and Organic Database for Integrated Pest Management URL: http://ir4app.rutgers.edu/biopestPub/labelResult2.aspx

### SUMMARY OF INVENTION

#### TECHNICAL PROBLEM

Various kinds of harmful organism control agents are used in the cultivation of agricultural produces. However, effective control may be hindered, for example, due to the variation in control efficacy depending on the kind, growth stage, habitat characteristics and the like of the harmful organism, to the development of pesticide resistance, and to the limitation on the amount and frequency of pesticide use for control. Therefore, there is a need for novel means and method for efficiently controlling harmful organisms that is conventionally impossible or difficult to control or for preventing the development of pesticide resistance and the reduction in control efficiency. Accordingly, an object of the the present invention is to provide a novel harmful organism control composition that is highly effective in controlling various kinds of harmful organisms.

#### SOLUTION TO PROBLEM

The present inventors conducted extensive research to achieve the above-mentioned object. As a result, the present inventors found that a combined use of the compound represented by the general formula (I) or a salt thereof and one or more other compounds having harmful organism control activity can efficiently control various kinds of harmful

organisms and does not cause inconveniences such as reduction in efficacy of individual active ingredients, destabilization of the composition, increase in unwanted effects on living organisms unrelated to the target disease (e.g., phytotoxicity to crops, increased toxicity for living organisms unrelated to the target disease, etc.). Based on this finding, the present inventors completed the present invention.

That is, the present invention relates to the following.

[1] A harmful organism control composition comprising:

a first active ingredient being a compound represented by general formula (I):

[Chem. 1]

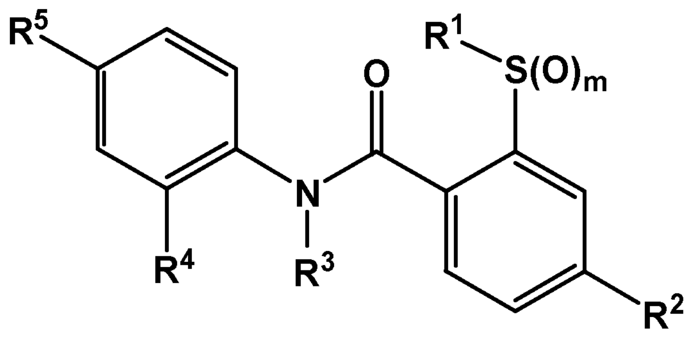

(I)

{wherein

$R^1$ represents a $(C_1-C_6)$ alkyl group,
$R^2$ represents a halogen atom, a halo $(C_1-C_6)$ alkyl group, or a $(C_3-C_6)$ cycloalkyl group,
$R^3$ represents a hydrogen atom, a $(C_1-C_6)$ alkylcarbonyl group, a $(C_1-C_6)$ alkoxycarbonyl group, or a $(C_3-C_6)$ cycloalkylcarbonyl group,
$R^4$ represents a halogen atom, a $(C_1-C_6)$ alkoxy group, or a $(C_1-C_6)$ alkoxycarbonyl group,
$R^5$ represents a halogen atom, a $(C_1-C_6)$ alkyl group, a halo $(C_1-C_6)$ alkyl group, a halo $(C_1-C_6)$ alkoxy group, or a $(C_3-C_6)$ cycloalkyl group, and
m represents an integer of 0, 1, or 2}, or

a salt thereof; and
a second active ingredient being one or more other compounds having harmful organism control activity or salts thereof.

[2] The harmful organism control composition according to the above [1], wherein the first active ingredient is the compound of general formula (I) or a salt thereof wherein $R^1$ represents a $(C_1-C_6)$ alkyl group, $R^2$ represents a halogen atom or a halo $(C_1-C_6)$ alkyl group, $R^3$ represents a hydrogen atom or a $(C_1-C_6)$ alkylcarbonyl group, $R^4$ represents a halogen atom or a $(C_1-C_6)$ alkoxycarbonyl group, $R^5$ represents a halo $(C_1-C_6)$ alkyl group or a halo $(C_1-C_6)$ alkoxy group, and m represents 2.
[3] The harmful organism control composition according to the above [1] or [2], wherein the first active ingredient is the compound of general formula (I) or a salt thereof wherein $R^2$ represents a halo $(C_1-C_6)$ alkyl group, and $R^5$ represents a halo $(C_1-C_6)$ alkoxy group.
[4] The harmful organism control composition according to any one of the above [1] to [3], wherein the one or more other compounds having harmful organism control activity or salts thereof are one or more compounds having insecticidal activity or salts thereof.
[5] The harmful organism control composition according to any one of the above [1] to [3], wherein the one or more other compounds having harmful organism control activity or salts thereof are one or more compounds having microbicidal activity or salts thereof.
[6] The harmful organism control composition according to any one of the above [1] to [3], wherein the one or more other compounds having harmful organism control activity or salts thereof are one or more biopesticides.
[7] The harmful organism control composition according to any one of the above [1] to [6], wherein the amount of

the one or more other compounds having harmful organism control activity is 0.01 to 5000 parts by mass relative to 1 part by mass of the compound represented by general formula (I) or a salt thereof.

[8] A method for using a harmful organism control composition, the method comprising treating a harmful organism, a useful plant, a seed of the useful plant, soil, or growing medium with an effective amount of the harmful organism control composition according to any one of the above [1] to [7] to protect the useful plant from the harmful organism.

[9] A method for controlling a harmful organism, the method comprising applying an effective amount of the harmful organism control composition according to any one of the above [1] to [7] to a crop, a seed of the crop, soil, or growing medium.

ADVANTAGEOUS EFFECTS OF INVENTION

The harmful organism control composition of the present invention is effective for a broader range of diseases, pests and/or weed species to be controlled, is advantageous in that the amount of the first and/or second active ingredients used can be reduced, produces a significant efficacy even though the individual amounts of the active ingredients are smaller than their respective effective amounts, and is capable of significantly controlling harmful organisms that are impossible to control by each individual active ingredient alone and in controlling pesticide-resistant harmful organisms.

DESCRIPTION OF EMBODIMENTS

(i) Compound represented by general formula (I)

The compound represented by the general formula (I), which is a first active ingredient of the present invention, is a compound described in Patent Literature 1, 2, and 3 and can be produced by the methods described in the literature.

In the definition of the compound represented by the general formula (I) or a salt thereof, "halo" refers to a "halogen atom" and represents a chlorine atom, a bromine atom, an iodine atom, or a fluorine atom.

The "($C_1$-$C_6$) alkyl group" refers to a straight-chain or branched-chain alkyl group of 1 to 6 carbon atoms, for example, a methyl group, an ethyl group, a n-propyl group, an isopropyl group, a n-butyl group, an isobutyl group, a sec-butyl group, a tert-butyl group, a n-pentyl group, an isopentyl group, a tert-pentyl group, a neopentyl group, a 2,3-dimethylpropyl group, an 1-ethylpropyl group, a 1-methylbutyl group, a 2-methylbutyl group, a n-hexyl group, an isohexyl group, a 2-hexyl group, a 3-hexyl group, a 2-methylpentyl group, a 3-methylpentyl group, a 1,1,2-trimethyl propyl group, a 3,3-dimethylbutyl group, or the like. The "($C_1$-$C_6$) alkoxy group" refers to a straight-chain or branched-chain alkoxy group of 1 to 6 carbon atoms, for example, a methoxy group, an ethoxy group, a n-propoxy group, an isopropoxy group, a n-butoxy n-butoxy group, a sec-butoxy group, a tert-butoxy group, a n-pentyloxy group, an isopentyloxy group, a tert-pentyloxy group, a neopentyloxy group, a 2, 3-dimethylpropyloxy group, an 1-ethylpropyloxy group, a 1-methylbutyloxy group, a n-hexyloxy group, an isohexyloxy group, a 1, 1, 2-trimethylpropyloxy group, or the like.

The "($C_1$-$C_6$) alkylcarbonyl group" refers to, for example, an acetyl group, an ethylcarbonyl group, or a n-propylcarbonyl group. The "($C_1$-$C_6$) alkoxycarbonyl group" refers to a straight-chain or branched alkoxycarbonyl group, for example, a methoxycarbonyl group, an ethoxycarbonyl group, a propyloxycarbonyl group, a hexyloxycarbonyl group, or the like. The "($C_3$-$C_6$) cycloalkyl group" refers to a cyclic alkyl group of 3 to 6 carbon atoms, for example, a cyclopropyl group, a cyclobutyl group, a cyclopentyl group, a cyclohexyl group, or the like.

The above-mentioned " ($C_1$-$C_6$) alkyl group", " ($C_1$-$C_6$) alkoxy group", " ($C_1$-$C_6$) alkylcarbonyl group", " ($C_1$-$C_6$) alkoxycarbonyl group", and " ($C_3$-$C_6$) cycloalkyl group" may be substituted with one or more halogen atoms at a substitutable position(s), and in the case where any of the above-listed groups is substituted with two or more halogen atoms, the halogen atoms may be the same or different. The above-mentioned groups substituted with one or more halogen atoms are expressed as a "halo ($C_1$-$C_6$) alkyl group", a "halo ($C_1$-$C_6$) alkoxy group", a "halo ($C_1$-$C_6$) alkylcarbonyl group", a "halo ($C_1$-$C_6$) alkoxycarbonyl group", and a "halo ($C_3$-$C_6$) cycloalkyl group". The expressions " ($C_1$-$C_6$) ", " ($C_1$-$C_6$) ", " ($C_3$-$C_6$) ", etc. each represent the range of the number of carbon atoms in each group. The ($C_1$-$C_6$) alkylcarbonyl group is a group in which a ($C_1$-$C_6$) alkyl group is bound to a carbonyl group. The ($C_1$-$C_6$) alkoxycarbonyl group is a group in which a ($C_1$-$C_6$) alkoxy group is bound to a carbonyl group.

Examples of the salt of the compound represented by the general formula (I) used in the present invention include inorganic acid salts, such as hydrochlorides, sulfates, nitrates and phosphates; organic acid salts, such as acetates, fumarates, maleates, oxalates, methanesulfonates, benzenesulfonates and p-toluenesulfonates; and salts with an inorganic or organic base such as a sodium ion, a potassium ion, a calcium ion and a trimethylammonium ion.

Specific examples of the compound of the present invention represented by the general formula (I) are shown in Tables 1 and 2. In the tables, Me stands for a methyl group, Et stands for an ethyl group, and Ac stands for an acetyl group. Shown in the column of "Physical property value" is a melting point (°C) or "NMR". NMR data are shown in Table 2. The compound of the present invention represented by the general formula (I) is not limited to the following specific examples.

[Chem. 4]

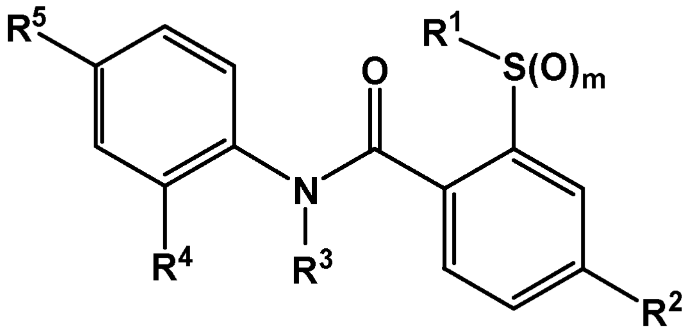

(I)

In the above formula (I), $R^1$ represents an ethyl group, and m represents 2.

[Table 1]

Table 1

| Compound No. | $R^2$ | $R^3$ | $R^4$ | $R^5$ | Physical property value Melting temperature (°C) |
|---|---|---|---|---|---|
| 1-1 | $CF_3$ | Ac | Cl | $CF_3$ | 62-64 |
| 1-2 | $CF_3$ | Ac | Cl | $CF(CF_3)_2$ | 156-157 |
| 1-3 | $CF_3$ | Ac | Cl | $OCF_3$ | 49-50 |
| 1-4 | $CF_3$ | Ac | Br | $CF_3$ | 110-112 |
| 1-5 | $CF_3$ | Ac | Br | $OCF_3$ | 96-97 |
| 1-6 | $CF_3$ | Ac | $CO_2Me$ | $CF(CF_3)_2$ | 150-151 |
| 1-7 | $CF_3$ | Ac | $CO_2Me$ | $OCF_3$ | NMR |
| 1-8 | Br | H | $CO_2Me$ | $CF(CF_3)_2$ | 148-150 |

[Table 2]

Table 2 $^1$H-NMR Data

| Compound No. | $^1$H-NMR [$CDCl_3$/TMS, $\delta$ (ppm)] |
|---|---|
| 1-7 | 8.21 (s, 1H), 7.96(d, 1H), 7.87(d, 1H), 7.77(d, 1H), 7.67(d, 1H), 7.51 (s, 1H),3.97(s, 3H), 3.29(q, 2H), 2.06(s, 3H), 1.31(t, 3H) |

(ii) Active ingredient having harmful organism control activity

The active ingredient having harmful organism control activity, which is a second active ingredient of the present invention, refers to, for example, a compound having insecticidal activity, a compound having microbicidal activity, a compound having herbicidal activity, or a biopesticide having agrochemical activity, or salts thereof. Examples of the compound having insecticidal activity include compounds having acaricidal activity and/or nematicidal activity, but are not limited thereto. Preferable examples of the biopesticide having agrochemical activity include living organisms for agrochemical use or utilization and/or proteins and secondary metabolites produced by such organisms, but are not limited thereto. These are known agrochemicals that are marketed domestically and abroad or described in Non Patent

Literature 1 and 2 and Patent Literature 2. These can be obtained commercially or produced according to the literature. The compound having harmful organism control activity used as the second active ingredient includes its salt that is acceptable as a harmful organism control agent. The salt is not particularly limited as long as it is acceptable as a harmful organism control agent. Acid or basic salts can be selected as appropriate according to the chemical structure. Examples of the acid salt include inorganic or organic acids, such as hydrochlorides, sulfates, nitrates, formates, acetates, trifluoroacetates, methanesulfonates, trifluoromethanesulfonates, and p-toluenesulfonates. Examples of the basic salt include ammonium salts, amine salts, isopropylamine salts, potassium salts, calcium salts, and sodium salts.

Active ingredient group A

Examples of the compound having insecticidal activity (hereinafter referred to as active ingredient group A) include (A-001) 3,5-xylyl methylcarbamate (XMC), (A-002) fenobucarb (BPMC), (A-003) Bt-toxin insecticidal compounds, (A-004) chlorfenson (CPCBS), (A-005) dichlorodiisopropyl ether (DCIP), (A-006) D-D (1,3-dichloropropene), (A-007) dichlorodiphenyltrichloroethane (DDT), (A-008) 1-naphthyl methylcarbamate (NAC), (A-009) O-4-dimethylsulfamoylphenyl O,O-diethyl phosphorothioate (DSP), (A-010) O-ethyl O-4-nitrophenyl phenylphosphonothioate (EPN), (A-011) tripropylisocyanurate (TPIC), (A-012) acrinathrin, (A-013) azadirachtin, (A-014) acynonapyr, (A-015) azinphos-methyl, (A-016) acequinocyl, (A-017) acetamiprid, (A-018) acetoprole, (A-019) acephate, (A-020) abamectin, (A-021) afidopyropen,

(A-022) avermectin-B, (A-023) amidoflumet, (A-024) amitraz, (A-025) alanycarb, (A-026) aldicarb, (A-027) aldoxycarb, (A-028) aldrin, (A-029) alpha-endosulfan, (A-030) alpha-cypermethrin, (A-031) albendazole, (A-032) allethrin, (A-033) isazofos, (A-034) isamidofos, (A-035) isoamidofos, (A-036) isoxathion, (A-037) isocycloseram, (A-038) isofenphos, (A-039) isoprocarb (MIPC), (A-040) epsilon-metofluthrin, (A-041) epsilon-momfluorothrin, (A-042) ivermectin, (A-043) imicyafos, (A-044) imidacloprid, (A-045) imiprothrin, (A-046) indoxacarb, (A-047) esfenvalerate, (A-048) ethiofencarb, (A-049) ethion, (A-050) ethiprole, (A-051) etoxazole, (A-052) ethofenprox, (A-053) ethoprophos, (A-054) etrimfos, (A-055) emamectin, (A-056) emamectin-benzoate, (A-057) endosulfan, (A-058) empenthrin, (A-059) oxazosulfyl, (A-060) oxamyl, (A-061) oxydemeton-methyl, (A-062) oxydeprofos (ESP), (A-063) oxibendazole, (A-064) oxfendazole, (A-065) potassium oleate, (A-066) sodium oleate, (A-067) cadusafos, (A-068) kappa-bifenthrin, (A-069) cartap, (A-070) carbaryl, (A-071) carbosulfan, (A-072) carbofuryl, (A-073) gamma-cyhalothrin, (A-074) xylylcarb, (A-075) quinalphos, (A-076) kinoprene, (A-077) chinomethionat, (A-078) cloethocarb, (A-079) clothianidin, (A-080) clofentezine, (A-081) chromafenozide, (A-082) chlorantraniliprole, (A-083) chlorethoxyfos, (A-084) chlordimeform, (A-085) chlordane, (A-086) chlorpyrifos, (A-087) chlorpyrifos-methyl, (A-088) chlorphenapyr, (A-089) chlorfenson, (A-090) chlorfenvinphos, (A-091) chlorfluazuron, (A-092) chlorobenzilate, (A-093) chlorobenzoate, (A-094) chloroprallethrin, (A-095) kelthane (dicofol), (A-096) salithion, (A-097) cyhalodiamide, (A-098) cyanophos (CYAP), (A-099) diafenthiuron, (A-100) diamidafos, (A-101) cyantraniliprole, (A-102) theta-cypermethrin, (A-103) dienochlor, (A-104) cyenopyrafen, (A-105) dioxabenzofos, (A-106) diofenolan, (A-107) sigma-cypermethrin, (A-108) cyclaniliprole, (A-109) dichlofenthion (ECP), (A-110) cycloprothrin, (A-111) dichlorvos (DDVP), (A-112) dicloromezotiaz, (A-113) disulfoton, (A-114) dinotefuran, (A-115) cyhalodiamide,
(A-116) cyhalothrin, (A-117) cyphenothrin, (A-118) cyfluthrin, (A-119) diflubenzuron, (A-120) cyflumetofen, (A-121) diflovidazin, (A-122) cyhexatin, (A-123) cypermethrin, (A-124) dimethylvinphos, (A-125) dimethoate, (A-126) dimefluthrin, (A-127) silafluofen, (A-128) cyromazine, (A-129) spinetoram, (A-130) spinosad, (A-131) spirodiclofen, (A-132) spirotetramat, (A-133) spiropidion, (A-134) spiromesifen, (A-135) sulfluramid, (A-136) sulprofos, (A-137) sulfoxaflor, (A-138) zeta-cypermethrin, (A-139) diazinon, (A-140) tau-fluvalinate, (A-141) dazomet, (A-142) thiacloprid, (A-143) thiamethoxam, (A-144) tioxazafen, (A-145) thiodicarb, (A-146) thiocyclam, (A-147) thiosultap, (A-148) thiosultap-sodium, (A-149) thionazin, (A-150) thiometon, (A-151) deet, (A-152) dieldrin, (A-153) tetrachlorantraniliprole, (A-154) tyclopyrazoflor, (A-155) tetrachlorvinphos, (A-156) tetradifon, (A-157) tetraniliprole, (A-158) tetramethylfluthrin, (A-159) tetramethrin, (A-160) tebupirimfos, (A-161) tebufenozide, (A-162) tebufenpyrad, (A-163) tefluthrin, (A-164) teflubenzuron, (A-165) demeton-S-methyl, (A-166) temephos, (A-167) deltamethrin, (A-168) terbufos,
(A-169) doramectin, (A-170) tralopyril, (A-171) tralomethrin, (A-172) transfluthrin, (A-173) triazamate, (A-174) triazuron, (A-175) trichlamide, (A-176) trichlorphon (DEP), (A-177) triflumezopyrium, (A-178) triflumuron, (A-179) tolfenpyrad, (A-180) naled (BRP), (A-181) nithiazine, (A-182) nitenpyram, (A-183) novaluron, (A-184) noviflumuron, (A-185) hydroprene, (A-186) vaniliprole, (A-187) vamidothion, (A-188) parathion, (A-189) parathion-methyl, (A-190) halfenprox, (A-191) halofenozide, (A-192) bistrifluron, (A-193) bisultap, (A-194) hydramethylnon, (A-195) hydroxy propyl starch, (A-196) binapacryl, (A-197) pyflubumide, (A-198) bifenazate, (A-199) bifenthrin, (A-200) pymetrozine, (A-201) pyraclorfos, (A-202) pyrafluprole, (A-203) pyridafenthion, (A-204) pyridaben, (A-205) pyridalyl, (A-206) pyrifluquinazon, (A-207) pyriprole, (A-208) pyriproxyfen, (A-209) pirimicarb, (A-210) pyrimidifen, (A-211) pyriminostrobin, (A-212) pirimiphos-methyl, (A-213) pyrethrins, (A-214) fipronil, (A-215) fenazaquin, (A-216) fenamiphos, (A-217) bromopropylate, (A-218) fenitrothion (MEP), (A-219) fenoxycarb, (A-220) fenothiocarb,
(A-221) phenothrin, (A-222) fenobucarb, (A-223) fensulfothion, (A-224) fenthion (MPP), (A-225) phenthoate (PAP),

(A-226) fenvalerate, (A-227) fenpyroximate, (A-228) fenpropathrin, (A-229) fenbendazole, (A-230) fosthiazate, (A-231) formetanate, (A-232) butathiofos, (A-233) buprofezin, (A-234) furathiocarb, (A-235) prallethrin, (A-236) fluacrypyrim, (A-237) fluazaindolizine, (A-238) fluazinam, (A-239) fluazuron, (A-240) fluensulfone, (A-241) fluxametamide, (A-242) flucycloxuron, (A-243) flucythrinate, (A-244) fluvalinate, (A-245) flupyradifurone, (A-246) flufiprole, (A-247) flupyradifurone, (A-248) flupyrazofos, (A-249) flupyrimin, (A-250) flufenerim, (A-251) flufenoxystrobin, (A-252) flufenoxuron, (A-253) flufenzine, (A-254) flufenoprox, (A-255) fluproxyfen, (A-256) flubrocythrinate, (A-257) fluhexafon, (A-258) flubendiamide, (A-259) flumethrin, (A-260) flurimfen, (A-261) prothiofos, (A-262) protrifenbute, (A-263) flonicamid, (A-264) propaphos, (A-265) propargite (BPPS), (A-266) profenofos, (A-267) broflanilide, (A-268) profluthrin, (A-269) propoxur (PHC), (A-270) flometoquin,

(A-271) alpha-bromadiolone, (A-272) bromopropylate, (A-273) beta-cyfluthrin, (A-274) hexaflumuron, (A-275) hexythiazox, (A-276) heptafluthrin, (A-277) heptenophos, (A-278) permethrin, (A-279) benclothiaz, (A-280) bendiocarb, (A-281) benzpyrimoxan, (A-282) bensultap, (A-283) benzoximate, (A-284) benfuracarb, (A-285) phoxim, (A-286) phosalone, (A-287) fosthiazate, (A-288) fosthietan, (A-289) phosphamidon, (A-290) phosphocarb, (A-291) phosmet (PMP), (A-292) polynactins, (A-293) formetanate, (A-294) formothion, (A-295) phorate, (A-296) machine oil, (A-297) malathion, (A-298) milbemycin, (A-299) milbemycin-A, (A-300) milbemectin, (A-301) mecarbam, (A-302) mesulfenfos, (A-303) methomyl, (A-304) metaldehyde, (A-305) metaflumizone, (A-306) methamidophos, (A-307) metam-ammonium, (A-308) metam-sodium, (A-309) methiocarb, (A-310) methidathion (DMTP), (A-311) methylisothiocyanate,

(A-312) methylneodecanamide, (A-313) methylparathion, (A-314) metoxadiazone, (A-315) methoxychlor, (A-316) methoxyfenozide, (A-317) metofluthrin, (A-318) methoprene, (A-319) metolcarb, (A-320) meperfluthrin, (A-321) mevinphos, (A-322) monocrotophos, (A-323) monosultap, (A-324) momfluorothrin, (A-325) lambda-cyhalothrin, (A-326) ryanodine, (A-327) lufenuron, (A-328) rescalure, (A-329) resmethrin, (A-330) lepimectin, (A-331) rotenone, (A-332) levamisol hydrochloride, (A-333) fenbutatin oxide, (A-334) morantel tartarate, (A-335) methyl bromide, (A-336) cyhexatin, (A-337) calcium cyanamide, (A-338) calcium polysulfide, (A-339) sulfur, (A-340) nicotine-sulfate, (A-341) dimpropyridaz, and salts thereof, but are not limited thereto.

Active ingredient group B

Examples of the compound having microbicidal activity (hereinafter referred to as active ingredient group B) include (B-001) aureofungin, (B-002) azaconazole, (B-003) azithiram, (B-004) acypetacs, (B-005) acibenzolar, (B-006) acibenzolar-S-methyl, (B-007) azoxystrobin, (B-008) anilazine, (B-009) amisulbrom, (B-010) aminopyrifen, (B-011) ampropylfos, (B-012) ametoctradin, (B-013) allyl alcohol, (B-014) aldimorph, (B-015) amobam, (B-016) isotianil, (B-017) isovaledione, (B-018) isopyrazam, (B-019) isofetamid, (B-020) isoflucypram, (B-021) isoprothiolane, (B-022) ipconazole, (B-023) ipfentrifluconazole, (B-024) ipflufenoquin, (B-025) iprodione, (B-026) iprovalicarb, (B-027) iprobenfos, (B-028) imazalil, (B-029) iminoctadine, (B-030) metam, (B-031) iminoctadine-albesilate, (B-032) iminoctadine-triacetate, (B-033) imibenconazole, (B-034) inpyrfluxam, (B-035) uniconazole, (B-036) uniconazole-P, (B-037) echlomezole, (B-038) edifenphos, (B-039) etaconazole, (B-040) ethaboxam, (B-041) ethirimol, (B-042) etem, (B-043) ethoxyquin, (B-044) etridiazole, (B-045) enestroburin, (B-046) enoxastrobin, (B-047) epoxiconazole, (B-048) oxadixyl, (B-049) oxathiapiprolin, (B-050) oxycarboxin, (B-051) copper-8-quinolinolate, (B-052) oxytetracycline, (B-053) copper-oxinate, (B-054) oxpoconazole, (B-055) oxpoconazole-fumarate, (B-056) oxolinic acid,

(B-057) octhilinone, (B-058) ofurace, (B-059) orysastrobin, (B-060) metam-sodium, (B-061) kasugamycin, (B-062) carbamorph, (B-063) carpropamid, (B-064) carbendazim, (B-065) carboxin, (B-066) carvone, (B-067) quinazamid, (B-068) quinacetol, (B-069) quinoxyfen, (B-070) quinofumelin, (B-071) chinomethionat, (B-072) quinomethionate, (B-073) captafol, (B-074) captan, (B-075) kiralaxyl, (B-076) quinconazole, (B-077) quintozene, (B-078) guazatine, (B-079) cufraneb, (B-080) cuprobam, (B-081) coumoxystrobin, (B-082) glyodin, (B-083) griseofulvin, (B-084) climbazole, (B-085) cresol, (B-086) kresoxim-methyl, (B-087) chlozolinate, (B-088) clotrimazole, (B-089) chlobenthiazone, (B-090) chloraniformethan, (B-091) chloranil, (B-092) chlorquinox, (B-093) chloropicrin, (B-094) chlorfenazole, (B-095) chlorodinitronaphthalene, (B-096) chlorothalonil, (B-097) chloroneb, (B-098) salicylanilide, (B-099) zarilamid, (B-100) cyazofamid, (B-101) diethyl pyrocarbonate, (B-102) diethofencarb, (B-103) cyclafuramid, (B-104) diclocymet, (B-105) dichlozoline, (B-106) diclobutrazol, (B-107) dichlofluanid, (B-108) cycloheximide, (B-109) dichlobentiazox, (B-110) diclomezine, (B-111) dicloran, (B-112) dichlorophen, (B-113) dichlone, (B-114) disulfiram, (B-115) ditalimfos, (B-116) dithianon, (B-117) diniconazole,

(B-118) diniconazole-M, (B-119) zineb, (B-120) dinocap, (B-121) dinocton, (B-122) dinosulfon, (B-123) dinoterbon, (B-124) dinobuton, (B-125) dinopenton, (B-126) dipymetitrone, (B-127) dipyrithione, (B-128) diphenylamine, (B-129) difenoconazole, (B-130) cyflufenamid, (B-131) diflumetorim, (B-132) cyproconazole, (B-133) cyprodinil, (B-134) cyprofuram, (B-135) cypendazole, (B-136) simeconazole, (B-137) dimethirimol, (B-138) dimethomorph, (B-139) cymoxanil, (B-140) dimoxystrobin, (B-141) ziram, (B-142) silthiofam, (B-143) streptomycin, (B-144) spiroxamine,

(B-145) sultropen, (B-146) sedaxane, (B-147) zoxamide, (B-148) dazomet, (B-149) thiadiazin, (B-150) tiadinil, (B-151) thiadifluor, (B-152) thiabendazole, (B-153) tioxymid, (B-154) thioquinox, (B-155) thiochlorfenphim, (B-156) thiophanate, (B-157) thiophanate-methyl, (B-158) thifluzamide,
(B-159) thicyofen, (B-160) thioquinox, (B-161) thiram, (B-162) decafentin, (B-163) tecnazene, (B-164) tecloftalam, (B-165) tecoram, (B-166) tetraconazole, (B-167) debacarb, (B-168) dehydroacetic acid, (B-169) tebuconazole, (B-170) tebufloquin, (B-171) dodicin, (B-172) dodine, (B-173) dodecylbenzene sulfonate bis-ethylenediamine copper(II) complex (DBEDC), (B-174) dodemorph, (B-175) drazoxolon, (B-176) triadimenol, (B-177) triadimefon, (B-178) triazbutil, (B-179) triazoxide, (B-180) triamiphos, (B-181) triarimol, (B-182) trichlamide, (B-183) triclopyricarb, (B-184) tricyclazole, (B-185) triticonazole, (B-186) tridemorph, (B-187) tributyltin oxide, (B-188) triflumizole, (B-189) trifloxystrobin, (B-190) triforine, (B-191) tolylfluanid, (B-192) tolclofos-methyl, (B-193) tolprocarb, (B-194) natamycin, (B-195) nabam, (B-196) nitrostyrene,
(B-197) nitrothal-isopropyl, (B-198) nuarimol, (B-199) copper nonylphenol sulfonate, (B-200) halacrinate, (B-201) validamycin, (B-202) valifenalate, (B-203) harpin protein, (B-204) picarbutrazox, (B-205) bixafen, (B-206) picoxystrobin, (B-207) picobenzamide, (B-208) pydiflumetofen, (B-209) bithionol, (B-210) bitertanol, (B-211) hydroxyisoxazole, (B-212) hydroisoxazole-potassium, (B-213) binapacryl, (B-214) biphenyl, (B-215) piperalin, (B-216) hymexazol, (B-217) pyraoxystrobin, (B-218) pyracarbolid, (B-219) pyraclostrobin, (B-220) pyraziflumid, (B-221) pyrazophos, (B-222) pyrapropoyne, (B-223) pyrametostrobin, (B-224) pyriofenone, (B-225) pyridinitril, (B-226) pyrifenox, (B-227) pydiflumetofen, (B-228) pyrisoxazole, (B-229) pyridachlometyl, (B-230) pyrifenox, (B-231) pyribencarb, (B-232) pyriminostrobin, (B-233) pyrimethanil, (B-234) pyroxychlor, (B-235) pyroxyfur, (B-236) pyroquilon, (B-237) vinclozolin,
(B-238) ferbam, (B-239) famoxadone, (B-240) fenapanil, (B-241) fenamidone, (B-242) fenaminosulf, (B-243) fenaminstrobin, (B-244) fenarimol, (B-245) fenitropan, (B-246) fenoxanil, (B-247) ferimzone, (B-248) ferbam, (B-249) fentin, (B-250) fenpiclonil, (B-251) fenpicoxamid, (B-252) fenpyrazamine, (B-253) fenbuconazole, (B-254) fenfuram, (B-255) fenpropidin, (B-256) fenpropimorph, (B-257) fenhexamid, (B-258) phthalide, (B-259) buthiobate, (B-260) butylamine, (B-261) bupirimate, (B-262) fuberidazole, (B-263) blasticidin-S, (B-264) furametpyr, (B-265) furalaxyl, (B-266) fluacrypyrim, (B-267) fluazinam, (B-268) fluindapyr, (B-269) fluoxastrobin, (B-270) fluotrimazole, (B-271) fluopicolide, (B-272) fluopimomide, (B-273) fluopyram, (B-274) fluoroimide, (B-275) furcarbanil, (B-276) fluxapyroxad, (B-277) fluquinconazole, (B-278) furconazole, (B-279) furconazole-cis, (B-280) fludioxonil, (B-281) flusilazole,
(B-282) flusulfamide, (B-283) flutianil, (B-284) flutolanil, (B-285) flutriafol, (B-286) flufenoxystrobin, (B-287) furfural, (B-288) furmecyclox, (B-289) flumetover, (B-290) flumorph, (B-291) proquinazid, (B-292) prochloraz, (B-293) procymidone, (B-294) prothiocarb, (B-295) prothioconazole, (B-296) pronitridine, (B-297) propamocarb, (B-298) propiconazole, (B-299) propineb, (B-300) furophanate, (B-301) probenazole, (B-302) bromuconazole, (B-303) florylpicoxamid, (B-304) hexachlorobutadiene, (B-305) hexaconazole, (B-306) hexylthiofos, (B-307) bethoxazin, (B-308) benalaxyl, (B-309) benalaxyl-M, (B-310) benodanil, (B-311) benomyl, (B-312) pefurazoate, (B-313) benquinox, (B-314) penconazole, (B-315) benzamorf, (B-316) pencycuron, (B-317) benzohydroxamic acid, (B-318) benzovindiflupyr, (B-319) bentaluron, (B-320) benthiazole, (B-321) benthiavalicarb, (B-322) benthiavalicarb-isopropyl, (B-323) penthiopyrad, (B-324) penflufen, (B-325) boscalid, (B-326) phosdiphen, (B-327) fosetyl, (B-328) fosetyl-Al,
(B-329) polyoxins, (B-330) polyoxorim, (B-331) polycarbamate, (B-332) folpet, (B-333) formaldehyde, (B-334) machine oil, (B-335) maneb, (B-336) mancozeb, (B-337) mandipropamid, (B-338) mandestrobin, (B-339) myclozolin, (B-340) myclobutanil, (B-341) mildiomycin, (B-342) milneb, (B-343) mecarbinzid, (B-344) methasulfocarb, (B-345) metazoxolon, (B-346) metam, (B-347) metam-sodium, (B-348) metalaxyl, (B-349) metalaxyl-M, (B-350) metiram, (B-351) methyl isothiocyanate, (B-352) mepthyldinocap, (B-353) metyltetraprole, (B-354) metconazole, (B-355) metsulfovax, (B-356) methfuroxam, (B-357) metominostrobin, (B-358) metrafenone, (B-359) mepanipyrim, (B-360) mefenoxam, (B-361) mefentrifluconazole, (B-362) meptyldinocap, (B-363) mepronil, (B-364) mebenil, (B-365) iodomethane, (B-366) rabenzazole,
(B-367) methyl bromide, (B-368) benzalkonium chloride, (B-369) basic copper chloride, (B-370) basic copper sulfate, (B-371) inorganic microbicides such as silver, (B-372) sodium hypochlorite, (B-373) cupric hydroxide, (B-374) wettable sulfur, (B-375) calcium polysulfide, (B-376) potassium hydrogen carbonate, (B-377) sodium hydrogen carbonate, (B-378) sulfur, (B-379) copper sulfate anhydride, (B-380) nickel dimethyldithiocarbamate, (B-381) copper compounds such as oxine copper, (B-382) zinc sulfate, (B-383) copper sulfate pentahydrate, (B-384) fluoxapiprolin, and salts thereof, but are not limited thereto.

Active ingredient group C

Examples of the compound having herbicidal activity (hereinafter referred to as active ingredient group C) include (C-001) 1-naphthylacetamide, (C-002) dimethylamine 2,4-dichlorophenoxyacetate (2,4-PA), (C-003) 2,3,6-trichlorobenzoic acid (2,3,6-TBA), (C-004) 2,4,5-trichlorophenoxyacetic acid (2,4,5-T), (C-005) 2,4,5-trichlorophenoxybutanoic acid (2,4,5-TB), (C-006) 2,4-dichlorophenoxyacetic acid (2,4-D), (C-007) 2,4-dichlorophenoxybutanoic acid (2,4-DB), (C-008) ethyl 2,4-dichlorophenoxybenzoate (2,4-DEB), (C-009) tris[2-(2,4-dichlorophenoxy)ethyl]phosphite (2,4-DEP), (C-010) 3,4-dichlorophenoxyacetic acid (3,4-DA), (C-011) 3,4-dichlorophenoxybutanoic acid (3,4-DB), (C-012) 3,4-dichlorophenoxypropanoic acid (3,4-DP), (C-013) 4-chlorophenoxyacetic acid (4-CPA), (C-014) 4-(4-chlorophenoxy)butanoic acid (4-CPB), (C-015) 2-(4-chlorophenoxy)propanoic acid (4-CPP), (C-016) 1-methylcyclopropene (MCP), (C-017) 2-(4-chloro-2-methylphenoxy)acetic acid (MCPA), (C-018) MCPA-thioethyl, (C-019) 4-(4-chloro-2-methylphenoxy)butanoic acid (MCPB), (C-020) ioxynil, (C-021) aclonifen, (C-022) azafenidin, (C-023) acifluorfen, (C-024) aziprotryne, (C-025) azimsulfuron, (C-026) asulam, (C-027) acetochlor, (C-028) atrazine, (C-029) atraton, (C-030) anisuron, (C-031) anilofos, (C-032) aviglycine, (C-033) abscisic acid, (C-034) amicarbazone, (C-035) amidosulfuron, (C-036) amitrole, (C-037) aminocyclopyrachlor, (C-038) aminopyralid, (C-039) amibuzin, (C-040) amiprophos-methyl, (C-041) ametridione, (C-042) ametryn, (C-043) alachlor, (C-044) allidochlor, (C-045) alloxydim, (C-046) alorac, (C-047) iofensulfuron, (C-048) isouron, (C-049) isocarbamid, (C-050) isoxachlortole, (C-051) isoxapyrifop, (C-052) isoxaflutole, (C-053) isoxaben, (C-054) isocil,

(C-055) isonoruron, (C-056) isoproturon, (C-057) isopropalin, (C-058) isopolinate, (C-059) isomethiozin, (C-060) inabenfide, (C-061) ipazine, (C-062) ipfencarbazone, (C-063) iprymidam, (C-064) imazaquin, (C-065) imazapic, (C-066) imazapyr, (C-067) imazamethapyr, (C-068) imazamethabenz, (C-069) imazamethabenz-methyl, (C-070) imazamox, (C-071) imazethapyr, (C-072) imazosulfuron, (C-073) indaziflam, (C-074) indanofan, (C-075) indolebutyric acid, (C-076) uniconazole-P, (C-077) eglinazine, (C-078) esprocarb, (C-079) ethametsulfuron, (C-080) ethametsulfuron-methyl, (C-081) ethalfluralin, (C-082) ethiolate, (C-083) ethychlozate ethyl, (C-084) ethidimuron, (C-085) etinofen, (C-086) ethephon, (C-087) ethoxysulfuron, (C-088) ethoxyfen, (C-089) etnipromid, (C-090) ethofumesate, (C-091) etobenzanid, (C-092) epronaz, (C-093) erbon, (C-094) endothal,

(C-095) oxadiazon, (C-096) oxadiargyl, (C-097) oxaziclomefone, (C-098) oxasulfuron, (C-099) oxapyrazon, (C-100) oxyfluorfen, (C-101) oryzalin, (C-102) orthosulfamuron, (C-103) orbencarb, (C-104) cafenstrole, (C-105) cambendichlor, (C-106) carbasulam, (C-107) carfentrazone, (C-108) carfentrazone-ethyl, (C-109) karbutilate, (C-110) carbetamide, (C-111) carboxazole, (C-112) quizalofop, (C-113) quizalofop-P, (C-114) quizalofop-ethyl, (C-115) xylachlor, (C-116) quinoclamine, (C-117) quinonamid, (C-118) quinclorac, (C-119) quinmerac, (C-120) cumyluron, (C-121) clacyfos, (C-122) cliodinate, (C-123) glyphosate, (C-124) glufosinate, (C-125) glufosinate-P, (C-126) credazine, (C-127) clethodim, (C-128) cloxyfonac, (C-129) clodinafop, (C-130) clodinafop-propargyl, (C-131) chlorotoluron,

(C-132) clopyralid, (C-133) cloproxydim, (C-134) cloprop, (C-135) chlorbromuron, (C-136) clofop, (C-137) clomazone, (C-138) chlomethoxynil, (C-139) chlomethoxyfen, (C-140) clomeprop, (C-141) chlorazifop, (C-142) chlorazine, (C-143) cloransulam, (C-144) chloranocryl, (C-145) chloramben, (C-146) cloransulam, (C-147) cloransulam-methyl, (C-148) chloridazon, (C-149) chlorimuron, (C-150) chlorimuron-ethyl, (C-151) chlorsulfuron, (C-152) chlorthal, (C-153) chlorthiamid, (C-154) chlortoluron, (C-155) chlornitrofen, (C-156) chlorfenac, (C-157) chlorfenprop, (C-158) chlorbufam,

(C-159) chlorphthalim, (C-160) chlorflurazole, (C-161) chlorflurenol, (C-162) chlorprocarb, (C-163) chlorpropham, (C-164) chlormequat, (C-165) chloreturon, (C-166) chloroxynil, (C-167) chloroxuron, (C-168) chlorotoluron, (C-169) chloropon, (C-170) saflufenacil, (C-171) cyanazine, (C-172) cyanatryn, (C-173) di-allate, (C-174) diuron, (C-175) diethamquat, (C-176) dicamba, (C-177) cycluron, (C-178) cycloate, (C-179) cycloxydim, (C-180) diclosulam, (C-181) cyclosulfamuron, (C-182) cyclopyranil, (C-183) cyclopyrimorate, (C-184) dichlorprop, (C-185) dichlorprop-P, (C-186) dichlobenil, (C-187) diclofop, (C-188) diclofop-methyl, (C-189) dichlormate, (C-190) dichloralurea, (C-191) diquat, (C-192) cisanilide, (C-193) disul, (C-194) siduron, (C-195) dithiopyr, (C-196) dinitramine, (C-197) cinidon-ethyl, (C-198) dinosam, (C-199) cinosulfuron, (C-200) dinoseb, (C-201) dinoterb, (C-202) dinofenate,

(C-203) dinoprop, (C-204) cyhalofop-butyl, (C-205) diphenamid, (C-206) difenoxuron, (C-207) difenopenten, (C-208) difenzoquat, (C-209) cybutryne, (C-210) cyprazine, (C-211) cyprazole, (C-212) diflufenican, (C-213) diflufenzopyr, (C-214) dipropetryn, (C-215) cypromid, (C-216) cyperquat, (C-217) gibberellin, (C-218) simazine, (C-219) dimexano, (C-220) dimethachlor, (C-221) dimidazon, (C-222) dimethametryn, (C-223) dimethenamid, (C-224) simetryn, (C-225) simeton, (C-226) dimepiperate, (C-227) dimefuron, (C-228) cinmethylin, (C-229) swep, (C-230) sulglycapin, (C-231) sulcotrione, (C-232) sulfallate, (C-233) sulfentrazone, (C-234) sulfosulfuron, (C-235) sulfometuron, (C-236) sulfometuron-methyl, (C-237) secbumeton,

(C-238) sethoxydim, (C-239) sebuthylazine, (C-240) terbacil, (C-241) daimuron, (C-242) dazomet, (C-243) dalapon, (C-244) thiazafluron, (C-245) thiazopyr, (C-246) tiafenacil, (C-247) thiencarbazone, (C-248) thiencarbazone-methyl, (C-249) tiocarbazil, (C-250) tioclorim, (C-251) thiobencarb, (C-252) thidiazimin, (C-253) thidiazuron, (C-254) thifensulfuron, (C-255) thifensulfuron-methyl, (C-256) desmedipham, (C-257) desmetryn, (C-258) tetrafluron, (C-259) thenylchlor, (C-260) tebutam, (C-261) tebuthiuron, (C-262) terbumeton, (C-263) tepraloxydim, (C-264) tefuryltrione, (C-265) tembotrione, (C-266) delachlor, (C-267) terbacil, (C-268) terbucarb, (C-269) terbuchlor, (C-270) terbuthylazine, (C-271) terbutryn, (C-272) topramezone, (C-273) tralkoxydim, (C-274) triaziflam, (C-275) triasulfuron, (C-276) triafamone, (C-277) tri-allate, (C-278) trietazine, (C-279) tricamba, (C-280) triclopyr,

(C-281) tridiphane, (C-282) tritac, (C-283) tritosulfuron, (C-284) trifludimoxazin, (C-285) triflusulfuron, (C-286) triflusulfuron-methyl, (C-287) trifluralin, (C-288) trifloxysulfuron, (C-289) tripropindan, (C-290) tribenuron, (C-291) tribenuron-methyl, (C-292) trifop, (C-293) trifopsime, (C-294) trimeturon, (C-295) tolpyralate, (C-296) naptalam, (C-297) naproanilide, (C-298) napropamide, (C-299) nicosulfuron, (C-300) nitralin, (C-301) nitrofen, (C-302) nitrofluorfen, (C-303) nipyraclofen, (C-304) neburon, (C-305) norflurazon, (C-306) noruron, (C-307) barban, (C-308) paclobutrazol, (C-309) paraquat, (C-310) parafluron, (C-311) haloxydine, (C-312) halauxifen, (C-313) haloxyfop, (C-314) haloxyfop-P, (C-315) haloxyfop-methyl, (C-316) halosafen, (C-317) halosulfuron, (C-318) halosulfuron-methyl, (C-319) bilanafos, (C-320) bixlozone, (C-321) picloram, (C-322) picolinafen,

(C-323) bicyclopyrone, (C-324) bispyribac, (C-325) bispyribac-sodium, (C-326) pydanon, (C-327) pinoxaden, (C-328) bifenox, (C-329) piperophos, (C-330) hymexazol, (C-331) pyraclonil, (C-332) pyrasulfotole, (C-333) pyrazoxyfen, (C-334) pyrazosulfuron, (C-335) pyrazosulfuron-ethyl, (C-336) pyrazolate, (C-337) bilanafos, (C-338) pyraflufen-ethyl, (C-339) pyriclor, (C-340) pyridafol, (C-341) pyrithiobac, (C-342) pyrithiobac-sodium, (C-343) pyridate, (C-344) pyriftalid, (C-345) pyributicarb, (C-346) pyribenzoxim, (C-347) pyrimisulfan, (C-348) primisulfuron, (C-349) pyriminobac-methyl, (C-350) pyroxasulfone, (C-351) pyroxsulam, (C-352) fenasulam, (C-353) phenisopham, (C-354) fenuron, (C-355) fenoxasulfone, (C-356) fenoxaprop, (C-357) fenoxaprop-P, (C-358) fenoxaprop-ethyl, (C-359) phenothiol, (C-360) fenoprop, (C-361) phenobenzuron, (C-362) fenquinotrione, (C-363) fenthiaprop, (C-364) fenteracol, (C-365) fentrazamide, (C-366) phenmedipham,

(C-367) phenmedipham-ethyl, (C-368) butachlor, (C-369) butafenacil, (C-370) butamifos, (C-371) buthiuron, (C-372) buthidazole, (C-373) butylate, (C-374) buturon, (C-375) butenachlor, (C-376) butroxydim, (C-377) butralin, (C-378) butroxydim, (C-379) flazasulfuron, (C-380) flamprop, (C-381) furyloxyfen, (C-382) prynachlor, (C-383) primisulfuron-methyl, (C-384) fluazifop, (C-385) fluazifop-P, (C-386) fluazifop-butyl, (C-387) fluazolate, (C-388) fluroxypyr, (C-389) fluothiuron, (C-390) fluometuron, (C-391) fluoroglycofen, (C-392) flurochloridone, (C-393) fluorodifen, (C-394) fluoronitrofen, (C-395) fluoromidine, (C-396) flucarbazone, (C-397) flucarbazone-sodium, (C-398) fluchloralin, (C-399) flucetosulfuron, (C-400) fluthiacet, (C-401) fluthiacet-methyl, (C-402) flupyrsulfuron,

(C-403) flufenacet, (C-404) flufenican, (C-405) flufenpyr, (C-406) flupropacil, (C-407) flupropanate, (C-408) flupoxam, (C-409) flumioxazin, (C-410) flumiclorac, (C-411) flumiclorac-pentyl, (C-412) flumipropyn, (C-413) flumezin, (C-414) fluometuron, (C-415) flumetsulam, (C-416) fluridone, (C-417) flurtamone, (C-418) fluroxypyr, (C-419) pretilachlor, (C-420) proxan, (C-421) proglinazine, (C-422) procyazine, (C-423) prodiamine, (C-424) prosulfalin, (C-425) prosulfuron, (C-426) prosulfocarb, (C-427) propaquizafop, (C-428) propachlor, (C-429) propazine, (C-430) propanil, (C-431) propyzamide, (C-432) propisochlor, (C-433) prohydrojasmon, (C-434) propyrisulfuron, (C-435) propham, (C-436) profluazol, (C-437) profluralin, (C-438) prohexadione-calcium, (C-439) propoxycarbazone, (C-440) propoxycarbazone-sodium, (C-441) profoxydim, (C-442) bromacil, (C-443) brompyrazon,

(C-444) prometryn, (C-445) prometon, (C-446) bromoxynil, (C-447) bromofenoxim, (C-448) bromobutide, (C-449) bromobonil, (C-450) florasulam, (C-451) florpyrauxifen, (C-452) hexachloroacetone, (C-453) hexazinone, (C-454) pethoxamid, (C-455) benazolin, (C-456) penoxsulam, (C-457) pebulate, (C-458) beflubutamid, (C-459) vernolate, (C-460) perfluidone, (C-461) bencarbazone, (C-462) benzadox, (C-463) benzipram, (C-464) benzylaminopurine, (C-465) benzthiazuron, (C-466) benzfendizone, (C-467) bensulide, (C-468) bensulfuron-methyl, (C-469) benzoylprop, (C-470) benzobicyclon, (C-471) benzofenap, (C-472) benzofluor, (C-473) bentazone, (C-474) pentanochlor, (C-475) benthiocarb, (C-476) pendimethalin, (C-477) pentoxazone, (C-478) benfluralin, (C-479) benfuresate, (C-480) fosamine, (C-481) fomesafen, (C-482) foramsulfuron, (C-483) forchlorfenuron, (C-484) maleic hydrazide,

(C-485) mecoprop, (C-486) mecoprop-P, (C-487) medinoterb, (C-488) mesosulfuron, (C-489) mesosulfuron-methyl, (C-490) mesotrione, (C-491) mesoprazine, (C-492) methoprotryne, (C-493) metazachlor, (C-494) methazole, (C-495) metazosulfuron, (C-496) methabenzthiazuron, (C-497) metamitron, (C-498) metamifop, (C-499) metam, (C-500) methalpropalin, (C-501) methiuron, (C-502) methiozolin, (C-503) methiobencarb, (C-504) methyldymron, (C-505) metoxuron, (C-506) metosulam, (C-507) metsulfuron, (C-508) metsulfuron-methyl, (C-509) metflurazon, (C-510) metobromuron, (C-511) metobenzuron, (C-512) methometon, (C-513) metolachlor, (C-514) metribuzin, (C-515) mepiquat-chloride, (C-516) mefenacet, (C-517) mefluidide, (C-518) monalide,

(C-519) monisouron, (C-520) monuron, (C-521) monochloroacetic acid, (C-522) monolinuron, (C-523) molinate, (C-524) morfamquat, (C-525) iodosulfuron, (C-526) iodosulfuron-methyl-sodium, (C-527) iodobonil, (C-528) iodomethane, (C-529) lactofen, (C-530) lancotrione, (C-531) linuron, (C-532) rimsulfuron, (C-533) lenacil, (C-534) rhodethanil, (C-535) calcium peroxide, (C-536) methyl bromide, (C-537) tetflupyrolimet, and salts thereof, but are not limited thereto.

Active ingredient group D

Examples of the biopesticide (hereinafter referred to as active ingredient group D) include (D-001) *Agrobacterium radiobacter* (e.g., Galltrol-A (registered trademark) manufactured by AgBioChem, CA using strain K84 and Nogall (registered trademark) manufactured by Becker Underwood, US using strain K1026), (D-002) *Agrobacterium radiobacter*

(e.g., Bacterose (registered trademark) manufactured by NIHON NOHYAKU Co., Ltd. using strain 84), (D-003) *Ampelomyces quisqualis* (e.g., AQ 10 (registered trademark) manufactured by IntrachemBio Italia & Co. KG using strain AQ10), (D-004) *Aspergillus flavus* (e.g., Afla-Guard (registered trademark) manufactured by Syngenta and AF36 (registered trademark) manufactured by Arizona Cotton Research and Protection Council, US using strain AF36), (D-005) *Aureobasidium pullulans* (e.g., Botector (registered trademark), a mixture of blastospores of strain DSM14940 and blastospores of strain DSM14941, manufactured by bio-ferm, GmbH), (D-006) *Bacillus amyloliquefaciens* (e.g., Impression Clear (registered trademark) manufactured by Idemitsu Agri using strain AT-332, Avogreen (registered trademark) manufactured by University of Pretoria using strain B246, Bacstar (registered trademark) manufactured by Etec Crop Solutions, NZ using strain D747, Shelter (registered trademark) manufactured by Dagutat Bio lab, ZA using strain DB101, Artemis (registered trademark) manufactured by Dagutat Bio lab, ZA using strain DB102, RhizoVital (registered trademark) manufactured by ABiTEP, DE using strain FZB42, Kodiak (registered trademark) manufactured by Bayer CropScience AG, DE using strain GB03, and Subtilex (registered trademark) manufactured by Becker Underwood, US using strain MBI600),

(D-007) *Bacillus cepacia* (e.g., Deny Stine (registered trademark) manufactured by Microbial Products), (D-008) *Bacillus cereus* (e.g., Mepichlor (registered trademark) manufactured by Arysta, US using strain BP01), (D-009) *Bacillus firmus* (e.g., BioNeem (registered trademark) manufactured by AgoGreen using strain I-1582) , (D-010) *Bacillus lacticola* (e.g., a product manufactured by Micro Flo Company), (D-011) *Bacillus lactimorbus* (e.g., a product manufactured by Micro Flo Company), (D-012) *Bacillus lactis* (e.g., a product manufactured by Micro Flo Company), (D-013) *Bacillus laterosporus* (e.g., Bio-Tode (registered trademark) manufactured by Agro-Organics, SA), (D-014) *Bacillus licheniformis* (e.g., EcoGuard Biofungicide (registered trademark) manufactured by Novozymes using strain SB3086), (D-015) *Bacillus maroccanus* (e.g., a product manufactured by Micro Flo Company), (D-016) *Bacillus megaterium* (e.g., Bioarc (registered trademark) manufactured by Bio Arc using strain YFM3.25), (D-017) *Bacillus metiens* (e.g., a product manufactured by Micro Flo Company), (D-018) *Bacillus mojavensis* (e.g., a product manufactured by Probelte, Sa using strain SR11),

(D-019) *Bacillus mycoides* (e.g., BmJ (registered trademark) manufactured by Certis USA using isolate J.), (D-020) *Bacillus nigrificans* (e.g., a product manufactured by Micro Flo Company), (D-021) *Bacillus popilliae* (e.g., Cronox (registered trademark) manufactured by Bio Crop, CO), (D-022) *Bacillus pumilus* (e.g., Integral F-33 (registered trademark) manufactured by Becker Underwood, US using strain BU F-33, Yield Shield (registered trademark) manufactured by Bayer CropScience AG, DE using strain GB34, and Sonata (registered trademark) manufactured by Bayer CropScience LP, US using strain QST2808), (D-023) *Bacillus simplex* (e.g., Momi-Hope WP (registered trademark) manufactured by Arysta LifeScience Corporation using strain CGF2856), (D-024) *Bacillus sphaericus* (e.g., VectoLex (registered trademark) manufactured by Valent BioSciences, US using serotype H5a5b strain 2362), (D-025) *Bacillus subtilis* (e.g., Botokiller WP (registered trademark) manufactured by Idemitsu Agri Co., Taegro (registered trademark) manufactured by Novozyme Biologicals, Inc. US using strain FZB24, SERENADE MAX (registered trademark) manufactured by Bayer CropScience LP, US using strain QST713/AQ713, Serenade-DPZ (registered trademark) using strain AQ30002, EcoShot (registered trademark) manufactured by KUMIAI CHEMICAL INDUSTRY Co., Ltd. using strain D747, Agrocare WP (registered trademark) manufactured by Nisso Green Co., Ltd. using strain HAI-0404, Botopika WP (registered trademark) manufactured by Idemitsu Kosan Co., Ltd. using strain MBI600, and BaciStar WP (registered trademark) manufactured by Arysta LifeScience Corporation using strain Y1336), (D-026) *Bacillus thuringiensis* (e.g., VectoBac (registered trademark) manufactured by Valent BioSciences, US using strain AM65-52), (D-027) *Bacillus thuringienses aizawai* (e.g., XenTari (registered trademark) manufactured by Bayer CropScience AG, DE using strain ABTS-1857 and Florbac WG (registered trademark) manufactured by Valent BioSciences, US using serotype H-7), (D-028) *Bacillus thuringiensis* subspecies. *Aegypti* (e.g., Agerin (registered trademark)),

(D-029) *Bacillus thuringienses israelensis* (e.g., Aquabac (registered trademark) manufactured by Becker Microbial Products IL using strain BMP144), (D-030) *Bacillus thuringienses kurstaki* (e.g., a product manufactured by Becker Microbial Products, IL using strain BMP 123 and Dipel ES (registered trademark) manufactured by Valent BioSciences, US using strain HD-1), (D-031) *Bacillus thuringiensis* var. *colmeri* (e.g., TianBaoBTc (registered trademark) manufactured by Changzhou Jianghai Chemical Factory), (D-032) *Bacillus thuringienses tenebrionis* (e.g., Novodor FC (registered trademark) manufactured by BioFa DE using strain NB 176), (D-033) *Bacillus thuringiensis* var. *san diego* (e.g., M-One (registered trademark) from Bacillus thuringiensis var. san diego), (D-034) *Beauveria bassiana* (e.g., Naturalis (registered trademark) manufactured by Intrachem Bio Italia, Bove Max (registered trademark) manufactured by Novozymes using strain CG716, BioLisa Madara (registered trademark) manufactured by Idemitsu Kosan Co., Ltd. using strain F-263, and BotaniGard WP (registered trademark) manufactured by ARYSTA using strain GHA), (D-035) *Beauveria brongniartii* (e.g., Beaupro (registered trademark) manufactured by Andermatt Biocontrol AG), (D-036) *Bradyrhizobium japonicum* (e.g., Optimize (registered trademark) manufactured by Novozymes),

(D-037) *Burkholderia* spp. (e.g., MBI-206 TGAI (registered trademark) manufactured by Marrone Bio Innovations using strain A396), (D-038) *Candida oleophila* (e.g., Aspire manufactured by Ecogen Inc., US using strain 1-82 and Nexy manufactured by BioNext using strain O), (D-039) *Candida saitoana* (e.g., BIOCURE (registered trademark) manufactured by Micro Flo Company, US (BASF SE)), (D-040) *Chaetomium cupreum* (e.g., BIOKUPRUM (registered trademark) manufactured by AgriLife), (D-041) *Chaetomium globosum* (e.g., Rivadiom (registered trademark) manufactured by Rivale), (D-042) *Chromobacterium subtsugae* (e.g., Grandevo (registered trademark) manufactured by Marrone Bio Innovations using strain PRAA4-1T), (D-043) *Cladosporium cladosporioides* (e.g., from Cladosporium cladosporioides), (D-044) *Clonostachys rosea* f. *catenulate* (e.g., PRESTOP (registered trademark) manufactured by Verdera, Finland using strain J1446), (D-045) *Colletotrichum gloeosporioides* (e.g., Collego (registered trademark) manufactured by Agriultural Research Initiatives),

(D-046) *Coniothyrium minitans* (e.g., Contans (registered trademark) manufactured by Encore Technologies, LLC using strain CON/M/91-08), (D-047) *Cryptococcus albidus* (e.g., YieldPlus (registered trademark) manufactured by Anchor Bio Technologies, ZA), (D-048) *Delftia acidovorans* (e.g., BioBoost (registered trademark) manufactured by Brett Young Seeds using strain RAY209), (D-049) *Dilophosphora alopecuri* (e.g., Twist Fungus (registered trademark)), (D-050) *Drechsrela monoceras* (e.g., Tasumato herbicide (registered trademark) manufactured by Mitsui Chemicals Agro, Inc. using strain MTB-951), (D-051) *Entomophthora virulenta* (e.g., Vektor (registered trademark) manufactured by Ecomic), (D-052) *Fusarium oxysporum* (e.g., Maruka light manufactured by Eisai Seikaken, Inc. using strain 101-2), (D-053) *Fusarium oxysporum* (e.g., Fusaclean (registered trademark) manufactured by Natural Plant Protection using strain Fo47), (D-054) *Gliocladium* spp. (e.g., Prestop (registered trademark) manufactured by AgBio Inc. using strain J1446 and a product manufactured by W. F. Stoneman Company LLC using strain 321U), (D-055) *Hirsutella thompsonii* (e.g., Mycohit (registered trademark) manufactured by Agro Bio tech Research Centre, IN), (D-056) *Lactobacillus acidophilus* (e.g., Fruitsan (registered trademark) manufactured by Inagrosa Industrias Agrobiologicas, S.A.), (D-057) *Lactobacillus plantarum* (e.g., Lactoguard WP manufactured by Meiji Seika Pharma Co., Ltd. using strain BY), (D-058) *Lecanicillium lecanii* (e.g., Mycotal (registered trademark) manufactured by Koppert/Arysta using conidiospores of strain KV01), (D-059) *Metarhizium anisopliae* (e.g., BIO 1020 (registered trademark) manufactured by Bayer CropScience using strain F52 and Pirates G (registered trademark) manufactured by Arysta LifeScience Corporation using strain SMZ-2000), (D-060) *Metarhizium anisopliae var. acridum* (e.g., GreenMuscle (registered trademark) manufactured by Biological Control Products and GreenGuard (registered trademark) manufactured by Becker Underwood, US),

(D-061) *Metschnikowia fructicola* (e.g., Shemer (registered trademark) manufactured by Bayer CropScience), (D-062) *Microdochium dimerum* (e.g., ANTIBOT (registered trademark) manufactured by Agrauxine, France), (D-063) *Microsphaeropsis ochracea* (e.g., Microx (registered trademark) manufactured by Prophyta), (D-064) *Monacrosporium phymatopagum* (e.g., Nemahiton (registered trademark) manufactured by Tomoe Kagaku Kogyo K.K.), (D-065) *Mucor haemelis* (e.g., BioAvard (registered trademark) manufactured by Indore Biotech Inputs & Research), (D-066) *Myrothecium verrucaria* (e.g., DiTera (registered trademark) manufactured by Valent Biosciences using strain AARC-0255), (D-067) *Paecilomyces fumosoroseus* (e.g., PreFeRal (registered trademark) WG manufactured by Biobest using strain apopka 97, Preferred WP manufactured by Tokai Bussan Co. Ltd., and No Fly (registered trademark) manufactured by Natural Industries Inc. (Novozymes company) using strain FE 9901), (D-068) *Paecilomyces lilacinus* (e.g., BioAct WG (registered trademark) manufactured by Prophyta using strain 251), (D-069) *Pacilimyces tenuipes* (e.g., Gottu A manufactured by Idemitsu Kosan Co., Ltd. using strain T1), (D-070) *Paecilomyces variotii* (e.g., Nemaquim (registered trademark) manufactured by Quimia, MX using strain Q-09), (D-071) *Paenibacillus polymyxa* (e.g., Topseed (registered trademark) manufactured by Green Biotech Company Ltd. using strain AC-1), (D-072) *Paenibacillus poppiliae* (e.g., Milky spore disease (registered trademark) manufactured by St. Gabriel Laboratories),

(D-073) *Pasteuria nishizawae* (e.g., oyacyst LF/ST (registered trademark) manufactured by Pasteuria Bioscience), (D-074) *Pasteuria penetrans* (e.g., Pasteuria (registered trademark) manufactured by Pasteuria Bioscience), (D-075) *Pasteuria usagae* (e.g., Econem (registered trademark) manufactured by Pasteuria Bioscience), (D-076) *Pectobacterium carotovorum* (e.g., Biokeeper (registered trademark) manufactured by Nissan Chemical Corporation and EcoMate (registered trademark) manufactured by KUMIAI CHEMICAL INDUSTRY Co., Ltd. using CGE234M403), (D-077) *Phoma macrostroma* (e.g., Phoma H (registered trademark) manufactured by Scotts, US using strain 94-44B), (D-078) *Penicillium bilaii* (e.g., Jump Start (registered trademark) manufactured by Novozymes), (D-079) *Phlebiopsis gigantea* (e.g., ROTSOP (registered trademark) manufactured by Verdera, Finland using strain FOC PG B22/SP1190/3.2), (D-080) *Pochonia chlamydosporia* var. *catenulata* (e.g., KlamiC (registered trademark) manufactured by The National Center of Animal and Plant Health (CENSA); CU), (D-081) *Pseudomonas aureofaciens* (e.g., Spot-Less Biofungicide (registered trademark) manufactured by Eco Soils Systems, CA using strain TX-1), (D-082) *Pseudomonas chlororaphis* (e.g., ATEze (registered trademark) manufactured by EcoSoil Systems using strain 63-28 and Cedomon (registered trademark) manufactured by Bioagri, S. using strain MA 342), (D-083) *Pseudomonas fluorescens* (e.g., Frostban D (registered trademark) manufactured by Frost Technology Corp. using strain

1629RS, Blightban (registered trademark) manufactured by Blightban using strain A506, Konae Fukudo (registered trademark) manufactured by Taki Chemical Co., Ltd. using strain FPT-9601, Cell Nae Genki (registered trademark), a mixture of strains FPT-9601 and FPH-9601, manufactured by Taki Chemical Co., Ltd., and Vegikeeper (registered trademark) manufactured by Arysta LifeScience Corporation using strain G7090),
(D-084) *Pseudomonas proradix* (e.g., Proradix (registered trademark) manufactured by Sourcon Padena), (D-085) *Pseudomonas resinovorans* (e.g., Solanacure (registered trademark) manufactured by Agricultural Research Council, SA), (D-086) *Pseudomonas syringae* (e.g., Biosave (registered trademark) manufactured by EcoScience, US using strain MA-4 and Frostban C (registered trademark) manufactured by Frost Technology Corp using strain 742RS), (D-087) *Pseudomonas* spp. (e.g., Masterpiece WP (registered trademark) manufactured by Nippon Soda Co., Ltd. using strain HAI-0804 and Momi-Genki WP manufactured by Nissan Chemical Corporation using strain CAB-02), (D-088) *Pseudozyma aphidis* (e.g., a product manufactured by Yissum Research Development Company of the Hebrew University of Jerusalem), (D-089) *Pseudozyma flocculosa* (e.g., Sporodex L manufactured by Plant Products Co. Ltd., CA using strain PF-A22 UL), (D-090) *Pythium oligandrum* (e.g., Polyversum (registered trademark) manufactured by Biopreprаty, CZ using strain DV74 or strain M1),
(D-091) *Reynoutria sachlinensis* (e.g., REGALIA (registered trademark) manufactured by Marrone BioInnovations, US), (D-092) *Rhizopogon amylopogon* (e.g., Myco-Sol (registered trademark) manufactured by Helena Chemical Company), (D-093) *Rhizopogon fulvigleba* (e.g., Myco-Sol (registered trademark) manufactured by Helena Chemical Company), (D-094) *Saccharomyces cerevisiae* (e.g., a product manufactured by Lesaffre et Compagnie, FR), (D-095) *Sclerotinia minor* (e.g., Sarritor (registered trademark) manufactured by Agrium Advanced Technologies), (D-096) *Serratia entomophila* (e.g., Invade (registered trademark) manufactured by Wrightson Seeds), (D-097) *Sporothrixinsectorum* (e.g., Sporothrix Es (registered trademark) manufactured by Biocerto, BR), (D-098) *Steinernema carpocapsae* (e.g., Biosafe (registered trademark) manufactured by SDS Biotech K.K. ) , (D-099) *Steinernema kushidai* (e.g., Shibaichi-Nema manufactured by Kubota Corporation), (D-100) *Steinernema glaseri* (e.g., Biotopia (registered trademark) manufactured by Arysta LifeScience Corporation), (D-101) *Streptomyces acidiscabies* (e.g., MBI-005EP (registered trademark) manufactured by Marrone Bioinnovations, CA using strain RL-110T) , (D-102) *Streptomyces candidus* (e.g., BioBac (registered trademark) manufactured by Biontech, TW using strain Y21007-2), (D-103) *Streptomyces galbus* (e.g., Mycostop (registered trademark) manufactured by Verdera using strain K61), (D-104) *Streptomyces lydicus* (e.g., ACTINOVATE (registered trademark) manufactured by Natural Industries, US using strain WYEC108), (D-105) *Streptomyces saraceticus* (e.g., Clanda (registered trademark) manufactured by A & A Group (Agro Chemical Corp.)), (D-106) *Talaromyces flavus* (e.g., Momi-keeper (registered trademark) manufactured by Central Glass Co., Ltd. using strain B-422, Tough Block (registered trademark) manufactured by Idemitsu Kosan Co., Ltd. using strain SAY-Y-94-01, and PROTUS (registered trademark) WG manufactured by Prophyta, DE using strain V117b), (D-107) *Trichoderma asperellum* (e.g., a product manufactured by Isagro using strain ICC 012, T34 Biocontrol (registered trademark) manufactured by Bioncontrol Technologies, ES using strain T34, and EcoHope (registered trademark) manufactured by KUMIAI CHEMICAL INDUSTRY Co., Ltd. using strain SKT-1), (D-108) *Trichoderma atroviride* (e.g., Esquive (registered trademark) WP manufactured by Agrauxine, FR, Tenet (registered trademark) manufactured by Agrimm Technologies Ltd, NZ or SENTINEL (registered trademark) each using strain LC52, and EcoHope DJ (registered trademark) manufactured by KUMIAI CHEMICAL INDUSTRY Co., Ltd. using strain SKT-1), (D-109) *Trichoderma gamsii* (e.g., BIO-TAM (registered trademark) manufactured by Bayer CropScience LP, US),
(D-110) *Trichoderma harzianum* (e.g., T-Gro 7456 (registered trademark) manufactured by Dagutat Biolab using strain DB 103, Trianum-P (registered trademark) manufactured by Koppert using strain ITEM908, Trichoplus (registered trademark) manufactured by Biological Control Products, SA using strain KD, and ROOT PRO (registered trademark) manufactured by Mycontrol Ltd. using strain TH-35), (D-111) *Trichoderma harzianum* Rifai (e.g., PLANTSHIELD T-22G (registered trademark) manufactured by Firma BioWorks Inc, US using strain T-22 and TRICHODEX (registered trademark) manufactured by Makhteshim Ltd, US using strain T-39), (D-112) *Trichoderma lignorum* (e.g., Mycotric (registered trademark) manufactured by Futureco Bioscience, ES using strain TL-0601), (D-113) *Trichoderma polysporum* (e.g., Binab TF WP (registered trademark) manufactured by BINAB Bio-Innovation AB, Sweden), (D-114) *Trichoderma stromaticum* (e.g., TRICOVAB (registered trademark) manufactured by Ceplac, Brazil), (D-115) *Trichoderma virens* (e.g., SOILGARD (registered trademark) manufactured by Certis LLC, US using strain GL-21), (D-116) *Trichoderma viride* (e.g., REMEDIER (registered trademark) WP manufactured by Isagro Ricerca, ITALIA using strain ICC080 and Trianum-P (registered trademark) manufactured by Koppert using strain TV1), (D-117) *Tsukamurella paurometabola* (e.g., HeberNem (registered trademark) using strain C-924), (D-118) *Ulocladium oudemansii* (e.g., Botry-Zen (registered trademark) manufactured by Botry-Zen Ltd, NZ using strain HRU3), (D-119) *Variovorax paradoxus* (e.g., Fieldkeeper WP (registered trademark) manufactured by Central Glass using strain CGF452 6), (D-120) Vesicular-Arbuscular (VA) mycorrhizal fungi (e.g., Dr. Kinkon (registered trademark) manufactured by Idemitsu Agri),
(D-121) *Verticillium alboatrum* (e.g., Dutch Trig (registered trademark) manufactured by Tree Care Innovations using

strain WCS850), (D-122) *Verticillium lecanii* (e.g., Vertalec (registered trademark) manufactured by Arysta LifeScience Corporation using strain IMI 179172 and Mycotal (registered trademark) manufactured by Arysta LifeScience Corporation using strain IMI 263817), (D-123) *Xanthomonas campestris* (e.g., Camperico L (registered trademark) manufactured by Taki Chemical), (D-124) *Xanthomonas campestris* pv. *poae,* (D-125) *Heterorhabditis bacteriophora,* (D-126) *Steinernema feltiae,* (D-127) *Steinernema kraussei,* (D-128) *Steinernema riobrave,* and (D-129) *Steinernema scapterisci;* and insecticidal and microbicidal strains selected from mutants of the above-listed strains that each have its original distinguishing characteristics, and metabolites that are produced by the above-listed strains and active against plant pathogenic microbes, but are not limited thereto.

Among the above second active ingredients, compounds that are preferred as microbicides (fungicides) include, as represented according to the Fungicide Resistance Action Committee (FRAC) Mode of Action classification, inhibitors of demethylation at the C14 position in sterol biosynthesis, complex I: NADH oxidoreductase inhibitors, complex II: succinate dehydrogenase inhibitors, complex III: ubiquinol reductase Qo site inhibitors, MAP/histidine kinase inhibitors in osmotic signaling, and combinations thereof, but are not limited thereto.

The inhibitors of demethylation at the C14 position in sterol biosynthesis include, for example, piperazines such as triforine; pyridines such as pyrifenox and pyrisoxazole; pyrimidines such as fenarimol and nuarimol; imidazoles such as imazalil, oxypoconazole, pefurazoate, prochloraz, and triflumizole; triazoles such as azaconazole, bitertanol, bromuconazole, cyproconazole, difenoconazole, diniconazole, epoxiconazole, etaconazole, fenbuconazole, fluquinconazole, fluconazole, flusilazole, flutriafol, hexaconazole, imibenconazole, ipconazole, ipfentrifluconazole, metconazole, myclobutanil, mefentrifluconazole, penconazole, propiconazole, simeconazole, tebuconazole, tetraconazole, triadimefon, triadimenol, and uniconazole; and triazolynthiones such as triticonazole and prothioconazole; but are not limited thereto. Preferred are imidazoles, triazoles, and triazolynthiones. More preferred are triazoles, triazolynthiones, etc. Particularly preferred are epoxiconazole, tebuconazole, epoxiconazole, and prothioconazole.

The complex I: NADH oxidoreductase inhibitors include, for example, pyrimidine amines such as diflumetorim; pyrazole-5-carboxylic acids such as tolfenpyrad; and quinazolines such as fenazaquin. The complex II: succinate dehydrogenase inhibitors include, for example, phenylbenzamides such as benodanil, flutolanil, and mepronil; phenyloxoethylthiophenamides such as isofetamid; pyridinyl ethylbenzamides such as fluopyram; furan carboxamides such as fenfuram; oxathiin carboxamides such as carboxin and oxycarboxin; thiazole carboxamides such as thifluzamide; pyrazole carboxamides such as benzovindiflupyr, bixafen, fluxapyroxad, furametpyr, inpyrfluxam, isopyrazam, penflufen, penthiopyrad, and sedaxane; N-cyclopropyl-N-benzylpyrazole carboxamides such as isoflucypram; N-methoxy(phenylethyl)pyrazole carboxamides such as pydiflumetofen; pyridine carboxamides such as boscalid; and pyrazine carboxamides such as pyraziflumid; but are not limited thereto. Among these, preferred are pyridinyl ethylbenzamides, pyrazole carboxamides, pyridine carboxamides, and pyrazine carboxamides, and particularly preferred are fluxapyroxad, fluopyram, and pyraziflumid.

The complex III: ubiquinol reductase Qo site inhibitors include, for example, methoxyacrylates such as azoxystrobin, coumoxystrobin, enoxastrobin, flufenoxystrobin, picoxystrobin, and pyraoxystrobin; methoxyacetamides such as mandestrobin; methoxycarbamates such as pyraclostrobin, pyrametostrobin, and triclopyricarb; oximinoacetates such as kresoxim-methyl and trifloxystrobin; oximinoacetamides such as dimoxystrobin, fenaminstrobin, metominostrobin, and orysatsrobin; oxazolidinediones such as famoxadone; dihydrodioxazines such as fluoxastrobin; imidazolinones such as fenamidone; and benzylcarbamates such as pyribencarb; but are not limited thereto. Among these, preferred are methoxyacrylates and methoxycarbamates, and particularly preferred are azoxystrobin and pyraclostrobin.

(iii) Harmful organism control composition of the present invention

In the harmful organism control composition of the present invention, the first active ingredient is a compound represented by the general formula (I), and the second active ingredient can contain one or more components. Exemplary combinations of these active ingredients include the following combinations.

Combination of the compound of the present invention and active ingredient group A

Examples of the combination with a compound having insecticidal activity (active ingredient group A) include Compound [1-1]+(A-001), Compound [1-1]+(A-002), Compound [1-1] +(A-003), Compound [1-1] +(A-004), Compound [1-1] +(A-005), Compound [1-1]+(A-006), Compound [1-1]+(A-007), Compound [1-1]+(A-008), Compound [1-1]+(A-009), Compound [1-1]+(A-010), Compound [1-1]+(A-011), Compound [1-1]+(A-012), Compound [1-1]+(A-013), Compound [1-1]+(A-014), Compound [1-1]+(A-015), Compound [1-1]+(A-016), Compound [1-1]+(A-017), Compound [1-1]+(A-018), Compound [1-1]+(A-019), Compound [1-1]+(A-020), Compound [1-1]+(A-021), Compound [1-1]+(A-022), Compound [1-1]+(A-023), Compound [1-1]+(A-024), Compound [1-1]+(A-025), Compound [1-1]+(A-026), Compound [1-1]+(A-027), Compound [1-1]+(A-028), Compound [1-1]+(A-029), Compound [1-1]+(A-030), Compound [1-1]+(A-031), Compound

[1-1]+(A-032), Compound [1-1]+(A-033), Compound [1-1]+(A-034), Compound [1-1]+(A-035), Compound [1-1]+(A-036), Compound [1-1]+(A-037), Compound [1-1]+(A-038), Compound [1-1]+(A-039), Compound [1-1]+(A-040), Compound [1-1]+(A-041), Compound [1-1]+(A-042), Compound [1-1]+(A-043), Compound [1-1]+(A-044), Compound [1-1]+(A-045), Compound [1-1]+(A-046), Compound [1-1]+(A-047), Compound [1-1]+(A-048), Compound [1-1]+(A-049), Compound [1-1]+(A-050), Compound [1-1]+(A-051), Compound [1-1]+(A-052), Compound [1-1]+(A-053), Compound [1-1]+(A-054), Compound [1-1]+(A-055), Compound [1-1]+(A-056), Compound [1-1]+(A-057), Compound [1-1]+(A-058), Compound [1-1]+(A-059), Compound [1-1]+(A-060), Compound [1-1]+(A-061), Compound [1-1]+(A-062), Compound [1-1]+(A-063), Compound [1-1]+(A-064), Compound [1-1]+(A-065), Compound [1-1]+(A-066), Compound [1-1]+(A-067), Compound [1-1] + (A-068), Compound [1-1]+(A-069), Compound [1-1]+(A-070), Compound [1-1]+(A-071), Compound [1-1]+(A-072), Compound [1-1]+(A-073), Compound [1-1]+(A-074), Compound [1-1]+(A-075), Compound [1-1]+(A-076), Compound [1-1]+(A-077), Compound [1-1]+(A-078), Compound [1-1]+(A-079), Compound [1-1]+(A-080), Compound [1-1]+(A-081), Compound [1-1]+(A-082), Compound [1-1]+(A-083), Compound [1-1]+(A-084), Compound [1-1]+(A-085), Compound [1-1]+(A-086), Compound [1-1]+(A-087), Compound [1-1]+(A-088), Compound [1-1]+(A-089), Compound [1-1]+(A-090), Compound [1-1]+(A-091), Compound [1-1]+(A-092), Compound [1-1]+(A-093), Compound [1-1]+(A-094), Compound [1-1]+(A-095), Compound [1-1]+(A-096), Compound [1-1]+(A-097), Compound [1-1]+(A-098), Compound [1-1]+(A-099), Compound [1-1]+(A-100), Compound [1-1]+(A-101), Compound [1-1]+(A-102), Compound [1-1]+(A-103), Compound [1-1]+(A-104), Compound [1-1]+(A-105), Compound [1-1]+(A-106), Compound [1-1]+(A-107), Compound [1-1]+(A-108), Compound [1-1]+(A-109), Compound [1-1]+(A-110), Compound [1-1]+(A-111), Compound [1-1]+(A-112), Compound [1-1]+(A-113), Compound [1-1]+(A-114), Compound [1-1]+(A-115), Compound [1-1]+(A-116), Compound [1-1]+(A-117), Compound [1-1]+(A-118), Compound [1-1]+(A-119), Compound [1-1]+(A-120), Compound [1-1]+(A-121), Compound [1-1]+(A-122), Compound [1-1]+(A-123), Compound [1-1]+(A-124), Compound [1-1]+(A-125), Compound [1-1]+(A-126), Compound [1-1]+(A-127), Compound [1-1]+(A-128), Compound [1-1]+(A-129), Compound [1-1]+(A-130), Compound [1-1]+(A-131), Compound [1-1]+(A-132), Compound [1-1]+(A-133), Compound [1-1]+(A-134), Compound [1-1]+(A-135), Compound [1-1]+(A-136), Compound [1-1]+(A-137), Compound [1-1]+(A-138), Compound [1-1]+(A-139), Compound [1-1]+(A-140), Compound [1-1]+(A-141), Compound [1-1]+(A-142), Compound [1-1]+(A-143), Compound [1-1]+(A-144), Compound [1-1]+(A-145), Compound [1-1]+(A-146), Compound [1-1]+(A-147), Compound [1-1]+(A-148), Compound [1-1]+(A-149), Compound [1-1]+(A-150), Compound [1-1]+(A-151), Compound [1-1]+(A-152), Compound [1-1]+(A-153), Compound [1-1]+(A-154), Compound [1-1]+(A-155), Compound [1-1]+(A-156), Compound [1-1]+(A-157), Compound [1-1]+ (A-158), Compound [1-1]+ (A-159), Compound [1-1]+ (A-160), Compound [1-1]+(A-161), Compound [1-1]+(A-162), Compound [1-1]+ (A-163), Compound [1-1]+ (A-164), Compound [1-1]+ (A-165), Compound [1-1]+(A-166), Compound [1-1]+(A-167), Compound [1-1]+ (A-168), Compound [1-1]+ (A-169), Compound [1-1]+(A-170), Compound [1-1]+(A-171), Compound [1-1]+(A-172), Compound [1-1]+(A-173), Compound [1-1]+(A-174), Compound [1-1]+(A-175), Compound [1-1]+(A-176), Compound [1-1]+(A-177), Compound [1-1]+(A-178), Compound [1-1]+(A-179), Compound [1-1]+(A-180), Compound [1-1]+(A-181), Compound [1-1]+(A-182), Compound [1-1]+(A-183), Compound [1-1]+(A-184), Compound [1-1]+(A-185), Compound [1-1]+(A-186), Compound [1-1]+(A-187), Compound [1-1]+ (A-188), Compound [1-1]+ (A-189), Compound [1-1]+(A-190), Compound [1-1]+(A-191), Compound [1-1]+(A-192), Compound [1-1]+(A-193), Compound [1-1]+ (A-194), Compound [1-1]+ (A-195), Compound [1-1]+(A-196), Compound [1-1]+(A-197), Compound [1-1]+(A-198), Compound [1-1]+(A-199), Compound [1-1]+(A-200), Compound [1-1]+(A-201), Compound [1-1]+(A-202), Compound [1-1]+(A-203), Compound [1-1]+(A-204), Compound [1-1]+(A-205), Compound [1-1]+(A-206), Compound [1-1]+(A-207), Compound [1-1]+(A-208), Compound [1-1]+(A-209), Compound [1-1]+(A-210), Compound [1-1]+(A-211), Compound [1-1]+(A-212), Compound [1-1]+(A-213), Compound [1-1]+(A-214), Compound [1-1]+(A-215), Compound [1-1]+(A-216), Compound [1-1]+(A-217), Compound [1-1]+(A-218), Compound [1-1]+(A-219), Compound [1-1]+(A-220), Compound [1-1]+(A-221), Compound [1-1]+(A-222), Compound [1-1]+(A-223), Compound [1-1]+(A-224), Compound [1-1]+(A-225), Compound [1-1]+(A-226), Compound [1-1]+(A-227), Compound [1-1]+(A-228), Compound [1-1]+ (A-229), Compound [1-1]+(A-230), Compound [1-1]+(A-231), Compound [1-1]+(A-232), Compound [1-1]+(A-233), Compound [1-1]+(A-234), Compound [1-1]+(A-235), Compound [1-1]+(A-236), Compound [1-1]+(A-237), Compound [1-1]+(A-238), Compound [1-1]+(A-239), Compound [1-1]+(A-240), Compound [1-1]+(A-241), Compound [1-1]+(A-242), Compound [1-1]+(A-243), Compound [1-1]+(A-244), Compound [1-1]+(A-245), Compound [1-1]+(A-246), Compound [1-1]+(A-247), Compound [1-1]+(A-248), Compound [1-1]+(A-249), Compound [1-1]+(A-250), Compound [1-1]+(A-251), Compound [1-1]+(A-252), Compound [1-1]+(A-253), Compound [1-1]+(A-254), Compound [1-1]+(A-255), Compound [1-1]+(A-256), Compound [1-1]+(A-257), Compound [1-1]+(A-258), Compound [1-1]+(A-259), Compound [1-1]+(A-260), Compound [1-1]+(A-261), Compound [1-1]+(A-262), Compound [1-1]+(A-263), Compound [1-1]+(A-264), Compound [1-1]+(A-265), Compound [1-1]+(A-266), Compound [1-1]+(A-267), Compound [1-1]+(A-268), Compound [1-1]+(A-269), Compound [1-1]+(A-270), Compound [1-1]+(A-271), Compound [1-1]+(A-272), Compound [1-1]+(A-273), Compound [1-1]+(A-274), Compound [1-1]+(A-275), Compound [1-1]+(A-276), Compound [1-1]+(A-277), Compound [1-1]+ (A-278), Compound [1-1]+(A-279), Compound [1-1]+ (A-280), Compound [1-1]+(A-281), Compound [1-1]+(A-282), Compound [1-1]+(A-283), Compound [1-1]+(A-284), Compound [1-1]+(A-285), Compound [1-1]+(A-286), Compound [1-1]+(A-287), Compound [1-1]+(A-288), Compound [1-1]+(A-289), Compound [1-1]+(A-290), Compound

[1-1]+(A-291), Compound [1-1]+(A-292), Compound [1-1]+(A-293), Compound [1-1]+(A-294), Compound [1-1]+(A-295), Compound [1-1]+(A-296), Compound [1-1]+(A-297), Compound [1-1]+(A-298), Compound [1-1]+(A-299), Compound [1-1]+(A-300), Compound [1-1]+(A-301), Compound [1-1]+(A-302), Compound [1-1]+(A-303), Compound [1-1]+(A-304), Compound [1-1]+(A-305), Compound [1-1]+(A-306), Compound [1-11+(A-307), Compound [1-1]+(A-308), Compound [1-1]+(A-309), Compound [1-1]+(A-310), Compound [1-1]+(A-311), Compound [1-1]+(A-312), Compound [1-1]+(A-313), Compound [1-1]+(A-314), Compound [1-1]+(A-315), Compound [1-1]+(A-316), Compound [1-1]+(A-317), Compound [1-1] + (A-318), Compound [1-1] + (A-319), Compound [1-1] + (A-320), Compound [1-1]+(A-321), Compound [1-1]+(A-322), Compound [1-1] +(A-323), Compound [1-1] +(A-324), Compound [1-1] +(A-325), Compound [1-1]+(A-326), Compound [1-1]+(A-327), Compound [1-1] + (A-328), Compound [1-1] + (A-329), Compound [1-1] + (A-330), Compound [1-1]+(A-331), Compound [1-1]+(A-332), Compound [1-1]+(A-333), Compound [1-1]+(A-334), Compound [1-1]+(A-335), Compound [1-1]+(A-336), Compound [1-1]+(A-337), Compound [1-1]+(A-338), Compound [1-1] +(A-339), Compound [1-1]+(A-340), Compound [1-1]+(A-341),

Compound [1-2]+(A-001), Compound [1-2]+(A-002), Compound [1-2]+(A-003), Compound [1-2]+(A-004), Compound [1-2]+(A-005), Compound [1-2]+(A-006), Compound [1-2]+(A-007), Compound [1-2]+(A-008), Compound [1-2]+(A-009), Compound [1-2]+(A-010), Compound [1-2]+(A-011), Compound [1-2]+(A-012), Compound [1-2]+(A-013), Compound [1-2]+(A-014), Compound [1-2]+(A-015), Compound [1-2]+(A-016), Compound [1-2]+(A-017), Compound [1-2]+(A-018), Compound [1-2]+(A-019), Compound [1-2]+(A-020), Compound [1-2]+(A-021), Compound [1-2]+(A-022), Compound [1-2]+(A-023), Compound [1-2]+(A-024), Compound [1-2]+(A-025), Compound [1-2]+(A-026), Compound [1-2]+(A-027), Compound [1-2]+(A-028), Compound [1-2]+(A-029), Compound [1-2]+(A-030), Compound [1-2]+(A-031), Compound [1-2]+(A-032), Compound [1-2]+(A-033), Compound [1-2]+(A-034), Compound [1-2]+(A-035), Compound [1-2]+(A-036), Compound [1-2]+(A-037), Compound [1-2]+(A-038), Compound [1-2]+(A-039), Compound [1-2]+(A-040), Compound [1-2]+(A-041), Compound [1-2]+(A-042), Compound [1-2]+(A-043), Compound [1-2]+(A-044), Compound [1-2]+(A-045), Compound [1-2]+(A-046), Compound [1-2]+(A-047), Compound [1-2]+(A-048), Compound [1-2]+(A-049), Compound [1-2]+(A-050), Compound [1-2]+(A-051), Compound [1-2]+(A-052), Compound [1-2]+(A-053), Compound [1-2]+(A-054), Compound [1-2]+(A-055), Compound [1-2]+(A-056), Compound [1-2]+(A-057), Compound [1-2]+(A-058), Compound [1-2]+(A-059), Compound [1-2]+(A-060), Compound [1-2]+(A-061), Compound [1-2]+(A-062), Compound [1-2]+(A-063), Compound [1-2]+(A-064), Compound [1-2]+(A-065), Compound [1-2]+(A-066), Compound [1-2]+(A-067), Compound [1-2]+(A-068), Compound [1-2]+(A-069), Compound [1-2]+(A-070), Compound [1-2]+(A-071), Compound [1-2]+(A-072), Compound [1-2]+(A-073), Compound [1-2]+(A-074), Compound [1-2] + (A-075), Compound [1-2]+(A-076), Compound [1-2]+(A-077), Compound [1-2]+(A-078), Compound [1-2]+(A-079), Compound [1-2]+(A-080), Compound [1-2]+(A-081), Compound [1-2]+(A-082), Compound [1-2]+(A-083), Compound [1-2]+(A-084), Compound [1-2]+(A-085), Compound [1-2]+(A-086), Compound [1-2]+(A-087), Compound [1-2]+(A-088), Compound [1-2]+(A-089), Compound [1-2]+(A-090), Compound [1-2]+(A-091), Compound [1-2]+(A-092), Compound [1-2]+(A-093), Compound [1-2]+(A-094), Compound [1-2]+(A-095), Compound [1-2]+(A-096), Compound [1-2]+(A-097), Compound [1-2]+(A-098), Compound [1-2]+(A-099), Compound [1-2]+(A-100), Compound [1-2]+(A-101), Compound [1-2]+(A-102), Compound [1-2]+(A-103), Compound [1-2]+(A-104), Compound [1-2]+(A-105), Compound [1-2]+(A-106), Compound [1-2]+(A-107), Compound [1-2]+(A-108), Compound [1-2]+(A-109), Compound [1-2]+(A-110), Compound [1-2]+(A-111), Compound [1-2]+(A-112), Compound [1-2]+(A-113), Compound [1-2]+(A-114), Compound [1-2]+(A-115), Compound [1-2]+(A-116), Compound [1-2]+(A-117), Compound [1-2]+(A-118), Compound [1-2]+(A-119), Compound [1-2]+(A-120), Compound [1-2]+(A-121), Compound [1-2]+(A-122), Compound [1-2]+(A-123), Compound [1-2]+(A-124), Compound [1-2]+(A-125), Compound [1-2]+(A-126), Compound [1-2]+(A-127), Compound [1-2]+(A-128), Compound [1-2]+(A-129), Compound [1-2]+(A-130), Compound [1-2]+(A-131), Compound [1-2]+(A-132), Compound [1-2]+(A-133), Compound [1-2]+(A-134), Compound [1-2]+(A-135), Compound [1-2]+(A-136), Compound [1-2]+(A-137), Compound [1-2]+(A-138), Compound [1-2]+(A-139), Compound [1-2]+(A-140), Compound [1-2]+(A-141), Compound [1-2]+(A-142), Compound [1-2]+(A-143), Compound [1-2]+(A-144), Compound [1-2]+(A-145), Compound [1-2]+(A-146), Compound [1-2]+(A-147), Compound [1-2]+(A-148), Compound [1-2]+(A-149), Compound [1-2]+(A-150), Compound [1-2]+(A-151), Compound [1-2]+(A-152), Compound [1-2]+(A-153), Compound [1-2]+(A-154), Compound [1-2]+(A-155), Compound [1-2]+(A-156), Compound [1-2]+(A-157), Compound [1-2]+(A-158), Compound [1-2]+(A-159), Compound [1-2]+(A-160), Compound [1-2]+(A-161), Compound [1-2]+(A-162), Compound [1-2]+(A-163), Compound [1-2]+(A-164), Compound [1-2]+(A-165), Compound [1-2]+(A-166), Compound [1-2]+(A-167), Compound [1-2]+(A-168), Compound [1-2]+(A-169), Compound [1-2]+(A-170), Compound [1-2]+(A-171), Compound [1-2]+(A-172), Compound [1-2]+(A-173), Compound [1-2]+(A-174), Compound [1-2]+(A-175), Compound [1-2]+(A-176), Compound [1-2]+(A-177), Compound [1-2]+(A-178), Compound [1-2]+(A-179), Compound [1-2]+(A-180), Compound [1-2]+(A-181), Compound [1-2]+(A-182), Compound [1-2]+(A-183), Compound [1-2]+(A-184), Compound [1-2]+(A-185), Compound [1-2]+(A-186), Compound [1-2]+(A-187), Compound [1-2]+(A-188), Compound [1-2]+(A-189), Compound [1-2]+(A-190), Compound [1-2]+(A-191), Compound [1-2]+(A-192), Compound [1-2]+(A-193), Compound [1-2]+(A-194), Compound [1-2]+(A-195), Compound [1-2]+(A-196), Compound [1-2]+(A-197), Compound [1-2]+(A-198), Compound [1-2]+(A-199), Compound [1-2]+(A-200), Compound [1-2]+(A-201), Compound [1-2]+(A-202), Compound [1-2]+(A-203), Compound [1-2]+(A-204), Compound [1-2]+(A-205), Compound [1-2]+(A-206), Compound [1-2]+(A-207), Compound [1-2]+(A-208), Compound [1-2]+(A-209), Compound [1-2]+(A-210), Compound [1-2]+(A-211), Compound [1-2]+(A-212), Compound [1-2]+(A-213), Compound [1-2]+(A-214), Compound [1-2]+(A-215), Compound [1-2]+(A-216), Compound [1-2]+(A-217), Compound [1-2]+(A-218), Compound [1-2]+(A-219), Compound [1-2]+(A-220), Compound [1-2]+(A-221), Compound [1-2]+(A-222), Compound [1-2]+(A-223), Compound [1-2]+(A-224), Compound [1-2]+(A-225), Compound [1-2]+(A-226), Compound [1-2]+(A-227), Compound [1-2]+(A-228), Compound [1-2]+(A-229), Compound [1-2]+(A-230), Compound [1-2]+(A-231), Compound [1-2]+(A-232), Compound [1-2]+(A-233), Compound [1-2]+(A-234), Compound [1-2]+(A-235), Compound [1-2]+(A-236), Compound [1-2]+(A-237), Compound [1-2]+(A-238), Compound [1-2]+(A-239), Compound [1-2]+(A-240), Compound [1-2]+(A-241), Compound [1-2]+(A-242), Compound [1-2]+(A-243), Compound [1-2]+(A-244), Compound [1-2]+(A-245), Compound [1-2]+(A-246), Compound [1-2]+(A-247), Compound [1-2]+(A-248), Compound [1-2]+(A-249), Compound [1-2]+(A-250), Compound [1-2]+(A-251), Compound [1-2]+(A-252), Compound [1-2]+(A-253), Compound [1-2]+(A-254), Compound [1-2]+(A-255), Compound [1-2]+(A-256), Compound [1-2]+(A-257), Compound [1-2]+(A-258), Compound [1-2]+(A-259), Compound [1-2]+(A-260), Compound [1-2]+(A-261), Compound [1-2]+(A-262), Compound [1-2]+(A-263), Compound [1-2]+(A-264), Compound [1-2]+(A-265), Compound [1-2]+(A-266), Compound [1-2]+(A-267), Compound [1-2]+(A-268), Compound [1-2]+(A-269), Compound [1-2]+(A-270), Compound [1-2]+(A-271), Compound [1-2]+(A-272), Compound [1-2]+(A-273), Compound [1-2]+(A-274), Compound [1-2]+(A-275), Compound [1-2]+(A-276), Compound [1-2]+(A-277), Compound [1-2]+(A-278), Compound [1-2]+(A-279), Compound [1-2]+(A-280), Compound [1-2]+(A-281), Compound [1-2]+(A-282), Compound [1-2]+(A-283), Compound [1-2]+(A-284), Compound [1-2]+(A-285), Compound [1-2]+(A-286), Compound [1-2]+(A-287), Compound [1-2]+(A-288), Compound [1-2]+(A-289), Compound [1-2]+(A-290), Compound [1-2]+(A-291), Compound [1-2]+(A-292), Compound [1-2]+(A-293), Compound [1-2]+(A-294), Compound [1-2]+(A-295), Compound [1-2]+(A-296), Compound [1-2]+(A-297), Compound [1-2]+(A-298), Compound [1-2]+(A-299), Compound [1-2]+(A-300), Compound [1-2]+(A-301), Compound [1-2]+(A-302), Compound [1-2]+(A-303), Compound [1-2]+(A-304), Compound [1-2]+(A-305), Compound [1-2]+(A-306), Compound [1-2]+(A-307), Compound [1-2]+(A-308), Compound [1-2]+(A-309), Compound [1-2]+(A-310), Compound [1-2]+(A-311), Compound [1-2]+(A-312), Compound [1-2]+(A-313), Compound [1-2]+(A-314), Compound [1-2]+(A-315), Compound [1-2]+(A-316), Compound [1-2]+(A-317), Compound [1-2]+(A-318), Compound [1-2]+(A-319), Compound [1-2]+(A-320), Compound [1-2]+(A-321), Compound [1-2]+(A-322), Compound [1-2]+(A-323), Compound [1-2]+(A-324), Compound [1-2]+(A-325), Compound [1-2]+(A-326), Compound [1-2]+(A-327), Compound [1-2]+(A-328), Compound [1-2]+(A-329), Compound [1-2]+(A-330), Compound [1-2]+(A-331), Compound [1-2]+(A-332), Compound [1-2]+(A-333), Compound [1-2]+(A-334), Compound [1-2]+(A-335), Compound [1-2]+(A-336), Compound [1-2]+(A-337), Compound [1-2]+(A-338), Compound [1-2]+(A-339), Compound [1-2]+(A-340), Compound [1-2]+(A-341),

Compound [1-3]+(A-001), Compound [1-3]+(A-002), Compound [1-3]+(A-003), Compound [1-3]+(A-004), Compound [1-3]+(A-005), Compound [1-3]+(A-006), Compound [1-3]+(A-007), Compound [1-3]+(A-008), Compound [1-3]+(A-009), Compound [1-3]+(A-010), Compound [1-3]+(A-011), Compound [1-3]+(A-012), Compound [1-3]+(A-013), Compound [1-3]+(A-014), Compound [1-3]+(A-015), Compound [1-3]+(A-016), Compound [1-3]+(A-017), Compound [1-3]+(A-018), Compound [1-3]+(A-019), Compound [1-3]+(A-020), Compound [1-3]+(A-021), Compound [1-3]+(A-022), Compound [1-3]+(A-023), Compound [1-3]+(A-024), Compound [1-3]+(A-025), Compound [1-3]+(A-026), Compound [1-3]+(A-027), Compound [1-3]+(A-028), Compound [1-3]+(A-029), Compound [1-3]+(A-030), Compound [1-3]+(A-031), Compound [1-3]+(A-032), Compound [1-3]+(A-033), Compound [1-3]+(A-034), Compound [1-3]+(A-035), Compound [1-3]+(A-036), Compound [1-3]+(A-037), Compound [1-3]+(A-038), Compound [1-3]+(A-039), Compound [1-3]+(A-040), Compound [1-3]+(A-041), Compound [1-3]+(A-042), Compound [1-3]+(A-043), Compound [1-3]+(A-044), Compound [1-3]+(A-045), Compound [1-3]+(A-046), Compound [1-3]+(A-047), Compound [1-3]+(A-048), Compound [1-3]+(A-049), Compound [1-3]+(A-050), Compound [1-3]+(A-051), Compound [1-3]+(A-052), Compound [1-3]+(A-053), Compound [1-3]+(A-054), Compound [1-3]+(A-055), Compound [1-3]+(A-056), Compound [1-3]+(A-057), Compound [1-3]+(A-058), Compound [1-3]+(A-059), Compound [1-3]+(A-060), Compound [1-3]+(A-061), Compound [1-3]+(A-062), Compound [1-3]+(A-063), Compound [1-3]+(A-064), Compound [1-3]+(A-065), Compound [1-3]+(A-066), Compound [1-3]+(A-067), Compound [1-3]+(A-068), Compound [1-3]+(A-069), Compound [1-3]+(A-070), Compound [1-3]+(A-071), Compound [1-3]+(A-072), Compound [1-3]+(A-073), Compound [1-3]+(A-074), Compound [1-3]+(A-075), Compound [1-3]+(A-076), Compound [1-3]+(A-077), Compound [1-3]+(A-078), Compound [1-3]+(A-079), Compound [1-3]+(A-080), Compound [1-3]+(A-081), Compound [1-3]+(A-082), Compound [1-3]+(A-083), Compound [1-3]+(A-084), Compound [1-3]+(A-085), Compound [1-3]+(A-086), Compound [1-3]+(A-087), Compound [1-3]+(A-088), Compound [1-3]+(A-089), Compound [1-3]+(A-090), Compound [1-3]+(A-091), Compound [1-3]+(A-092), Compound [1-3]+(A-093), Compound

[1-3]+(A-094), Compound [1-3]+(A-095), Compound [1-3]+(A-096), Compound [1-3]+(A-097), Compound [1-3]+(A-098), Compound [1-3]+(A-099), Compound [1-3]+(A-100), Compound [1-3]+(A-101), Compound [1-3]+(A-102), Compound [1-3]+(A-103), Compound [1-3]+(A-104), Compound [1-3]+(A-105), Compound [1-3]+(A-106), Compound [1-3]+(A-107), Compound [1-3]+(A-108), Compound [1-3]+(A-109), Compound [1-3]+(A-110), Compound [1-3]+(A-111), Compound [1-3]+(A-112), Compound [1-3]+(A-113), Compound [1-3]+(A-114), Compound [1-3]+(A-115), Compound [1-3]+(A-116), Compound [1-3]+(A-117), Compound [1-3]+(A-118), Compound [1-3]+(A-119), Compound [1-3]+(A-120), Compound [1-3]+(A-121), Compound [1-3]+(A-122), Compound [1-3]+(A-123), Compound [1-3]+(A-124), Compound [1-3]+(A-125), Compound [1-3]+(A-126), Compound [1-3]+(A-127), Compound [1-3]+(A-128), Compound [1-3]+(A-129), Compound [1-3]+(A-130), Compound [1-3]+(A-131), Compound [1-3]+(A-132), Compound [1-3]+(A-133), Compound [1-3]+(A-134), Compound [1-3]+(A-135), Compound [1-3]+(A-136), Compound [1-3]+(A-137), Compound [1-3]+(A-138), Compound [1-3]+(A-139), Compound [1-3]+(A-140), Compound [1-3]+(A-141), Compound [1-3]+(A-142), Compound [1-3]+(A-143), Compound [1-3]+(A-144), Compound [1-3]+(A-145), Compound [1-3]+(A-146), Compound [1-3]+(A-147), Compound [1-3]+(A-148), Compound [1-3]+(A-149), Compound [1-3]+(A-150), Compound [1-3]+(A-151), Compound [1-3]+(A-152), Compound [1-3]+(A-153), Compound [1-3]+(A-154), Compound [1-3]+(A-155), Compound [1-3]+(A-156), Compound [1-3]+(A-157), Compound [1-3]+(A-158), Compound [1-3]+(A-159), Compound [1-3]+(A-160), Compound [1-3]+(A-161), Compound [1-3]+(A-162), Compound [1-3]+(A-163), Compound [1-3]+(A-164), Compound [1-3]+(A-165), Compound [1-3]+(A-166), Compound [1-3]+(A-167), Compound [1-3]+(A-168), Compound [1-3]+(A-169), Compound [1-3]+(A-170), Compound [1-3]+(A-171), Compound [1-3]+(A-172), Compound [1-3]+(A-173), Compound [1-3]+(A-174), Compound [1-3]+(A-175), Compound [1-3]+(A-176), Compound [1-3]+(A-177), Compound [1-3]+(A-178), Compound [1-3]+(A-179), Compound [1-3]+(A-180), Compound [1-3]+(A-181), Compound [1-3]+(A-182), Compound [1-3]+(A-183), Compound [1-3]+(A-184), Compound [1-3]+(A-185), Compound [1-3]+(A-186), Compound [1-3]+(A-187), Compound [1-3]+(A-188), Compound [1-3]+(A-189), Compound [1-3]+(A-190), Compound [1-3]+(A-191), Compound [1-3]+(A-192), Compound [1-3]+(A-193), Compound [1-3]+(A-194), Compound [1-3]+(A-195), Compound [1-3]+(A-196), Compound [1-3]+(A-197), Compound [1-3]+(A-198), Compound [1-3]+(A-199), Compound [1-3]+(A-200), Compound [1-3]+(A-201), Compound [1-3]+(A-202), Compound [1-3]+(A-203), Compound [1-3]+(A-204), Compound [1-3]+(A-205), Compound [1-3]+(A-206), Compound [1-3]+(A-207), Compound [1-3]+(A-208), Compound [1-3]+(A-209), Compound [1-3]+(A-210), Compound [1-3]+(A-211), Compound [1-3]+(A-212), Compound [1-3]+(A-213), Compound [1-3]+(A-214), Compound [1-3]+(A-215), Compound [1-3]+(A-216), Compound [1-3]+(A-217), Compound [1-3]+(A-218), Compound [1-3]+(A-219), Compound [1-3]+(A-220), Compound [1-3]+(A-221), Compound [1-3]+(A-222), Compound [1-3]+(A-223), Compound [1-3]+(A-224), Compound [1-3]+(A-225), Compound [1-3]+(A-226), Compound [1-3]+(A-227), Compound [1-3]+(A-228), Compound [1-3]+(A-229), Compound [1-3]+(A-230), Compound [1-3]+(A-231), Compound [1-3]+(A-232), Compound [1-3]+(A-233), Compound [1-3]+(A-234), Compound [1-3]+(A-235), Compound [1-3]+(A-236), Compound [1-3]+(A-237), Compound [1-3]+(A-238), Compound [1-3]+(A-239), Compound [1-3]+(A-240), Compound [1-3]+(A-241), Compound [1-3]+(A-242), Compound [1-3]+(A-243), Compound [1-3]+(A-244), Compound [1-3]+(A-245), Compound [1-3]+(A-246), Compound [1-3]+(A-247), Compound [1-3]+(A-248), Compound [1-3]+(A-249), Compound [1-3]+(A-250), Compound [1-3]+(A-251), Compound [1-3]+(A-252), Compound [1-3]+(A-253), Compound [1-3]+(A-254), Compound [1-3]+(A-255), Compound [1-3]+(A-256), Compound [1-3]+(A-257), Compound [1-3]+(A-258), Compound [1-3]+(A-259), Compound [1-3]+(A-260), Compound [1-3]+(A-261), Compound [1-3]+(A-262), Compound [1-3]+(A-263), Compound [1-3]+(A-264), Compound [1-3]+(A-265), Compound [1-3]+(A-266), Compound [1-3]+(A-267), Compound [1-3]+(A-268), Compound [1-3]+(A-269), Compound [1-3]+(A-270), Compound [1-3]+(A-271), Compound [1-3]+(A-272), Compound [1-3]+(A-273), Compound [1-3]+(A-274), Compound [1-3]+(A-275), Compound [1-3]+(A-276), Compound [1-3]+(A-277), Compound [1-3]+(A-278), Compound [1-3]+(A-279), Compound [1-3]+(A-280), Compound [1-3]+(A-281), Compound [1-3]+(A-282), Compound [1-3]+(A-283), Compound [1-3]+(A-284), Compound [1-3]+(A-285), Compound [1-3]+(A-286), Compound [1-3]+(A-287), Compound [1-3]+(A-288), Compound [1-3]+(A-289), Compound [1-3]+(A-290), Compound [1-3]+(A-291), Compound [1-3]+(A-292), Compound [1-3]+(A-293), Compound [1-3]+(A-294), Compound [1-3]+(A-295), Compound [1-3]+(A-296), Compound [1-3]+(A-297), Compound [1-3]+(A-298), Compound [1-3]+(A-299), Compound [1-3]+(A-300), Compound [1-3]+(A-301), Compound [1-3]+(A-302), Compound [1-3]+(A-303), Compound [1-3]+(A-304), Compound [1-3]+(A-305), Compound [1-3]+(A-306), Compound [1-3]+(A-307), Compound [1-3]+(A-308), Compound [1-3]+(A-309), Compound [1-3]+(A-310), Compound [1-3]+(A-311), Compound [1-3]+(A-312), Compound [1-3]+(A-313), Compound [1-3]+(A-314), Compound [1-3]+(A-315), Compound [1-3]+(A-316), Compound [1-3]+(A-317), Compound [1-3]+(A-318), Compound [1-3]+(A-319), Compound [1-3]+(A-320), Compound [1-3]+(A-321), Compound [1-3]+(A-322), Compound [1-3]+(A-323), Compound [1-3]+(A-324), Compound [1-3]+(A-325), Compound [1-3]+(A-326), Compound [1-3]+(A-327), Compound [1-3]+(A-328), Compound [1-3]+(A-329), Compound [1-3]+(A-330), Compound [1-3]+(A-331), Compound [1-3]+(A-332), Compound [1-3]+(A-333), Compound [1-3]+(A-334), Compound [1-3]+(A-335), Compound [1-3]+(A-336), Compound [1-3]+(A-337), Compound [1-3]+(A-338), Compound [1-3]+(A-339), Compound [1-3]+(A-340),

Compound [1-3]+(A-341),

Compound [1-4]+(A-001), Compound [1-4]+(A-002), Compound [1-4]+(A-003), Compound [1-4]+(A-004), Compound [1-4]+(A-005), Compound [1-4]+(A-006), Compound [1-4]+(A-007), Compound [1-4]+(A-008), Compound [1-4]+(A-009), Compound [1-4]+(A-010), Compound [1-4]+(A-011), Compound [1-4]+(A-012), Compound [1-4]+(A-013), Compound [1-4]+(A-014), Compound [1-4]+(A-015), Compound [1-4]+(A-016), Compound [1-4]+(A-017), Compound [1-4]+(A-018), Compound [1-4]+(A-019), Compound [1-4]+(A-020), Compound [1-4]+(A-021), Compound [1-4]+(A-022), Compound [1-4]+(A-023), Compound [1-4]+(A-024), Compound [1-4]+(A-025), Compound [1-4]+(A-026), Compound [1-4]+(A-027), Compound [1-4]+(A-028), Compound [1-4]+(A-029), Compound [1-4]+(A-030), Compound [1-4]+(A-031), Compound [1-4]+(A-032), Compound [1-4]+(A-033), Compound [1-4]+(A-034), Compound [1-4]+(A-035), Compound [1-4]+(A-036), Compound [1-4]+(A-037), Compound [1-4]+(A-038), Compound [1-4]+(A-039), Compound [1-4]+(A-040), Compound [1-4]+(A-041), Compound [1-4]+(A-042), Compound [1-4]+(A-043), Compound [1-4]+(A-044), Compound [1-4]+(A-045), Compound [1-4]+(A-046), Compound [1-4]+(A-047), Compound [1-4]+(A-048), Compound [1-4]+(A-049), Compound [1-4]+(A-050), Compound [1-4]+(A-051), Compound [1-4]+(A-052), Compound [1-4]+(A-053), Compound [1-4]+(A-054), Compound [1-4]+(A-055), Compound [1-4]+(A-056), Compound [1-4]+(A-057), Compound [1-4]+(A-058), Compound [1-4]+(A-059), Compound [1-4]+(A-060), Compound [1-4]+(A-061), Compound [1-4]+(A-062), Compound [1-4]+(A-063), Compound [1-4]+(A-064), Compound [1-4]+(A-065), Compound [1-4]+(A-066), Compound [1-4]+(A-067), Compound [1-4]+(A-068), Compound [1-4]+(A-069), Compound [1-4]+(A-070), Compound [1-4]+(A-071), Compound [1-4]+(A-072), Compound [1-4]+(A-073), Compound [1-4]+(A-074), Compound [1-4]+(A-075), Compound [1-4]+(A-076), Compound [1-4]+(A-077), Compound [1-4]+(A-078), Compound [1-4]+(A-079), Compound [1-4]+(A-080), Compound [1-4]+(A-081), Compound [1-4]+(A-082), Compound [1-4]+(A-083), Compound [1-4]+(A-084), Compound [1-4]+(A-085), Compound [1-4]+(A-086), Compound [1-4]+(A-087), Compound [1-4]+(A-088), Compound [1-4]+(A-089), Compound [1-4]+(A-090), Compound [1-4]+(A-091), Compound [1-4]+(A-092), Compound [1-4]+(A-093), Compound [1-4]+(A-094), Compound [1-4]+(A-095), Compound [1-4]+(A-096), Compound [1-4]+(A-097), Compound [1-4]+(A-098), Compound [1-4]+(A-099), Compound [1-4]+(A-100), Compound [1-4]+(A-101), Compound [1-4]+(A-102), Compound [1-4]+(A-103), Compound [1-4]+(A-104), Compound [1-4]+(A-105), Compound [1-4]+(A-106), Compound [1-4]+(A-107), Compound [1-4]+(A-108), Compound [1-4]+(A-109), Compound [1-4]+(A-110), Compound [1-4]+(A-111), Compound [1-4]+(A-112), Compound [1-4]+(A-113), Compound [1-4]+(A-114), Compound [1-4]+(A-115), Compound [1-4]+(A-116), Compound [1-4]+(A-117), Compound [1-4]+(A-118), Compound [1-4]+(A-119), Compound [1-4]+(A-120), Compound [1-4]+(A-121), Compound [1-4]+(A-122), Compound [1-4]+(A-123), Compound [1-4]+(A-124), Compound [1-4]+(A-125), Compound [1-4]+(A-126), Compound [1-4]+(A-127), Compound [1-4]+(A-128), Compound [1-4]+(A-129), Compound [1-4]+(A-130), Compound [1-4]+(A-131), Compound [1-4]+(A-132), Compound [1-4]+(A-133), Compound [1-4]+(A-134), Compound [1-4]+(A-135), Compound [1-4]+(A-136), Compound [1-4]+(A-137), Compound [1-4]+(A-138), Compound [1-4]+(A-139), Compound [1-4]+(A-140), Compound [1-4]+(A-141), Compound [1-4]+(A-142), Compound [1-4]+(A-143), Compound [1-4]+(A-144), Compound [1-4]+(A-145), Compound [1-4]+(A-146), Compound [1-4]+(A-147), Compound [1-4]+(A-148), Compound [1-4]+(A-149), Compound [1-4]+(A-150), Compound [1-4]+(A-151), Compound [1-4]+(A-152), Compound [1-4]+(A-153), Compound [1-4]+(A-154), Compound [1-4]+(A-155), Compound [1-4]+(A-156), Compound [1-4]+(A-157), Compound [1-4]+(A-158), Compound [1-4]+(A-159), Compound [1-4]+(A-160), Compound [1-4]+(A-161), Compound [1-4]+(A-162), Compound [1-4]+(A-163), Compound [1-4]+(A-164), Compound [1-4]+(A-165), Compound [1-4]+(A-166), Compound [1-4]+(A-167), Compound [1-4]+(A-168), Compound [1-4]+(A-169), Compound [1-4]+(A-170), Compound [1-4]+(A-171), Compound [1-4]+(A-172), Compound [1-4]+(A-173), Compound [1-4]+(A-174), Compound [1-4]+(A-175), Compound [1-4]+(A-176), Compound [1-4]+(A-177), Compound [1-4]+(A-178), Compound [1-4]+(A-179), Compound [1-4]+(A-180), Compound [1-4]+(A-181), Compound [1-4]+(A-182), Compound [1-4]+(A-183), Compound [1-4]+(A-184), Compound [1-4]+(A-185), Compound [1-4]+(A-186), Compound [1-4]+(A-187), Compound [1-4]+(A-188), Compound [1-4]+(A-189), Compound [1-4]+(A-190), Compound [1-4]+(A-191), Compound [1-4]+(A-192), Compound [1-4]+(A-193), Compound [1-4]+(A-194), Compound [1-4]+(A-195), Compound [1-4]+(A-196), Compound [1-4]+(A-197), Compound [1-4]+(A-198), Compound [1-4]+(A-199), Compound [1-4]+(A-200), Compound [1-4]+(A-201), Compound [1-4]+(A-202), Compound [1-4]+(A-203), Compound [1-4]+(A-204), Compound [1-4]+(A-205), Compound [1-4]+(A-206), Compound [1-4]+(A-207), Compound [1-4]+(A-208), Compound [1-4]+(A-209), Compound [1-4]+(A-210), Compound [1-4]+(A-211), Compound [1-4]+(A-212), Compound [1-4]+(A-213), Compound [1-4]+(A-214), Compound [1-4]+(A-215), Compound [1-4]+(A-216), Compound [1-4]+(A-217), Compound [1-4]+(A-218), Compound [1-4]+(A-219), Compound [1-4]+(A-220), Compound [1-4]+(A-221), Compound [1-4]+(A-222), Compound [1-4]+(A-223), Compound [1-4]+(A-224), Compound [1-4]+(A-225), Compound [1-4]+(A-226), Compound [1-4]+(A-227), Compound [1-4]+(A-228), Compound [1-4]+(A-229), Compound [1-4]+(A-230), Compound [1-4]+(A-231), Compound [1-4]+(A-232), Compound [1-4]+(A-233), Compound [1-4]+(A-234), Compound [1-4]+(A-235), Compound [1-4]+(A-236), Compound [1-4]+(A-237), Compound [1-4]+(A-238), Compound [1-4]+(A-239), Compound [1-4]+(A-240), Compound [1-4]+(A-241), Compound [1-4]+(A-242), Compound [1-4]+(A-243), Compound [1-4]+(A-244), Compound [1-4]+(A-245), Compound [1-4]+(A-246), Compound [1-4]+(A-247), Compound [1-4]+(A-248), Compound [1-4]+(A-249), Compound [1-4]+(A-250), Compound [1-4]+(A-251), Compound [1-4]+(A-252), Compound [1-4]+(A-253), Compound [1-4]+(A-254), Compound [1-4]+(A-255), Compound [1-4]+(A-256), Compound [1-4]+(A-257), Compound [1-4]+(A-258), Compound [1-4]+(A-259), Compound [1-4]+(A-260), Compound [1-4]+(A-261), Compound [1-4]+(A-262), Compound [1-4]+(A-263), Compound [1-4]+(A-264), Compound [1-4]+(A-265), Compound [1-4]+(A-266), Compound [1-4]+(A-267), Compound [1-4]+(A-268), Compound [1-4]+(A-269), Compound [1-4]+(A-270), Compound [1-4]+(A-271), Compound [1-4]+(A-272), Compound [1-4]+(A-273), Compound [1-4]+(A-274), Compound [1-4]+(A-275), Compound [1-4]+(A-276), Compound [1-4]+(A-277), Compound [1-4]+(A-278), Compound [1-4]+(A-279), Compound [1-4]+(A-280), Compound [1-4]+(A-281), Compound [1-4]+(A-282), Compound [1-4]+(A-283), Compound [1-4]+(A-284), Compound [1-4]+(A-285), Compound [1-4]+(A-286), Compound [1-4]+(A-287), Compound [1-4]+(A-288), Compound [1-4]+(A-289), Compound [1-4]+(A-290), Compound [1-4]+(A-291), Compound [1-4]+(A-292), Compound [1-4]+(A-293), Compound [1-4]+(A-294), Compound [1-4]+(A-295), Compound [1-4]+(A-296), Compound [1-4]+(A-297), Compound [1-4]+(A-298), Compound [1-4]+(A-299), Compound [1-4]+(A-300), Compound [1-4]+(A-301), Compound [1-4]+(A-302), Compound [1-4]+(A-303), Compound [1-4]+(A-304), Compound [1-4]+(A-305), Compound [1-4]+(A-306), Compound [1-4]+(A-307), Compound [1-4]+(A-308), Compound [1-4]+(A-309), Compound [1-4]+(A-310), Compound [1-4]+(A-311), Compound [1-4]+(A-312), Compound [1-4]+(A-313), Compound [1-4]+(A-314), Compound [1-4]+(A-315), Compound [1-4]+(A-316), Compound [1-4]+(A-317), Compound [1-4]+(A-318), Compound [1-4]+(A-319), Compound [1-4]+(A-320), Compound [1-4]+(A-321), Compound [1-4]+(A-322), Compound [1-4]+(A-323), Compound [1-4]+(A-324), Compound [1-4]+(A-325), Compound [1-4]+(A-326), Compound [1-4]+(A-327), Compound [1-4]+(A-328), Compound [1-4]+(A-329), Compound [1-4]+(A-330), Compound [1-4]+(A-331), Compound [1-4]+(A-332), Compound [1-4]+(A-333), Compound [1-4]+(A-334), Compound [1-4]+(A-335), Compound [1-4]+(A-336), Compound [1-4]+(A-337), Compound [1-4]+(A-338), Compound [1-4]+(A-339), Compound [1-4]+(A-340), Compound [1-4]+(A-341),

Compound [1-5]+(A-001), Compound [1-5]+(A-002), Compound [1-5]+(A-003), Compound [1-5]+(A-004), Compound [1-5]+(A-005), Compound [1-5]+(A-006), Compound [1-5]+(A-007), Compound [1-5]+(A-008), Compound [1-5]+(A-009), Compound [1-5]+(A-010), Compound [1-5]+(A-011), Compound [1-5]+(A-012), Compound [1-5]+(A-013), Compound [1-5]+(A-014), Compound [1-5]+(A-015), Compound [1-5]+(A-016), Compound [1-5]+(A-017), Compound [1-5]+(A-018), Compound [1-5]+(A-019), Compound [1-5]+(A-020), Compound [1-5]+(A-021), Compound [1-5]+(A-022), Compound [1-5]+(A-023), Compound [1-5]+(A-024), Compound [1-5]+(A-025), Compound [1-5]+(A-026), Compound [1-5]+(A-027), Compound [1-5]+(A-028), Compound [1-5]+(A-029), Compound [1-5]+(A-030), Compound [1-5]+(A-031), Compound [1-5]+(A-032), Compound [1-5]+(A-033), Compound [1-5]+(A-034), Compound [1-5]+(A-035), Compound [1-5]+(A-036), Compound [1-5]+(A-037), Compound [1-5]+(A-038), Compound [1-5]+(A-039), Compound [1-5]+(A-040), Compound [1-5]+(A-041), Compound [1-5]+(A-042), Compound [1-5]+(A-043), Compound [1-5]+(A-044), Compound [1-5]+(A-045), Compound [1-5]+(A-046), Compound [1-5]+(A-047), Compound [1-5]+(A-048), Compound [1-5]+(A-049), Compound [1-5]+(A-050), Compound [1-5]+(A-051), Compound [1-5]+(A-052), Compound [1-5]+(A-053), Compound [1-5]+(A-054), Compound [1-5]+(A-055), Compound [1-5]+(A-056), Compound [1-5]+(A-057), Compound [1-5]+(A-058), Compound [1-5]+(A-059), Compound [1-5]+(A-060), Compound [1-5]+(A-061), Compound [1-5]+(A-062), Compound [1-5]+(A-063), Compound [1-5]+(A-064), Compound [1-5]+(A-065), Compound [1-5]+(A-066), Compound [1-5]+(A-067), Compound [1-5]+(A-068), Compound [1-5]+(A-069), Compound [1-5]+(A-070), Compound [1-5]+(A-071), Compound [1-5]+(A-072), Compound [1-5]+(A-073), Compound [1-5]+(A-074), Compound [1-5]+(A-075), Compound [1-5]+(A-076), Compound [1-5]+(A-077), Compound [1-5]+(A-078), Compound [1-5]+(A-079), Compound [1-5]+(A-080), Compound [1-5]+(A-081), Compound [1-5]+(A-082), Compound [1-5]+(A-083), Compound [1-5]+(A-084), Compound [1-5]+(A-085), Compound [1-5]+(A-086), Compound [1-5]+(A-087), Compound [1-5]+(A-088), Compound [1-5]+(A-089), Compound [1-5]+(A-090), Compound [1-5]+(A-091), Compound [1-5]+(A-092), Compound [1-5]+(A-093), Compound [1-5]+(A-094), Compound [1-5]+(A-095), Compound [1-5]+(A-096), Compound [1-5]+(A-097), Compound [1-5]+(A-098), Compound [1-5]+(A-099), Compound [1-5]+(A-100), Compound [1-5]+(A-101), Compound [1-5]+(A-102), Compound [1-5]+(A-103), Compound [1-5]+(A-104), Compound [1-5]+(A-105), Compound [1-5]+(A-106), Compound [1-5]+(A-107), Compound [1-5]+(A-108), Compound [1-5]+(A-109), Compound [1-5]+(A-110), Compound [1-5]+(A-111), Compound [1-5]+(A-112), Compound [1-5]+(A-113), Compound [1-5]+(A-114), Compound [1-5]+(A-115), Compound [1-5]+(A-116), Compound [1-5]+(A-117), Compound [1-5]+(A-118), Compound [1-5]+(A-119), Compound [1-5]+(A-120), Compound [1-5]+(A-121), Compound [1-5]+(A-122), Compound [1-5]+(A-123), Compound [1-5]+(A-124), Compound [1-5]+(A-125), Compound [1-5]+(A-126), Compound [1-5]+(A-127), Compound [1-5]+(A-128), Compound [1-5]+(A-129), Compound [1-5]+(A-130), Compound [1-5]+(A-131), Compound [1-5]+(A-132), Compound [1-5]+(A-133), Compound [1-5]+(A-134), Compound [1-5]+(A-135), Compound [1-5]+(A-136), Compound [1-5]+(A-137), Compound [1-5]+(A-138), Compound [1-5]+(A-139), Compound [1-5]+(A-140), Compound [1-5]+(A-141), Compound [1-5]+(A-142), Compound [1-5]+(A-143), Compound [1-5]+(A-144), Compound

[1-5]+(A-145), Compound [1-5]+(A-146), Compound [1-5]+(A-147), Compound [1-5]+(A-148), Compound [1-5]+(A-149), Compound [1-5]+(A-150), Compound [1-5]+(A-151), Compound [1-5]+(A-152), Compound [1-5]+(A-153), Compound [1-5]+(A-154), Compound [1-5]+(A-155), Compound [1-5]+(A-156), Compound [1-5]+(A-157), Compound [1-5]+(A-158), Compound [1-5]+(A-159), Compound [1-5]+(A-160), Compound [1-5]+(A-161), Compound [1-5]+(A-162), Compound [1-5]+(A-163), Compound [1-5]+(A-164), Compound [1-5]+(A-165), Compound [1-5]+(A-166), Compound [1-5]+(A-167), Compound [1-5]+(A-168), Compound [1-5]+(A-169), Compound [1-5]+(A-170), Compound [1-5]+(A-171), Compound [1-5]+(A-172), Compound [1-5]+(A-173), Compound [1-5]+(A-174), Compound [1-5]+(A-175), Compound [1-5]+(A-176), Compound [1-5]+(A-177), Compound [1-5]+(A-178), Compound [1-5]+(A-179), Compound [1-5]+(A-180), Compound [1-5]+(A-181), Compound [1-5]+(A-182), Compound [1-5]+(A-183), Compound [1-5]+(A-184), Compound [1-5]+(A-185), Compound [1-5]+(A-186), Compound [1-5]+(A-187), Compound [1-5]+(A-188), Compound [1-5]+(A-189), Compound [1-5]+(A-190), Compound [1-5]+(A-191), Compound [1-5]+(A-192), Compound [1-5]+(A-193), Compound [1-5]+(A-194), Compound [1-5]+(A-195), Compound [1-5]+(A-196), Compound [1-5]+(A-197), Compound [1-5]+(A-198), Compound [1-5]+(A-199), Compound [1-5]+(A-200), Compound [1-5]+(A-201), Compound [1-5]+(A-202), Compound [1-5]+(A-203), Compound [1-5]+(A-204), Compound [1-5]+(A-205), Compound [1-5]+(A-206), Compound [1-5]+(A-207), Compound [1-5]+(A-208), Compound [1-5]+(A-209), Compound [1-5]+(A-210), Compound [1-5]+(A-211), Compound [1-5]+(A-212), Compound [1-5]+(A-213), Compound [1-5]+(A-214), Compound [1-5]+(A-215), Compound [1-5]+(A-216), Compound [1-5]+(A-217), Compound [1-5]+(A-218), Compound [1-5]+(A-219), Compound [1-5]+(A-220), Compound [1-5]+(A-221), Compound [1-5]+(A-222), Compound [1-5]+(A-223), Compound [1-5]+(A-224), Compound [1-5]+(A-225), Compound [1-5]+(A-226), Compound [1-5]+(A-227), Compound [1-5]+(A-228), Compound [1-5]+(A-229), Compound [1-5]+(A-230), Compound [1-5]+(A-231), Compound [1-5]+(A-232), Compound [1-5]+(A-233), Compound [1-5]+(A-234), Compound [1-5]+(A-235), Compound [1-5]+(A-236), Compound [1-5]+(A-237), Compound [1-5]+(A-238), Compound [1-5]+(A-239), Compound [1-5]+(A-240), Compound [1-5]+(A-241), Compound [1-5]+(A-242), Compound [1-5]+(A-243), Compound [1-5]+(A-244), Compound [1-5]+(A-245), Compound [1-5]+(A-246), Compound [1-5]+(A-247), Compound [1-5]+(A-248), Compound [1-5]+(A-249), Compound [1-5]+(A-250), Compound [1-5]+(A-251), Compound [1-5]+(A-252), Compound [1-5]+(A-253), Compound [1-5]+(A-254), Compound [1-5]+(A-255), Compound [1-5]+(A-256), Compound [1-5]+(A-257), Compound [1-5]+(A-258), Compound [1-5]+(A-259), Compound [1-5]+(A-260), Compound [1-5]+(A-261), Compound [1-5]+(A-262), Compound [1-5]+(A-263), Compound [1-5]+(A-264), Compound [1-5]+(A-265), Compound [1-5]+(A-266), Compound [1-5]+(A-267), Compound [1-5]+(A-268), Compound [1-5]+(A-269), Compound [1-5]+(A-270), Compound [1-5]+(A-271), Compound [1-5]+(A-272), Compound [1-5]+(A-273), Compound [1-5]+(A-274), Compound [1-5]+(A-275), Compound [1-5]+(A-276), Compound [1-5]+(A-277), Compound [1-5]+(A-278), Compound [1-5]+(A-279), Compound [1-5]+(A-280), Compound [1-5]+(A-281), Compound [1-5]+(A-282), Compound [1-5]+(A-283), Compound [1-5]+(A-284), Compound [1-5]+(A-285), Compound [1-5]+(A-286), Compound [1-5]+(A-287), Compound [1-5]+(A-288), Compound [1-5]+(A-289), Compound [1-5]+(A-290), Compound [1-5]+(A-291), Compound [1-5]+(A-292), Compound [1-5]+(A-293), Compound [1-5]+(A-294), Compound [1-5]+(A-295), Compound [1-5]+(A-296), Compound [1-5]+(A-297), Compound [1-5]+(A-298), Compound [1-5]+(A-299), Compound [1-5]+(A-300), Compound [1-5]+(A-301), Compound [1-5]+(A-302), Compound [1-5]+(A-303), Compound [1-5]+(A-304), Compound [1-5]+(A-305), Compound [1-5]+(A-306), Compound [1-5]+(A-307), Compound [1-5]+(A-308), Compound [1-5]+(A-309), Compound [1-5]+(A-310), Compound [1-5]+(A-311), Compound [1-5]+(A-312), Compound [1-5]+(A-313), Compound [1-5]+(A-314), Compound [1-5]+(A-315), Compound [1-5]+(A-316), Compound [1-5]+(A-317), Compound [1-5]+(A-318), Compound [1-5]+(A-319), Compound [1-5]+(A-320), Compound [1-5]+(A-321), Compound [1-5]+(A-322), Compound [1-5]+(A-323), Compound [1-5]+(A-324), Compound [1-5]+(A-325), Compound [1-5]+(A-326), Compound [1-5]+(A-327), Compound [1-5]+(A-328), Compound [1-5]+(A-329), Compound [1-5]+(A-330), Compound [1-5]+(A-331), Compound [1-5]+(A-332), Compound [1-5]+(A-333), Compound [1-5]+(A-334), Compound [1-5]+(A-335), Compound [1-5]+(A-336), Compound [1-5]+(A-337), Compound [1-5]+(A-338), Compound [1-5]+(A-339), Compound [1-5]+(A-340), Compound [1-5]+(A-341),

Compound [1-6]+(A-001), Compound [1-6]+(A-002), Compound [1-6]+(A-003), Compound [1-6]+(A-004), Compound [1-6]+(A-005), Compound [1-6]+(A-006), Compound [1-6]+(A-007), Compound [1-6]+(A-008), Compound [1-6]+(A-009), Compound [1-6]+(A-010), Compound [1-6]+(A-011), Compound [1-6]+(A-012), Compound [1-6]+(A-013), Compound [1-6]+(A-014), Compound [1-6]+(A-015), Compound [1-6]+(A-016), Compound [1-6]+(A-017), Compound [1-6]+(A-018), Compound [1-6]+(A-019), Compound [1-6]+(A-020), Compound [1-6]+(A-021), Compound [1-6]+(A-022), Compound [1-6]+(A-023), Compound [1-6]+(A-024), Compound [1-6]+(A-025), Compound [1-6]+(A-026), Compound [1-6]+(A-027), Compound [1-6]+(A-028), Compound [1-6]+(A-029), Compound [1-6]+(A-030), Compound [1-6]+(A-031), Compound [1-6]+(A-032), Compound [1-6]+(A-033), Compound [1-6]+(A-034), Compound [1-6]+(A-035), Compound [1-6]+(A-036), Compound [1-6]+(A-037), Compound [1-6]+(A-038), Compound [1-6]+(A-039), Compound [1-6]+(A-040), Compound [1-6]+(A-041), Compound [1-6]+(A-042), Compound [1-6]+(A-043), Compound [1-6]+(A-044), Compound [1-6]+(A-045), Compound [1-6]+(A-046), Compound [1-6]+(A-047), Compound [1-6]+(A-048), Compound [1-6]+(A-049), Compound [1-6]+(A-050), Compound [1-6]+(A-051), Compound [1-6]+(A-052), Compound [1-6]+(A-053), Compound [1-6]+(A-054), Compound [1-6]+(A-055), Compound [1-6]+(A-056), Compound [1-6]+(A-057), Compound [1-6]+(A-058), Compound [1-6]+(A-059), Compound [1-6]+(A-060), Compound [1-6]+(A-061), Compound [1-6]+(A-062), Compound [1-6]+(A-063), Compound [1-6]+(A-064), Compound [1-6]+(A-065), Compound [1-6]+(A-066), Compound [1-6]+(A-067), Compound [1-6]+(A-068), Compound [1-6]+(A-069), Compound [1-6]+(A-070), Compound [1-6]+(A-071), Compound [1-6]+(A-072), Compound [1-6]+(A-073), Compound [1-6]+(A-074), Compound [1-6]+(A-075), Compound [1-6]+(A-076), Compound [1-6]+(A-077), Compound [1-6]+(A-078), Compound [1-6]+(A-079), Compound [1-6]+(A-080), Compound [1-6]+(A-081), Compound [1-6]+(A-082), Compound [1-6]+(A-083), Compound [1-6]+(A-084), Compound [1-6]+(A-085), Compound [1-6]+(A-086), Compound [1-6]+(A-087), Compound [1-6]+(A-088), Compound [1-6]+(A-089), Compound [1-6]+(A-090), Compound [1-6]+(A-091), Compound [1-6]+(A-092), Compound [1-6]+(A-093), Compound [1-6]+(A-094), Compound [1-6]+(A-095), Compound [1-6]+(A-096), Compound [1-6]+(A-097), Compound [1-6]+(A-098), Compound [1-6]+(A-099), Compound [1-6]+(A-100), Compound [1-6]+(A-101), Compound [1-6]+(A-102), Compound [1-6]+(A-103), Compound [1-6]+(A-104), Compound [1-6]+(A-105), Compound [1-6]+(A-106), Compound [1-6]+(A-107), Compound [1-6]+(A-108), Compound [1-6]+(A-109), Compound [1-6]+(A-110), Compound [1-6]+(A-111), Compound [1-6]+(A-112), Compound [1-6]+(A-113), Compound [1-6]+(A-114), Compound [1-6]+(A-115), Compound [1-6]+(A-116), Compound [1-6]+(A-117), Compound [1-6]+(A-118), Compound [1-6]+(A-119), Compound [1-6]+(A-120), Compound [1-6]+(A-121), Compound [1-6]+(A-122), Compound [1-6]+(A-123), Compound [1-6]+(A-124), Compound [1-6]+(A-125), Compound [1-6]+(A-126), Compound [1-6]+(A-127), Compound [1-6]+(A-128), Compound [1-6]+(A-129), Compound [1-6]+(A-130), Compound [1-6]+(A-131), Compound [1-6]+(A-132), Compound [1-6]+(A-133), Compound [1-6]+(A-134), Compound [1-6]+(A-135), Compound [1-6]+(A-136), Compound [1-6]+(A-137), Compound [1-6]+(A-138), Compound [1-6]+(A-139), Compound [1-6]+(A-140), Compound [1-6]+(A-141), Compound [1-6]+(A-142), Compound [1-6]+(A-143), Compound [1-6]+(A-144), Compound [1-6]+(A-145), Compound [1-6]+(A-146), Compound [1-6]+(A-147), Compound [1-6]+(A-148), Compound [1-6]+(A-149), Compound [1-6]+(A-150), Compound [1-6]+(A-151), Compound [1-6]+(A-152), Compound [1-6]+(A-153), Compound [1-6]+(A-154), Compound [1-6]+(A-155), Compound [1-6]+(A-156), Compound [1-6]+(A-157), Compound [1-6]+(A-158), Compound [1-6]+(A-159), Compound [1-6]+(A-160), Compound [1-6]+(A-161), Compound [1-6]+(A-162), Compound [1-6]+(A-163), Compound [1-6]+(A-164), Compound [1-6]+(A-165), Compound [1-6]+(A-166), Compound [1-6]+(A-167), Compound [1-6]+(A-168), Compound [1-6]+(A-169), Compound [1-6]+(A-170), Compound [1-6]+(A-171), Compound [1-6]+(A-172), Compound [1-6]+(A-173), Compound [1-6]+(A-174), Compound [1-6]+(A-175), Compound [1-6]+(A-176), Compound [1-6]+(A-177), Compound [1-6]+(A-178), Compound [1-6]+(A-179), Compound [1-6]+(A-180), Compound [1-6]+(A-181), Compound [1-6]+(A-182), Compound [1-6]+(A-183), Compound [1-6]+(A-184), Compound [1-6]+(A-185), Compound [1-6]+(A-186), Compound [1-6]+(A-187), Compound [1-6]+(A-188), Compound [1-6]+(A-189), Compound [1-6]+(A-190), Compound [1-6]+(A-191), Compound [1-6]+(A-192), Compound [1-6]+(A-193), Compound [1-6]+(A-194), Compound [1-6]+(A-195), Compound [1-6]+(A-196), Compound [1-6]+(A-197), Compound [1-6]+(A-198), Compound [1-6]+(A-199), Compound [1-6]+(A-200), Compound [1-6]+(A-201), Compound [1-6]+(A-202), Compound [1-6]+(A-203), Compound [1-6]+(A-204), Compound [1-6]+(A-205), Compound [1-6]+(A-206), Compound [1-6]+(A-207), Compound [1-6]+(A-208), Compound [1-6]+(A-209), Compound [1-6]+(A-210), Compound [1-6]+(A-211), Compound [1-6]+(A-212), Compound [1-6]+(A-213), Compound [1-6]+(A-214), Compound [1-6]+(A-215), Compound [1-6]+(A-216), Compound [1-6]+(A-217), Compound [1-6]+(A-218), Compound [1-6]+(A-219), Compound [1-6]+(A-220), Compound [1-6]+(A-221), Compound [1-6]+(A-222), Compound [1-6]+(A-223), Compound [1-6]+(A-224), Compound [1-6]+(A-225), Compound [1-6]+(A-226), Compound [1-6]+(A-227), Compound [1-6]+(A-228), Compound [1-6]+(A-229), Compound [1-6]+(A-230), Compound [1-6]+(A-231), Compound [1-6]+(A-232), Compound [1-6]+(A-233), Compound [1-6]+(A-234), Compound [1-6]+(A-235), Compound [1-6]+(A-236), Compound [1-6]+(A-237), Compound [1-6]+(A-238), Compound [1-6]+(A-239), Compound [1-6]+(A-240), Compound [1-6]+(A-241), Compound [1-6]+(A-242), Compound [1-6]+(A-243), Compound [1-6]+(A-244), Compound [1-6]+(A-245), Compound [1-6]+(A-246), Compound [1-6]+(A-247), Compound [1-6]+(A-248), Compound [1-6]+(A-249), Compound [1-6]+(A-250), Compound [1-6]+(A-251), Compound [1-6]+(A-252), Compound [1-6]+(A-253), Compound [1-6]+(A-254), Compound [1-6]+(A-255), Compound [1-6]+(A-256), Compound [1-6]+(A-257), Compound [1-6]+(A-258), Compound [1-6]+(A-259), Compound [1-6]+(A-260), Compound [1-6]+(A-261), Compound [1-6]+(A-262), Compound [1-6]+(A-263), Compound [1-6]+(A-264), Compound [1-6]+(A-265), Compound [1-6]+(A-266), Compound [1-6]+(A-267), Compound [1-6]+(A-268), Compound [1-6]+(A-269), Compound [1-6]+(A-270), Compound [1-6]+(A-271), Compound [1-6]+(A-272), Compound [1-6]+(A-273), Compound [1-6]+(A-274), Compound [1-6]+(A-275), Compound [1-6]+(A-276), Compound [1-6]+(A-277), Compound [1-6] +(A-278), Compound [1-6]+(A-279), Compound [1-6] +(A-280), Compound [1-6]+(A-281), Compound [1-6]+(A-282), Compound [1-6]+(A-283), Compound [1-6]+(A-284), Compound [1-6]+(A-285), Compound [1-6]+(A-286), Compound [1-6]+(A-287), Compound [1-6]+(A-288), Compound [1-6]+(A-289), Compound [1-6]+(A-290), Compound [1-6]+(A-291), Compound [1-6]+(A-292), Compound [1-6]+(A-293), Compound [1-6]+(A-294), Compound [1-6]+(A-295), Compound [1-6]+(A-296), Compound [1-6]+(A-297), Compound [1-6]+(A-298), Compound [1-6]+(A-299), Compound [1-6]+(A-300), Compound [1-6]+(A-301), Compound [1-6]+(A-302), Compound [1-6]+(A-303), Compound [1-6]+(A-304), Compound [1-6]+(A-305), Compound [1-6]+(A-306), Compound [1-6]+(A-307), Compound [1-6]+(A-308), Compound [1-6]+(A-309), Compound [1-6]+(A-310), Compound [1-6]+(A-311), Compound [1-6]+(A-312), Compound [1-6]+(A-313), Compound [1-6]+(A-314), Compound [1-6]+(A-315), Compound [1-6]+(A-316), Compound [1-6]+(A-317), Compound [1-6]+(A-318), Compound [1-6]+(A-319), Compound [1-6]+(A-320), Compound [1-6]+(A-321), Compound [1-6]+(A-322), Compound [1-6]+(A-323), Compound [1-6]+(A-324), Compound [1-6]+(A-325), Compound [1-6]+(A-326), Compound [1-6]+(A-327), Compound [1-6]+(A-328), Compound [1-6]+(A-329), Compound [1-6]+(A-330), Compound [1-6]+(A-331), Compound [1-6]+(A-332), Compound [1-6]+(A-333), Compound [1-6]+(A-334), Compound [1-6]+(A-335), Compound [1-6]+(A-336), Compound [1-6]+(A-337), Compound [1-6]+(A-338), Compound [1-6]+(A-339), Compound [1-6]+(A-340), Compound [1-6]+(A-341),

Compound [1-7]+(A-001), Compound [1-7]+(A-002), Compound [1-7]+(A-003), Compound [1-7]+(A-004), Compound [1-7]+(A-005), Compound [1-7]+(A-006), Compound [1-7]+(A-007), Compound [1-7]+(A-008), Compound [1-7]+(A-009), Compound [1-7]+(A-010), Compound [1-7]+(A-011), Compound [1-7]+(A-012), Compound [1-7]+(A-013), Compound [1-7]+(A-014), Compound [1-7]+(A-015), Compound [1-7]+(A-016), Compound [1-7]+(A-017), Compound [1-7]+(A-018), Compound [1-7]+(A-019), Compound [1-7]+(A-020), Compound [1-7]+(A-021), Compound [1-7]+(A-022), Compound [1-7]+(A-023), Compound [1-7]+(A-024), Compound [1-7]+(A-025), Compound [1-7]+(A-026), Compound [1-7]+(A-027), Compound [1-7]+(A-028), Compound [1-7]+(A-029), Compound [1-7]+(A-030), Compound [1-7]+(A-031), Compound [1-7]+(A-032), Compound [1-7]+(A-033), Compound [1-7]+(A-034), Compound [1-7]+(A-035), Compound [1-7]+(A-036), Compound [1-7]+(A-037), Compound [1-7]+(A-038), Compound [1-7]+(A-039), Compound [1-7]+(A-040), Compound [1-7]+(A-041), Compound [1-7]+(A-042), Compound [1-7]+(A-043), Compound [1-7]+(A-044), Compound [1-7]+(A-045), Compound [1-7]+(A-046), Compound [1-7]+(A-047), Compound [1-7]+(A-048), Compound [1-7]+(A-049), Compound [1-7]+(A-050), Compound [1-7]+(A-051), Compound [1-7]+(A-052), Compound [1-7]+(A-053), Compound [1-7]+(A-054), Compound [1-7]+(A-055), Compound [1-7]+(A-056), Compound [1-7]+(A-057), Compound [1-7]+(A-058), Compound [1-7]+(A-059), Compound [1-7]+(A-060), Compound [1-7]+(A-061), Compound [1-7]+(A-062), Compound [1-7]+(A-063), Compound [1-7]+(A-064), Compound [1-7]+(A-065), Compound [1-7]+(A-066), Compound [1-7]+(A-067), Compound [1-7]+(A-068), Compound [1-7]+(A-069), Compound [1-7]+(A-070), Compound [1-7]+(A-071), Compound [1-7]+(A-072), Compound [1-7]+(A-073), Compound [1-7]+(A-074), Compound [1-7]+(A-075), Compound [1-7]+(A-076), Compound [1-7]+(A-077), Compound [1-7]+(A-078), Compound [1-7]+(A-079), Compound [1-7]+(A-080), Compound [1-7]+(A-081), Compound [1-7]+(A-082), Compound [1-7]+(A-083), Compound [1-7]+(A-084), Compound [1-7]+(A-085), Compound [1-7]+(A-086), Compound [1-7]+(A-087), Compound [1-7]+(A-088), Compound [1-7]+(A-089), Compound [1-7]+(A-090), Compound [1-7]+(A-091), Compound [1-7]+(A-092), Compound [1-7]+(A-093), Compound [1-7]+(A-094), Compound [1-7]+(A-095), Compound [1-7]+(A-096), Compound [1-7]+(A-097), Compound [1-7]+(A-098), Compound [1-7]+(A-099), Compound [1-7]+(A-100), Compound [1-7]+(A-101), Compound [1-7]+(A-102), Compound [1-7]+(A-103), Compound [1-7]+(A-104), Compound [1-7]+(A-105), Compound [1-7]+(A-106), Compound [1-7]+(A-107), Compound [1-7]+(A-108), Compound [1-7]+(A-109), Compound [1-7]+(A-110), Compound [1-7]+(A-111), Compound [1-7]+(A-112), Compound [1-7]+(A-113), Compound [1-7]+(A-114), Compound [1-7]+(A-115), Compound [1-7]+(A-116), Compound [1-7]+(A-117), Compound [1-7]+(A-118), Compound [1-7]+(A-119), Compound [1-7]+(A-120), Compound [1-7]+(A-121), Compound [1-7]+(A-122), Compound [1-7]+(A-123), Compound [1-7]+(A-124), Compound [1-7]+(A-125), Compound [1-7]+(A-126), Compound [1-7]+(A-127), Compound [1-7]+(A-128), Compound [1-7]+(A-129), Compound [1-7]+(A-130), Compound [1-7]+(A-131), Compound [1-7]+(A-132), Compound [1-7]+(A-133), Compound [1-7]+(A-134), Compound [1-7]+(A-135), Compound [1-7]+(A-136), Compound [1-7]+(A-137), Compound [1-7]+(A-138), Compound [1-7]+(A-139), Compound [1-7]+(A-140), Compound [1-7]+(A-141), Compound [1-7]+(A-142), Compound [1-7]+(A-143), Compound [1-7]+(A-144), Compound [1-7]+(A-145), Compound [1-7]+(A-146), Compound [1-7]+(A-147), Compound [1-7]+(A-148), Compound [1-7]+(A-149), Compound [1-7]+(A-150), Compound [1-7]+(A-151), Compound [1-7]+(A-152), Compound [1-7]+(A-153), Compound [1-7]+(A-154), Compound [1-7]+(A-155), Compound [1-7]+(A-156), Compound [1-7]+(A-157), Compound [1-7]+(A-158), Compound [1-7]+(A-159), Compound [1-7]+(A-160), Compound [1-7]+(A-161), Compound [1-7]+(A-162), Compound [1-7]+(A-163), Compound [1-7]+(A-164), Compound [1-7]+(A-165), Compound [1-7]+(A-166), Compound [1-7]+(A-167), Compound [1-7]+(A-168), Compound [1-7]+(A-169), Compound [1-7]+(A-170), Compound [1-7]+(A-171), Compound [1-7]+(A-172), Compound [1-7]+(A-173), Compound [1-7]+(A-174), Compound [1-7]+(A-175), Compound [1-7]+(A-176), Compound [1-7]+(A-177), Compound [1-7]+(A-178), Compound [1-7]+(A-179), Compound [1-7]+(A-180), Compound [1-7]+(A-181), Compound [1-7]+(A-182), Compound [1-7]+(A-183), Compound [1-7]+(A-184), Compound [1-7]+(A-185), Compound [1-7]+(A-186), Compound [1-7]+(A-187), Compound [1-7]+(A-188), Compound [1-7]+(A-189), Compound [1-7]+(A-190), Compound [1-7]+(A-191), Compound [1-7]+(A-192), Compound [1-7]+(A-193), Compound [1-7]+(A-194), Compound [1-7]+(A-195), Compound

[1-7]+(A-196), Compound [1-7]+(A-197), Compound [1-7]+(A-198), Compound [1-7]+(A-199), Compound [1-7]+(A-200), Compound [1-7]+(A-201), Compound [1-7]+(A-202), Compound [1-7]+(A-203), Compound [1-7]+(A-204), Compound [1-7]+(A-205), Compound [1-7]+(A-206), Compound [1-7]+(A-207), Compound [1-7]+(A-208), Compound [1-7]+(A-209), Compound [1-7]+(A-210), Compound [1-7]+(A-211), Compound [1-7]+(A-212), Compound [1-7]+(A-213), Compound [1-7]+(A-214), Compound [1-7]+(A-215), Compound [1-7]+(A-216), Compound [1-7]+(A-217), Compound [1-7]+(A-218), Compound [1-7]+(A-219), Compound [1-7]+(A-220), Compound [1-7]+(A-221), Compound [1-7]+(A-222), Compound [1-7]+(A-223), Compound [1-7]+(A-224), Compound [1-7]+(A-225), Compound [1-7]+(A-226), Compound [1-7]+(A-227), Compound [1-7]+(A-228), Compound [1-7]+(A-229), Compound [1-7]+(A-230), Compound [1-7]+(A-231), Compound [1-7]+(A-232), Compound [1-7]+(A-233), Compound [1-7]+(A-234), Compound [1-7]+(A-235), Compound [1-7]+(A-236), Compound [1-7]+(A-237), Compound [1-7]+(A-238), Compound [1-7]+(A-239), Compound [1-7]+(A-240), Compound [1-7]+(A-241), Compound [1-7]+(A-242), Compound [1-7]+(A-243), Compound [1-7]+(A-244), Compound [1-7]+(A-245), Compound [1-7]+(A-246), Compound [1-7]+(A-247), Compound [1-7]+(A-248), Compound [1-7]+(A-249), Compound [1-7]+(A-250), Compound [1-7]+(A-251), Compound [1-7]+(A-252), Compound [1-7]+(A-253), Compound [1-7]+(A-254), Compound [1-7]+(A-255), Compound [1-7]+(A-256), Compound [1-7]+(A-257), Compound [1-7]+(A-258), Compound [1-7]+(A-259), Compound [1-7]+(A-260), Compound [1-7]+(A-261), Compound [1-7]+(A-262), Compound [1-7]+(A-263), Compound [1-7]+(A-264), Compound [1-7]+(A-265), Compound [1-7]+(A-266), Compound [1-7]+(A-267), Compound [1-7]+(A-268), Compound [1-7]+(A-269), Compound [1-7]+(A-270), Compound [1-7]+(A-271), Compound [1-7]+(A-272), Compound [1-7]+(A-273), Compound [1-7]+(A-274), Compound [1-7]+(A-275), Compound [1-7]+(A-276), Compound [1-7]+(A-277), Compound [1-7]+(A-278), Compound [1-7]+(A-279), Compound [1-7]+(A-280), Compound [1-7]+(A-281), Compound [1-7]+(A-282), Compound [1-7]+(A-283), Compound [1-7]+(A-284), Compound [1-7]+(A-285), Compound [1-7]+(A-286), Compound [1-7]+(A-287), Compound [1-7]+(A-288), Compound [1-7]+(A-289), Compound [1-7]+(A-290), Compound [1-7]+(A-291), Compound [1-7]+(A-292), Compound [1-7]+(A-293), Compound [1-7]+(A-294), Compound [1-7]+(A-295), Compound [1-7]+(A-296), Compound [1-7]+(A-297), Compound [1-7]+(A-298), Compound [1-7]+(A-299), Compound [1-7]+(A-300), Compound [1-7]+(A-301), Compound [1-7]+(A-302), Compound [1-7]+(A-303), Compound [1-7]+(A-304), Compound [1-7]+(A-305), Compound [1-7]+(A-306), Compound [1-7]+(A-307), Compound [1-7]+(A-308), Compound [1-7]+(A-309), Compound [1-7]+(A-310), Compound [1-7]+(A-311), Compound [1-7]+(A-312), Compound [1-7]+(A-313), Compound [1-7]+(A-314), Compound [1-7]+(A-315), Compound [1-7]+(A-316), Compound [1-7]+(A-317), Compound [1-7]+(A-318), Compound [1-7]+(A-319), Compound [1-7]+(A-320), Compound [1-7]+(A-321), Compound [1-7]+(A-322), Compound [1-7]+(A-323), Compound [1-7]+(A-324), Compound [1-7]+(A-325), Compound [1-7]+(A-326), Compound [1-7]+(A-327), Compound [1-7]+(A-328), Compound [1-7]+(A-329), Compound [1-7]+(A-330), Compound [1-7]+(A-331), Compound [1-7]+(A-332), Compound [1-7]+(A-333), Compound [1-7]+(A-334), Compound [1-7]+(A-335), Compound [1-7]+(A-336), Compound [1-7]+(A-337), Compound [1-7]+(A-338), Compound [1-7]+(A-339), Compound [1-7]+(A-340), Compound [1-7]+(A-341),

Compound [1-8]+(A-001), Compound [1-8]+(A-002), Compound [1-8]+(A-003), Compound [1-8]+(A-004), Compound [1-8]+(A-005), Compound [1-8]+(A-006), Compound [1-8]+(A-007), Compound [1-8]+(A-008), Compound [1-8]+(A-009), Compound [1-8]+(A-010), Compound [1-8]+(A-011), Compound [1-8]+(A-012), Compound [1-8]+(A-013), Compound [1-8]+(A-014), Compound [1-8]+(A-015), Compound [1-8]+(A-016), Compound [1-8]+(A-017), Compound [1-8]+(A-018), Compound [1-8]+(A-019), Compound [1-8]+(A-020), Compound [1-8]+(A-021), Compound [1-8]+(A-022), Compound [1-8]+(A-023), Compound [1-8]+(A-024), Compound [1-8]+(A-025), Compound [1-8]+(A-026), Compound [1-8]+(A-027), Compound [1-8]+(A-028), Compound [1-8]+(A-029), Compound [1-8]+(A-030), Compound [1-8]+(A-031), Compound [1-8]+(A-032), Compound [1-8]+(A-033), Compound [1-8]+(A-034), Compound [1-8]+(A-035), Compound [1-8]+(A-036), Compound [1-8]+(A-037), Compound [1-8]+(A-038), Compound [1-8]+(A-039), Compound [1-8]+(A-040), Compound [1-8]+(A-041), Compound [1-8]+(A-042), Compound [1-8]+(A-043), Compound [1-8]+(A-044), Compound [1-8]+(A-045), Compound [1-8]+(A-046), Compound [1-8]+(A-047), Compound [1-8]+(A-048), Compound [1-8]+(A-049), Compound [1-8]+(A-050), Compound [1-8]+(A-051), Compound [1-8]+(A-052), Compound [1-8]+(A-053), Compound [1-8]+(A-054), Compound [1-8]+(A-055), Compound [1-8]+(A-056), Compound [1-8]+(A-057), Compound [1-8]+(A-058), Compound [1-8]+(A-059), Compound [1-8]+(A-060), Compound [1-8]+(A-061), Compound [1-8]+(A-062), Compound [1-8]+(A-063), Compound [1-8]+(A-064), Compound [1-8]+(A-065), Compound [1-8]+(A-066), Compound [1-8]+(A-067), Compound [1-8]+(A-068), Compound [1-8]+(A-069), Compound [1-8]+(A-070), Compound [1-8]+(A-071), Compound [1-8]+(A-072), Compound [1-8]+(A-073), Compound [1-8]+(A-074), Compound [1-8]+(A-075), Compound [1-8]+(A-076), Compound [1-8]+(A-077), Compound [1-8]+(A-078), Compound [1-8]+(A-079), Compound [1-8]+(A-080), Compound [1-8]+(A-081), Compound [1-8]+(A-082), Compound [1-8]+(A-083), Compound [1-8]+(A-084), Compound [1-8]+(A-085), Compound [1-8]+(A-086), Compound [1-8]+(A-087), Compound [1-8]+(A-088), Compound [1-8]+(A-089), Compound [1-8]+(A-090), Compound [1-8]+(A-091), Compound [1-8]+(A-092), Compound [1-8]+(A-093), Compound [1-8]+(A-094), Compound [1-8]+(A-095), Compound [1-8]+(A-096), Compound [1-8]+(A-097), Compound [1-8]+(A-098), Compound [1-8]+(A-099), Compound [1-8]+(A-100), Compound [1-8]+(A-101), Compound [1-8]+(A-102), Compound [1-8]+(A-103), Compound [1-8]+(A-104), Compound [1-8]+(A-105), Compound [1-8]+(A-106), Compound [1-8]+(A-107), Compound [1-8]+(A-108), Compound [1-8]+(A-109), Compound [1-8]+(A-110), Compound [1-8]+(A-111), Compound [1-8]+(A-112), Compound [1-8]+(A-113), Compound [1-8]+(A-114), Compound [1-8]+(A-115), Compound [1-8]+(A-116), Compound [1-8]+(A-117), Compound [1-8]+(A-118), Compound [1-8]+(A-119), Compound [1-8]+(A-120), Compound [1-8]+(A-121), Compound [1-8]+(A-122), Compound [1-8]+(A-123), Compound [1-8]+(A-124), Compound [1-8]+(A-125), Compound [1-8]+(A-126), Compound [1-8]+(A-127), Compound [1-8]+(A-128), Compound [1-8]+(A-129), Compound [1-8]+(A-130), Compound [1-8]+(A-131), Compound [1-8]+(A-132), Compound [1-8]+(A-133), Compound [1-8]+(A-134), Compound [1-8]+(A-135), Compound [1-8]+(A-136), Compound [1-8]+(A-137), Compound [1-8]+(A-138), Compound [1-8]+(A-139), Compound [1-8]+(A-140), Compound [1-8]+(A-141), Compound [1-8]+(A-142), Compound [1-8]+(A-143), Compound [1-8]+(A-144), Compound [1-8]+(A-145), Compound [1-8]+(A-146), Compound [1-8]+(A-147), Compound [1-8]+(A-148), Compound [1-8]+(A-149), Compound [1-8]+(A-150), Compound [1-8]+(A-151), Compound [1-8]+(A-152), Compound [1-8]+(A-153), Compound [1-8]+(A-154), Compound [1-8]+(A-155), Compound [1-8]+(A-156), Compound [1-8]+(A-157), Compound [1-8]+(A-158), Compound [1-8]+(A-159), Compound [1-8]+(A-160), Compound [1-8]+(A-161), Compound [1-8]+(A-162), Compound [1-8]+(A-163), Compound [1-8]+(A-164), Compound [1-8]+(A-165), Compound [1-8]+(A-166), Compound [1-8]+(A-167), Compound [1-8]+(A-168), Compound [1-8]+(A-169), Compound [1-8]+(A-170), Compound [1-8]+(A-171), Compound [1-8]+(A-172), Compound [1-8]+(A-173), Compound [1-8]+(A-174), Compound [1-8]+(A-175), Compound [1-8]+(A-176), Compound [1-8]+(A-177), Compound [1-8]+(A-178), Compound [1-8]+(A-179), Compound [1-8]+(A-180), Compound [1-8]+(A-181), Compound [1-8]+(A-182), Compound [1-8]+(A-183), Compound [1-8]+(A-184), Compound [1-8]+(A-185), Compound [1-8]+(A-186), Compound [1-8]+(A-187), Compound [1-8]+(A-188), Compound [1-8]+(A-189), Compound [1-8]+(A-190), Compound [1-8]+(A-191), Compound [1-8]+(A-192), Compound [1-8]+(A-193), Compound [1-8]+(A-194), Compound [1-8]+(A-195), Compound [1-8]+(A-196), Compound [1-8]+(A-197), Compound [1-8]+(A-198), Compound [1-8]+(A-199), Compound [1-8]+(A-200), Compound [1-8]+(A-201), Compound [1-8]+(A-202), Compound [1-8]+(A-203), Compound [1-8]+(A-204), Compound [1-8]+(A-205), Compound [1-8]+(A-206), Compound [1-8]+(A-207), Compound [1-8]+(A-208), Compound [1-8]+(A-209), Compound [1-8]+(A-210), Compound [1-8]+(A-211), Compound [1-8]+(A-212), Compound [1-8]+(A-213), Compound [1-8]+(A-214), Compound [1-8]+(A-215), Compound [1-8]+(A-216), Compound [1-8]+(A-217), Compound [1-8]+(A-218), Compound [1-8]+(A-219), Compound [1-8]+(A-220), Compound [1-8]+(A-221), Compound [1-8]+(A-222), Compound [1-8]+(A-223), Compound [1-8]+(A-224), Compound [1-8]+(A-225), Compound [1-8]+(A-226), Compound [1-8]+(A-227), Compound [1-8]+(A-228), Compound [1-8]+(A-229), Compound [1-8]+(A-230), Compound [1-8]+(A-231), Compound [1-8]+(A-232), Compound [1-8]+(A-233), Compound [1-8]+(A-234), Compound [1-8]+(A-235), Compound [1-8]+(A-236), Compound [1-8]+(A-237), Compound [1-8]+(A-238), Compound [1-8]+(A-239), Compound [1-8]+(A-240), Compound [1-8]+(A-241), Compound [1-8]+(A-242), Compound [1-8]+(A-243), Compound [1-8]+(A-244), Compound [1-8]+(A-245), Compound [1-8]+(A-246), Compound [1-8]+(A-247), Compound [1-8] +(A-248), Compound [1-8]+(A-249), Compound [1-8] +(A-250), Compound [1-8]+(A-251), Compound [1-8]+(A-252), Compound [1-8]+(A-253), Compound [1-8]+(A-254), Compound [1-8]+(A-255), Compound [1-8]+(A-256), Compound [1-8]+(A-257), Compound [1-8]+(A-258), Compound [1-8]+(A-259), Compound [1-8]+(A-260), Compound [1-8]+(A-261), Compound [1-8]+(A-262), Compound [1-8]+(A-263), Compound [1-8]+(A-264), Compound [1-8]+(A-265), Compound [1-8]+(A-266), Compound [1-8]+(A-267), Compound [1-8]+(A-268), Compound [1-8]+(A-269), Compound [1-8]+(A-270), Compound [1-8]+(A-271), Compound [1-8]+(A-272), Compound [1-8]+(A-273), Compound [1-8]+(A-274), Compound [1-8]+(A-275), Compound [1-8]+(A-276), Compound [1-8]+(A-277), Compound [1-8]+(A-278), Compound [1-8]+(A-279), Compound [1-8]+(A-280), Compound [1-8]+(A-281), Compound [1-8]+(A-282), Compound [1-8]+(A-283), Compound [1-8]+(A-284), Compound [1-8]+(A-285), Compound [1-8]+(A-286), Compound [1-8]+(A-287), Compound [1-8] +(A-288), Compound [1-8] +(A-289), Compound [1-8] +(A-290), Compound [1-8]+(A-291), Compound [1-8]+(A-292), Compound [1-8]+(A-293), Compound [1-8]+(A-294), Compound [1-8]+(A-295), Compound [1-8]+(A-296), Compound [1-8]+(A-297), Compound [1-8]+(A-298), Compound [1-8]+(A-299), Compound [1-8]+(A-300), Compound [1-8]+(A-301), Compound [1-8]+(A-302), Compound [1-8]+(A-303), Compound [1-8]+(A-304), Compound [1-8]+(A-305), Compound [1-8]+(A-306), Compound [1-8]+(A-307), Compound [1-8]+(A-308), Compound [1-8]+(A-309), Compound [1-8]+(A-310), Compound [1-8]+(A-311), Compound [1-8]+(A-312), Compound [1-8]+(A-313), Compound [1-8]+(A-314), Compound [1-8]+(A-315), Compound [1-8]+(A-316), Compound [1-8]+(A-317), Compound [1-8]+(A-318), Compound [1-8]+(A-319), Compound [1-8]+(A-320), Compound [1-8]+(A-321), Compound [1-8]+(A-322), Compound [1-8]+(A-323), Compound [1-8] +(A-324), Compound [1-8]+(A-325), Compound [1-8]+(A-326), Compound [1-8]+(A-327), Compound [1-8]+(A-328), Compound [1-8]+(A-329), Compound [1-8]+(A-330), Compound [1-8]+(A-331), Compound [1-8]+(A-332), Compound [1-8]+(A-333), Compound [1-8]+(A-334), Compound [1-8]+(A-335), Compound [1-8]+(A-336), Compound [1-8]+(A-337), Compound [1-8]+(A-338), Compound [1-8]+(A-339), Compound [1-8]+(A-340), Compound [1-8]+(A-341), etc., but are not limited thereto.

Combination of the compound of the present invention and active ingredient group B

Examples of the combination with a compound having microbicidal activity (active ingredient group B) include Compound [1-1]+(B-001), Compound [1-1]+(B-002), Compound [1-1]+(B-003), Compound [1-1]+(B-004), Compound [1-1]+(B-005), Compound [1-1]+(B-006), Compound [1-1]+(B-007), Compound [1-1]+(B-008), Compound [1-1]+(B-009), Compound [1-1]+(B-010), Compound [1-1]+(B-011), Compound [1-1]+(B-012), Compound [1-1]+(B-013), Compound [1-1]+(B-014), Compound [1-1]+(B-015), Compound [1-1]+(B-016), Compound [1-1]+(B-017), Compound [1-1]+(B-018), Compound [1-1]+(B-019), Compound [1-1]+(B-020), Compound [1-1]+(B-021), Compound [1-1]+(B-022), Compound [1-1]+(B-023), Compound [1-1]+(B-024), Compound [1-1]+(B-025), Compound [1-1]+(B-026), Compound [1-1]+(B-027), Compound [1-1]+(B-028), Compound [1-1]+(B-029), Compound [1-1]+(B-030), Compound [1-1]+(B-031), Compound [1-1]+(B-032), Compound [1-1]+(B-033), Compound [1-1]+(B-034), Compound [1-1]+(B-035), Compound [1-1]+(B-036), Compound [1-1]+(B-037), Compound [1-1]+(B-038), Compound [1-1]+(B-039), Compound [1-1]+(B-040), Compound [1-1]+(B-041), Compound [1-1]+(B-042), Compound [1-1]+(B-043), Compound [1-1]+(B-044), Compound [1-1]+(B-045), Compound [1-1]+(B-046), Compound [1-1]+(B-047), Compound [1-1]+(B-048), Compound [1-1]+(B-049), Compound [1-1]+(B-050), Compound [1-1]+(B-051), Compound [1-1]+(B-052), Compound [1-1]+(B-053), Compound [1-1]+(B-054), Compound [1-1]+(B-055), Compound [1-1]+(B-056), Compound [1-1]+(B-057), Compound [1-1]+(B-058), Compound [1-1]+(B-059), Compound [1-1]+(B-060), Compound [1-1]+(B-061), Compound [1-1]+(B-062), Compound [1-1]+(B-063), Compound [1-1]+(B-064), Compound [1-1]+(B-065), Compound [1-1]+(B-066), Compound [1-1]+(B-067), Compound [1-1]+(B-068), Compound [1-1]+(B-069), Compound [1-1]+(B-070), Compound [1-1]+(B-071), Compound [1-1]+(B-072), Compound [1-1]+(B-073), Compound [1-1]+(B-074), Compound [1-1]+(B-075), Compound [1-1]+(B-076), Compound [1-1]+(B-077), Compound [1-1]+(B-078), Compound [1-1]+(B-079), Compound [1-1]+(B-080), Compound [1-1]+(B-081), Compound [1-1]+(B-082), Compound [1-1]+(B-083), Compound [1-1]+(B-084), Compound [1-1]+(B-085), Compound [1-1]+(B-086), Compound [1-1]+(B-087), Compound [1-1]+(B-088), Compound [1-1]+(B-089), Compound [1-1]+(B-090), Compound [1-1]+(B-091), Compound [1-1]+(B-092), Compound [1-1]+(B-093), Compound [1-1]+(B-094), Compound [1-1]+(B-095), Compound [1-1]+(B-096), Compound [1-1]+(B-097), Compound [1-1]+(B-098), Compound [1-1]+(B-099), Compound [1-1]+(B-100), Compound [1-1]+(B-101), Compound [1-1]+(B-102), Compound [1-1]+(B-103), Compound [1-1]+(B-104), Compound [1-1]+(B-105), Compound [1-1]+(B-106), Compound [1-1]+(B-107), Compound [1-1]+(B-108), Compound [1-1]+(B-109), Compound [1-1]+(B-110), Compound [1-1]+(B-111), Compound [1-1]+(B-112), Compound [1-1]+(B-113), Compound [1-1]+(B-114), Compound [1-1]+(B-115), Compound [1-1]+(B-116), Compound [1-1]+(B-117), Compound [1-1]+(B-118), Compound [1-1]+(B-119), Compound [1-1]+(B-120), Compound [1-1]+(B-121), Compound [1-1]+(B-122), Compound [1-1]+(B-123), Compound [1-1]+(B-124), Compound [1-1]+(B-125), Compound [1-1]+(B-126), Compound [1-1]+(B-127), Compound [1-1]+(B-128), Compound [1-1]+(B-129), Compound [1-1]+(B-130), Compound [1-1]+(B-131), Compound [1-1]+(B-132), Compound [1-1]+(B-133), Compound [1-1]+(B-134), Compound [1-1]+(B-135), Compound [1-1]+(B-136), Compound [1-1]+(B-137), Compound [1-1]+(B-138), Compound [1-1]+(B-139), Compound [1-1]+(B-140), Compound [1-1]+(B-141), Compound [1-1]+(B-142), Compound [1-1]+(B-143), Compound [1-1]+(B-144), Compound [1-1]+(B-145), Compound [1-1]+(B-146), Compound [1-1]+(B-147), Compound [1-1]+(B-148), Compound [1-1]+(B-149), Compound [1-1]+(B-150), Compound [1-1]+(B-151), Compound [1-1]+(B-152), Compound [1-1]+(B-153), Compound [1-1]+(B-154), Compound [1-1]+(B-155), Compound [1-1]+(B-156), Compound [1-1]+(B-157), Compound [1-1]+(B-158), Compound [1-1]+(B-159), Compound [1-1]+(B-160), Compound [1-1]+(B-161), Compound [1-1]+(B-162), Compound [1-1]+(B-163), Compound [1-1]+(B-164), Compound [1-1]+(B-165), Compound [1-1]+(B-166), Compound [1-1]+(B-167), Compound [1-1]+(B-168), Compound [1-1]+(B-169), Compound [1-1]+(B-170), Compound [1-1]+(B-171), Compound [1-1]+(B-172), Compound [1-1]+(B-173), Compound [1-1]+(B-174), Compound [1-1]+(B-175), Compound [1-1]+(B-176), Compound [1-1]+(B-177), Compound [1-1]+(B-178), Compound [1-1]+(B-179), Compound [1-1]+(B-180), Compound [1-1]+(B-181), Compound [1-1]+(B-182), Compound [1-1]+(B-183), Compound [1-1]+(B-184), Compound [1-1]+(B-185), Compound [1-1]+(B-186), Compound [1-1]+(B-187), Compound [1-1]+(B-188), Compound [1-1]+(B-189), Compound [1-1]+(B-190), Compound [1-1]+(B-191), Compound [1-1]+(B-192), Compound [1-1]+(B-193), Compound [1-1]+(B-194), Compound [1-1]+(B-195), Compound [1-1]+(B-196), Compound [1-1]+(B-197), Compound [1-1]+(B-198), Compound [1-1]+(B-199), Compound [1-1]+(B-200), Compound [1-1]+(B-201), Compound [1-1]+(B-202), Compound [1-1]+(B-203), Compound [1-1]+(B-204), Compound [1-1]+(B-205), Compound [1-1]+(B-206), Compound [1-1]+(B-207), Compound [1-1]+(B-208), Compound [1-1]+(B-209), Compound [1-1]+(B-210), Compound [1-1]+(B-211), Compound [1-1]+(B-212), Compound [1-1]+(B-213), Compound [1-1]+(B-214), Compound [1-1]+(B-215), Compound [1-1]+(B-216), Compound [1-1]+(B-217), Compound [1-1]+(B-218), Compound [1-1]+(B-219), Compound [1-1]+(B-220), Compound [1-1]+(B-221), Compound [1-1]+(B-222), Compound [1-1]+(B-223), Compound [1-1]+(B-224), Compound [1-1]+(B-225), Compound [1-1]+(B-226), Compound [1-1]+(B-227), Compound [1-1]+(B-228), Compound [1-1]+(B-229), Compound [1-1]+(B-230), Compound [1-1]+(B-231), Compound [1-1]+(B-232), Compound [1-1]+(B-233), Compound [1-1]+(B-234), Compound [1-1]+(B-235), Compound [1-1]+(B-236), Compound [1-1]+(B-237), Compound [1-1]+(B-238), Compound [1-1]+(B-239), Compound [1-1]+(B-240), Compound [1-1]+(B-241), Compound [1-1]+(B-242), Compound [1-1]+(B-243), Compound [1-1]+(B-244), Compound [1-1]+(B-245), Compound [1-1]+(B-246), Compound [1-1]+(B-247), Compound

[1-1]+(B-248), Compound [1-1]+(B-249), Compound [1-1]+(B-250), Compound [1-1]+(B-251), Compound [1-1]+(B-252), Compound [1-1]+(B-253), Compound [1-1]+(B-254), Compound [1-1]+(B-255), Compound [1-1]+(B-256), Compound [1-1]+(B-257), Compound [1-1]+(B-258), Compound [1-1]+(B-259), Compound [1-1]+(B-260), Compound [1-1]+(B-261), Compound [1-1]+(B-262), Compound [1-1]+(B-263), Compound [1-1]+(B-264), Compound [1-1]+(B-265), Compound [1-1]+(B-266), Compound [1-1]+(B-267), Compound [1-1]+(B-268), Compound [1-1]+(B-269), Compound [1-1]+(B-270), Compound [1-1]+(B-271), Compound [1-1]+(B-272), Compound [1-1]+(B-273), Compound [1-1]+(B-274), Compound [1-1]+(B-275), Compound [1-1]+(B-276), Compound [1-1]+(B-277), Compound [1-1]+(B-278), Compound [1-1]+(B-279), Compound [1-1]+(B-280), Compound [1-1]+(B-281), Compound [1-1]+(B-282), Compound [1-1]+(B-283), Compound [1-1]+(B-284), Compound [1-1]+(B-285), Compound [1-1]+(B-286), Compound [1-1]+(B-287), Compound [1-1]+(B-288), Compound [1-1]+(B-289), Compound [1-1]+(B-290), Compound [1-1]+(B-291), Compound [1-1]+(B-292), Compound [1-1]+(B-293), Compound [1-1]+(B-294), Compound [1-1]+(B-295), Compound [1-1]+(B-296), Compound [1-1]+(B-297), Compound [1-1]+(B-298), Compound [1-1]+(B-299), Compound [1-1]+(B-300), Compound [1-1]+(B-301), Compound [1-1]+(B-302), Compound [1-1]+(B-303), Compound [1-1]+(B-304), Compound [1-1]+(B-305), Compound [1-1]+(B-306), Compound [1-1]+(B-307), Compound [1-1]+(B-308), Compound [1-1]+(B-309), Compound [1-1]+(B-310), Compound [1-1]+(B-311), Compound [1-1]+(B-312), Compound [1-1]+(B-313), Compound [1-1]+(B-314), Compound [1-1]+(B-315), Compound [1-1]+(B-316), Compound [1-1]+(B-317), Compound [1-1]+(B-318), Compound [1-1]+(B-319), Compound [1-1]+(B-320), Compound [1-1]+(B-321), Compound [1-1]+(B-322), Compound [1-1]+(B-323), Compound [1-1]+(B-324), Compound [1-1]+(B-325), Compound [1-1]+(B-326), Compound [1-1]+(B-327), Compound [1-1]+(B-328), Compound [1-1]+(B-329), Compound [1-1]+(B-330), Compound [1-1]+(B-331), Compound [1-1]+(B-332), Compound [1-1]+(B-333), Compound [1-1]+(B-334), Compound [1-1]+(B-335), Compound [1-1]+(B-336), Compound [1-1]+(B-337), Compound [1-1]+(B-338), Compound [1-1]+(B-339), Compound [1-1]+(B-340), Compound [1-1]+(B-341), Compound [1-1]+(B-342), Compound [1-1]+(B-343), Compound [1-1]+(B-344), Compound [1-1]+(B-345), Compound [1-1]+(B-346), Compound [1-1]+(B-347), Compound [1-1]+(B-348), Compound [1-1]+(B-349), Compound [1-1]+(B-350), Compound [1-1]+(B-351), Compound [1-1]+(B-352), Compound [1-1]+(B-353), Compound [1-1]+(B-354), Compound [1-1]+(B-355), Compound [1-1]+(B-356), Compound [1-1]+(B-357), Compound [1-1]+(B-358), Compound [1-1]+(B-359), Compound [1-1]+(B-360), Compound [1-1]+(B-361), Compound [1-1]+(B-362), Compound [1-1]+(B-363), Compound [1-1]+(B-364), Compound [1-1]+(B-365), Compound [1-1]+(B-366), Compound [1-1]+(B-367), Compound [1-1]+(B-368), Compound [1-1]+(B-369), Compound [1-1]+(B-370), Compound [1-1]+(B-371), Compound [1-1]+(B-372), Compound [1-1]+(B-373), Compound [1-1]+(B-374), Compound [1-1]+(B-375), Compound [1-1]+(B-376), Compound [1-1]+(B-377), Compound [1-1]+(B-378), Compound [1-1]+(B-379), Compound [1-1]+(B-380), Compound [1-1]+(B-381), Compound [1-1]+(B-382), Compound [1-1]+(B-383), Compound [1-1]+(B-384),

Compound [1-2]+(B-001), Compound [1-2]+(B-002), Compound [1-2]+(B-003), Compound [1-2]+(B-004), Compound [1-2]+(B-005), Compound [1-2]+(B-006), Compound [1-2]+(B-007), Compound [1-2]+(B-008), Compound [1-2]+(B-009), Compound [1-2]+(B-010), Compound [1-2]+(B-011), Compound [1-2]+(B-012), Compound [1-2]+(B-013), Compound [1-2]+(B-014), Compound [1-2]+(B-015), Compound [1-2]+(B-016), Compound [1-2]+(B-017), Compound [1-2]+(B-018), Compound [1-2]+(B-019), Compound [1-2]+(B-020), Compound [1-2]+(B-021), Compound [1-2]+(B-022), Compound [1-2]+(B-023), Compound [1-2]+(B-024), Compound [1-2]+(B-025), Compound [1-2]+(B-026), Compound [1-2]+(B-027), Compound [1-2]+(B-028), Compound [1-2]+(B-029), Compound [1-2]+(B-030), Compound [1-2]+(B-031), Compound [1-2]+(B-032), Compound [1-2]+(B-033), Compound [1-2]+(B-034), Compound [1-2]+(B-035), Compound [1-2]+(B-036), Compound [1-2]+(B-037), Compound [1-2]+(B-038), Compound [1-2]+(B-039), Compound [1-2]+(B-040), Compound [1-2]+(B-041), Compound [1-2]+(B-042), Compound [1-2]+(B-043), Compound [1-2]+(B-044), Compound [1-2]+(B-045), Compound [1-2]+(B-046), Compound [1-2]+(B-047), Compound [1-2]+(B-048), Compound [1-2]+(B-049), Compound [1-2]+(B-050) , Compound [1-2]+(B-051), Compound [1-2]+(B-052), Compound [1-2]+(B-053), Compound [1-2]+(B-054), Compound [1-2]+(B-055), Compound [1-2]+(B-056), Compound [1-2]+(B-057), Compound [1-2]+(B-058), Compound [1-2]+(B-059), Compound [1-2]+(B-060), Compound [1-2]+(B-061), Compound [1-2]+(B-062), Compound [1-2]+(B-063), Compound [1-2]+(B-064), Compound [1-2]+(B-065), Compound [1-2]+(B-066), Compound [1-2]+(B-067), Compound [1-2]+(B-068), Compound [1-2]+(B-069), Compound [1-2]+(B-070), Compound [1-2]+(B-071), Compound [1-2]+(B-072), Compound [1-2]+(B-073), Compound [1-2]+(B-074), Compound [1-2]+(B-075), Compound [1-2]+(B-076), Compound [1-2]+(B-077), Compound [1-2]+(B-078), Compound [1-2]+(B-079), Compound [1-2]+(B-080), Compound [1-2]+(B-081), Compound [1-2]+(B-082), Compound [1-2]+(B-083), Compound [1-2]+(B-084), Compound [1-2]+(B-085), Compound [1-2]+(B-086), Compound [1-2]+(B-087), Compound [1-2]+(B-088), Compound [1-2]+(B-089), Compound [1-2]+(B-090), Compound [1-2]+(B-091), Compound [1-2]+(B-092), Compound [1-2]+(B-093), Compound [1-2]+(B-094), Compound [1-2]+(B-095), Compound [1-2]+(B-096), Compound [1-2]+(B-097), Compound [1-2]+(B-098), Compound [1-2]+(B-099), Compound [1-2]+(B-100), Compound [1-2]+(B-101), Compound [1-2]+(B-102), Compound [1-2]+(B-103), Compound [1-2]+(B-104), Compound [1-2]+(B-105), Compound [1-2]+(B-106), Compound [1-2]+(B-107), Compound [1-2]+(B-108), Compound [1-2]+(B-109), Compound [1-2]+(B-110), Compound

[1-2]+(B-111), Compound [1-2]+(B-112), Compound [1-2]+(B-113), Compound [1-2]+(B-114), Compound [1-2]+(B-115), Compound [1-2]+(B-116), Compound [1-2]+(B-117), Compound [1-2]+(B-118), Compound [1-2]+(B-119), Compound [1-2]+(B-120), Compound [1-2]+(B-121), Compound [1-2]+(B-122), Compound [1-2]+(B-123), Compound [1-2]+(B-124), Compound [1-2]+(B-125), Compound [1-2]+(B-126), Compound [1-2]+(B-127), Compound [1-2]+(B-128), Compound [1-2]+(B-129), Compound [1-2]+(B-130), Compound [1-2]+(B-131), Compound [1-2]+(B-132), Compound [1-2]+(B-133), Compound [1-2]+(B-134), Compound [1-2]+(B-135), Compound [1-2]+(B-136), Compound [1-2]+(B-137), Compound [1-2]+(B-138), Compound [1-2]+(B-139), Compound [1-2]+(B-140), Compound [1-2]+(B-141), Compound [1-2]+(B-142), Compound [1-2]+(B-143), Compound [1-2]+(B-144), Compound [1-2]+(B-145), Compound [1-2]+(B-146), Compound [1-2]+(B-147), Compound [1-2]+(B-148), Compound [1-2]+(B-149), Compound [1-2]+(B-150), Compound [1-2]+(B-151), Compound [1-2]+(B-152), Compound [1-2]+(B-153), Compound [1-2]+(B-154), Compound [1-2]+(B-155), Compound [1-2]+(B-156), Compound [1-2]+(B-157), Compound [1-2]+(B-158), Compound [1-2]+(B-159), Compound [1-2]+(B-160), Compound [1-2]+(B-161), Compound [1-2]+(B-162), Compound [1-2]+(B-163), Compound [1-2]+(B-164), Compound [1-2]+(B-165), Compound [1-2]+(B-166), Compound [1-2]+(B-167), Compound [1-2]+(B-168), Compound [1-2]+(B-169), Compound [1-2]+(B-170), Compound [1-2]+(B-171), Compound [1-2]+(B-172), Compound [1-2]+(B-173), Compound [1-2]+(B-174), Compound [1-2]+(B-175), Compound [1-2]+(B-176), Compound [1-2]+(B-177), Compound [1-2]+(B-178), Compound [1-2]+(B-179), Compound [1-2]+(B-180), Compound [1-2]+(B-181), Compound [1-2]+(B-182), Compound [1-2]+(B-183), Compound [1-2]+(B-184), Compound [1-2]+(B-185), Compound [1-2]+(B-186), Compound [1-2]+(B-187), Compound [1-2]+(B-188), Compound [1-2]+(B-189), Compound [1-2]+(B-190), Compound [1-2]+(B-191), Compound [1-2]+(B-192), Compound [1-2]+(B-193), Compound [1-2]+(B-194), Compound [1-2]+(B-195), Compound [1-2]+(B-196), Compound [1-2]+(B-197), Compound [1-2]+(B-198), Compound [1-2]+(B-199), Compound [1-2]+(B-200), Compound [1-2]+(B-201), Compound [1-2]+(B-202), Compound [1-2]+(B-203), Compound [1-2]+(B-204), Compound [1-2]+(B-205), Compound [1-2]+(B-206), Compound [1-2]+(B-207), Compound [1-2]+(B-208), Compound [1-2]+(B-209), Compound [1-2]+(B-210), Compound [1-2]+(B-211), Compound [1-2]+(B-212), Compound [1-2]+(B-213), Compound [1-2]+(B-214), Compound [1-2]+(B-215), Compound [1-2]+(B-216), Compound [1-2]+(B-217), Compound [1-2]+(B-218), Compound [1-2]+(B-219), Compound [1-2]+(B-220), Compound [1-2]+(B-221), Compound [1-2]+(B-222), Compound [1-2]+(B-223), Compound [1-2]+(B-224), Compound [1-2]+(B-225), Compound [1-2]+(B-226), Compound [1-2]+(B-227), Compound [1-2]+(B-228), Compound [1-2]+(B-229), Compound [1-2]+(B-230) , Compound [1-2]+(B-231), Compound [1-2]+(B-232), Compound [1-2]+(B-233), Compound [1-2]+(B-234), Compound [1-2]+(B-235), Compound [1-2]+(B-236), Compound [1-2]+(B-237), Compound [1-2]+(B-238), Compound [1-2]+(B-239), Compound [1-2]+(B-240), Compound [1-2]+(B-241), Compound [1-2]+(B-242), Compound [1-2]+(B-243), Compound [1-2]+(B-244), Compound [1-2]+(B-245), Compound [1-2]+(B-246), Compound [1-2]+(B-247), Compound [1-2]+(B-248), Compound [1-2]+(B-249), Compound [1-2]+(B-250), Compound [1-2]+(B-251), Compound [1-2]+(B-252), Compound [1-2]+(B-253), Compound [1-2]+(B-254), Compound [1-2]+(B-255), Compound [1-2]+(B-256), Compound [1-2]+(B-257), Compound [1-2]+(B-258), Compound [1-2]+(B-259), Compound [1-2]+(B-260), Compound [1-2]+(B-261), Compound [1-2]+(B-262), Compound [1-2]+(B-263), Compound [1-2]+(B-264), Compound [1-2]+(B-265), Compound [1-2]+(B-266), Compound [1-2]+(B-267), Compound [1-2]+(B-268), Compound [1-2]+(B-269), Compound [1-2]+(B-270), Compound [1-2]+(B-271), Compound [1-2]+(B-272), Compound [1-2]+(B-273), Compound [1-2]+(B-274), Compound [1-2]+(B-275), Compound [1-2]+(B-276), Compound [1-2]+(B-277), Compound [1-2]+(B-278), Compound [1-2]+(B-279), Compound [1-2]+(B-280), Compound [1-2]+(B-281), Compound [1-2]+(B-282), Compound [1-2]+(B-283), Compound [1-2]+(B-284), Compound [1-2]+(B-285), Compound [1-2]+(B-286), Compound [1-2]+(B-287), Compound [1-2]+(B-288), Compound [1-2]+(B-289), Compound [1-2]+(B-290), Compound [1-2]+(B-291), Compound [1-2]+(B-292), Compound [1-2]+(B-293), Compound [1-2]+(B-294), Compound [1-2]+(B-295), Compound [1-2]+(B-296), Compound [1-2]+(B-297), Compound [1-2]+(B-298), Compound [1-2]+(B-299), Compound [1-2]+(B-300), Compound [1-2]+(B-301), Compound [1-2]+(B-302), Compound [1-2]+(B-303), Compound [1-2]+(B-304), Compound [1-2]+(B-305), Compound [1-2]+(B-306), Compound [1-2]+(B-307), Compound [1-2]+(B-308), Compound [1-2]+(B-309), Compound [1-2]+(B-310), Compound [1-2]+(B-311), Compound [1-2]+(B-312), Compound [1-2]+(B-313), Compound [1-2]+(B-314), Compound [1-2]+(B-315), Compound [1-2]+(B-316), Compound [1-2]+(B-317), Compound [1-2]+(B-318), Compound [1-2]+(B-319), Compound [1-2]+(B-320), Compound [1-2]+(B-321), Compound [1-2]+(B-322), Compound [1-2]+(B-323), Compound [1-2]+(B-324), Compound [1-2]+(B-325), Compound [1-2]+(B-326), Compound [1-2]+(B-327), Compound [1-2]+(B-328), Compound [1-2] +(B-329) , Compound [1-2]+(B-330), Compound [1-2]+(B-331), Compound [1-2]+(B-332), Compound [1-2]+(B-333), Compound [1-2]+(B-334), Compound [1-2]+(B-335), Compound [1-2]+(B-336), Compound [1-2]+(B-337), Compound [1-2]+(B-338), Compound [1-2]+(B-339), Compound [1-2]+(B-340), Compound [1-2]+(B-341), Compound [1-2]+(B-342), Compound [1-2]+(B-343), Compound [1-2]+(B-344), Compound [1-2]+(B-345), Compound [1-2]+(B-346), Compound [1-2]+(B-347), Compound [1-2]+(B-348), Compound [1-2]+(B-349), Compound [1-2]+(B-350) , Compound [1-2]+(B-351), Compound [1-2]+(B-352), Compound [1-2]+(B-353), Compound [1-2]+(B-354), Compound [1-2]+(B-355), Compound [1-2]+(B-356), Compound [1-2]+(B-357),

Compound [1-2]+(B-358), Compound [1-2]+(B-359), Compound [1-2]+(B-360), Compound [1-2]+(B-361), Compound [1-2]+(B-362), Compound [1-2]+(B-363), Compound [1-2]+(B-364), Compound [1-2]+(B-365), Compound [1-2]+(B-366), Compound [1-2]+(B-367), Compound [1-2]+(B-368), Compound [1-2]+(B-369), Compound [1-2]+(B-370), Compound [1-2]+(B-371), Compound [1-2]+(B-372), Compound [1-2]+(B-373), Compound [1-2]+(B-374), Compound [1-2]+(B-375), Compound [1-2]+(B-376), Compound [1-2]+(B-377), Compound [1-2]+(B-378), Compound [1-2]+(B-379), Compound [1-2]+(B-380), Compound [1-2]+(B-381), Compound [1-2]+(B-382), Compound [1-2]+(B-383), Compound [1-2]+(B-384),

Compound [1-3]+(B-001), Compound [1-3]+(B-002), Compound [1-3]+(B-003), Compound [1-3]+(B-004), Compound [1-3]+(B-005), Compound [1-3]+(B-006), Compound [1-3]+(B-007), Compound [1-3]+(B-008), Compound [1-3]+(B-009), Compound [1-3]+(B-010), Compound [1-3]+(B-011), Compound [1-3]+(B-012), Compound [1-3]+(B-013), Compound [1-3]+(B-014), Compound [1-3]+(B-015), Compound [1-3]+(B-016), Compound [1-3]+(B-017), Compound [1-3]+(B-018), Compound [1-3]+(B-019), Compound [1-3]+(B-020), Compound [1-3]+(B-021), Compound [1-3]+(B-022), Compound [1-3]+(B-023), Compound [1-3]+(B-024), Compound [1-3]+(B-025), Compound [1-3]+(B-026), Compound [1-3]+(B-027), Compound [1-3]+(B-028), Compound [1-3]+(B-029), Compound [1-3]+(B-030), Compound [1-3]+(B-031), Compound [1-3]+(B-032), Compound [1-3]+(B-033), Compound [1-3]+(B-034), Compound [1-3]+(B-035), Compound [1-3]+(B-036), Compound [1-3]+(B-037), Compound [1-3]+(B-038), Compound [1-3]+(B-039), Compound [1-3]+(B-040), Compound [1-3]+(B-041), Compound [1-3]+(B-042), Compound [1-3]+(B-043), Compound [1-3]+(B-044), Compound [1-3]+(B-045), Compound [1-3]+(B-046), Compound [1-3]+(B-047), Compound [1-3]+(B-048), Compound [1-3]+(B-049), Compound [1-3]+(B-050), Compound [1-3]+(B-051), Compound [1-3]+(B-052), Compound [1-3]+(B-053), Compound [1-3]+(B-054), Compound [1-3]+(B-055), Compound [1-3]+(B-056), Compound [1-3]+(B-057), Compound [1-3]+(B-058), Compound [1-3]+(B-059), Compound [1-3]+(B-060), Compound [1-3]+(B-061), Compound [1-3]+(B-062), Compound [1-3]+(B-063), Compound [1-3]+(B-064), Compound [1-3]+(B-065), Compound [1-3]+(B-066), Compound [1-3]+(B-067), Compound [1-3]+(B-068), Compound [1-3]+(B-069), Compound [1-3]+(B-070), Compound [1-3]+(B-071), Compound [1-3]+(B-072), Compound [1-3]+(B-073), Compound [1-3]+(B-074), Compound [1-3]+(B-075), Compound [1-3]+(B-076), Compound [1-3]+(B-077), Compound [1-3]+(B-078), Compound [1-3]+(B-079), Compound [1-3]+(B-080), Compound [1-3]+(B-081), Compound [1-3]+(B-082), Compound [1-3]+(B-083), Compound [1-3]+(B-084), Compound [1-3]+(B-085), Compound [1-3]+(B-086), Compound [1-3]+(B-087), Compound [1-3]+(B-088), Compound [1-3]+(B-089), Compound [1-3]+(B-090), Compound [1-3]+(B-091), Compound [1-3]+(B-092), Compound [1-3]+(B-093), Compound [1-3]+(B-094), Compound [1-3]+(B-095), Compound [1-3]+(B-096), Compound [1-3]+(B-097), Compound [1-3]+(B-098), Compound [1-3]+(B-099), Compound [1-3]+(B-100), Compound [1-3]+(B-101), Compound [1-3]+(B-102), Compound [1-3]+(B-103), Compound [1-3]+(B-104), Compound [1-3]+(B-105), Compound [1-3]+(B-106), Compound [1-3]+(B-107), Compound [1-3]+(B-108), Compound [1-3]+(B-109), Compound [1-3]+(B-110), Compound [1-3]+(B-111), Compound [1-3]+(B-112), Compound [1-3]+(B-113), Compound [1-3]+(B-114), Compound [1-3]+(B-115), Compound [1-3]+(B-116), Compound [1-3]+(B-117), Compound [1-3]+(B-118), Compound [1-3]+(B-119), Compound [1-3]+(B-120), Compound [1-3]+(B-121), Compound [1-3]+(B-122), Compound [1-3]+(B-123), Compound [1-3]+(B-124), Compound [1-3]+(B-125), Compound [1-3]+(B-126), Compound [1-3]+(B-127), Compound [1-3]+(B-128), Compound [1-3]+(B-129), Compound [1-3]+(B-130), Compound [1-3]+(B-131), Compound [1-3]+(B-132), Compound [1-3]+(B-133), Compound [1-3]+(B-134), Compound [1-3]+(B-135), Compound [1-3]+(B-136), Compound [1-3]+(B-137), Compound [1-3]+(B-138), Compound [1-3]+(B-139), Compound [1-3]+(B-140), Compound [1-3]+(B-141), Compound [1-3]+(B-142), Compound [1-3]+(B-143), Compound [1-3]+(B-144), Compound [1-3]+(B-145), Compound [1-3]+(B-146), Compound [1-3]+(B-147), Compound [1-3]+(B-148), Compound [1-3]+(B-149), Compound [1-3]+(B-150), Compound [1-3]+(B-151), Compound [1-3]+(B-152), Compound [1-3]+(B-153), Compound [1-3]+(B-154), Compound [1-3]+(B-155), Compound [1-3]+(B-156), Compound [1-3]+(B-157), Compound [1-3]+(B-158), Compound [1-3]+(B-159), Compound [1-3]+(B-160), Compound [1-3]+(B-161), Compound [1-3]+(B-162), Compound [1-3]+(B-163), Compound [1-3]+(B-164), Compound [1-3]+(B-165), Compound [1-3]+(B-166), Compound [1-3]+(B-167), Compound [1-3]+(B-168), Compound [1-3]+(B-169), Compound [1-3]+(B-170), Compound [1-3]+(B-171), Compound [1-3]+(B-172), Compound [1-3]+(B-173), Compound [1-3]+(B-174), Compound [1-3]+(B-175), Compound [1-3]+(B-176), Compound [1-3]+(B-177), Compound [1-3]+(B-178), Compound [1-3]+(B-179), Compound [1-3]+(B-180), Compound [1-3]+(B-181), Compound [1-3]+(B-182), Compound [1-3]+(B-183), Compound [1-3]+(B-184), Compound [1-3]+(B-185), Compound [1-3]+(B-186), Compound [1-3]+(B-187), Compound [1-3]+(B-188), Compound [1-3]+(B-189), Compound [1-3]+(B-190), Compound [1-3]+(B-191), Compound [1-3]+(B-192), Compound [1-3]+(B-193), Compound [1-3]+(B-194), Compound [1-3]+(B-195), Compound [1-3]+(B-196), Compound [1-3]+(B-197), Compound [1-3]+(B-198), Compound [1-3]+(B-199), Compound [1-3]+(B-200), Compound [1-3]+(B-201), Compound [1-3]+(B-202), Compound [1-3]+(B-203), Compound [1-3]+(B-204), Compound [1-3]+(B-205), Compound [1-3]+(B-206), Compound [1-3]+(B-207), Compound [1-3]+(B-208), Compound [1-3]+(B-209), Compound [1-3]+(B-210), Compound [1-3]+(B-211), Compound [1-3]+(B-212), Compound [1-3]+(B-213), Compound [1-3]+(B-214), Compound [1-3]+(B-215), Compound [1-3]+(B-216), Compound [1-3]+(B-217), Compound [1-3]+(B-218), Compound [1-3]+(B-219), Compound [1-3]+(B-220), Compound [1-3]+(B-221), Compound [1-3]+(B-222), Compound [1-3]+(B-223), Compound [1-3]+(B-224), Compound [1-3]+(B-225), Compound [1-3]+(B-226), Compound [1-3]+(B-227), Compound [1-3]+(B-228), Compound [1-3]+(B-229), Compound [1-3]+(B-230), Compound [1-3]+(B-231), Compound [1-3]+(B-232), Compound [1-3]+(B-233), Compound [1-3]+(B-234), Compound [1-3]+(B-235), Compound [1-3]+(B-236), Compound [1-3]+(B-237), Compound [1-3]+(B-238), Compound [1-3]+(B-239), Compound [1-3]+(B-240), Compound [1-3]+(B-241), Compound [1-3]+(B-242), Compound [1-3]+(B-243), Compound [1-3]+(B-244), Compound [1-3]+(B-245), Compound [1-3]+(B-246), Compound [1-3]+(B-247), Compound [1-3]+(B-248), Compound [1-3]+(B-249), Compound [1-3]+(B-250), Compound [1-3]+(B-251), Compound [1-3]+(B-252), Compound [1-3]+(B-253), Compound [1-3]+(B-254), Compound [1-3]+(B-255), Compound [1-3]+(B-256), Compound [1-3]+(B-257), Compound [1-3]+(B-258), Compound [1-3]+(B-259), Compound [1-3]+(B-260), Compound [1-3]+(B-261), Compound [1-3]+(B-262), Compound [1-3]+(B-263), Compound [1-3]+(B-264), Compound [1-3]+(B-265), Compound [1-3]+(B-266), Compound [1-3]+(B-267), Compound [1-3]+(B-268), Compound [1-3]+(B-269), Compound [1-3]+(B-270), Compound [1-3]+(B-271), Compound [1-3]+(B-272), Compound [1-3]+(B-273), Compound [1-3]+(B-274), Compound [1-3]+(B-275), Compound [1-3]+(B-276), Compound [1-3]+(B-277), Compound [1-3]+(B-278), Compound [1-3]+(B-279), Compound [1-3]+(B-280), Compound [1-3]+(B-281), Compound [1-3]+(B-282), Compound [1-3]+(B-283), Compound [1-3]+(B-284), Compound [1-3]+(B-285), Compound [1-3]+(B-286), Compound [1-3]+(B-287), Compound [1-3]+(B-288), Compound [1-3]+(B-289), Compound [1-3]+(B-290), Compound [1-3]+(B-291), Compound [1-3]+(B-292), Compound [1-3]+(B-293), Compound [1-3]+(B-294), Compound [1-3]+(B-295), Compound [1-3]+(B-296), Compound [1-3]+(B-297), Compound [1-3]+(B-298), Compound [1-3]+(B-299), Compound [1-3]+(B-300), Compound [1-3]+(B-301), Compound [1-3]+(B-302), Compound [1-3]+(B-303), Compound [1-3]+(B-304), Compound [1-3]+(B-305), Compound [1-3]+(B-306), Compound [1-3]+(B-307), Compound [1-3]+(B-308), Compound [1-3]+(B-309), Compound [1-3]+(B-310), Compound [1-3]+(B-311), Compound [1-3]+(B-312), Compound [1-3]+(B-313), Compound [1-3]+(B-314), Compound [1-3]+(B-315), Compound [1-3]+(B-316), Compound [1-3]+(B-317), Compound [1-3]+(B-318), Compound [1-3]+(B-319), Compound [1-3]+(B-320), Compound [1-3]+(B-321), Compound [1-3]+(B-322), Compound [1-3]+(B-323), Compound [1-3]+(B-324), Compound [1-3]+(B-325), Compound [1-3]+(B-326), Compound [1-3]+(B-327), Compound [1-3]+(B-328), Compound [1-3]+(B-329), Compound [1-3]+(B-330), Compound [1-3]+(B-331), Compound [1-3]+(B-332), Compound [1-3]+(B-333), Compound [1-3]+(B-334), Compound [1-3]+(B-335), Compound [1-3]+(B-336), Compound [1-3]+(B-337), Compound [1-3]+(B-338), Compound [1-3]+(B-339), Compound [1-3]+(B-340), Compound [1-3]+(B-341), Compound [1-3]+(B-342), Compound [1-3]+(B-343), Compound [1-3]+(B-344), Compound [1-3]+(B-345), Compound [1-3]+(B-346), Compound [1-3]+(B-347), Compound [1-3]+(B-348), Compound [1-3]+(B-349), Compound [1-3]+(B-350), Compound [1-3]+(B-351), Compound [1-3]+(B-352), Compound [1-3]+(B-353), Compound [1-3]+(B-354), Compound [1-3]+(B-355), Compound [1-3]+(B-356), Compound [1-3]+(B-357), Compound [1-3]+(B-358), Compound [1-3]+(B-359), Compound [1-3]+(B-360), Compound [1-3]+(B-361), Compound [1-3]+(B-362), Compound [1-3]+(B-363), Compound [1-3]+(B-364), Compound [1-3]+(B-365), Compound [1-3]+(B-366), Compound [1-3]+(B-367), Compound [1-3]+(B-368), Compound [1-3]+(B-369), Compound [1-3]+(B-370), Compound [1-3]+(B-371), Compound [1-3]+(B-372), Compound [1-3]+(B-373), Compound [1-3]+(B-374), Compound [1-3]+(B-375), Compound [1-3]+(B-376), Compound [1-3]+(B-377), Compound [1-3]+(B-378), Compound [1-3]+(B-379), Compound [1-3]+(B-380), Compound [1-3]+(B-381), Compound [1-3]+(B-382), Compound [1-3]+(B-383), Compound [1-3]+(B-384),

Compound [1-4]+(B-001), Compound [1-4]+(B-002), Compound [1-4]+(B-003), Compound [1-4]+(B-004), Compound [1-4]+(B-005), Compound [1-4]+(B-006), Compound [1-4]+(B-007), Compound [1-4]+(B-008), Compound [1-4]+(B-009), Compound [1-4]+(B-010), Compound [1-4]+(B-011), Compound [1-4]+(B-012), Compound [1-4]+(B-013), Compound [1-4]+(B-014), Compound [1-4]+(B-015), Compound [1-4]+(B-016), Compound [1-4]+(B-017), Compound [1-4]+(B-018), Compound [1-4]+(B-019), Compound [1-4]+(B-020), Compound [1-4]+(B-021), Compound [1-4]+(B-022), Compound [1-4]+(B-023), Compound [1-4]+(B-024), Compound [1-4]+(B-025), Compound [1-4]+(B-026), Compound [1-4]+(B-027), Compound [1-4]+(B-028), Compound [1-4]+(B-029), Compound [1-4]+(B-030), Compound [1-4]+(B-031), Compound [1-4]+(B-032), Compound [1-4]+(B-033), Compound [1-4]+(B-034), Compound [1-4]+(B-035), Compound [1-4]+(B-036), Compound [1-4]+(B-037), Compound [1-4]+(B-038), Compound [1-4]+(B-039), Compound [1-4]+(B-040), Compound [1-4]+(B-041), Compound [1-4]+(B-042), Compound [1-4]+(B-043), Compound [1-4]+(B-044), Compound [1-4]+(B-045), Compound [1-4]+(B-046), Compound [1-4]+(B-047), Compound [1-4]+(B-048), Compound [1-4]+(B-049), Compound [1-4]+(B-050), Compound [1-4]+(B-051), Compound [1-4]+(B-052), Compound [1-4]+(B-053), Compound [1-4]+(B-054), Compound [1-4]+(B-055), Compound [1-4]+(B-056), Compound [1-4]+(B-057), Compound [1-4]+(B-058), Compound [1-4]+(B-059), Compound [1-4]+(B-060), Compound [1-4]+(B-061), Compound [1-4]+(B-062), Compound [1-4]+(B-063), Compound [1-4]+(B-064), Compound [1-4]+(B-065), Compound [1-4]+(B-066), Compound [1-4]+(B-067), Compound [1-4]+(B-068), Compound [1-4]+(B-069), Compound [1-4]+(B-070), Compound [1-4]+(B-071), Compound [1-4]+(B-072), Compound [1-4]+(B-073), Compound [1-4]+(B-074), Compound [1-4]+(B-075), Compound [1-4]+(B-076), Compound

[1-4]+(B-077), Compound [1-4]+(B-078), Compound [1-4]+(B-079), Compound [1-4]+(B-080), Compound [1-4]+(B-081), Compound [1-4]+(B-082), Compound [1-4]+(B-083), Compound [1-4]+(B-084), Compound [1-4]+(B-085), Compound [1-4]+(B-086), Compound [1-4]+(B-087), Compound [1-4]+(B-088), Compound [1-4]+(B-089), Compound [1-4]+(B-090), Compound [1-4]+(B-091), Compound [1-4]+(B-092), Compound [1-4]+(B-093), Compound [1-4]+(B-094), Compound [1-4]+(B-095), Compound [1-4]+(B-096), Compound [1-4]+(B-097), Compound [1-4]+(B-098), Compound [1-4]+(B-099), Compound [1-4]+(B-100), Compound [1-4]+(B-101), Compound [1-4]+(B-102), Compound [1-4]+(B-103), Compound [1-4]+(B-104), Compound [1-4]+(B-105), Compound [1-4]+(B-106), Compound [1-4]+(B-107), Compound [1-4]+(B-108), Compound [1-4]+(B-109), Compound [1-4]+(B-110), Compound [1-4]+(B-111), Compound [1-4]+(B-112), Compound [1-4]+(B-113), Compound [1-4]+(B-114), Compound [1-4]+(B-115), Compound [1-4]+(B-116), Compound [1-4]+(B-117), Compound [1-4]+(B-118), Compound [1-4]+(B-119), Compound [1-4]+(B-120), Compound [1-4]+(B-121), Compound [1-4]+(B-122), Compound [1-4]+(B-123), Compound [1-4]+(B-124), Compound [1-4]+(B-125), Compound [1-4]+(B-126), Compound [1-4]+(B-127), Compound [1-4]+(B-128), Compound [1-4]+(B-129), Compound [1-4]+(B-130), Compound [1-4]+(B-131), Compound [1-4]+(B-132), Compound [1-4]+(B-133), Compound [1-4]+(B-134), Compound [1-4]+(B-135), Compound [1-4]+(B-136), Compound [1-4]+(B-137), Compound [1-4]+(B-138), Compound [1-4]+(B-139), Compound [1-4]+(B-140), Compound [1-4]+(B-141), Compound [1-4]+(B-142), Compound [1-4]+(B-143), Compound [1-4]+(B-144), Compound [1-4]+(B-145), Compound [1-4]+(B-146), Compound [1-4]+(B-147), Compound [1-4]+(B-148), Compound [1-4]+(B-149), Compound [1-4]+(B-150), Compound [1-4]+(B-151), Compound [1-4]+(B-152), Compound [1-4]+(B-153), Compound [1-4]+(B-154), Compound [1-4]+(B-155), Compound [1-4]+(B-156), Compound [1-4]+(B-157), Compound [1-4]+(B-158), Compound [1-4]+(B-159), Compound [1-4]+(B-160), Compound [1-4]+(B-161), Compound [1-4]+(B-162), Compound [1-4]+(B-163), Compound [1-4]+(B-164), Compound [1-4]+(B-165), Compound [1-4]+(B-166), Compound [1-4]+(B-167), Compound [1-4]+(B-168), Compound [1-4]+(B-169), Compound [1-4]+(B-170), Compound [1-4]+(B-171), Compound [1-4]+(B-172), Compound [1-4]+(B-173), Compound [1-4]+(B-174), Compound [1-4]+(B-175), Compound [1-4]+(B-176), Compound [1-4]+(B-177), Compound [1-4]+(B-178), Compound [1-4]+(B-179), Compound [1-4]+(B-180), Compound [1-4]+(B-181), Compound [1-4]+(B-182), Compound [1-4]+(B-183), Compound [1-4]+(B-184), Compound [1-4]+(B-185), Compound [1-4]+(B-186), Compound [1-4]+(B-187), Compound [1-4]+(B-188), Compound [1-4]+(B-189), Compound [1-4]+(B-190), Compound [1-4]+(B-191), Compound [1-4]+(B-192), Compound [1-4]+(B-193), Compound [1-4]+(B-194), Compound [1-4]+(B-195), Compound [1-4]+(B-196), Compound [1-4]+(B-197), Compound [1-4]+(B-198), Compound [1-4]+(B-199), Compound [1-4]+(B-200), Compound [1-4]+(B-201), Compound [1-4]+(B-202), Compound [1-4]+(B-203), Compound [1-4]+(B-204), Compound [1-4]+(B-205), Compound [1-4]+(B-206), Compound [1-4]+(B-207), Compound [1-4]+(B-208), Compound [1-4]+(B-209), Compound [1-4]+(B-210), Compound [1-4]+(B-211), Compound [1-4]+(B-212), Compound [1-4]+(B-213), Compound [1-4]+(B-214), Compound [1-4]+(B-215), Compound [1-4]+(B-216), Compound [1-4]+(B-217), Compound [1-4]+(B-218), Compound [1-4]+(B-219), Compound [1-4]+(B-220), Compound [1-4]+(B-221), Compound [1-4]+(B-222), Compound [1-4]+(B-223), Compound [1-4]+(B-224), Compound [1-4]+(B-225), Compound [1-4]+(B-226), Compound [1-4]+(B-227), Compound [1-4]+(B-228), Compound [1-4]+(B-229), Compound [1-4]+(B-230), Compound [1-4]+(B-231), Compound [1-4]+(B-232), Compound [1-4]+(B-233), Compound [1-4]+(B-234), Compound [1-4]+(B-235), Compound [1-4]+(B-236), Compound [1-4]+(B-237), Compound [1-4]+(B-238), Compound [1-4]+(B-239), Compound [1-4]+(B-240), Compound [1-4]+(B-241), Compound [1-4]+(B-242), Compound [1-4]+(B-243), Compound [1-4]+(B-244), Compound [1-4]+(B-245), Compound [1-4]+(B-246), Compound [1-4]+(B-247), Compound [1-4]+(B-248), Compound [1-4]+(B-249), Compound [1-4]+(B-250), Compound [1-4]+(B-251), Compound [1-4]+(B-252), Compound [1-4]+(B-253), Compound [1-4]+(B-254), Compound [1-4]+(B-255), Compound [1-4]+(B-256), Compound [1-4]+(B-257), Compound [1-4]+(B-258), Compound [1-4]+(B-259), Compound [1-4]+(B-260), Compound [1-4]+(B-261), Compound [1-4]+(B-262), Compound [1-4]+(B-263), Compound [1-4]+(B-264), Compound [1-4]+(B-265), Compound [1-4]+(B-266), Compound [1-4]+(B-267), Compound [1-4]+(B-268), Compound [1-4]+(B-269), Compound [1-4]+(B-270), Compound [1-4]+(B-271), Compound [1-4]+(B-272), Compound [1-4]+(B-273), Compound [1-4]+(B-274), Compound [1-4]+(B-275), Compound [1-4]+(B-276), Compound [1-4]+(B-277), Compound [1-4]+(B-278), Compound [1-4]+(B-279), Compound [1-4]+(B-280), Compound [1-4]+(B-281), Compound [1-4]+(B-282), Compound [1-4]+(B-283), Compound [1-4]+(B-284), Compound [1-4]+(B-285), Compound [1-4]+(B-286), Compound [1-4]+(B-287), Compound [1-4]+(B-288), Compound [1-4]+(B-289), Compound [1-4]+(B-290), Compound [1-4]+(B-291), Compound [1-4]+(B-292), Compound [1-4]+(B-293), Compound [1-4]+(B-294), Compound [1-4]+(B-295), Compound [1-4]+(B-296), Compound [1-4]+(B-297), Compound [1-4]+(B-298), Compound [1-4]+(B-299), Compound [1-4]+(B-300), Compound [1-4]+(B-301), Compound [1-4]+(B-302), Compound [1-4]+(B-303), Compound [1-4]+(B-304), Compound [1-4]+(B-305), Compound [1-4]+(B-306), Compound [1-4]+(B-307), Compound [1-4]+(B-308), Compound [1-4]+(B-309), Compound [1-4]+(B-310), Compound [1-4]+(B-311), Compound [1-4]+(B-312), Compound [1-4]+(B-313), Compound [1-4]+(B-314), Compound [1-4]+(B-315), Compound [1-4]+(B-316), Compound [1-4]+(B-317), Compound [1-4]+(B-318), Compound [1-4]+(B-319), Compound [1-4]+(B-320), Compound [1-4]+(B-321), Compound [1-4]+(B-322), Compound [1-4]+(B-323),

Compound [1-4]+(B-324), Compound [1-4]+(B-325), Compound [1-4]+(B-326), Compound [1-4]+(B-327), Compound [1-4]+(B-328), Compound [1-4]+(B-329), Compound [1-4]+(B-330), Compound [1-4]+(B-331), Compound [1-4]+(B-332), Compound [1-4]+(B-333), Compound [1-4]+(B-334), Compound [1-4]+(B-335), Compound [1-4]+(B-336), Compound [1-4]+(B-337), Compound [1-4]+(B-338), Compound [1-4]+(B-339), Compound [1-4]+(B-340), Compound [1-4]+(B-341), Compound [1-4]+(B-342), Compound [1-4]+(B-343), Compound [1-4]+(B-344), Compound [1-4]+(B-345), Compound [1-4]+(B-346), Compound [1-4]+(B-347), Compound [1-4]+(B-348), Compound [1-4]+(B-349), Compound [1-4]+(B-350), Compound [1-4]+(B-351), Compound [1-4]+(B-352), Compound [1-4]+(B-353), Compound [1-4]+(B-354), Compound [1-4]+(B-355), Compound [1-4]+(B-356), Compound [1-4]+(B-357), Compound [1-4]+(B-358), Compound [1-4]+(B-359), Compound [1-4]+(B-360), Compound [1-4]+(B-361), Compound [1-4]+(B-362), Compound [1-4]+(B-363), Compound [1-4]+(B-364), Compound [1-4]+(B-365), Compound [1-4]+(B-366), Compound [1-4]+(B-367), Compound [1-4]+(B-368), Compound [1-4]+(B-369), Compound [1-4]+(B-370), Compound [1-4]+(B-371), Compound [1-4]+(B-372), Compound [1-4]+(B-373), Compound [1-4]+(B-374), Compound [1-4]+(B-375), Compound [1-4]+(B-376), Compound [1-4]+(B-377), Compound [1-4]+(B-378), Compound [1-4]+(B-379), Compound [1-4]+(B-380), Compound [1-4]+(B-381), Compound [1-4]+(B-382), Compound [1-4]+(B-383), Compound [1-4]+(B-384),

Compound [1-5]+(B-001), Compound [1-5]+(B-002), Compound [1-5]+(B-003), Compound [1-5]+(B-004), Compound [1-5]+(B-005), Compound [1-5]+(B-006), Compound [1-5]+(B-007), Compound [1-5]+(B-008), Compound [1-5]+(B-009), Compound [1-5]+(B-010), Compound [1-5]+(B-011), Compound [1-5]+(B-012), Compound [1-5]+(B-013), Compound [1-5]+(B-014), Compound [1-5]+(B-015), Compound [1-5]+(B-016), Compound [1-5]+(B-017), Compound [1-5]+(B-018), Compound [1-5]+(B-019), Compound [1-5]+(B-020), Compound [1-5]+(B-021), Compound [1-5]+(B-022), Compound [1-5]+(B-023), Compound [1-5]+(B-024), Compound [1-5]+(B-025), Compound [1-5]+(B-026), Compound [1-5]+(B-027), Compound [1-5]+(B-028), Compound [1-5]+(B-029), Compound [1-5]+(B-030), Compound [1-5]+(B-031), Compound [1-5]+(B-032), Compound [1-5]+(B-033), Compound [1-5]+(B-034), Compound [1-5]+(B-035), Compound [1-5]+(B-036), Compound [1-5]+(B-037), Compound [1-5]+(B-038), Compound [1-5]+(B-039), Compound [1-5]+(B-040), Compound [1-5]+(B-041), Compound [1-5]+(B-042), Compound [1-5]+(B-043), Compound [1-5]+(B-044), Compound [1-5]+(B-045), Compound [1-5]+(B-046), Compound [1-5]+(B-047), Compound [1-5]+(B-048), Compound [1-5]+(B-049), Compound [1-5]+(B-050), Compound [1-5]+(B-051), Compound [1-5]+(B-052), Compound [1-5]+(B-053), Compound [1-5]+(B-054), Compound [1-5]+(B-055), Compound [1-5]+(B-056), Compound [1-5]+(B-057), Compound [1-5]+(B-058), Compound [1-5]+(B-059), Compound [1-5]+(B-060), Compound [1-5]+(B-061), Compound [1-5]+(B-062), Compound [1-5]+(B-063), Compound [1-5]+(B-064), Compound [1-5]+(B-065), Compound [1-5]+(B-066), Compound [1-5]+(B-067), Compound [1-5]+(B-068), Compound [1-5]+(B-069), Compound [1-5]+(B-070), Compound [1-5]+(B-071), Compound [1-5]+(B-072), Compound [1-5]+(B-073), Compound [1-5]+(B-074), Compound [1-5]+(B-075), Compound [1-5]+(B-076), Compound [1-5]+(B-077), Compound [1-5]+(B-078), Compound [1-5]+(B-079), Compound [1-5]+(B-080), Compound [1-5]+(B-081), Compound [1-5]+(B-082), Compound [1-5]+(B-083), Compound [1-5]+(B-084), Compound [1-5]+(B-085), Compound [1-5]+(B-086), Compound [1-5]+(B-087), Compound [1-5]+(B-088), Compound [1-5]+(B-089), Compound [1-5]+(B-090), Compound [1-5]+(B-091), Compound [1-5]+(B-092), Compound [1-5]+(B-093), Compound [1-5]+(B-094), Compound [1-5]+(B-095), Compound [1-5]+(B-096), Compound [1-5]+(B-097), Compound [1-5]+(B-098), Compound [1-5]+(B-099), Compound [1-5]+(B-100), Compound [1-5]+(B-101), Compound [1-5]+(B-102), Compound [1-5]+(B-103), Compound [1-5]+(B-104), Compound [1-5]+(B-105), Compound [1-5]+(B-106), Compound [1-5]+(B-107), Compound [1-5]+(B-108), Compound [1-5]+(B-109), Compound [1-5]+(B-110), Compound [1-5]+(B-111), Compound [1-5]+(B-112), Compound [1-5]+(B-113), Compound [1-5]+(B-114), Compound [1-5]+(B-115), Compound [1-5]+(B-116), Compound [1-5]+(B-117), Compound [1-5]+(B-118), Compound [1-5]+(B-119), Compound [1-5]+(B-120), Compound [1-5]+(B-121), Compound [1-5]+(B-122), Compound [1-5]+(B-123), Compound [1-5]+(B-124), Compound [1-5]+(B-125), Compound [1-5]+(B-126), Compound [1-5]+(B-127), Compound [1-5]+(B-128), Compound [1-5]+(B-129), Compound [1-5]+(B-130), Compound [1-5]+(B-131), Compound [1-5]+(B-132), Compound [1-5]+(B-133), Compound [1-5]+(B-134), Compound [1-5]+(B-135), Compound [1-5]+(B-136), Compound [1-5]+(B-137), Compound [1-5]+(B-138), Compound [1-5]+(B-139), Compound [1-5]+(B-140), Compound [1-5]+(B-141), Compound [1-5]+(B-142), Compound [1-5]+(B-143), Compound [1-5]+(B-144), Compound [1-5]+(B-145), Compound [1-5]+(B-146), Compound [1-5]+(B-147), Compound [1-5]+(B-148), Compound [1-5]+(B-149), Compound [1-5]+(B-150), Compound [1-5]+(B-151), Compound [1-5]+(B-152), Compound [1-5]+(B-153), Compound [1-5]+(B-154), Compound [1-5]+(B-155), Compound [1-5]+(B-156), Compound [1-5]+(B-157), Compound [1-5]+(B-158), Compound [1-5]+(B-159), Compound [1-5]+(B-160), Compound [1-5]+(B-161), Compound [1-5]+(B-162), Compound [1-5]+(B-163), Compound [1-5]+(B-164), Compound [1-5]+(B-165), Compound [1-5]+(B-166), Compound [1-5]+(B-167), Compound [1-5]+(B-168), Compound [1-5]+(B-169), Compound [1-5]+(B-170), Compound [1-5]+(B-171), Compound [1-5]+(B-172), Compound [1-5]+(B-173), Compound [1-5]+(B-174), Compound [1-5]+(B-175), Compound [1-5]+(B-176), Compound [1-5]+(B-177), Compound [1-5]+(B-178), Compound [1-5]+(B-179), Compound [1-5]+(B-180), Compound [1-5]+(B-181), Compound [1-5]+(B-182), Compound [1-5]+(B-183), Compound [1-5]+(B-184), Compound [1-5]+(B-185), Compound [1-5]+(B-186), Compound [1-5]+(B-187), Compound [1-5]+(B-188), Compound [1-5]+(B-189), Compound [1-5]+(B-190), Compound [1-5]+(B-191), Compound [1-5]+(B-192), Compound [1-5]+(B-193), Compound [1-5]+(B-194), Compound [1-5]+(B-195), Compound [1-5]+(B-196), Compound [1-5]+(B-197), Compound [1-5]+(B-198), Compound [1-5]+(B-199), Compound [1-5]+(B-200), Compound [1-5]+(B-201), Compound [1-5]+(B-202), Compound [1-5]+(B-203), Compound [1-5]+(B-204), Compound [1-5]+(B-205), Compound [1-5]+(B-206), Compound [1-5]+(B-207), Compound [1-5]+(B-208), Compound [1-5]+(B-209), Compound [1-5]+(B-210), Compound [1-5]+(B-211), Compound [1-5]+(B-212), Compound [1-5]+(B-213), Compound [1-5]+(B-214), Compound [1-5]+(B-215), Compound [1-5]+(B-216), Compound [1-5]+(B-217), Compound [1-5]+(B-218), Compound [1-5]+(B-219), Compound [1-5]+(B-220), Compound [1-5]+(B-221), Compound [1-5]+(B-222), Compound [1-5]+(B-223), Compound [1-5]+(B-224), Compound [1-5]+(B-225), Compound [1-5]+(B-226), Compound [1-5]+(B-227), Compound [1-5]+(B-228), Compound [1-5]+(B-229), Compound [1-5]+(B-230), Compound [1-5]+(B-231), Compound [1-5]+(B-232), Compound [1-5]+(B-233), Compound [1-5]+(B-234), Compound [1-5]+(B-235), Compound [1-5]+(B-236), Compound [1-5]+(B-237), Compound [1-5]+(B-238), Compound [1-5]+(B-239), Compound [1-5]+(B-240), Compound [1-5]+(B-241), Compound [1-5]+(B-242), Compound [1-5]+(B-243), Compound [1-5]+(B-244), Compound [1-5]+(B-245), Compound [1-5]+(B-246), Compound [1-5]+(B-247), Compound [1-5]+(B-248), Compound [1-5]+(B-249), Compound [1-5]+(B-250), Compound [1-5]+(B-251), Compound [1-5]+(B-252), Compound [1-5]+(B-253), Compound [1-5]+(B-254), Compound [1-5]+(B-255), Compound [1-5]+(B-256), Compound [1-5]+(B-257), Compound [1-5]+(B-258), Compound [1-5]+(B-259), Compound [1-5]+(B-260), Compound [1-5]+(B-261), Compound [1-5]+(B-262), Compound [1-5]+(B-263), Compound [1-5]+(B-264), Compound [1-5]+(B-265), Compound [1-5]+(B-266), Compound [1-5]+(B-267), Compound [1-5]+(B-268), Compound [1-5]+(B-269), Compound [1-5]+(B-270), Compound [1-5]+(B-271), Compound [1-5]+(B-272), Compound [1-5]+(B-273), Compound [1-5]+(B-274), Compound [1-5]+(B-275), Compound [1-5]+(B-276), Compound [1-5]+(B-277), Compound [1-5]+(B-278), Compound [1-5]+(B-279), Compound [1-5]+(B-280), Compound [1-5]+(B-281), Compound [1-5]+(B-282), Compound [1-5]+(B-283), Compound [1-5]+(B-284), Compound [1-5]+(B-285), Compound [1-5]+(B-286), Compound [1-5]+(B-287), Compound [1-5]+(B-288), Compound [1-5]+(B-289), Compound [1-5]+(B-290), Compound [1-5]+(B-291), Compound [1-5]+(B-292), Compound [1-5]+(B-293), Compound [1-5]+(B-294), Compound [1-5]+(B-295), Compound [1-5]+(B-296), Compound [1-5]+(B-297), Compound [1-5]+(B-298), Compound [1-5]+(B-299), Compound [1-5]+(B-300), Compound [1-5]+(B-301), Compound [1-5]+(B-302), Compound [1-5]+(B-303), Compound [1-5]+(B-304), Compound [1-5]+(B-305), Compound [1-5]+(B-306), Compound [1-5]+(B-307), Compound [1-5]+(B-308), Compound [1-5]+(B-309), Compound [1-5]+(B-310), Compound [1-5]+(B-311), Compound [1-5]+(B-312), Compound [1-5]+(B-313), Compound [1-5]+(B-314), Compound [1-5]+(B-315), Compound [1-5]+(B-316), Compound [1-5]+(B-317), Compound [1-5]+(B-318), Compound [1-5]+(B-319), Compound [1-5]+(B-320), Compound [1-5]+(B-321), Compound [1-5]+(B-322), Compound [1-5]+(B-323), Compound [1-5]+(B-324), Compound [1-5]+(B-325), Compound [1-5]+(B-326), Compound [1-5]+(B-327), Compound [1-5]+(B-328), Compound [1-5]+(B-329), Compound [1-5]+(B-330), Compound [1-5]+(B-331), Compound [1-5]+(B-332), Compound [1-5]+(B-333), Compound [1-5]+(B-334), Compound [1-5]+(B-335), Compound [1-5]+(B-336), Compound [1-5]+(B-337), Compound [1-5]+(B-338), Compound [1-5]+(B-339), Compound [1-5]+(B-340), Compound [1-5]+(B-341), Compound [1-5]+(B-342), Compound [1-5]+(B-343), Compound [1-5]+(B-344), Compound [1-5]+(B-345), Compound [1-5]+(B-346), Compound [1-5]+(B-347), Compound [1-5]+(B-348), Compound [1-5]+(B-349), Compound [1-5]+(B-350), Compound [1-5]+(B-351), Compound [1-5]+(B-352), Compound [1-5]+(B-353), Compound [1-5]+(B-354), Compound [1-5]+(B-355), Compound [1-5]+(B-356), Compound [1-5]+(B-357), Compound [1-5]+(B-358), Compound [1-5]+(B-359), Compound [1-5]+(B-360), Compound [1-5]+(B-361), Compound [1-5]+(B-362), Compound [1-5]+(B-363), Compound [1-5]+(B-364), Compound [1-5]+(B-365), Compound [1-5]+(B-366), Compound [1-5]+(B-367), Compound [1-5]+(B-368), Compound [1-5]+(B-369), Compound [1-5]+(B-370), Compound [1-5]+(B-371), Compound [1-5]+(B-372), Compound [1-5]+(B-373), Compound [1-5]+(B-374), Compound [1-5]+(B-375), Compound [1-5]+(B-376), Compound [1-5]+(B-377), Compound [1-5]+(B-378), Compound [1-5]+(B-379), Compound [1-5]+(B-380), Compound [1-5]+(B-381), Compound [1-5]+(B-382), Compound [1-5]+(B-383), Compound [1-5]+(B-384),

Compound [1-6]+(B-001), Compound [1-6]+(B-002), Compound [1-6]+(B-003), Compound [1-6]+(B-004), Compound [1-6]+(B-005), Compound [1-6]+(B-006), Compound [1-6]+(B-007), Compound [1-6]+(B-008), Compound [1-6]+(B-009), Compound [1-6]+(B-010), Compound [1-6]+(B-011), Compound [1-6]+(B-012), Compound [1-6]+(B-013), Compound [1-6]+(B-014), Compound [1-6]+(B-015), Compound [1-6]+(B-016), Compound [1-6]+(B-017), Compound [1-6]+(B-018), Compound [1-6]+(B-019), Compound [1-6]+(B-020), Compound [1-6]+(B-021), Compound [1-6]+(B-022), Compound [1-6]+(B-023), Compound [1-6]+(B-024), Compound [1-6]+(B-025), Compound [1-6]+(B-026), Compound [1-6]+(B-027), Compound [1-6]+(B-028), Compound [1-6]+(B-029), Compound [1-6]+(B-030), Compound [1-6]+(B-031), Compound [1-6]+(B-032), Compound [1-6]+(B-033), Compound [1-6]+(B-034), Compound [1-6]+(B-035), Compound [1-6]+(B-036), Compound [1-6]+(B-037), Compound [1-6]+(B-038), Compound [1-6]+(B-039), Compound [1-6]+(B-040), Compound [1-6]+(B-041), Compound [1-6]+(B-042), Compound

[1-6]+(B-043), Compound [1-6]+(B-044), Compound [1-6]+(B-045), Compound [1-6]+(B-046), Compound [1-6]+(B-047), Compound [1-6]+(B-048), Compound [1-6]+(B-049), Compound [1-6]+(B-050), Compound [1-6]+(B-051), Compound [1-6]+(B-052), Compound [1-6]+(B-053), Compound [1-6]+(B-054), Compound [1-6]+(B-055), Compound [1-6]+(B-056), Compound [1-6]+(B-057), Compound [1-6]+(B-058), Compound [1-6]+(B-059), Compound [1-6]+(B-060), Compound [1-6]+(B-061), Compound [1-6]+(B-062), Compound [1-6]+(B-063), Compound [1-6]+(B-064), Compound [1-6]+(B-065), Compound [1-6]+(B-066), Compound [1-6]+(B-067), Compound [1-6]+(B-068), Compound [1-6]+(B-069), Compound [1-6]+(B-070), Compound [1-6]+(B-071), Compound [1-6]+(B-072), Compound [1-6]+(B-073), Compound [1-6]+(B-074), Compound [1-6]+(B-075), Compound [1-6]+(B-076), Compound [1-6]+(B-077), Compound [1-6]+(B-078), Compound [1-6]+(B-079), Compound [1-6]+(B-080), Compound [1-6]+(B-081), Compound [1-6]+(B-082), Compound [1-6]+(B-083), Compound [1-6]+(B-084), Compound [1-6]+(B-085), Compound [1-6]+(B-086), Compound [1-6]+(B-087), Compound [1-6]+(B-088), Compound [1-6]+(B-089), Compound [1-6]+(B-090), Compound [1-6]+(B-091), Compound [1-6]+(B-092), Compound [1-6]+(B-093), Compound [1-6]+(B-094), Compound [1-6]+(B-095), Compound [1-6]+(B-096), Compound [1-6]+(B-097), Compound [1-6]+(B-098), Compound [1-6]+(B-099), Compound [1-6]+(B-100), Compound [1-6]+(B-101), Compound [1-6]+(B-102), Compound [1-6]+(B-103), Compound [1-6]+(B-104), Compound [1-6]+(B-105), Compound [1-6]+(B-106), Compound [1-6]+(B-107), Compound [1-6]+(B-108), Compound [1-6]+(B-109), Compound [1-6]+(B-110), Compound [1-6]+(B-111), Compound [1-6]+(B-112), Compound [1-6]+(B-113), Compound [1-6]+(B-114), Compound [1-6]+(B-115), Compound [1-6]+(B-116), Compound [1-6]+(B-117), Compound [1-6]+(B-118), Compound [1-6]+(B-119), Compound [1-6]+(B-120), Compound [1-6]+(B-121), Compound [1-6]+(B-122), Compound [1-6]+(B-123), Compound [1-6]+(B-124), Compound [1-6]+(B-125), Compound [1-6]+(B-126), Compound [1-6]+(B-127), Compound [1-6]+(B-128), Compound [1-6]+(B-129), Compound [1-6]+(B-130), Compound [1-6]+(B-131), Compound [1-6]+(B-132), Compound [1-6]+(B-133), Compound [1-6]+(B-134), Compound [1-6]+(B-135), Compound [1-6]+(B-136), Compound [1-6]+(B-137), Compound [1-6]+(B-138), Compound [1-6]+(B-139), Compound [1-6]+(B-140), Compound [1-6]+(B-141), Compound [1-6]+(B-142), Compound [1-6]+(B-143), Compound [1-6]+(B-144), Compound [1-6]+(B-145), Compound [1-6]+(B-146), Compound [1-6]+(B-147), Compound [1-6]+(B-148), Compound [1-6]+(B-149), Compound [1-6]+(B-150), Compound [1-6]+(B-151), Compound [1-6]+(B-152), Compound [1-6]+(B-153), Compound [1-6]+(B-154), Compound [1-6]+(B-155), Compound [1-6]+(B-156), Compound [1-6]+(B-157), Compound [1-6]+(B-158), Compound [1-6]+(B-159), Compound [1-6]+(B-160), Compound [1-6]+(B-161), Compound [1-6]+(B-162), Compound [1-6]+(B-163), Compound [1-6]+(B-164), Compound [1-6]+(B-165), Compound [1-6]+(B-166), Compound [1-6]+(B-167), Compound [1-6]+(B-168), Compound [1-6]+(B-169), Compound [1-6]+(B-170), Compound [1-6]+(B-171), Compound [1-6]+(B-172), Compound [1-6]+(B-173), Compound [1-6]+(B-174), Compound [1-6]+(B-175), Compound [1-6]+(B-176), Compound [1-6]+(B-177), Compound [1-6]+(B-178), Compound [1-6]+(B-179), Compound [1-6]+(B-180), Compound [1-6]+(B-181), Compound [1-6]+(B-182), Compound [1-6]+(B-183), Compound [1-6]+(B-184), Compound [1-6]+(B-185), Compound [1-6]+(B-186), Compound [1-6]+(B-187), Compound [1-6]+(B-188), Compound [1-6]+(B-189), Compound [1-6]+(B-190), Compound [1-6]+(B-191), Compound [1-6]+(B-192), Compound [1-6]+(B-193), Compound [1-6]+(B-194), Compound [1-6]+(B-195), Compound [1-6]+(B-196), Compound [1-6]+(B-197), Compound [1-6]+(B-198), Compound [1-6]+(B-199), Compound [1-6]+(B-200), Compound [1-6]+(B-201), Compound [1-6]+(B-202), Compound [1-6]+(B-203), Compound [1-6]+(B-204), Compound [1-6]+(B-205), Compound [1-6]+(B-206), Compound [1-6]+(B-207), Compound [1-6]+(B-208), Compound [1-6]+(B-209), Compound [1-6]+(B-210), Compound [1-6]+(B-211), Compound [1-6]+(B-212), Compound [1-6]+(B-213), Compound [1-6]+(B-214), Compound [1-6]+(B-215), Compound [1-6]+(B-216), Compound [1-6]+(B-217), Compound [1-6]+(B-218), Compound [1-6]+(B-219), Compound [1-6]+(B-220), Compound [1-6]+(B-221), Compound [1-6]+(B-222), Compound [1-6]+(B-223), Compound [1-6]+(B-224), Compound [1-6]+(B-225), Compound [1-6]+(B-226), Compound [1-6]+(B-227), Compound [1-6]+(B-228), Compound [1-6]+(B-229), Compound [1-6]+(B-230), Compound [1-6]+(B-231), Compound [1-6]+(B-232), Compound [1-6]+(B-233), Compound [1-6]+(B-234), Compound [1-6]+(B-235), Compound [1-6]+(B-236), Compound [1-6]+(B-237), Compound [1-6]+(B-238), Compound [1-6]+(B-239), Compound [1-6]+(B-240), Compound [1-6]+(B-241), Compound [1-6]+(B-242), Compound [1-6]+(B-243), Compound [1-6]+(B-244), Compound [1-6]+(B-245), Compound [1-6]+(B-246), Compound [1-6]+(B-247), Compound [1-6]+(B-248), Compound [1-6]+(B-249), Compound [1-6]+(B-250), Compound [1-6]+(B-251), Compound [1-6]+(B-252), Compound [1-6]+(B-253), Compound [1-6]+(B-254), Compound [1-6]+(B-255), Compound [1-6]+(B-256), Compound [1-6]+(B-257), Compound [1-6]+(B-258), Compound [1-6]+(B-259), Compound [1-6]+(B-260), Compound [1-6]+(B-261), Compound [1-6]+(B-262), Compound [1-6]+(B-263), Compound [1-6]+(B-264), Compound [1-6]+(B-265), Compound [1-6]+(B-266), Compound [1-6]+(B-267), Compound [1-6]+(B-268), Compound [1-6]+(B-269), Compound [1-6]+(B-270), Compound [1-6]+(B-271), Compound [1-6]+(B-272), Compound [1-6]+(B-273), Compound [1-6]+(B-274), Compound [1-6]+(B-275), Compound [1-6]+(B-276), Compound [1-6]+(B-277), Compound [1-6]+(B-278), Compound [1-6]+(B-279), Compound [1-6]+(B-280), Compound [1-6]+(B-281), Compound [1-6]+(B-282), Compound [1-6]+(B-283), Compound [1-6]+(B-284), Compound [1-6]+(B-285), Compound [1-6]+(B-286), Compound [1-6]+(B-287), Compound [1-6]+(B-288), Compound [1-6]+(B-289),

Compound [1-6]+(B-290), Compound [1-6]+(B-291), Compound [1-6]+(B-292), Compound [1-6]+(B-293), Compound [1-6]+(B-294), Compound [1-6]+(B-295), Compound [1-6]+(B-296), Compound [1-6]+(B-297), Compound [1-6]+(B-298), Compound [1-6]+(B-299), Compound [1-6]+(B-300), Compound [1-6]+(B-301), Compound [1-6]+(B-302), Compound [1-6]+(B-303), Compound [1-6]+(B-304), Compound [1-6]+(B-305), Compound [1-6]+(B-306), Compound [1-6]+(B-307), Compound [1-6]+(B-308), Compound [1-6]+(B-309), Compound [1-6]+(B-310), Compound [1-6]+(B-311), Compound [1-6]+(B-312), Compound [1-6]+(B-313), Compound [1-6]+(B-314), Compound [1-6]+(B-315), Compound [1-6]+(B-316), Compound [1-6]+(B-317), Compound [1-6]+(B-318), Compound [1-6]+(B-319), Compound [1-6]+(B-320), Compound [1-6]+(B-321), Compound [1-6]+(B-322), Compound [1-6]+(B-323), Compound [1-6]+(B-324), Compound [1-6]+(B-325), Compound [1-6]+(B-326), Compound [1-6]+(B-327), Compound [1-6]+(B-328), Compound [1-6]+(B-329), Compound [1-6]+(B-330), Compound [1-6]+(B-331), Compound [1-6]+(B-332), Compound [1-6]+(B-333), Compound [1-6]+(B-334), Compound [1-6]+(B-335), Compound [1-6]+(B-336), Compound [1-6]+(B-337), Compound [1-6]+(B-338), Compound [1-6] +(B-339), Compound [1-6] +(B-340), Compound [1-6]+(B-341), Compound [1-6]+(B-342), Compound [1-6]+(B-343), Compound [1-6]+(B-344), Compound [1-6]+(B-345), Compound [1-6]+(B-346), Compound [1-6]+(B-347), Compound [1-6]+(B-348), Compound [1-6]+(B-349), Compound [1-6]+(B-350), Compound [1-6]+(B-351), Compound [1-6]+(B-352), Compound [1-6]+(B-353), Compound [1-6]+(B-354), Compound [1-6]+(B-355), Compound [1-6]+(B-356), Compound [1-6]+(B-357), Compound [1-6]+(B-358), Compound [1-6]+(B-359), Compound [1-6]+(B-360), Compound [1-6]+(B-361), Compound [1-6]+(B-362), Compound [1-6]+(B-363), Compound [1-6]+(B-364), Compound [1-6]+(B-365), Compound [1-6]+(B-366), Compound [1-6]+(B-367), Compound [1-6]+(B-368), Compound [1-6]+(B-369), Compound [1-6]+(B-370), Compound [1-6]+(B-371), Compound [1-6]+(B-372), Compound [1-6]+(B-373), Compound [1-6]+(B-374), Compound [1-6]+(B-375), Compound [1-6]+(B-376), Compound [1-6]+(B-377), Compound [1-6]+(B-378) , Compound [1-6]+(B-379), Compound [1-6]+(B-380), Compound [1-6]+(B-381), Compound [1-6]+(B-382), Compound [1-6]+(B-383), Compound [1-6]+(B-384),

Compound [1-7]+(B-001), Compound [1-7]+(B-002), Compound [1-7]+(B-003), Compound [1-7]+(B-004), Compound [1-7]+(B-005), Compound [1-7]+(B-006), Compound [1-7]+(B-007), Compound [1-7]+(B-008), Compound [1-7]+(B-009), Compound [1-7]+(B-010), Compound [1-7]+(B-011), Compound [1-7]+(B-012), Compound [1-7]+(B-013), Compound [1-7]+(B-014), Compound [1-7]+(B-015), Compound [1-7]+(B-016), Compound [1-7]+(B-017), Compound [1-7]+(B-018), Compound [1-7]+(B-019), Compound [1-7]+(B-020), Compound [1-7]+(B-021), Compound [1-7]+(B-022), Compound [1-7]+(B-023), Compound [1-7]+(B-024), Compound [1-7]+(B-025), Compound [1-7]+(B-026), Compound [1-7]+(B-027), Compound [1-7]+(B-028), Compound [1-7]+(B-029), Compound [1-7]+(B-030), Compound [1-7]+(B-031), Compound [1-7]+(B-032), Compound [1-7]+(B-033), Compound [1-7]+(B-034), Compound [1-7]+(B-035), Compound [1-7]+(B-036), Compound [1-7]+(B-037), Compound [1-7]+(B-038), Compound [1-7]+(B-039), Compound [1-7]+(B-040), Compound [1-7]+(B-041), Compound [1-7]+(B-042), Compound [1-7]+(B-043), Compound [1-7]+(B-044), Compound [1-7]+(B-045), Compound [1-7]+(B-046), Compound [1-7]+(B-047), Compound [1-7]+(B-048), Compound [1-7]+(B-049), Compound [1-7]+(B-050), Compound [1-7]+(B-051), Compound [1-7]+(B-052), Compound [1-7]+(B-053), Compound [1-7]+(B-054), Compound [1-7]+(B-055), Compound [1-7]+(B-056), Compound [1-7]+(B-057), Compound [1-7]+(B-058), Compound [1-7]+(B-059), Compound [1-7]+(B-060), Compound [1-7]+(B-061), Compound [1-7]+(B-062), Compound [1-7]+(B-063), Compound [1-7]+(B-064), Compound [1-7]+(B-065), Compound [1-7]+(B-066), Compound [1-7]+(B-067), Compound [1-7]+(B-068), Compound [1-7]+(B-069), Compound [1-7]+(B-070), Compound [1-7]+(B-071), Compound [1-7]+(B-072), Compound [1-7]+(B-073), Compound [1-7]+(B-074), Compound [1-7]+(B-075), Compound [1-7]+(B-076), Compound [1-7]+(B-077), Compound [1-7]+(B-078), Compound [1-7]+(B-079), Compound [1-7]+(B-080), Compound [1-7]+(B-081), Compound [1-7]+(B-082), Compound [1-7]+(B-083), Compound [1-7]+(B-084), Compound [1-7]+(B-085), Compound [1-7]+(B-086), Compound [1-7]+(B-087), Compound [1-7]+(B-088), Compound [1-7]+(B-089), Compound [1-7]+(B-090), Compound [1-7]+(B-091), Compound [1-7]+(B-092), Compound [1-7]+(B-093), Compound [1-7]+(B-094), Compound [1-7]+(B-095), Compound [1-7]+(B-096), Compound [1-7]+(B-097), Compound [1-7]+(B-098), Compound [1-7]+(B-099), Compound [1-7]+(B-100), Compound [1-7]+(B-101), Compound [1-7]+(B-102), Compound [1-7]+(B-103), Compound [1-7]+(B-104), Compound [1-7]+(B-105), Compound [1-7]+(B-106), Compound [1-7]+(B-107), Compound [1-7]+(B-108), Compound [1-7]+(B-109), Compound [1-7]+(B-110), Compound [1-7]+(B-111), Compound [1-7]+(B-112), Compound [1-7]+(B-113), Compound [1-7]+(B-114), Compound [1-7]+(B-115), Compound [1-7]+(B-116), Compound [1-7]+(B-117), Compound [1-7]+(B-118), Compound [1-7]+(B-119), Compound [1-7]+(B-120), Compound [1-7]+(B-121), Compound [1-7]+(B-122), Compound [1-7]+(B-123), Compound [1-7]+(B-124), Compound [1-7]+(B-125), Compound [1-7]+(B-126), Compound [1-7]+(B-127), Compound [1-7]+(B-128), Compound [1-7]+(B-129), Compound [1-7]+(B-130), Compound [1-7]+(B-131), Compound [1-7]+(B-132), Compound [1-7]+(B-133), Compound [1-7]+(B-134), Compound [1-7]+(B-135), Compound [1-7]+(B-136), Compound [1-7]+(B-137), Compound [1-7]+(B-138), Compound [1-7]+(B-139), Compound [1-7]+(B-140), Compound [1-7]+(B-141), Compound [1-7]+(B-142), Compound [1-7]+(B-143), Compound [1-7]+(B-144), Compound [1-7]+(B-145), Compound [1-7]+(B-146), Compound [1-7]+(B-147), Compound [1-7]+(B-148), Compound [1-7]+(B-149), Compound [1-7]+(B-150), Compound [1-7]+(B-151), Compound [1-7]+(B-152), Compound [1-7]+(B-153), Compound [1-7]+(B-154), Compound [1-7]+(B-155), Compound [1-7]+(B-156), Compound [1-7]+(B-157), Compound [1-7]+(B-158), Compound [1-7]+(B-159), Compound [1-7]+(B-160), Compound [1-7]+(B-161), Compound [1-7]+(B-162), Compound [1-7]+(B-163), Compound [1-7]+(B-164), Compound [1-7]+(B-165), Compound [1-7]+(B-166), Compound [1-7]+(B-167), Compound [1-7]+(B-168), Compound [1-7]+(B-169), Compound [1-7]+(B-170), Compound [1-7]+(B-171), Compound [1-7]+(B-172), Compound [1-7]+(B-173), Compound [1-7]+(B-174), Compound [1-7]+(B-175), Compound [1-7]+(B-176), Compound [1-7]+(B-177), Compound [1-7] +(B-178), Compound [1-7]+(B-179), Compound [1-7]+(B-180), Compound [1-7]+(B-181), Compound [1-7]+(B-182), Compound [1-7]+(B-183), Compound [1-7]+(B-184), Compound [1-7]+(B-185), Compound [1-7]+(B-186), Compound [1-7]+(B-187), Compound [1-7]+(B-188), Compound [1-7]+(B-189), Compound [1-7]+(B-190), Compound [1-7]+(B-191), Compound [1-7]+(B-192), Compound [1-7]+(B-193), Compound [1-7]+(B-194), Compound [1-7]+(B-195), Compound [1-7]+(B-196), Compound [1-7]+(B-197), Compound [1-7]+(B-198), Compound [1-7]+(B-199), Compound [1-7]+(B-200), Compound [1-7]+(B-201), Compound [1-7]+(B-202), Compound [1-7]+(B-203), Compound [1-7]+(B-204), Compound [1-7]+(B-205), Compound [1-7]+(B-206), Compound [1-7]+(B-207), Compound [1-7]+(B-208), Compound [1-7]+(B-209), Compound [1-7]+(B-210), Compound [1-7]+(B-211), Compound [1-7]+(B-212), Compound [1-7]+(B-213), Compound [1-7]+(B-214), Compound [1-7]+(B-215), Compound [1-7]+(B-216), Compound [1-7]+(B-217), Compound [1-7]+(B-218), Compound [1-7]+(B-219), Compound [1-7]+(B-220), Compound [1-7]+(B-221), Compound [1-7]+(B-222), Compound [1-7]+(B-223), Compound [1-7]+(B-224), Compound [1-7]+(B-225), Compound [1-7]+(B-226), Compound [1-7]+(B-227), Compound [1-7]+(B-228), Compound [1-7]+(B-229), Compound [1-7]+(B-230), Compound [1-7]+(B-231), Compound [1-7]+(B-232), Compound [1-7]+(B-233), Compound [1-7]+(B-234), Compound [1-7]+(B-235), Compound [1-7]+(B-236), Compound [1-7]+(B-237), Compound [1-7]+(B-238), Compound [1-7]+(B-239), Compound [1-7]+(B-240), Compound [1-7]+(B-241), Compound [1-7]+(B-242), Compound [1-7]+(B-243), Compound [1-7]+(B-244), Compound [1-7]+(B-245), Compound [1-7]+(B-246), Compound [1-7]+(B-247), Compound [1-7]+(B-248), Compound [1-7]+(B-249), Compound [1-7]+(B-250), Compound [1-7]+(B-251), Compound [1-7]+(B-252), Compound [1-7]+(B-253), Compound [1-7]+(B-254), Compound [1-7]+(B-255), Compound [1-7]+(B-256), Compound [1-7]+(B-257), Compound [1-7]+(B-258), Compound [1-7]+(B-259), Compound [1-7]+(B-260), Compound [1-7]+(B-261), Compound [1-7]+(B-262), Compound [1-7]+(B-263), Compound [1-7]+(B-264), Compound [1-7]+(B-265), Compound [1-7]+(B-266), Compound [1-7]+(B-267), Compound [1-7]+(B-268), Compound [1-7]+(B-269), Compound [1-7]+(B-270), Compound [1-7]+(B-271), Compound [1-7]+(B-272), Compound [1-7]+(B-273), Compound [1-7]+(B-274), Compound [1-7]+(B-275), Compound [1-7]+(B-276), Compound [1-7]+(B-277), Compound [1-7]+(B-278), Compound [1-7]+(B-279), Compound [1-7]+(B-280), Compound [1-7]+(B-281), Compound [1-7]+(B-282), Compound [1-7]+(B-283), Compound [1-7]+(B-284), Compound [1-7]+(B-285), Compound [1-7]+(B-286), Compound [1-7]+(B-287), Compound [1-7]+(B-288), Compound [1-7]+(B-289), Compound [1-7]+(B-290), Compound [1-7]+(B-291), Compound [1-7]+(B-292), Compound [1-7]+(B-293), Compound [1-7]+(B-294), Compound [1-7]+(B-295), Compound [1-7]+(B-296), Compound [1-7]+(B-297), Compound [1-7]+(B-298), Compound [1-7]+(B-299), Compound [1-7]+(B-300), Compound [1-7]+(B-301), Compound [1-7]+(B-302), Compound [1-7]+(B-303), Compound [1-7]+(B-304), Compound [1-7]+(B-305), Compound [1-7]+(B-306), Compound [1-7]+(B-307), Compound [1-7]+(B-308), Compound [1-7]+(B-309), Compound [1-7]+(B-310), Compound [1-7]+(B-311), Compound [1-7]+(B-312), Compound [1-7]+(B-313), Compound [1-7]+(B-314), Compound [1-7]+(B-315), Compound [1-7]+(B-316), Compound [1-7]+(B-317), Compound [1-7]+(B-318), Compound [1-7]+(B-319), Compound [1-7]+(B-320), Compound [1-7]+(B-321), Compound [1-7]+(B-322), Compound [1-7]+(B-323), Compound [1-7]+(B-324), Compound [1-7]+(B-325), Compound [1-7]+(B-326), Compound [1-7]+(B-327), Compound [1-7]+(B-328), Compound [1-7]+(B-329), Compound [1-7]+(B-330), Compound [1-7]+(B-331), Compound [1-7]+(B-332), Compound [1-7]+(B-333), Compound [1-7]+(B-334), Compound [1-7]+(B-335), Compound [1-7]+(B-336), Compound [1-7]+(B-337), Compound [1-7]+(B-338), Compound [1-7]+(B-339), Compound [1-7]+(B-340), Compound [1-7]+(B-341), Compound [1-7]+(B-342), Compound [1-7]+(B-343), Compound [1-7]+(B-344), Compound [1-7]+(B-345), Compound [1-7]+(B-346), Compound [1-7]+(B-347), Compound [1-7] +(B-348), Compound [1-7]+(B-349), Compound [1-7]+(B-350), Compound [1-7]+(B-351), Compound [1-7]+(B-352), Compound [1-7]+(B-353), Compound [1-7]+(B-354), Compound [1-7]+(B-355), Compound [1-7]+(B-356), Compound [1-7]+(B-357), Compound [1-7]+(B-358), Compound [1-7]+(B-359), Compound [1-7]+(B-360), Compound [1-7]+(B-361), Compound [1-7]+(B-362), Compound [1-7]+(B-363), Compound [1-7]+(B-364), Compound [1-7]+(B-365), Compound [1-7]+(B-366), Compound [1-7]+(B-367), Compound [1-7]+(B-368), Compound [1-7]+(B-369), Compound [1-7]+(B-370), Compound [1-7]+(B-371), Compound [1-7]+(B-372), Compound [1-7]+(B-373), Compound [1-7]+(B-374), Compound [1-7]+(B-375), Compound [1-7]+(B-376), Compound [1-7]+(B-377), Compound [1-7]+(B-378), Compound [1-7]+(B-379), Compound [1-7]+(B-380), Compound [1-7]+(B-381), Compound [1-7]+(B-382), Compound [1-7]+(B-383), Compound [1-7]+(B-384),

Compound [1-8]+(B-001), Compound [1-8]+(B-002), Compound [1-8]+(B-003), Compound [1-8]+(B-004), Compound [1-8]+(B-005), Compound [1-8]+(B-006), Compound [1-8]+(B-007), Compound [1-8]+(B-008), Compound

[1-8]+(B-009), Compound [1-8]+(B-010), Compound [1-8]+(B-011), Compound [1-8]+(B-012), Compound [1-8]+(B-013), Compound [1-8]+(B-014), Compound [1-8]+(B-015), Compound [1-8]+(B-016), Compound [1-8]+(B-017), Compound [1-8]+(B-018), Compound [1-8]+(B-019), Compound [1-8]+(B-020), Compound [1-8]+(B-021), Compound [1-8]+(B-022), Compound [1-8]+(B-023), Compound [1-8]+(B-024), Compound [1-8]+(B-025), Compound [1-8]+(B-026), Compound [1-8]+(B-027), Compound [1-8]+(B-028), Compound [1-8]+(B-029), Compound [1-8]+(B-030), Compound [1-8]+(B-031), Compound [1-8]+(B-032), Compound [1-8]+(B-033), Compound [1-8]+(B-034), Compound [1-8]+(B-035), Compound [1-8]+(B-036), Compound [1-8]+(B-037), Compound [1-8]+(B-038), Compound [1-8]+(B-039), Compound [1-8]+(B-040), Compound [1-8]+(B-041), Compound [1-8]+(B-042), Compound [1-8]+(B-043), Compound [1-8]+(B-044), Compound [1-8]+(B-045), Compound [1-8]+(B-046), Compound [1-8]+(B-047), Compound [1-8]+(B-048), Compound [1-8]+(B-049), Compound [1-8]+(B-050), Compound [1-8]+(B-051), Compound [1-8]+(B-052), Compound [1-8]+(B-053), Compound [1-8]+(B-054), Compound [1-8]+(B-055), Compound [1-8]+(B-056), Compound [1-8]+(B-057), Compound [1-8]+(B-058), Compound [1-8]+(B-059), Compound [1-8]+(B-060), Compound [1-8]+(B-061), Compound [1-8]+(B-062), Compound [1-8]+(B-063), Compound [1-8]+(B-064), Compound [1-8]+(B-065), Compound [1-8]+(B-066), Compound [1-8]+(B-067), Compound [1-8]+(B-068), Compound [1-8]+(B-069), Compound [1-8]+(B-070), Compound [1-8]+(B-071), Compound [1-8]+(B-072), Compound [1-8]+(B-073), Compound [1-8]+(B-074), Compound [1-8]+(B-075), Compound [1-8]+(B-076), Compound [1-8]+(B-077), Compound [1-8]+(B-078), Compound [1-8]+(B-079), Compound [1-8]+(B-080), Compound [1-8]+(B-081), Compound [1-8]+(B-082), Compound [1-8]+(B-083), Compound [1-8]+(B-084), Compound [1-8]+(B-085), Compound [1-8]+(B-086), Compound [1-8]+(B-087), Compound [1-8]+(B-088), Compound [1-8]+(B-089), Compound [1-8]+(B-090), Compound [1-8]+(B-091), Compound [1-8]+(B-092), Compound [1-8]+(B-093), Compound [1-8]+(B-094), Compound [1-8]+(B-095), Compound [1-8]+(B-096), Compound [1-8]+(B-097), Compound [1-8]+(B-098), Compound [1-8]+(B-099), Compound [1-8]+(B-100), Compound [1-8]+(B-101), Compound [1-8]+(B-102), Compound [1-8]+(B-103), Compound [1-8]+(B-104), Compound [1-8]+(B-105), Compound [1-8]+(B-106), Compound [1-8]+(B-107), Compound [1-8]+(B-108), Compound [1-8]+(B-109), Compound [1-8]+(B-110), Compound [1-8]+(B-111), Compound [1-8]+(B-112), Compound [1-8]+(B-113), Compound [1-8]+(B-114), Compound [1-8]+(B-115), Compound [1-8]+(B-116), Compound [1-8]+(B-117), Compound [1-8]+(B-118), Compound [1-8]+(B-119), Compound [1-8]+(B-120), Compound [1-8]+(B-121), Compound [1-8]+(B-122), Compound [1-8]+(B-123), Compound [1-8] +(B-124), Compound [1-8]+(B-125), Compound [1-8]+(B-126), Compound [1-8]+(B-127), Compound [1-8]+(B-128), Compound [1-8]+(B-129), Compound [1-8]+(B-130), Compound [1-8]+(B-131), Compound [1-8]+(B-132), Compound [1-8]+(B-133), Compound [1-8]+(B-134), Compound [1-8]+(B-135), Compound [1-8]+(B-136), Compound [1-8]+(B-137), Compound [1-8]+(B-138), Compound [1-8]+(B-139), Compound [1-8]+(B-140), Compound [1-8]+(B-141), Compound [1-8]+(B-142), Compound [1-8]+(B-143), Compound [1-8]+(B-144), Compound [1-8]+(B-145), Compound [1-8]+(B-146), Compound [1-8]+(B-147), Compound [1-8]+(B-148), Compound [1-8]+(B-149), Compound [1-8]+(B-150), Compound [1-8]+(B-151), Compound [1-8]+(B-152), Compound [1-8]+(B-153), Compound [1-8]+(B-154), Compound [1-8]+(B-155), Compound [1-8]+(B-156), Compound [1-8]+(B-157), Compound [1-8]+(B-158), Compound [1-8]+(B-159), Compound [1-8]+(B-160), Compound [1-8]+(B-161), Compound [1-8]+(B-162), Compound [1-8]+(B-163), Compound [1-8]+(B-164), Compound [1-8]+(B-165), Compound [1-8]+(B-166), Compound [1-8]+(B-167), Compound [1-8]+(B-168), Compound [1-8]+(B-169), Compound [1-8]+(B-170), Compound [1-8]+(B-171), Compound [1-8]+(B-172), Compound [1-8]+(B-173), Compound [1-8]+(B-174), Compound [1-8]+(B-175), Compound [1-8]+(B-176), Compound [1-8]+(B-177), Compound [1-8]+(B-178), Compound [1-8]+(B-179), Compound [1-8]+(B-180), Compound [1-8]+(B-181), Compound [1-8]+(B-182), Compound [1-8]+(B-183), Compound [1-8]+(B-184), Compound [1-8]+(B-185), Compound [1-8]+(B-186), Compound [1-8]+(B-187), Compound [1-8]+(B-188), Compound [1-8]+(B-189), Compound [1-8]+(B-190), Compound [1-8]+(B-191), Compound [1-8]+(B-192), Compound [1-8]+(B-193), Compound [1-8]+(B-194), Compound [1-8]+(B-195), Compound [1-8]+(B-196), Compound [1-8]+(B-197), Compound [1-8]+(B-198), Compound [1-8]+(B-199), Compound [1-8]+(B-200), Compound [1-8]+(B-201), Compound [1-8]+(B-202), Compound [1-8]+(B-203), Compound [1-8]+(B-204), Compound [1-8]+(B-205), Compound [1-8]+(B-206), Compound [1-8]+(B-207), Compound [1-8]+(B-208), Compound [1-8]+(B-209), Compound [1-8]+(B-210), Compound [1-8]+(B-211), Compound [1-8]+(B-212), Compound [1-8]+(B-213), Compound [1-8]+(B-214), Compound [1-8]+(B-215), Compound [1-8]+(B-216), Compound [1-8]+(B-217), Compound [1-8]+(B-218), Compound [1-8]+(B-219), Compound [1-8]+(B-220), Compound [1-8]+(B-221), Compound [1-8]+(B-222), Compound [1-8]+(B-223), Compound [1-8]+(B-224), Compound [1-8]+(B-225), Compound [1-8]+(B-226), Compound [1-8]+(B-227), Compound [1-8]+(B-228), Compound [1-8]+(B-229), Compound [1-8]+(B-230), Compound [1-8]+(B-231), Compound [1-8]+(B-232), Compound [1-8]+(B-233), Compound [1-8]+(B-234), Compound [1-8]+(B-235), Compound [1-8]+(B-236), Compound [1-8]+(B-237), Compound [1-8]+(B-238), Compound [1-8]+(B-239), Compound [1-8]+(B-240), Compound [1-8]+(B-241), Compound [1-8]+(B-242), Compound [1-8]+(B-243), Compound [1-8]+(B-244), Compound [1-8]+(B-245), Compound [1-8]+(B-246), Compound [1-8]+(B-247), Compound [1-8]+(B-248), Compound [1-8]+(B-249), Compound [1-8]+(B-250), Compound [1-8]+(B-251), Compound [1-8]+(B-252), Compound [1-8]+(B-253), Compound [1-8]+(B-254), Compound [1-8]+(B-255),

Compound [1-8]+(B-256), Compound [1-8]+(B-257), Compound [1-8]+(B-258), Compound [1-8]+(B-259), Compound [1-8]+(B-260), Compound [1-8]+(B-261), Compound [1-8]+(B-262), Compound [1-8]+(B-263), Compound [1-8]+(B-264), Compound [1-8]+(B-265), Compound [1-8]+(B-266), Compound [1-8]+(B-267), Compound [1-8]+(B-268), Compound [1-8]+(B-269), Compound [1-8]+(B-270), Compound [1-8]+(B-271), Compound [1-8]+(B-272), Compound [1-8]+(B-273), Compound [1-8]+(B-274), Compound [1-8]+(B-275), Compound [1-8]+(B-276), Compound [1-8]+(B-277), Compound [1-8]+(B-278), Compound [1-8]+(B-279), Compound [1-8]+(B-280), Compound [1-8]+(B-281), Compound [1-8]+(B-282), Compound [1-8]+(B-283), Compound [1-8]+(B-284), Compound [1-8]+(B-285), Compound [1-8]+(B-286), Compound [1-8]+(B-287), Compound [1-8]+(B-288), Compound [1-8]+(B-289), Compound [1-8]+(B-290), Compound [1-8]+(B-291), Compound [1-8]+(B-292), Compound [1-8]+(B-293), Compound [1-8]+(B-294), Compound [1-8]+(B-295), Compound [1-8]+(B-296), Compound [1-8]+(B-297), Compound [1-8]+(B-298), Compound [1-8]+(B-299), Compound [1-8]+(B-300), Compound [1-8]+(B-301), Compound [1-8]+(B-302), Compound [1-8]+(B-303), Compound [1-8]+(B-304), Compound [1-8]+(B-305), Compound [1-8]+(B-306), Compound [1-8]+(B-307), Compound [1-8]+(B-308), Compound [1-8]+(B-309), Compound [1-8]+(B-310), Compound [1-8]+(B-311), Compound [1-8]+(B-312), Compound [1-8]+(B-313), Compound [1-8]+(B-314), Compound [1-8]+(B-315), Compound [1-8]+(B-316), Compound [1-8]+(B-317), Compound [1-8]+(B-318), Compound [1-8]+(B-319), Compound [1-8]+(B-320), Compound [1-8]+(B-321), Compound [1-8]+(B-322), Compound [1-8]+(B-323), Compound [1-8]+(B-324), Compound [1-8]+(B-325), Compound [1-8]+(B-326), Compound [1-8]+(B-327), Compound [1-8]+(B-328), Compound [1-8]+(B-329), Compound [1-8]+(B-330), Compound [1-8]+(B-331), Compound [1-8]+(B-332), Compound [1-8]+(B-333), Compound [1-8]+(B-334), Compound [1-8]+(B-335), Compound [1-8]+(B-336), Compound [1-8]+(B-337), Compound [1-8]+(B-338), Compound [1-8]+(B-339), Compound [1-8]+(B-340), Compound [1-8]+(B-341), Compound [1-8]+(B-342), Compound [1-8]+(B-343), Compound [1-8]+(B-344), Compound [1-8]+(B-345), Compound [1-8]+(B-346), Compound [1-8]+(B-347), Compound [1-8]+(B-348), Compound [1-8]+(B-349), Compound [1-8]+(B-350), Compound [1-8]+(B-351), Compound [1-8]+(B-352), Compound [1-8]+(B-353), Compound [1-8]+(B-354), Compound [1-8]+(B-355), Compound [1-8]+(B-356), Compound [1-8]+(B-357), Compound [1-8]+(B-358), Compound [1-8]+(B-359), Compound [1-8]+(B-360), Compound [1-8]+(B-361), Compound [1-8]+(B-362), Compound [1-8]+(B-363), Compound [1-8]+(B-364), Compound [1-8]+(B-365), Compound [1-8]+(B-366), Compound [1-8]+(B-367), Compound [1-8]+(B-368), Compound [1-8]+(B-369), Compound [1-8]+(B-370), Compound [1-8]+(B-371), Compound [1-8]+(B-372), Compound [1-8]+(B-373), Compound [1-8]+(B-374), Compound [1-8]+(B-375), Compound [1-8]+(B-376), Compound [1-8]+(B-377), Compound [1-8]+(B-378), Compound [1-8]+(B-379), Compound [1-8]+(B-380), Compound [1-8]+(B-381), Compound [1-8]+(B-382), Compound [1-8]+(B-383), Compound [1-8]+(B-384), etc., but are not limited thereto.

Combination of the compound of the present invention and active ingredient group C

Examples of the combination with a compound having herbicidal activity (active ingredient group C) include Compound [1-1]+(C-001), Compound [1-1]+(C-002), Compound [1-1]+(C-003), Compound [1-1]+(C-004), Compound [1-1]+(C-005), Compound [1-1]+(C-006), Compound [1-1]+(C-007), Compound [1-1]+(C-008), Compound [1-1]+(C-009), Compound [1-1]+(C-010), Compound [1-1]+(C-011), Compound [1-1]+(C-012), Compound [1-1]+(C-013), Compound [1-1]+(C-014), Compound [1-1]+(C-015), Compound [1-1]+(C-016), Compound [1-1]+(C-017), Compound [1-1]+(C-018), Compound [1-1]+(C-019), Compound [1-1]+(C-020), Compound [1-1]+(C-021), Compound [1-1]+(C-022), Compound [1-1]+(C-023), Compound [1-1]+(C-024), Compound [1-1]+(C-025), Compound [1-1]+(C-026), Compound [1-1]+(C-027), Compound [1-1]+(C-028), Compound [1-1]+(C-029), Compound [1-1]+(C-030), Compound [1-1]+(C-031), Compound [1-1]+(C-032), Compound [1-1]+(C-033), Compound [1-1]+(C-034), Compound [1-1]+(C-035), Compound [1-1]+(C-036), Compound [1-1]+(C-037), Compound [1-1]+(C-038), Compound [1-1]+(C-039), Compound [1-1]+(C-040), Compound [1-1]+(C-041), Compound [1-1]+(C-042), Compound [1-1]+(C-043), Compound [1-1]+(C-044), Compound [1-1]+(C-045), Compound [1-1]+(C-046), Compound [1-1]+(C-047), Compound [1-1]+(C-048), Compound [1-1]+(C-049), Compound [1-1]+(C-050), Compound [1-1]+(C-051), Compound [1-1]+(C-052), Compound [1-1]+(C-053), Compound [1-1]+(C-054), Compound [1-1]+(C-055), Compound [1-1]+(C-056), Compound [1-1]+(C-057), Compound [1-1]+(C-058), Compound [1-1]+(C-059), Compound [1-1]+(C-060), Compound [1-1]+(C-061), Compound [1-1]+(C-062), Compound [1-1]+(C-063), Compound [1-1]+(C-064), Compound [1-1]+(C-065), Compound [1-1]+(C-066), Compound [1-1]+(C-067), Compound [1-1]+(C-068), Compound [1-1]+(C-069), Compound [1-1]+(C-070), Compound [1-1]+(C-071), Compound [1-1]+(C-072), Compound [1-1]+(C-073), Compound [1-1]+(C-074), Compound [1-1]+(C-075), Compound [1-1]+(C-076), Compound [1-1]+(C-077), Compound [1-1]+(C-078), Compound [1-1]+(C-079), Compound [1-1]+(C-080), Compound [1-1]+(C-081), Compound [1-1]+(C-082), Compound [1-1]+(C-083), Compound [1-1]+(C-084), Compound [1-1]+(C-085), Compound [1-1]+(C-086), Compound [1-1]+(C-087), Compound [1-1]+(C-088), Compound [1-1]+(C-089), Compound [1-1]+(C-090), Compound [1-1]+(C-091), Compound [1-1]+(C-092), Compound [1-1]+(C-093), Compound [1-1]+(C-094), Compound [1-1]+(C-095), Compound [1-1]+(C-096), Compound [1-1]+(C-097), Compound [1-1]+(C-098), Compound [1-1]+(C-099), Compound [1-1]+(C-100), Compound [1-1]+(C-101), Compound [1-1]+(C-102), Compound [1-1]+(C-103), Compound

[1-1]+(C-104), Compound [1-1]+(C-105), Compound [1-1]+(C-106), Compound [1-1]+(C-107), Compound [1-1]+(C-108), Compound [1-1]+(C-109), Compound [1-1]+(C-110), Compound [1-1]+(C-111), Compound [1-1]+(C-112), Compound [1-1]+(C-113), Compound [1-1]+(C-114), Compound [1-1]+(C-115), Compound [1-1]+(C-116), Compound [1-1]+(C-117), Compound [1-1]+(C-118), Compound [1-1]+(C-119), Compound [1-1]+(C-120), Compound [1-1]+(C-121), Compound [1-1]+(C-122), Compound [1-1]+(C-123), Compound [1-1]+(C-124), Compound [1-1]+(C-125), Compound [1-1]+(C-126), Compound [1-1]+(C-127), Compound [1-1]+(C-128), Compound [1-1]+(C-129), Compound [1-1]+(C-130), Compound [1-1]+(C-131), Compound [1-1]+(C-132), Compound [1-1]+(C-133), Compound [1-1]+(C-134), Compound [1-1]+(C-135), Compound [1-1]+(C-136), Compound [1-1]+(C-137), Compound [1-1]+(C-138), Compound [1-1]+(C-139), Compound [1-1]+(C-140), Compound [1-1]+(C-141), Compound [1-1]+(C-142), Compound [1-1]+(C-143), Compound [1-1]+(C-144), Compound [1-1]+(C-145), Compound [1-1]+(C-146), Compound [1-1]+(C-147), Compound [1-1]+(C-148), Compound [1-1]+(C-149), Compound [1-1]+(C-150), Compound [1-1]+(C-151), Compound [1-1]+(C-152), Compound [1-1]+(C-153), Compound [1-1]+(C-154), Compound [1-1]+(C-155), Compound [1-1]+(C-156), Compound [1-1]+(C-157), Compound [1-1]+(C-158), Compound [1-1]+(C-159), Compound [1-1]+(C-160), Compound [1-1]+(C-161), Compound [1-1]+(C-162), Compound [1-1]+(C-163), Compound [1-1]+(C-164), Compound [1-1]+(C-165), Compound [1-1]+(C-166), Compound [1-1]+(C-167), Compound [1-1]+(C-168), Compound [1-1]+(C-169), Compound [1-1]+(C-170), Compound [1-1]+(C-171), Compound [1-1]+(C-172), Compound [1-1]+(C-173), Compound [1-1]+(C-174), Compound [1-1]+(C-175), Compound [1-1]+(C-176), Compound [1-1]+(C-177), Compound [1-1]+(C-178), Compound [1-1]+(C-179), Compound [1-1]+(C-180), Compound [1-1]+(C-181), Compound [1-1]+(C-182), Compound [1-1]+(C-183), Compound [1-1]+(C-184), Compound [1-1]+(C-185), Compound [1-1]+(C-186), Compound [1-1]+(C-187), Compound [1-1]+(C-188), Compound [1-1]+(C-189), Compound [1-1]+(C-190), Compound [1-1]+(C-191), Compound [1-1]+(C-192), Compound [1-1]+(C-193), Compound [1-1]+(C-194), Compound [1-1]+(C-195), Compound [1-1]+(C-196), Compound [1-1]+(C-197), Compound [1-1]+(C-198), Compound [1-1]+(C-199), Compound [1-1]+(C-200), Compound [1-1]+(C-201), Compound [1-1]+(C-202), Compound [1-1]+(C-203), Compound [1-1]+(C-204), Compound [1-1]+(C-205), Compound [1-1]+(C-206), Compound [1-1]+(C-207), Compound [1-1]+(C-208), Compound [1-1]+(C-209), Compound [1-1]+(C-210), Compound [1-1]+(C-211), Compound [1-1]+(C-212), Compound [1-1]+(C-213), Compound [1-1]+(C-214), Compound [1-1]+(C-215), Compound [1-1]+(C-216), Compound [1-1]+(C-217), Compound [1-1]+(C-218), Compound [1-1]+(C-219), Compound [1-1]+(C-220), Compound [1-1]+(C-221), Compound [1-1]+(C-222), Compound [1-1]+(C-223), Compound [1-1]+(C-224), Compound [1-1]+(C-225), Compound [1-1]+(C-226), Compound [1-1]+(C-227), Compound [1-1]+(C-228), Compound [1-1]+(C-229), Compound [1-1]+(C-230), Compound [1-1]+(C-231), Compound [1-1]+(C-232), Compound [1-1]+(C-233), Compound [1-1]+(C-234), Compound [1-1]+(C-235), Compound [1-1]+(C-236), Compound [1-1]+(C-237), Compound [1-1]+(C-238), Compound [1-1]+(C-239), Compound [1-1]+(C-240), Compound [1-1]+(C-241), Compound [1-1]+(C-242), Compound [1-1]+(C-243), Compound [1-1]+(C-244), Compound [1-1]+(C-245), Compound [1-1]+(C-246), Compound [1-1]+(C-247), Compound [1-1]+(C-248), Compound [1-1]+(C-249), Compound [1-1]+(C-250), Compound [1-1]+(C-251), Compound [1-1]+(C-252), Compound [1-1]+(C-253), Compound [1-1]+(C-254), Compound [1-1]+(C-255), Compound [1-1]+(C-256), Compound [1-1]+(C-257), Compound [1-1]+(C-258), Compound [1-1]+(C-259), Compound [1-1]+(C-260), Compound [1-1]+(C-261), Compound [1-1]+(C-262), Compound [1-1]+(C-263), Compound [1-1]+(C-264), Compound [1-1]+(C-265), Compound [1-1]+(C-266), Compound [1-1]+(C-267), Compound [1-1]+(C-268), Compound [1-1]+(C-269), Compound [1-1]+(C-270), Compound [1-1]+(C-271), Compound [1-1]+(C-272), Compound [1-1]+(C-273), Compound [1-1]+(C-274), Compound [1-1]+(C-275), Compound [1-1]+(C-276), Compound [1-1]+(C-277), Compound [1-1]+(C-278), Compound [1-1]+(C-279), Compound [1-1]+(C-280), Compound [1-1]+(C-281), Compound [1-1]+(C-282), Compound [1-1]+(C-283), Compound [1-1]+(C-284), Compound [1-1]+(C-285), Compound [1-1]+(C-286), Compound [1-1]+(C-287), Compound [1-1]+(C-288), Compound [1-1]+(C-289), Compound [1-1]+(C-290), Compound [1-1]+(C-291), Compound [1-1]+(C-292), Compound [1-1]+(C-293), Compound [1-1]+(C-294), Compound [1-1]+(C-295), Compound [1-1]+(C-296), Compound [1-1]+(C-297), Compound [1-1]+(C-298), Compound [1-1]+(C-299), Compound [1-1]+(C-300), Compound [1-1]+(C-301), Compound [1-1]+(C-302), Compound [1-1]+(C-303), Compound [1-1]+(C-304), Compound [1-1]+(C-305), Compound [1-1]+(C-306), Compound [1-1]+(C-307), Compound [1-1]+(C-308), Compound [1-1]+(C-309), Compound [1-1]+(C-310), Compound [1-1]+(C-311), Compound [1-1]+(C-312), Compound [1-1]+(C-313), Compound [1-1]+(C-314), Compound [1-1]+(C-315), Compound [1-1]+(C-316), Compound [1-1]+(C-317), Compound [1-1]+(C-318), Compound [1-1]+(C-319), Compound [1-1]+(C-320), Compound [1-1]+(C-321), Compound [1-1]+(C-322), Compound [1-1]+(C-323), Compound [1-1]+(C-324), Compound [1-1]+(C-325), Compound [1-1]+(C-326), Compound [1-1]+(C-327), Compound [1-1]+(C-328), Compound [1-1]+(C-329), Compound [1-1]+(C-330), Compound [1-1]+(C-331), Compound [1-1]+(C-332), Compound [1-1]+(C-333), Compound [1-1]+(C-334), Compound [1-1]+(C-335), Compound [1-1]+(C-336), Compound [1-1]+(C-337), Compound [1-1]+(C-338), Compound [1-1]+(C-339), Compound [1-1]+(C-340), Compound [1-1]+(C-341), Compound [1-1]+(C-342), Compound [1-1]+(C-343), Compound [1-1]+(C-344), Compound [1-1]+(C-345), Compound [1-1]+(C-346), Compound [1-1]+(C-347), Compound [1-1]+(C-348), Compound [1-1]+(C-349), Compound [1-1]+(C-350), Compound [1-1]+(C-351), Compound [1-1]+(C-352), Compound [1-1]+(C-353), Compound [1-1]+(C-354), Compound [1-1]+(C-355), Compound [1-1]+(C-356), Compound [1-1]+(C-357), Compound [1-1]+(C-358), Compound [1-1]+(C-359), Compound [1-1]+(C-360), Compound [1-1]+(C-361), Compound [1-1]+(C-362), Compound [1-1]+(C-363), Compound [1-1]+(C-364), Compound

[1-1]+(C-365), Compound [1-1]+(C-366), Compound [1-1]+(C-367), Compound [1-1]+(C-368), Compound [1-1]+(C-369), Compound [1-1]+(C-370), Compound [1-1]+(C-371), Compound [1-1]+(C-372), Compound [1-1]+(C-373), Compound [1-1]+(C-374), Compound [1-1]+(C-375), Compound [1-1]+(C-376), Compound [1-1]+(C-377), Compound [1-1]+(C-378), Compound [1-1]+(C-379), Compound [1-1]+(C-380), Compound [1-1]+(C-381), Compound [1-1]+(C-382), Compound [1-1]+(C-383), Compound [1-1]+(C-384), Compound [1-1]+(C-385), Compound [1-1]+(C-386), Compound [1-1]+(C-387), Compound [1-1]+(C-388), Compound [1-1]+(C-389), Compound [1-1]+(C-390), Compound [1-1]+(C-391), Compound [1-1]+(C-392), Compound [1-1]+(C-393), Compound [1-1]+(C-394), Compound [1-1]+(C-395), Compound [1-1]+(C-396), Compound [1-1]+(C-397), Compound [1-1]+(C-398), Compound [1-1]+(C-399), Compound [1-1]+(C-400), Compound [1-1]+(C-401), Compound [1-1]+(C-402), Compound [1-1]+(C-403), Compound [1-1]+(C-404), Compound [1-1]+(C-405), Compound [1-1]+(C-406), Compound [1-1]+(C-407), Compound [1-1]+(C-408), Compound [1-1]+(C-409), Compound [1-1]+(C-410), Compound [1-1]+(C-411), Compound [1-1]+(C-412), Compound [1-1]+(C-413), Compound [1-1]+(C-414), Compound [1-1]+(C-415), Compound [1-1]+(C-416), Compound [1-1]+(C-417), Compound [1-1]+(C-418), Compound [1-1]+(C-419), Compound [1-1]+(C-420), Compound [1-1]+(C-421), Compound [1-1]+(C-422), Compound [1-1]+(C-423), Compound [1-1]+(C-424), Compound [1-1]+(C-425), Compound [1-1]+(C-426), Compound [1-1]+(C-427), Compound [1-1]+(C-428), Compound [1-1]+(C-429), Compound [1-1]+(C-430), Compound [1-1]+(C-431), Compound [1-1]+(C-432), Compound [1-1]+(C-433), Compound [1-1]+(C-434), Compound [1-1]+(C-435), Compound [1-1]+(C-436), Compound [1-1]+(C-437), Compound [1-1]+(C-438), Compound [1-1]+(C-439), Compound [1-1]+(C-440), Compound [1-1]+(C-441), Compound [1-1]+(C-442), Compound [1-1]+(C-443), Compound [1-1]+(C-444), Compound [1-1]+(C-445), Compound [1-1]+(C-446), Compound [1-1]+(C-447), Compound [1-1]+(C-448), Compound [1-1]+(C-449), Compound [1-1]+(C-450), Compound [1-1]+(C-451), Compound [1-1]+(C-452), Compound [1-1]+(C-453), Compound [1-1]+(C-454), Compound [1-1]+(C-455), Compound [1-1]+(C-456), Compound [1-1]+(C-457), Compound [1-1]+(C-458), Compound [1-1]+(C-459), Compound [1-1]+(C-460), Compound [1-1]+(C-461), Compound [1-1]+(C-462), Compound [1-1]+(C-463), Compound [1-1]+(C-464), Compound [1-1]+(C-465), Compound [1-1]+(C-466), Compound [1-1]+(C-467), Compound [1-1]+(C-468), Compound [1-1]+(C-469), Compound [1-1]+(C-470), Compound [1-1]+(C-471), Compound [1-1]+(C-472), Compound [1-1]+(C-473), Compound [1-1]+(C-474), Compound [1-1]+(C-475), Compound [1-1]+(C-476), Compound [1-1]+(C-477), Compound [1-1]+(C-478), Compound [1-1]+(C-479), Compound [1-1]+(C-480), Compound [1-1]+(C-481), Compound [1-1]+(C-482), Compound [1-1]+(C-483), Compound [1-1]+(C-484), Compound [1-1]+(C-485), Compound [1-1]+(C-486), Compound [1-1]+(C-487), Compound [1-1]+(C-488), Compound [1-1]+(C-489), Compound [1-1]+(C-490), Compound [1-1]+(C-491), Compound [1-1]+(C-492), Compound [1-1]+(C-493), Compound [1-1]+(C-494), Compound [1-1]+(C-495), Compound [1-1]+(C-496), Compound [1-1]+(C-497), Compound [1-1]+(C-498), Compound [1-1]+(C-499), Compound [1-1]+(C-500), Compound [1-1]+(C-501), Compound [1-1]+(C-502), Compound [1-1]+(C-503), Compound [1-1]+(C-504), Compound [1-1]+(C-505), Compound [1-1]+(C-506), Compound [1-1]+(C-507), Compound [1-1]+(C-508), Compound [1-1]+(C-509), Compound [1-1]+(C-510), Compound [1-1]+(C-511), Compound [1-1]+(C-512), Compound [1-1]+(C-513), Compound [1-1]+(C-514), Compound [1-1]+(C-515), Compound [1-1]+(C-516), Compound [1-1]+(C-517), Compound [1-1]+(C-518), Compound [1-1]+(C-519), Compound [1-1]+(C-520), Compound [1-1]+(C-521), Compound [1-1]+(C-522), Compound [1-1]+(C-523), Compound [1-1]+(C-524), Compound [1-1]+(C-525), Compound [1-1]+(C-526), Compound [1-1]+(C-527), Compound [1-1]+(C-528), Compound [1-1]+(C-529), Compound [1-1]+(C-530), Compound [1-1]+(C-531), Compound [1-1]+(C-532), Compound [1-1]+(C-533), Compound [1-1]+(C-534), Compound [1-1]+(C-535), Compound [1-1]+(C-536), Compound [1-1]+(C-537),

Compound [1-2]+(C-001), Compound [1-2]+(C-002), Compound [1-2]+(C-003), Compound [1-2]+(C-004), Compound [1-2]+(C-005), Compound [1-2]+(C-006), Compound [1-2]+(C-007), Compound [1-2]+(C-008), Compound [1-2]+(C-009), Compound [1-2]+(C-010), Compound [1-2]+(C-011), Compound [1-2]+(C-012), Compound [1-2]+(C-013), Compound [1-2]+(C-014), Compound [1-2]+(C-015), Compound [1-2]+(C-016), Compound [1-2]+(C-017), Compound [1-2]+(C-018), Compound [1-2]+(C-019), Compound [1-2]+(C-020), Compound [1-2]+(C-021), Compound [1-2]+(C-022), Compound [1-2]+(C-023), Compound [1-2]+(C-024), Compound [1-2]+(C-025), Compound [1-2]+(C-026), Compound [1-2]+(C-027), Compound [1-2]+(C-028), Compound [1-2]+(C-029), Compound [1-2]+(C-030), Compound [1-2]+(C-031), Compound [1-2]+(C-032), Compound [1-2]+(C-033), Compound [1-2]+(C-034), Compound [1-2]+(C-035), Compound [1-2]+(C-036), Compound [1-2]+(C-037), Compound [1-2]+(C-038), Compound [1-2]+(C-039), Compound [1-2]+(C-040), Compound [1-2]+(C-041), Compound [1-2]+(C-042), Compound [1-2]+(C-043), Compound [1-2]+(C-044), Compound [1-2]+(C-045), Compound [1-2]+(C-046), Compound [1-2]+(C-047), Compound [1-2]+(C-048), Compound [1-2]+(C-049), Compound [1-2]+ (C-050), Compound [1-2]+(C-051), Compound [1-2]+(C-052), Compound [1-2]+(C-053), Compound [1-2]+(C-054), Compound [1-2]+(C-055), Compound [1-2]+(C-056), Compound [1-2]+(C-057), Compound [1-2]+(C-058), Compound [1-2]+(C-059), Compound [1-2]+(C-060), Compound [1-2]+(C-061), Compound [1-2]+(C-062), Compound [1-2]+(C-063), Compound [1-2]+(C-064), Compound [1-2]+(C-065), Compound [1-2]+(C-066), Compound [1-2]+(C-067), Compound [1-2]+(C-068), Compound [1-2]+(C-069), Compound [1-2]+(C-070), Compound [1-2]+(C-071), Compound [1-2]+(C-072), Compound [1-2]+(C-073), Compound [1-2]+(C-074), Compound [1-2]+(C-075), Compound [1-2]+(C-076), Compound

[1-2]+(C-077), Compound [1-2]+(C-078), Compound [1-2]+(C-079), Compound [1-2]+(C-080), Compound [1-2]+(C-081), Compound [1-2]+(C-082), Compound [1-2]+(C-083), Compound [1-2]+(C-084), Compound [1-2]+(C-085), Compound [1-2]+(C-086), Compound [1-2]+(C-087), Compound [1-2]+(C-088), Compound [1-2]+(C-089), Compound [1-2]+(C-090), Compound [1-2]+(C-091), Compound [1-2]+(C-092), Compound [1-2]+(C-093), Compound [1-2]+(C-094), Compound [1-2]+(C-095), Compound [1-2]+(C-096), Compound [1-2]+(C-097), Compound [1-2]+(C-098), Compound [1-2]+(C-099), Compound [1-2]+(C-100), Compound [1-2]+(C-101), Compound [1-2]+(C-102), Compound [1-2]+(C-103), Compound [1-2]+(C-104), Compound [1-2]+(C-105), Compound [1-2]+(C-106), Compound [1-2]+(C-107), Compound [1-2]+(C-108), Compound [1-2]+(C-109), Compound [1-2]+(C-110), Compound [1-2]+(C-111), Compound [1-2]+(C-112), Compound [1-2]+(C-113), Compound [1-2]+(C-114), Compound [1-2]+(C-115), Compound [1-2]+(C-116), Compound [1-2]+(C-117), Compound [1-2]+(C-118), Compound [1-2]+(C-119), Compound [1-2]+(C-120), Compound [1-2]+(C-121), Compound [1-2]+(C-122), Compound [1-2]+(C-123), Compound [1-2]+(C-124), Compound [1-2]+(C-125), Compound [1-2]+(C-126), Compound [1-2]+(C-127), Compound [1-2]+(C-128), Compound [1-2]+(C-129), Compound [1-2]+(C-130), Compound [1-2]+(C-131), Compound [1-2]+(C-132), Compound [1-2]+(C-133), Compound [1-2]+(C-134), Compound [1-2]+(C-135), Compound [1-2]+(C-136), Compound [1-2]+(C-137), Compound [1-2]+(C-138), Compound [1-2]+(C-139), Compound [1-2]+(C-140), Compound [1-2]+(C-141), Compound [1-2]+(C-142), Compound [1-2]+(C-143), Compound [1-2]+(C-144), Compound [1-2]+(C-145), Compound [1-2]+(C-146), Compound [1-2]+(C-147), Compound [1-2]+(C-148), Compound [1-2]+(C-149), Compound [1-2]+(C-150), Compound [1-2]+(C-151), Compound [1-2]+(C-152), Compound [1-2]+(C-153), Compound [1-2]+(C-154), Compound [1-2]+(C-155), Compound [1-2]+(C-156), Compound [1-2]+(C-157), Compound [1-2]+(C-158), Compound [1-2]+(C-159), Compound [1-2]+(C-160), Compound [1-2]+(C-161), Compound [1-2]+(C-162), Compound [1-2]+(C-163), Compound [1-2]+(C-164), Compound [1-2]+(C-165), Compound [1-2]+(C-166), Compound [1-2]+(C-167), Compound [1-2]+(C-168), Compound [1-2]+(C-169), Compound [1-2]+(C-170), Compound [1-2]+(C-171), Compound [1-2]+(C-172), Compound [1-2]+(C-173), Compound [1-2]+(C-174), Compound [1-2]+(C-175), Compound [1-2]+(C-176), Compound [1-2]+(C-177), Compound [1-2]+(C-178), Compound [1-2]+(C-179), Compound [1-2]+(C-180), Compound [1-2]+(C-181), Compound [1-2]+(C-182), Compound [1-2]+(C-183), Compound [1-2]+(C-184), Compound [1-2]+(C-185), Compound [1-2]+(C-186), Compound [1-2]+(C-187), Compound [1-2]+(C-188), Compound [1-2]+(C-189), Compound [1-2]+(C-190), Compound [1-2]+(C-191), Compound [1-2]+(C-192), Compound [1-2]+(C-193), Compound [1-2]+(C-194), Compound [1-2]+(C-195), Compound [1-2]+(C-196), Compound [1-2]+(C-197), Compound [1-2]+(C-198), Compound [1-2]+(C-199), Compound [1-2]+(C-200), Compound [1-2]+(C-201), Compound [1-2]+(C-202), Compound [1-2]+(C-203), Compound [1-2]+(C-204), Compound [1-2]+(C-205), Compound [1-2]+(C-206), Compound [1-2]+(C-207), Compound [1-2]+(C-208), Compound [1-2]+(C-209), Compound [1-2]+(C-210), Compound [1-2]+(C-211), Compound [1-2]+(C-212), Compound [1-2]+(C-213), Compound [1-2]+(C-214), Compound [1-2]+(C-215), Compound [1-2]+(C-216), Compound [1-2]+(C-217), Compound [1-2]+(C-218), Compound [1-2]+(C-219), Compound [1-2]+(C-220), Compound [1-2]+(C-221), Compound [1-2]+(C-222), Compound [1-2]+(C-223), Compound [1-2]+(C-224), Compound [1-2]+(C-225), Compound [1-2]+(C-226), Compound [1-2]+(C-227), Compound [1-2]+(C-228), Compound [1-2]+(C-229), Compound [1-2]+ (C-230), Compound [1-2]+(C-231), Compound [1-2]+(C-232), Compound [1-2]+(C-233), Compound [1-2]+(C-234), Compound [1-2]+(C-235), Compound [1-2]+(C-236), Compound [1-2]+(C-237), Compound [1-2]+(C-238), Compound [1-2]+(C-239), Compound [1-2]+(C-240), Compound [1-2]+(C-241), Compound [1-2]+(C-242), Compound [1-2]+(C-243), Compound [1-2]+(C-244), Compound [1-2]+(C-245), Compound [1-2]+(C-246), Compound [1-2]+(C-247), Compound [1-2]+(C-248), Compound [1-2]+(C-249), Compound [1-2]+(C-250), Compound [1-2]+(C-251), Compound [1-2]+(C-252), Compound [1-2]+(C-253), Compound [1-2]+(C-254), Compound [1-2]+(C-255), Compound [1-2]+(C-256), Compound [1-2]+(C-257), Compound [1-2]+(C-258), Compound [1-2]+(C-259), Compound [1-2]+(C-260), Compound [1-2]+(C-261), Compound [1-2]+(C-262), Compound [1-2]+(C-263), Compound [1-2]+(C-264), Compound [1-2]+(C-265), Compound [1-2]+(C-266), Compound [1-2]+(C-267), Compound [1-2]+(C-268), Compound [1-2]+(C-269), Compound [1-2]+(C-270), Compound [1-2]+(C-271), Compound [1-2]+(C-272), Compound [1-2]+(C-273), Compound [1-2]+(C-274), Compound [1-2]+(C-275), Compound [1-2]+(C-276), Compound [1-2]+(C-277), Compound [1-2]+(C-278), Compound [1-2]+(C-279), Compound [1-2]+(C-280), Compound [1-2]+(C-281), Compound [1-2]+(C-282), Compound [1-2]+(C-283), Compound [1-2]+(C-284), Compound [1-2]+(C-285), Compound [1-2]+(C-286), Compound [1-2]+(C-287), Compound [1-2]+(C-288), Compound [1-2]+(C-289), Compound [1-2]+(C-290), Compound [1-2]+(C-291), Compound [1-2]+(C-292), Compound [1-2]+(C-293), Compound [1-2]+(C-294), Compound [1-2]+(C-295), Compound [1-2]+(C-296), Compound [1-2]+(C-297), Compound [1-2]+(C-298), Compound [1-2]+(C-299), Compound [1-2]+(C-300), Compound [1-2]+(C-301), Compound [1-2]+(C-302), Compound [1-2]+(C-303), Compound [1-2]+(C-304), Compound [1-2]+(C-305), Compound [1-2]+(C-306), Compound [1-2]+(C-307), Compound [1-2]+(C-308), Compound [1-2]+(C-309), Compound [1-2]+(C-310), Compound [1-2]+(C-311), Compound [1-2]+(C-312), Compound [1-2]+(C-313), Compound [1-2]+(C-314), Compound [1-2]+(C-315), Compound [1-2]+(C-316), Compound [1-2]+(C-317), Compound [1-2]+(C-318), Compound [1-2]+(C-319), Compound [1-2]+(C-320), Compound [1-2]+(C-321), Compound [1-2]+(C-322), Compound [1-2]+(C-323),

Compound [1-2]+(C-324), Compound [1-2]+(C-325), Compound [1-2]+(C-326), Compound [1-2]+(C-327), Compound [1-2]+(C-328), Compound [1-2]+(C-329), Compound [1-2]+(C-330), Compound [1-2]+(C-331), Compound [1-2]+(C-332), Compound [1-2]+(C-333), Compound [1-2]+(C-334), Compound [1-2]+(C-335), Compound [1-2]+(C-336), Compound [1-2]+(C-337), Compound [1-2]+(C-338), Compound [1-2]+(C-339), Compound [1-2]+(C-340), Compound [1-2]+(C-341), Compound [1-2]+(C-342), Compound [1-2]+(C-343), Compound [1-2]+(C-344), Compound [1-2]+(C-345), Compound [1-2]+(C-346), Compound [1-2]+(C-347), Compound [1-2]+(C-348), Compound [1-2]+(C-349), Compound [1-2]+ (C-350), Compound [1-2]+(C-351), Compound [1-2]+(C-352), Compound [1-2]+(C-353), Compound [1-2]+(C-354), Compound [1-2]+(C-355), Compound [1-2]+(C-356), Compound [1-2]+(C-357), Compound [1-2]+(C-358), Compound [1-2]+(C-359), Compound [1-2]+(C-360), Compound [1-2]+(C-361), Compound [1-2]+(C-362), Compound [1-2]+(C-363), Compound [1-2]+(C-364), Compound [1-2]+(C-365), Compound [1-2]+(C-366), Compound [1-2]+(C-367), Compound [1-2]+(C-368), Compound [1-2]+(C-369), Compound [1-2]+(C-370), Compound [1-2]+(C-371), Compound [1-2]+(C-372), Compound [1-2]+(C-373), Compound [1-2]+(C-374), Compound [1-2]+(C-375), Compound [1-2]+(C-376), Compound [1-2]+(C-377), Compound [1-2]+(C-378), Compound [1-2]+(C-379), Compound [1-2]+(C-380), Compound [1-2]+(C-381), Compound [1-2]+(C-382), Compound [1-2]+(C-383), Compound [1-2]+(C-384), Compound [1-2]+(C-385), Compound [1-2]+(C-386), Compound [1-2]+(C-387), Compound [1-2]+(C-388), Compound [1-2]+(C-389), Compound [1-2]+(C-390), Compound [1-2]+(C-391), Compound [1-2]+(C-392), Compound [1-2]+(C-393), Compound [1-2]+(C-394), Compound [1-2]+(C-395), Compound [1-2]+(C-396), Compound [1-2]+(C-397), Compound [1-2]+(C-398), Compound [1-2]+(C-399), Compound [1-2]+(C-400), Compound [1-2]+(C-401), Compound [1-2]+(C-402), Compound [1-2]+(C-403), Compound [1-2]+(C-404), Compound [1-2]+(C-405), Compound [1-2]+(C-406), Compound [1-2]+(C-407), Compound [1-2]+(C-408), Compound [1-2]+(C-409), Compound [1-2]+(C-410), Compound [1-2]+(C-411), Compound [1-2]+(C-412), Compound [1-2]+(C-413), Compound [1-2]+(C-414), Compound [1-2]+(C-415), Compound [1-2]+(C-416), Compound [1-2]+(C-417), Compound [1-2]+(C-418), Compound [1-2]+(C-419), Compound [1-2]+(C-420), Compound [1-2]+(C-421), Compound [1-2]+(C-422), Compound [1-2]+(C-423), Compound [1-2]+(C-424), Compound [1-2]+(C-425), Compound [1-2]+(C-426), Compound [1-2]+(C-427), Compound [1-2]+(C-428), Compound [1-2]+(C-429), Compound [1-2]+(C-430), Compound [1-2]+(C-431), Compound [1-2]+(C-432), Compound [1-2]+(C-433), Compound [1-2]+(C-434), Compound [1-2]+(C-435), Compound [1-2]+(C-436), Compound [1-2]+(C-437), Compound [1-2]+(C-438), Compound [1-2]+(C-439), Compound [1-2]+(C-440), Compound [1-2]+(C-441), Compound [1-2]+(C-442), Compound [1-2]+(C-443), Compound [1-2]+(C-444), Compound [1-2]+(C-445), Compound [1-2]+(C-446), Compound [1-2]+(C-447), Compound [1-2]+(C-448), Compound [1-2]+(C-449), Compound [1-2]+(C-450), Compound [1-2]+(C-451), Compound [1-2]+(C-452), Compound [1-2]+(C-453), Compound [1-2]+(C-454), Compound [1-2]+(C-455), Compound [1-2]+(C-456), Compound [1-2]+(C-457), Compound [1-2]+(C-458), Compound [1-2]+(C-459), Compound [1-2]+(C-460), Compound [1-2]+(C-461), Compound [1-2]+(C-462), Compound [1-2]+(C-463), Compound [1-2]+(C-464), Compound [1-2]+(C-465), Compound [1-2]+(C-466), Compound [1-2]+(C-467), Compound [1-2]+(C-468), Compound [1-2]+(C-469), Compound [1-2]+(C-470), Compound [1-2]+(C-471), Compound [1-2]+(C-472), Compound [1-2]+(C-473), Compound [1-2]+(C-474), Compound [1-2]+(C-475), Compound [1-2]+(C-476), Compound [1-2]+(C-477), Compound [1-2]+(C-478), Compound [1-2]+(C-479), Compound [1-2]+(C-480), Compound [1-2]+(C-481), Compound [1-2]+(C-482), Compound [1-2]+(C-483), Compound [1-2]+(C-484), Compound [1-2]+(C-485), Compound [1-2]+(C-486), Compound [1-2]+(C-487), Compound [1-2]+(C-488), Compound [1-2]+(C-489), Compound [1-2]+(C-490), Compound [1-2]+(C-491), Compound [1-2]+(C-492), Compound [1-2]+(C-493), Compound [1-2]+(C-494), Compound [1-2]+(C-495), Compound [1-2]+(C-496), Compound [1-2]+(C-497), Compound [1-2]+(C-498), Compound [1-2]+(C-499), Compound [1-2]+(C-500), Compound [1-2]+(C-501), Compound [1-2]+(C-502), Compound [1-2]+(C-503), Compound [1-2]+(C-504), Compound [1-2]+(C-505), Compound [1-2]+(C-506), Compound [1-2]+(C-507), Compound [1-2]+(C-508), Compound [1-2]+(C-509), Compound [1-2]+(C-510), Compound [1-2]+(C-511), Compound [1-2]+(C-512), Compound [1-2]+(C-513), Compound [1-2]+(C-514), Compound [1-2]+(C-515), Compound [1-2]+(C-516), Compound [1-2]+(C-517), Compound [1-2]+(C-518), Compound [1-2]+(C-519), Compound [1-2]+(C-520), Compound [1-2]+(C-521), Compound [1-2]+(C-522), Compound [1-2]+(C-523), Compound [1-2]+(C-524), Compound [1-2]+(C-525), Compound [1-2]+(C-526), Compound [1-2]+(C-527), Compound [1-2]+(C-528), Compound [1-2]+(C-529), Compound [1-2]+ (C-530), Compound [1-2]+(C-531), Compound [1-2]+(C-532), Compound [1-2]+(C-533), Compound [1-2]+(C-534), Compound [1-2]+(C-535), Compound [1-2]+(C-536), Compound [1-2]+(C-537),

Compound [1-3]+(C-001), Compound [1-3]+(C-002), Compound [1-3]+(C-003), Compound [1-3]+(C-004), Compound [1-3]+(C-005), Compound [1-3]+(C-006), Compound [1-3]+(C-007), Compound [1-3]+(C-008), Compound [1-3]+(C-009), Compound [1-3]+(C-010), Compound [1-3]+(C-011), Compound [1-3]+(C-012), Compound [1-3]+(C-013), Compound [1-3]+(C-014), Compound [1-3]+(C-015), Compound [1-3]+(C-016), Compound [1-3]+(C-017), Compound [1-3]+(C-018), Compound [1-3]+(C-019), Compound [1-3]+(C-020), Compound [1-3]+(C-021), Compound [1-3]+(C-022), Compound [1-3]+(C-023), Compound [1-3]+(C-024), Compound [1-3]+(C-025), Compound [1-3]+(C-026), Compound [1-3]+(C-027), Compound [1-3]+(C-028), Compound [1-3]+(C-029), Compound [1-3]+(C-030), Compound [1-3]+(C-031), Compound [1-3]+(C-032), Compound [1-3]+(C-033), Compound [1-3]+(C-034), Compound [1-3]+(C-035), Compound [1-3]+(C-036), Compound [1-3]+(C-037), Compound [1-3]+(C-038), Compound [1-3]+(C-039), Compound [1-3]+(C-040), Compound [1-3]+(C-041), Compound [1-3]+(C-042), Compound [1-3]+(C-043), Compound [1-3]+(C-044), Compound [1-3]+(C-045), Compound [1-3]+(C-046), Compound [1-3]+(C-047), Compound [1-3]+(C-048), Compound [1-3]+(C-049), Compound [1-3]+(C-050), Compound [1-3]+(C-051), Compound [1-3]+(C-052), Compound [1-3]+(C-053), Compound [1-3]+(C-054), Compound [1-3]+(C-055), Compound [1-3]+(C-056), Compound [1-3]+(C-057), Compound [1-3]+(C-058), Compound [1-3]+(C-059), Compound [1-3]+(C-060), Compound [1-3]+(C-061), Compound [1-3]+(C-062), Compound [1-3]+(C-063), Compound [1-3]+(C-064), Compound [1-3]+(C-065), Compound [1-3]+(C-066), Compound [1-3]+(C-067), Compound [1-3]+(C-068), Compound [1-3]+(C-069), Compound [1-3]+(C-070), Compound [1-3]+(C-071), Compound [1-3]+(C-072), Compound [1-3]+(C-073), Compound [1-3]+(C-074), Compound [1-3]+(C-075), Compound [1-3]+(C-076), Compound [1-3]+(C-077), Compound [1-3]+(C-078), Compound [1-3]+(C-079), Compound [1-3]+(C-080), Compound [1-3]+(C-081), Compound [1-3]+(C-082), Compound [1-3]+(C-083), Compound [1-3]+(C-084), Compound [1-3]+(C-085), Compound [1-3]+(C-086), Compound [1-3]+(C-087), Compound [1-3]+(C-088), Compound [1-3]+(C-089), Compound [1-3]+(C-090), Compound [1-3]+(C-091), Compound [1-3]+(C-092), Compound [1-3]+(C-093), Compound [1-3]+(C-094), Compound [1-3]+(C-095), Compound [1-3]+(C-096), Compound [1-3]+(C-097), Compound [1-3]+(C-098), Compound [1-3]+(C-099), Compound [1-3]+(C-100), Compound [1-3]+(C-101), Compound [1-3]+(C-102), Compound [1-3]+(C-103), Compound [1-3]+(C-104), Compound [1-3]+(C-105), Compound [1-3]+(C-106), Compound [1-3]+(C-107), Compound [1-3]+(C-108), Compound [1-3]+(C-109), Compound [1-3]+(C-110), Compound [1-3]+(C-111), Compound [1-3]+(C-112), Compound [1-3]+(C-113), Compound [1-3]+(C-114), Compound [1-3]+(C-115), Compound [1-3]+(C-116), Compound [1-3]+(C-117), Compound [1-3]+(C-118), Compound [1-3]+(C-119), Compound [1-3]+(C-120), Compound [1-3]+(C-121), Compound [1-3]+(C-122), Compound [1-3]+(C-123), Compound [1-3]+(C-124), Compound [1-3]+(C-125), Compound [1-3]+(C-126), Compound [1-3]+(C-127), Compound [1-3]+(C-128), Compound [1-3]+(C-129), Compound [1-3]+(C-130), Compound [1-3]+(C-131), Compound [1-3]+(C-132), Compound [1-3]+(C-133), Compound [1-3]+(C-134), Compound [1-3]+(C-135), Compound [1-3]+(C-136), Compound [1-3]+(C-137), Compound [1-3]+(C-138), Compound [1-3]+(C-139), Compound [1-3]+(C-140), Compound [1-3]+(C-141), Compound [1-3]+(C-142), Compound [1-3]+(C-143), Compound [1-3]+(C-144), Compound [1-3]+(C-145), Compound [1-3]+(C-146), Compound [1-3]+(C-147), Compound [1-3]+(C-148), Compound [1-3]+(C-149), Compound [1-3]+(C-150), Compound [1-3]+(C-151), Compound [1-3]+(C-152), Compound [1-3]+(C-153), Compound [1-3]+(C-154), Compound [1-3]+(C-155), Compound [1-3]+(C-156), Compound [1-3]+(C-157), Compound [1-3]+(C-158), Compound [1-3]+(C-159), Compound [1-3]+(C-160), Compound [1-3]+(C-161), Compound [1-3]+(C-162), Compound [1-3]+(C-163), Compound [1-3]+(C-164), Compound [1-3]+(C-165), Compound [1-3]+(C-166), Compound [1-3]+(C-167), Compound [1-3]+(C-168), Compound [1-3]+(C-169), Compound [1-3]+(C-170), Compound [1-3]+(C-171), Compound [1-3]+(C-172), Compound [1-3]+(C-173), Compound [1-3]+(C-174), Compound [1-3]+(C-175), Compound [1-3]+(C-176), Compound [1-3]+(C-177), Compound [1-3]+(C-178), Compound [1-3]+(C-179), Compound [1-3]+(C-180), Compound [1-3]+(C-181), Compound [1-3]+(C-182), Compound [1-3]+(C-183), Compound [1-3]+(C-184), Compound [1-3]+(C-185), Compound [1-3]+(C-186), Compound [1-3]+(C-187), Compound [1-3]+(C-188), Compound [1-3]+(C-189), Compound [1-3]+(C-190), Compound [1-3]+(C-191), Compound [1-3]+(C-192), Compound [1-3]+(C-193), Compound [1-3]+(C-194), Compound [1-3]+(C-195), Compound [1-3]+(C-196), Compound [1-3]+(C-197), Compound [1-3]+(C-198), Compound [1-3]+(C-199), Compound [1-3]+(C-200), Compound [1-3]+(C-201), Compound [1-3]+(C-202), Compound [1-3]+(C-203), Compound [1-3]+(C-204), Compound [1-3]+(C-205), Compound [1-3]+(C-206), Compound [1-3]+(C-207), Compound [1-3]+(C-208), Compound [1-3]+(C-209), Compound [1-3]+(C-210), Compound [1-3]+(C-211), Compound [1-3]+(C-212), Compound [1-3]+(C-213), Compound [1-3]+(C-214), Compound [1-3]+(C-215), Compound [1-3]+(C-216), Compound [1-3]+(C-217), Compound [1-3]+(C-218), Compound [1-3]+(C-219), Compound [1-3]+(C-220), Compound [1-3]+(C-221), Compound [1-3]+(C-222), Compound [1-3]+(C-223), Compound [1-3]+(C-224), Compound [1-3]+(C-225), Compound [1-3]+(C-226), Compound [1-3]+(C-227), Compound [1-3]+(C-228), Compound [1-3]+(C-229), Compound [1-3]+(C-230), Compound [1-3]+(C-231), Compound [1-3]+(C-232), Compound [1-3]+(C-233), Compound [1-3]+(C-234), Compound [1-3]+(C-235), Compound [1-3]+(C-236), Compound [1-3]+(C-237), Compound [1-3]+(C-238), Compound [1-3]+(C-239), Compound [1-3]+(C-240), Compound [1-3]+(C-241), Compound [1-3]+(C-242), Compound [1-3]+(C-243), Compound [1-3]+(C-244), Compound [1-3]+(C-245), Compound [1-3]+(C-246), Compound [1-3]+(C-247), Compound [1-3]+(C-248), Compound [1-3]+(C-249), Compound [1-3]+(C-250), Compound [1-3]+(C-251), Compound [1-3]+(C-252), Compound [1-3]+(C-253), Compound [1-3]+(C-254), Compound [1-3]+(C-255), Compound [1-3]+(C-256), Compound [1-3]+(C-257), Compound [1-3]+(C-258), Compound [1-3]+(C-259), Compound [1-3]+(C-260), Compound [1-3]+(C-261), Compound [1-3]+(C-262), Compound [1-3]+(C-263), Compound [1-3]+(C-264), Compound [1-3]+(C-265), Compound [1-3]+(C-266), Compound [1-3]+(C-267), Compound [1-3]+(C-268), Compound [1-3]+(C-269), Compound [1-3]+(C-270), Compound [1-3]+(C-271), Compound [1-3]+(C-272), Compound [1-3]+(C-273), Compound [1-3]+(C-274), Compound [1-3]+(C-275), Compound [1-3]+(C-276), Compound [1-3]+(C-277), Compound [1-3]+(C-278), Compound [1-3]+(C-279), Compound [1-3]+(C-280), Compound [1-3]+(C-281), Compound [1-3]+(C-282), Compound [1-3]+(C-283), Compound [1-3]+(C-284), Compound [1-3]+(C-285), Compound [1-3]+(C-286), Compound [1-3]+(C-287), Compound [1-3]+(C-288), Compound [1-3]+(C-289), Compound [1-3]+(C-290), Compound [1-3]+(C-291), Compound [1-3]+(C-292), Compound [1-3]+(C-293), Compound [1-3]+(C-294), Compound [1-3]+(C-295), Compound [1-3]+(C-296), Compound [1-3]+(C-297), Compound [1-3]+(C-298), Compound [1-3]+(C-299), Compound [1-3]+(C-300), Compound [1-3]+(C-301), Compound [1-3]+(C-302), Compound [1-3]+(C-303), Compound [1-3]+(C-304), Compound [1-3]+(C-305), Compound [1-3]+(C-306), Compound [1-3]+(C-307), Compound [1-3]+(C-308), Compound [1-3]+(C-309), Compound [1-3]+(C-310), Compound [1-3]+(C-311), Compound [1-3]+(C-312), Compound [1-3]+(C-313), Compound [1-3]+(C-314), Compound [1-3]+(C-315), Compound [1-3]+(C-316), Compound [1-3]+(C-317), Compound [1-3]+(C-318), Compound [1-3]+(C-319), Compound [1-3]+(C-320), Compound [1-3]+(C-321), Compound [1-3]+(C-322), Compound [1-3]+(C-323), Compound [1-3]+(C-324), Compound [1-3]+(C-325), Compound [1-3]+(C-326), Compound [1-3]+(C-327), Compound [1-3]+(C-328), Compound [1-3]+(C-329), Compound [1-3]+(C-330), Compound [1-3]+(C-331), Compound [1-3]+(C-332), Compound [1-3]+(C-333), Compound [1-3]+(C-334), Compound [1-3]+(C-335), Compound [1-3]+(C-336), Compound [1-3]+(C-337), Compound [1-3]+(C-338), Compound [1-3]+(C-339), Compound [1-3]+(C-340), Compound [1-3]+(C-341), Compound [1-3]+(C-342), Compound [1-3]+(C-343), Compound [1-3]+(C-344), Compound [1-3]+(C-345), Compound [1-3]+(C-346), Compound [1-3]+(C-347), Compound [1-3]+(C-348), Compound [1-3]+(C-349), Compound [1-3]+(C-350), Compound [1-3]+(C-351), Compound [1-3]+(C-352), Compound [1-3]+(C-353), Compound [1-3]+(C-354), Compound [1-3]+(C-355), Compound [1-3]+(C-356), Compound [1-3]+(C-357), Compound [1-3]+(C-358), Compound [1-3]+(C-359), Compound [1-3]+(C-360), Compound [1-3]+(C-361), Compound [1-3]+(C-362), Compound [1-3]+(C-363), Compound [1-3]+(C-364), Compound [1-3]+(C-365), Compound [1-3]+(C-366), Compound [1-3]+(C-367), Compound [1-3]+(C-368), Compound [1-3]+(C-369), Compound [1-3]+(C-370), Compound [1-3]+(C-371), Compound [1-3]+(C-372), Compound [1-3]+(C-373), Compound [1-3]+(C-374), Compound [1-3]+(C-375), Compound [1-3]+(C-376), Compound [1-3]+(C-377), Compound [1-3]+(C-378), Compound [1-3]+(C-379), Compound [1-3]+(C-380), Compound [1-3]+(C-381), Compound [1-3]+(C-382), Compound [1-3]+(C-383), Compound [1-3]+(C-384), Compound [1-3]+(C-385), Compound [1-3]+(C-386), Compound [1-3]+(C-387), Compound [1-3]+(C-388), Compound [1-3]+(C-389), Compound [1-3]+(C-390), Compound [1-3]+(C-391), Compound [1-3]+(C-392), Compound [1-3]+(C-393), Compound [1-3]+(C-394), Compound [1-3]+(C-395), Compound [1-3]+(C-396), Compound [1-3]+(C-397), Compound [1-3]+(C-398), Compound [1-3]+(C-399), Compound [1-3]+(C-400), Compound [1-3]+(C-401), Compound [1-3]+(C-402), Compound [1-3]+(C-403), Compound [1-3]+(C-404), Compound [1-3]+(C-405), Compound [1-3]+(C-406), Compound [1-3]+(C-407), Compound [1-3]+(C-408), Compound [1-3]+(C-409), Compound [1-3]+(C-410), Compound [1-3]+(C-411), Compound [1-3]+(C-412), Compound [1-3]+(C-413), Compound [1-3]+(C-414), Compound [1-3]+(C-415), Compound [1-3]+(C-416), Compound [1-3]+(C-417), Compound [1-3]+(C-418), Compound [1-3]+(C-419), Compound [1-3]+(C-420), Compound [1-3]+(C-421), Compound [1-3]+(C-422), Compound [1-3]+(C-423), Compound [1-3]+(C-424), Compound [1-3]+(C-425), Compound [1-3]+(C-426), Compound [1-3]+(C-427), Compound [1-3]+(C-428), Compound [1-3]+(C-429), Compound [1-3]+(C-430), Compound [1-3]+(C-431), Compound [1-3]+(C-432), Compound [1-3]+(C-433), Compound [1-3]+(C-434), Compound [1-3]+(C-435), Compound [1-3]+(C-436), Compound [1-3]+(C-437), Compound [1-3]+(C-438), Compound [1-3]+(C-439), Compound [1-3]+(C-440), Compound [1-3]+(C-441), Compound [1-3]+(C-442), Compound [1-3]+(C-443), Compound [1-3]+(C-444), Compound [1-3]+(C-445), Compound [1-3]+(C-446), Compound [1-3]+(C-447), Compound [1-3]+(C-448), Compound [1-3]+(C-449), Compound [1-3]+(C-450), Compound [1-3]+(C-451), Compound [1-3]+(C-452), Compound [1-3]+(C-453), Compound [1-3]+(C-454), Compound [1-3]+(C-455), Compound [1-3]+(C-456), Compound [1-3]+(C-457), Compound [1-3]+(C-458), Compound [1-3]+(C-459), Compound [1-3]+(C-460), Compound [1-3]+(C-461), Compound [1-3]+(C-462), Compound [1-3]+(C-463), Compound [1-3]+(C-464), Compound [1-3]+(C-465), Compound [1-3]+(C-466), Compound [1-3]+(C-467), Compound [1-3]+(C-468), Compound [1-3]+(C-469), Compound [1-3]+(C-470), Compound [1-3]+(C-471), Compound [1-3]+(C-472), Compound [1-3]+(C-473), Compound [1-3]+(C-474), Compound [1-3]+(C-475), Compound [1-3]+(C-476), Compound [1-3]+(C-477), Compound [1-3]+(C-478), Compound [1-3]+(C-479), Compound [1-3]+(C-480), Compound [1-3]+(C-481), Compound [1-3]+(C-482), Compound [1-3]+(C-483), Compound [1-3]+(C-484), Compound [1-3]+(C-485), Compound [1-3]+(C-486), Compound [1-3]+(C-487), Compound [1-3]+(C-488), Compound [1-3]+(C-489), Compound [1-3]+(C-490), Compound [1-3]+(C-491), Compound [1-3]+(C-492), Compound [1-3]+(C-493), Compound [1-3]+(C-494), Compound [1-3]+(C-495), Compound [1-3]+(C-496), Compound [1-3]+(C-497), Compound [1-3]+(C-498), Compound [1-3]+(C-499), Compound [1-3]+(C-500), Compound [1-3]+(C-501), Compound [1-3]+(C-502), Compound [1-3]+(C-503), Compound [1-3]+(C-504), Compound [1-3]+(C-505), Compound [1-3]+(C-506), Compound [1-3]+(C-507), Compound [1-3]+(C-508), Compound [1-3]+(C-509), Compound [1-3]+(C-510), Compound [1-3]+(C-511), Compound [1-3]+(C-512), Compound [1-3]+(C-513), Compound [1-3]+(C-514), Compound [1-3]+(C-515), Compound [1-3]+(C-516), Compound [1-3]+(C-517), Compound [1-3]+(C-518), Compound [1-3]+(C-519), Compound [1-3]+(C-520), Compound [1-3]+(C-521), Compound [1-3]+(C-522), Compound [1-3]+(C-523), Compound [1-3]+(C-524), Compound [1-3]+(C-525), Compound [1-3]+(C-526), Compound [1-3]+(C-527), Compound [1-3]+(C-528), Compound [1-3]+(C-529), Compound [1-3]+(C-530), Compound [1-3]+(C-531), Compound [1-3]+(C-532), Compound [1-3]+(C-533), Compound [1-3]+(C-534), Compound [1-3]+(C-535), Compound [1-3]+(C-536), Compound [1-3]+(C-537),

Compound [1-4]+(C-001), Compound [1-4]+(C-002), Compound [1-4]+(C-003), Compound [1-4]+(C-004), Compound [1-4]+(C-005), Compound [1-4]+(C-006), Compound [1-4]+(C-007), Compound [1-4]+(C-008), Compound [1-4]+(C-009), Compound [1-4]+(C-010), Compound [1-4]+(C-011), Compound [1-4]+(C-012), Compound [1-4]+(C-013), Compound [1-4]+(C-014), Compound [1-4]+(C-015), Compound [1-4]+(C-016), Compound [1-4]+(C-017), Compound [1-4]+(C-018), Compound [1-4]+(C-019), Compound [1-4]+(C-020), Compound [1-4]+(C-021), Compound [1-4]+(C-022), Compound [1-4]+(C-023), Compound [1-4]+(C-024), Compound [1-4]+(C-025), Compound [1-4]+(C-026), Compound [1-4]+(C-027), Compound [1-4]+(C-028), Compound [1-4]+(C-029), Compound [1-4]+(C-030), Compound [1-4]+(C-031), Compound [1-4]+(C-032), Compound [1-4]+(C-033), Compound [1-4]+(C-034), Compound [1-4]+(C-035), Compound [1-4]+(C-036), Compound [1-4]+(C-037), Compound [1-4]+(C-038), Compound [1-4]+(C-039), Compound [1-4]+(C-040), Compound [1-4]+(C-041), Compound [1-4]+(C-042), Compound [1-4]+(C-043), Compound [1-4]+(C-044), Compound [1-4]+(C-045), Compound [1-4]+(C-046), Compound [1-4]+(C-047), Compound [1-4]+(C-048), Compound [1-4]+(C-049), Compound [1-4]+(C-050), Compound [1-4]+(C-051), Compound [1-4]+(C-052), Compound [1-4]+(C-053), Compound [1-4]+(C-054), Compound [1-4]+(C-055), Compound [1-4]+(C-056), Compound [1-4]+(C-057), Compound [1-4]+(C-058), Compound [1-4]+(C-059), Compound [1-4]+(C-060), Compound [1-4]+(C-061), Compound [1-4]+(C-062), Compound [1-4]+(C-063), Compound [1-4]+(C-064), Compound [1-4]+(C-065), Compound [1-4]+(C-066), Compound [1-4]+(C-067), Compound [1-4]+(C-068), Compound [1-4]+(C-069), Compound [1-4]+(C-070), Compound [1-4]+(C-071), Compound [1-4]+(C-072), Compound [1-4]+(C-073), Compound [1-4]+(C-074), Compound [1-4]+(C-075), Compound [1-4]+(C-076), Compound [1-4]+(C-077), Compound [1-4]+(C-078), Compound [1-4]+(C-079), Compound [1-4]+(C-080), Compound [1-4]+(C-081), Compound [1-4]+(C-082), Compound [1-4]+(C-083), Compound [1-4]+(C-084), Compound [1-4]+(C-085), Compound [1-4]+(C-086), Compound [1-4]+(C-087), Compound [1-4]+(C-088), Compound [1-4]+(C-089), Compound [1-4]+(C-090), Compound [1-4]+(C-091), Compound [1-4]+(C-092), Compound [1-4]+(C-093), Compound [1-4]+(C-094), Compound [1-4]+(C-095), Compound [1-4]+(C-096), Compound [1-4]+(C-097), Compound [1-4]+(C-098), Compound [1-4]+(C-099), Compound [1-4]+(C-100), Compound [1-4]+(C-101), Compound [1-4]+(C-102), Compound [1-4]+(C-103), Compound [1-4]+(C-104), Compound [1-4]+(C-105), Compound [1-4]+(C-106), Compound [1-4]+(C-107), Compound [1-4]+(C-108), Compound [1-4]+(C-109), Compound [1-4]+(C-110), Compound [1-4]+(C-111), Compound [1-4]+(C-112), Compound [1-4]+(C-113), Compound [1-4]+(C-114), Compound [1-4]+(C-115), Compound [1-4]+(C-116), Compound [1-4]+(C-117), Compound [1-4]+(C-118), Compound [1-4]+(C-119), Compound [1-4]+(C-120), Compound [1-4]+(C-121), Compound [1-4]+(C-122), Compound [1-4]+(C-123), Compound [1-4]+(C-124), Compound [1-4]+(C-125), Compound [1-4]+(C-126), Compound [1-4]+(C-127), Compound [1-4]+(C-128), Compound [1-4]+(C-129), Compound [1-4]+(C-130), Compound [1-4]+(C-131), Compound [1-4]+(C-132), Compound [1-4]+(C-133), Compound [1-4]+(C-134), Compound [1-4]+(C-135), Compound [1-4]+(C-136), Compound [1-4]+(C-137), Compound [1-4]+(C-138), Compound [1-4]+(C-139), Compound [1-4]+(C-140), Compound [1-4]+(C-141), Compound [1-4]+(C-142), Compound [1-4]+(C-143), Compound [1-4]+(C-144), Compound [1-4]+(C-145), Compound [1-4]+(C-146), Compound [1-4]+(C-147), Compound [1-4]+(C-148), Compound [1-4]+(C-149), Compound [1-4]+(C-150), Compound [1-4]+(C-151), Compound [1-4]+(C-152), Compound [1-4]+(C-153), Compound [1-4]+(C-154), Compound [1-4]+(C-155), Compound [1-4]+(C-156), Compound [1-4]+(C-157), Compound [1-4]+(C-158), Compound [1-4]+(C-159), Compound [1-4]+(C-160), Compound [1-4]+(C-161), Compound [1-4]+(C-162), Compound [1-4]+(C-163), Compound [1-4]+(C-164), Compound [1-4]+(C-165), Compound [1-4]+(C-166), Compound [1-4]+(C-167), Compound [1-4]+(C-168), Compound [1-4]+(C-169), Compound [1-4]+(C-170), Compound [1-4]+(C-171), Compound [1-4]+(C-172), Compound [1-4]+(C-173), Compound [1-4]+(C-174), Compound [1-4]+(C-175), Compound [1-4]+(C-176), Compound [1-4]+(C-177), Compound [1-4]+(C-178), Compound [1-4]+(C-179), Compound [1-4]+(C-180), Compound [1-4]+(C-181), Compound [1-4]+(C-182), Compound [1-4]+(C-183), Compound [1-4]+(C-184), Compound [1-4]+(C-185), Compound [1-4]+(C-186), Compound [1-4]+(C-187), Compound [1-4]+(C-188), Compound [1-4]+(C-189), Compound [1-4]+(C-190), Compound [1-4]+(C-191), Compound [1-4]+(C-192), Compound [1-4]+(C-193), Compound [1-4]+(C-194), Compound [1-4]+(C-195), Compound [1-4]+(C-196), Compound [1-4]+(C-197), Compound [1-4]+(C-198), Compound [1-4]+(C-199), Compound [1-4]+(C-200), Compound [1-4]+(C-201), Compound [1-4]+(C-202), Compound [1-4]+(C-203), Compound [1-4]+(C-204), Compound [1-4]+(C-205), Compound [1-4]+(C-206), Compound [1-4]+(C-207), Compound [1-4]+(C-208), Compound [1-4]+(C-209), Compound [1-4]+(C-210), Compound [1-4]+(C-211), Compound [1-4]+(C-212), Compound [1-4]+(C-213), Compound [1-4]+(C-214), Compound [1-4]+(C-215), Compound [1-4]+(C-216), Compound [1-4]+(C-217), Compound [1-4]+(C-218), Compound [1-4]+(C-219), Compound [1-4]+(C-220), Compound [1-4]+(C-221), Compound [1-4]+(C-222), Compound [1-4]+(C-223), Compound [1-4]+(C-224), Compound [1-4]+(C-225), Compound [1-4]+(C-226), Compound [1-4]+(C-227), Compound [1-4]+(C-228), Compound [1-4]+(C-229), Compound

[1-4]+(C-230), Compound [1-4]+(C-231), Compound [1-4]+(C-232), Compound [1-4]+(C-233), Compound [1-4]+(C-234), Compound [1-4]+(C-235), Compound [1-4]+(C-236), Compound [1-4]+(C-237), Compound [1-4]+(C-238), Compound [1-4]+(C-239), Compound [1-4]+(C-240), Compound [1-4]+(C-241), Compound [1-4]+(C-242), Compound [1-4]+(C-243), Compound [1-4]+(C-244), Compound [1-4]+(C-245), Compound [1-4]+(C-246), Compound [1-4]+(C-247), Compound [1-4]+(C-248), Compound [1-4]+(C-249), Compound [1-4]+(C-250), Compound [1-4]+(C-251), Compound [1-4]+(C-252), Compound [1-4]+(C-253), Compound [1-4]+(C-254), Compound [1-4]+(C-255), Compound [1-4]+(C-256), Compound [1-4]+(C-257), Compound [1-4]+(C-258), Compound [1-4]+(C-259), Compound [1-4]+(C-260), Compound [1-4]+(C-261), Compound [1-4]+(C-262), Compound [1-4]+(C-263), Compound [1-4]+(C-264), Compound [1-4]+(C-265), Compound [1-4]+(C-266), Compound [1-4]+(C-267), Compound [1-4]+(C-268), Compound [1-4]+(C-269), Compound [1-4]+(C-270), Compound [1-4]+(C-271), Compound [1-4]+(C-272), Compound [1-4]+(C-273), Compound [1-4]+(C-274), Compound [1-4]+(C-275), Compound [1-4]+(C-276), Compound [1-4]+(C-277), Compound [1-4]+(C-278), Compound [1-4]+(C-279), Compound [1-4]+(C-280), Compound [1-4]+(C-281), Compound [1-4]+(C-282), Compound [1-4]+(C-283), Compound [1-4]+(C-284), Compound [1-4]+(C-285), Compound [1-4]+(C-286), Compound [1-4]+(C-287), Compound [1-4]+(C-288), Compound [1-4]+(C-289), Compound [1-4]+(C-290), Compound [1-4]+(C-291), Compound [1-4]+(C-292), Compound [1-4]+(C-293), Compound [1-4]+(C-294), Compound [1-4]+(C-295), Compound [1-4]+(C-296), Compound [1-4]+(C-297), Compound [1-4]+(C-298), Compound [1-4]+(C-299), Compound [1-4]+(C-300), Compound [1-4]+(C-301), Compound [1-4]+(C-302), Compound [1-4]+(C-303), Compound [1-4]+(C-304), Compound [1-4]+(C-305), Compound [1-4]+(C-306), Compound [1-4]+(C-307), Compound [1-4]+(C-308), Compound [1-4]+(C-309), Compound [1-4]+(C-310), Compound [1-4]+(C-311), Compound [1-4]+(C-312), Compound [1-4]+(C-313), Compound [1-4]+(C-314), Compound [1-4]+(C-315), Compound [1-4]+(C-316), Compound [1-4]+(C-317), Compound [1-4]+(C-318), Compound [1-4]+(C-319), Compound [1-4]+(C-320), Compound [1-4]+(C-321), Compound [1-4]+(C-322), Compound [1-4]+(C-323), Compound [1-4]+(C-324), Compound [1-4]+(C-325), Compound [1-4]+(C-326), Compound [1-4]+(C-327), Compound [1-4]+(C-328), Compound [1-4]+(C-329), Compound [1-4]+(C-330), Compound [1-4]+(C-331), Compound [1-4]+(C-332), Compound [1-4]+(C-333), Compound [1-4]+(C-334), Compound [1-4]+(C-335), Compound [1-4]+(C-336), Compound [1-4]+(C-337), Compound [1-4]+(C-338), Compound [1-4]+(C-339), Compound [1-4]+(C-340), Compound [1-4]+(C-341), Compound [1-4]+(C-342), Compound [1-4]+(C-343), Compound [1-4]+(C-344), Compound [1-4]+(C-345), Compound [1-4]+(C-346), Compound [1-4]+(C-347), Compound [1-4]+(C-348), Compound [1-4]+(C-349), Compound [1-4]+(C-350), Compound [1-4]+(C-351), Compound [1-4]+(C-352), Compound [1-4]+(C-353), Compound [1-4]+(C-354), Compound [1-4]+(C-355), Compound [1-4]+(C-356), Compound [1-4]+(C-357), Compound [1-4]+(C-358), Compound [1-4]+(C-359), Compound [1-4]+(C-360), Compound [1-4]+(C-361), Compound [1-4]+(C-362), Compound [1-4]+(C-363), Compound [1-4]+(C-364), Compound [1-4]+(C-365), Compound [1-4]+(C-366), Compound [1-4]+(C-367), Compound [1-4]+(C-368), Compound [1-4]+(C-369), Compound [1-4]+(C-370), Compound [1-4]+(C-371), Compound [1-4]+(C-372), Compound [1-4]+(C-373), Compound [1-4]+(C-374), Compound [1-4]+(C-375), Compound [1-4]+(C-376), Compound [1-4]+(C-377), Compound [1-4]+(C-378), Compound [1-4]+(C-379), Compound [1-4]+(C-380), Compound [1-4]+(C-381), Compound [1-4]+(C-382), Compound [1-4]+(C-383), Compound [1-4]+(C-384), Compound [1-4]+(C-385), Compound [1-4]+(C-386), Compound [1-4]+(C-387), Compound [1-4]+(C-388), Compound [1-4]+(C-389), Compound [1-4]+(C-390), Compound [1-4]+(C-391), Compound [1-4]+(C-392), Compound [1-4]+(C-393), Compound [1-4]+(C-394), Compound [1-4]+(C-395), Compound [1-4]+(C-396), Compound [1-4]+(C-397), Compound [1-4]+(C-398), Compound [1-4]+(C-399), Compound [1-4]+(C-400), Compound [1-4]+(C-401), Compound [1-4]+(C-402), Compound [1-4]+(C-403), Compound [1-4]+(C-404), Compound [1-4]+(C-405), Compound [1-4]+(C-406), Compound [1-4]+(C-407), Compound [1-4]+(C-408), Compound [1-4]+(C-409), Compound [1-4]+(C-410), Compound [1-4]+(C-411), Compound [1-4]+(C-412), Compound [1-4]+(C-413), Compound [1-4]+(C-414), Compound [1-4]+(C-415), Compound [1-4]+(C-416), Compound [1-4]+(C-417), Compound [1-4]+(C-418), Compound [1-4]+(C-419), Compound [1-4]+(C-420), Compound [1-4]+(C-421), Compound [1-4]+(C-422), Compound [1-4]+(C-423), Compound [1-4]+(C-424), Compound [1-4]+(C-425), Compound [1-4]+(C-426), Compound [1-4]+(C-427), Compound [1-4]+(C-428), Compound [1-4]+(C-429), Compound [1-4]+(C-430), Compound [1-4]+(C-431), Compound [1-4]+(C-432), Compound [1-4]+(C-433), Compound [1-4]+(C-434), Compound [1-4]+(C-435), Compound [1-4]+(C-436), Compound [1-4]+(C-437), Compound [1-4]+(C-438), Compound [1-4]+(C-439), Compound [1-4]+(C-440), Compound [1-4]+(C-441), Compound [1-4]+(C-442), Compound [1-4]+(C-443), Compound [1-4]+(C-444), Compound [1-4]+(C-445), Compound [1-4]+(C-446), Compound [1-4]+(C-447), Compound [1-4]+(C-448), Compound [1-4]+(C-449), Compound [1-4]+(C-450), Compound [1-4]+(C-451), Compound [1-4]+(C-452), Compound [1-4]+(C-453), Compound [1-4]+(C-454), Compound [1-4]+(C-455), Compound [1-4]+(C-456), Compound [1-4]+(C-457), Compound [1-4]+(C-458), Compound [1-4]+(C-459), Compound [1-4]+(C-460), Compound [1-4]+(C-461), Compound [1-4]+(C-462), Compound [1-4]+(C-463), Compound [1-4]+(C-464), Compound [1-4]+(C-465), Compound [1-4]+(C-466), Compound [1-4]+(C-467), Compound [1-4]+(C-468), Compound [1-4]+(C-469), Compound [1-4]+(C-470), Compound [1-4]+(C-471), Compound [1-4]+(C-472), Compound [1-4]+(C-473), Compound [1-4]+(C-474), Compound [1-4]+(C-475), Compound [1-4]+(C-476),

Compound [1-4]+(C-477), Compound [1-4]+(C-478), Compound [1-4]+(C-479), Compound [1-4]+(C-480), Compound [1-4]+(C-481), Compound [1-4]+(C-482), Compound [1-4]+(C-483), Compound [1-4]+(C-484), Compound [1-4]+(C-485), Compound [1-4]+(C-486), Compound [1-4]+(C-487), Compound [1-4]+(C-488), Compound [1-4]+(C-489), Compound [1-4]+(C-490), Compound [1-4]+(C-491), Compound [1-4]+(C-492), Compound [1-4]+(C-493), Compound [1-4]+(C-494), Compound [1-4]+(C-495), Compound [1-4]+(C-496), Compound [1-4]+(C-497), Compound [1-4]+(C-498), Compound [1-4]+(C-499), Compound [1-4]+(C-500), Compound [1-4]+(C-501), Compound [1-4]+(C-502), Compound [1-4]+(C-503), Compound [1-4]+(C-504), Compound [1-4]+(C-505), Compound [1-4]+(C-506), Compound [1-4]+(C-507), Compound [1-4]+(C-508), Compound [1-4]+(C-509), Compound [1-4]+(C-510), Compound [1-4]+(C-511), Compound [1-4]+(C-512), Compound [1-4]+(C-513), Compound [1-4]+(C-514), Compound [1-4]+(C-515), Compound [1-4]+(C-516), Compound [1-4]+(C-517), Compound [1-4]+(C-518), Compound [1-4]+(C-519), Compound [1-4]+(C-520), Compound [1-4]+(C-521), Compound [1-4]+(C-522), Compound [1-4]+(C-523), Compound [1-4]+(C-524), Compound [1-4]+(C-525), Compound [1-4]+(C-526), Compound [1-4]+(C-527), Compound [1-4]+(C-528), Compound [1-4]+(C-529), Compound [1-4]+(C-530), Compound [1-4]+(C-531), Compound [1-4]+(C-532), Compound [1-4]+(C-533), Compound [1-4]+(C-534), Compound [1-4]+(C-535), Compound [1-4]+(C-536), Compound [1-4]+(C-537),

Compound [1-5]+(C-001), Compound [1-5]+(C-002), Compound [1-5]+(C-003), Compound [1-5]+(C-004), Compound [1-5]+(C-005), Compound [1-5]+(C-006), Compound [1-5]+(C-007), Compound [1-5]+(C-008), Compound [1-5]+(C-009), Compound [1-5]+(C-010), Compound [1-5]+(C-011), Compound [1-5]+(C-012), Compound [1-5]+(C-013), Compound [1-5]+(C-014), Compound [1-5]+(C-015), Compound [1-5]+(C-016), Compound [1-5]+(C-017), Compound [1-5]+(C-018), Compound [1-5]+(C-019), Compound [1-5]+(C-020), Compound [1-5]+(C-021), Compound [1-5]+(C-022), Compound [1-5]+(C-023), Compound [1-5]+(C-024), Compound [1-5]+(C-025), Compound [1-5]+(C-026), Compound [1-5]+(C-027), Compound [1-5]+(C-028), Compound [1-5]+(C-029), Compound [1-5]+(C-030), Compound [1-5]+(C-031), Compound [1-5]+(C-032), Compound [1-5]+(C-033), Compound [1-5]+(C-034), Compound [1-5]+(C-035), Compound [1-5]+(C-036), Compound [1-5]+(C-037), Compound [1-5]+(C-038), Compound [1-5]+(C-039), Compound [1-5]+(C-040), Compound [1-5]+(C-041), Compound [1-5]+(C-042), Compound [1-5]+(C-043), Compound [1-5]+(C-044), Compound [1-5]+(C-045), Compound [1-5]+(C-046), Compound [1-5]+(C-047), Compound [1-5]+(C-048), Compound [1-5]+(C-049), Compound [1-5]+(C-050), Compound [1-5]+(C-051), Compound [1-5]+(C-052), Compound [1-5]+(C-053), Compound [1-5]+(C-054), Compound [1-5]+(C-055), Compound [1-5]+(C-056), Compound [1-5]+(C-057), Compound [1-5]+(C-058), Compound [1-5]+(C-059), Compound [1-5]+(C-060), Compound [1-5]+(C-061), Compound [1-5]+(C-062), Compound [1-5]+(C-063), Compound [1-5]+(C-064), Compound [1-5]+(C-065), Compound [1-5]+(C-066), Compound [1-5]+(C-067), Compound [1-5]+(C-068), Compound [1-5]+(C-069), Compound [1-5]+(C-070), Compound [1-5]+(C-071), Compound [1-5]+(C-072), Compound [1-5]+(C-073), Compound [1-5]+(C-074), Compound [1-5]+(C-075), Compound [1-5]+(C-076), Compound [1-5]+(C-077), Compound [1-5]+(C-078), Compound [1-5]+(C-079), Compound [1-5]+(C-080), Compound [1-5]+(C-081), Compound [1-5]+(C-082), Compound [1-5]+(C-083), Compound [1-5]+(C-084), Compound [1-5]+(C-085), Compound [1-5]+(C-086), Compound [1-5]+(C-087), Compound [1-5]+(C-088), Compound [1-5]+(C-089), Compound [1-5]+(C-090), Compound [1-5]+(C-091), Compound [1-5]+(C-092), Compound [1-5]+(C-093), Compound [1-5]+(C-094), Compound [1-5]+(C-095), Compound [1-5]+(C-096), Compound [1-5]+(C-097), Compound [1-5]+(C-098), Compound [1-5]+(C-099), Compound [1-5]+(C-100), Compound [1-5]+(C-101), Compound [1-5]+(C-102), Compound [1-5]+(C-103), Compound [1-5]+(C-104), Compound [1-5]+(C-105), Compound [1-5]+(C-106), Compound [1-5]+(C-107), Compound [1-5]+(C-108), Compound [1-5]+(C-109), Compound [1-5]+(C-110), Compound [1-5]+(C-111), Compound [1-5]+(C-112), Compound [1-5]+(C-113), Compound [1-5]+(C-114), Compound [1-5]+(C-115), Compound [1-5]+(C-116), Compound [1-5]+(C-117), Compound [1-5]+(C-118), Compound [1-5]+(C-119), Compound [1-5]+(C-120), Compound [1-5]+(C-121), Compound [1-5]+(C-122), Compound [1-5]+(C-123), Compound [1-5]+(C-124), Compound [1-5]+(C-125), Compound [1-5]+(C-126), Compound [1-5]+(C-127), Compound [1-5]+(C-128), Compound [1-5]+(C-129), Compound [1-5]+(C-130), Compound [1-5]+(C-131), Compound [1-5]+(C-132), Compound [1-5]+(C-133), Compound [1-5]+(C-134), Compound [1-5]+(C-135), Compound [1-5]+(C-136), Compound [1-5]+(C-137), Compound [1-5]+(C-138), Compound [1-5]+(C-139), Compound [1-5]+(C-140), Compound [1-5]+(C-141), Compound [1-5]+(C-142), Compound [1-5]+(C-143), Compound [1-5]+(C-144), Compound [1-5]+(C-145), Compound [1-5]+(C-146), Compound [1-5]+(C-147), Compound [1-5]+(C-148), Compound [1-5]+(C-149), Compound [1-5]+(C-150), Compound [1-5]+(C-151), Compound [1-5]+(C-152), Compound [1-5]+(C-153), Compound [1-5]+(C-154), Compound [1-5]+(C-155), Compound [1-5]+(C-156), Compound [1-5]+(C-157), Compound [1-5]+(C-158), Compound [1-5]+(C-159), Compound [1-5]+(C-160), Compound [1-5]+(C-161), Compound [1-5]+(C-162), Compound [1-5]+(C-163), Compound [1-5]+(C-164), Compound [1-5]+(C-165), Compound [1-5]+(C-166), Compound [1-5]+(C-167), Compound [1-5]+(C-168), Compound [1-5]+(C-169), Compound [1-5]+(C-170), Compound [1-5]+(C-171), Compound [1-5]+(C-172), Compound [1-5]+(C-173), Compound [1-5]+(C-174), Compound [1-5]+(C-175), Compound [1-5]+(C-176), Compound [1-5]+(C-177), Compound [1-5]+(C-178), Compound [1-5]+(C-179), Compound [1-5]+(C-180), Compound [1-5]+(C-181), Compound [1-5]+(C-182), Compound [1-5]+(C-183), Compound [1-5]+(C-184), Compound [1-5]+(C-185), Compound [1-5]+(C-186), Compound [1-5]+(C-187), Compound [1-5]+(C-188), Compound [1-5]+(C-189), Compound [1-5]+(C-190), Compound [1-5]+(C-191), Compound [1-5]+(C-192), Compound [1-5]+(C-193), Compound [1-5]+(C-194), Compound [1-5]+(C-195), Compound [1-5]+(C-196), Compound [1-5]+(C-197), Compound [1-5]+(C-198), Compound [1-5]+(C-199), Compound [1-5]+(C-200), Compound [1-5]+(C-201), Compound [1-5]+(C-202), Compound [1-5]+(C-203), Compound [1-5]+(C-204), Compound [1-5]+(C-205), Compound [1-5]+(C-206), Compound [1-5]+(C-207), Compound [1-5]+(C-208), Compound [1-5]+(C-209), Compound [1-5]+(C-210), Compound [1-5]+(C-211), Compound [1-5]+(C-212), Compound [1-5]+(C-213), Compound [1-5]+(C-214), Compound [1-5]+(C-215), Compound [1-5]+(C-216), Compound [1-5]+(C-217), Compound [1-5]+(C-218), Compound [1-5]+(C-219), Compound [1-5]+(C-220), Compound [1-5]+(C-221), Compound [1-5]+(C-222), Compound [1-5]+(C-223), Compound [1-5]+(C-224), Compound [1-5]+(C-225), Compound [1-5]+(C-226), Compound [1-5]+(C-227), Compound [1-5]+(C-228), Compound [1-5]+(C-229), Compound [1-5]+(C-230), Compound [1-5]+(C-231), Compound [1-5]+(C-232), Compound [1-5]+(C-233), Compound [1-5]+(C-234), Compound [1-5]+(C-235), Compound [1-5]+(C-236), Compound [1-5]+(C-237), Compound [1-5]+(C-238), Compound [1-5]+(C-239), Compound [1-5]+(C-240), Compound [1-5]+(C-241), Compound [1-5]+(C-242), Compound [1-5]+(C-243), Compound [1-5]+(C-244), Compound [1-5]+(C-245), Compound [1-5]+(C-246), Compound [1-5]+(C-247), Compound [1-5]+(C-248), Compound [1-5]+(C-249), Compound [1-5]+(C-250), Compound [1-5]+(C-251), Compound [1-5]+(C-252), Compound [1-5]+(C-253), Compound [1-5]+(C-254), Compound [1-5]+(C-255), Compound [1-5]+(C-256), Compound [1-5]+(C-257), Compound [1-5]+(C-258), Compound [1-5]+(C-259), Compound [1-5]+(C-260), Compound [1-5]+(C-261), Compound [1-5]+(C-262), Compound [1-5]+(C-263), Compound [1-5]+(C-264), Compound [1-5]+(C-265), Compound [1-5]+(C-266), Compound [1-5]+(C-267), Compound [1-5]+(C-268), Compound [1-5]+(C-269), Compound [1-5]+(C-270), Compound [1-5]+(C-271), Compound [1-5]+(C-272), Compound [1-5]+(C-273), Compound [1-5]+(C-274), Compound [1-5]+(C-275), Compound [1-5]+(C-276), Compound [1-5]+(C-277), Compound [1-5]+(C-278), Compound [1-5]+(C-279), Compound [1-5]+(C-280), Compound [1-5]+(C-281), Compound [1-5]+(C-282), Compound [1-5]+(C-283), Compound [1-5]+(C-284), Compound [1-5]+(C-285), Compound [1-5]+(C-286), Compound [1-5]+(C-287), Compound [1-5]+(C-288), Compound [1-5]+(C-289), Compound [1-5]+(C-290), Compound [1-5]+(C-291), Compound [1-5]+(C-292), Compound [1-5]+(C-293), Compound [1-5]+(C-294), Compound [1-5]+(C-295), Compound [1-5]+(C-296), Compound [1-5]+(C-297), Compound [1-5]+(C-298), Compound [1-5]+(C-299), Compound [1-5]+(C-300), Compound [1-5]+(C-301), Compound [1-5]+(C-302), Compound [1-5]+(C-303), Compound [1-5]+(C-304), Compound [1-5]+(C-305), Compound [1-5]+(C-306), Compound [1-5]+(C-307), Compound [1-5]+(C-308), Compound [1-5]+(C-309), Compound [1-5]+(C-310), Compound [1-5]+(C-311), Compound [1-5]+(C-312), Compound [1-5]+(C-313), Compound [1-5]+(C-314), Compound [1-5]+(C-315), Compound [1-5]+(C-316), Compound [1-5]+(C-317), Compound [1-5]+(C-318), Compound [1-5]+(C-319), Compound [1-5]+(C-320), Compound [1-5]+(C-321), Compound [1-5]+(C-322), Compound [1-5]+(C-323), Compound [1-5]+(C-324), Compound [1-5]+(C-325), Compound [1-5]+(C-326), Compound [1-5]+(C-327), Compound [1-5]+(C-328), Compound [1-5]+(C-329), Compound [1-5]+(C-330), Compound [1-5]+(C-331), Compound [1-5]+(C-332), Compound [1-5]+(C-333), Compound [1-5]+(C-334), Compound [1-5]+(C-335), Compound [1-5]+(C-336), Compound [1-5]+(C-337), Compound [1-5]+(C-338), Compound [1-5]+(C-339), Compound [1-5]+(C-340), Compound [1-5]+(C-341), Compound [1-5]+(C-342), Compound [1-5]+(C-343), Compound [1-5]+(C-344), Compound [1-5]+(C-345), Compound [1-5]+(C-346), Compound [1-5]+(C-347), Compound [1-5]+(C-348), Compound [1-5]+(C-349), Compound [1-5]+(C-350), Compound [1-5]+(C-351), Compound [1-5]+(C-352), Compound [1-5]+(C-353), Compound [1-5]+(C-354), Compound [1-5]+(C-355), Compound [1-5]+(C-356), Compound [1-5]+(C-357), Compound [1-5]+(C-358), Compound [1-5]+(C-359), Compound [1-5]+(C-360), Compound [1-5]+(C-361), Compound [1-5]+(C-362), Compound [1-5]+(C-363), Compound [1-5]+(C-364), Compound [1-5]+(C-365), Compound [1-5]+(C-366), Compound [1-5]+(C-367), Compound [1-5]+(C-368), Compound [1-5]+(C-369), Compound [1-5]+(C-370), Compound [1-5]+(C-371), Compound [1-5]+(C-372), Compound [1-5]+(C-373), Compound [1-5]+(C-374), Compound [1-5]+(C-375), Compound [1-5]+(C-376), Compound [1-5]+(C-377), Compound [1-5]+(C-378), Compound [1-5]+(C-379), Compound [1-5]+(C-380), Compound [1-5]+(C-381), Compound [1-5]+(C-382), Compound [1-5]+(C-383), Compound [1-5]+(C-384), Compound [1-5]+(C-385), Compound [1-5]+(C-386), Compound [1-5]+(C-387), Compound [1-5]+(C-388), Compound [1-5]+(C-389), Compound [1-5]+(C-390), Compound [1-5]+(C-391), Compound [1-5]+(C-392), Compound [1-5]+(C-393), Compound [1-5]+(C-394), Compound [1-5]+(C-395), Compound [1-5]+(C-396), Compound [1-5]+(C-397), Compound [1-5]+(C-398), Compound [1-5]+(C-399), Compound [1-5]+(C-400), Compound [1-5]+(C-401), Compound [1-5]+(C-402), Compound [1-5]+(C-403), Compound [1-5]+(C-404), Compound [1-5]+(C-405), Compound [1-5]+(C-406), Compound [1-5]+(C-407), Compound [1-5]+(C-408), Compound [1-5]+(C-409), Compound [1-5]+(C-410), Compound [1-5]+(C-411), Compound [1-5]+(C-412), Compound [1-5]+(C-413), Compound [1-5]+(C-414), Compound [1-5]+(C-415), Compound [1-5]+(C-416), Compound [1-5]+(C-417), Compound [1-5]+(C-418), Compound [1-5]+(C-419), Compound [1-5]+(C-420), Compound [1-5]+(C-421), Compound [1-5]+(C-422), Compound [1-5]+(C-423), Compound [1-5]+(C-424), Compound [1-5]+(C-425), Compound [1-5]+(C-426), Compound [1-5]+(C-427), Compound [1-5]+(C-428), Compound [1-5]+(C-429), Compound [1-5]+(C-430), Compound [1-5]+(C-431), Compound [1-5]+(C-432), Compound [1-5]+(C-433), Compound [1-5]+(C-434), Compound [1-5]+(C-435), Compound [1-5]+(C-436), Compound [1-5]+(C-437), Compound [1-5]+(C-438), Compound [1-5]+(C-439), Compound [1-5]+(C-440), Compound [1-5]+(C-441), Compound [1-5]+(C-442), Compound [1-5]+(C-443), Compound [1-5]+(C-444), Compound [1-5]+(C-445), Compound [1-5]+(C-446), Compound [1-5]+(C-447), Compound [1-5]+(C-448), Compound [1-5]+(C-449), Compound [1-5]+(C-450), Compound [1-5]+(C-451), Compound [1-5]+(C-452), Compound [1-5]+(C-453), Compound [1-5]+(C-454), Compound [1-5]+(C-455), Compound [1-5]+(C-456), Compound [1-5]+(C-457), Compound [1-5]+(C-458), Compound [1-5]+(C-459), Compound [1-5]+(C-460), Compound [1-5]+(C-461), Compound [1-5]+(C-462), Compound [1-5]+(C-463), Compound [1-5]+(C-464), Compound [1-5]+(C-465), Compound [1-5]+(C-466), Compound [1-5]+(C-467), Compound [1-5]+(C-468), Compound [1-5]+(C-469), Compound [1-5]+(C-470), Compound [1-5]+(C-471), Compound [1-5]+(C-472), Compound [1-5]+(C-473), Compound [1-5]+(C-474), Compound [1-5]+(C-475), Compound [1-5]+(C-476), Compound [1-5]+(C-477), Compound [1-5]+(C-478), Compound [1-5]+(C-479), Compound [1-5]+(C-480), Compound [1-5]+(C-481), Compound [1-5]+(C-482), Compound [1-5]+(C-483), Compound [1-5]+(C-484), Compound [1-5]+(C-485), Compound [1-5]+(C-486), Compound [1-5]+(C-487), Compound [1-5]+(C-488), Compound [1-5]+(C-489), Compound [1-5]+(C-490), Compound [1-5]+(C-491), Compound [1-5]+(C-492), Compound [1-5]+(C-493), Compound [1-5]+(C-494), Compound [1-5]+(C-495), Compound [1-5]+(C-496), Compound [1-5]+(C-497), Compound [1-5]+(C-498), Compound [1-5]+(C-499), Compound [1-5]+(C-500), Compound [1-5]+(C-501), Compound [1-5]+(C-502), Compound [1-5]+(C-503), Compound [1-5]+(C-504), Compound [1-5]+(C-505), Compound [1-5]+(C-506), Compound [1-5]+(C-507), Compound [1-5]+(C-508), Compound [1-5]+(C-509), Compound [1-5]+(C-510), Compound [1-5]+(C-511), Compound [1-5]+(C-512), Compound [1-5]+(C-513), Compound [1-5]+(C-514), Compound [1-5]+(C-515), Compound [1-5]+(C-516), Compound [1-5]+(C-517), Compound [1-5]+(C-518), Compound [1-5]+(C-519), Compound [1-5]+(C-520), Compound [1-5]+(C-521), Compound [1-5]+(C-522), Compound [1-5]+(C-523), Compound [1-5]+(C-524), Compound [1-5]+(C-525), Compound [1-5]+(C-526), Compound [1-5]+(C-527), Compound [1-5]+(C-528), Compound [1-5]+(C-529), Compound [1-5]+(C-530), Compound [1-5]+(C-531), Compound [1-5]+(C-532), Compound [1-5]+(C-533), Compound [1-5]+(C-534), Compound [1-5]+(C-535), Compound [1-5]+(C-536), Compound [1-5]+(C-537),

Compound [1-6]+(C-001), Compound [1-6]+(C-002), Compound [1-6]+(C-003), Compound [1-6]+(C-004), Compound [1-6]+(C-005), Compound [1-6]+(C-006), Compound [1-6]+(C-007), Compound [1-6]+(C-008), Compound [1-6]+(C-009), Compound [1-6]+(C-010), Compound [1-6]+(C-011), Compound [1-6]+(C-012), Compound [1-6]+(C-013), Compound [1-6]+(C-014), Compound [1-6]+(C-015), Compound [1-6]+(C-016), Compound [1-6]+(C-017), Compound [1-6]+(C-018), Compound [1-6]+(C-019), Compound [1-6]+(C-020), Compound [1-6]+(C-021), Compound [1-6]+(C-022), Compound [1-6]+(C-023), Compound [1-6]+(C-024), Compound [1-6]+(C-025), Compound [1-6]+(C-026), Compound [1-6]+(C-027), Compound [1-6]+(C-028), Compound [1-6]+(C-029), Compound [1-6]+(C-030), Compound [1-6]+(C-031), Compound [1-6]+(C-032), Compound [1-6]+(C-033), Compound [1-6]+(C-034), Compound [1-6]+(C-035), Compound [1-6]+(C-036), Compound [1-6]+(C-037), Compound [1-6]+(C-038), Compound [1-6]+(C-039), Compound [1-6]+(C-040), Compound [1-6]+(C-041), Compound [1-6]+(C-042), Compound [1-6]+(C-043), Compound [1-6]+(C-044), Compound [1-6]+(C-045), Compound [1-6]+(C-046), Compound [1-6]+(C-047), Compound [1-6]+(C-048), Compound [1-6]+(C-049), Compound [1-6]+(C-050), Compound [1-6]+(C-051), Compound [1-6]+(C-052), Compound [1-6]+(C-053), Compound [1-6]+(C-054), Compound [1-6]+(C-055), Compound [1-6]+(C-056), Compound [1-6]+(C-057), Compound [1-6] + (C-058), Compound [1-6]+(C-059), Compound [1-6]+(C-060), Compound [1-6]+(C-061), Compound [1-6]+(C-062), Compound [1-6]+(C-063), Compound [1-6]+(C-064), Compound [1-6]+(C-065), Compound [1-6]+(C-066), Compound [1-6]+(C-067), Compound [1-6]+(C-068), Compound [1-6]+(C-069), Compound [1-6]+(C-070), Compound [1-6]+(C-071), Compound [1-6]+(C-072), Compound [1-6]+(C-073), Compound [1-6]+(C-074), Compound [1-6]+(C-075), Compound [1-6]+(C-076), Compound [1-6]+(C-077), Compound [1-6]+(C-078), Compound [1-6]+(C-079), Compound [1-6]+(C-080), Compound [1-6]+(C-081), Compound [1-6]+(C-082), Compound [1-6]+(C-083), Compound [1-6]+(C-084), Compound [1-6]+(C-085), Compound [1-6]+(C-086), Compound [1-6]+(C-087), Compound [1-6]+(C-088), Compound [1-6]+(C-089), Compound [1-6]+(C-090), Compound [1-6]+(C-091), Compound [1-6]+(C-092), Compound [1-6]+(C-093), Compound [1-6]+(C-094), Compound [1-6]+(C-095), Compound [1-6]+(C-096), Compound [1-6]+(C-097), Compound [1-6]+(C-098), Compound [1-6]+(C-099), Compound [1-6]+(C-100), Compound [1-6]+(C-101), Compound [1-6]+(C-102), Compound [1-6]+(C-103), Compound [1-6]+(C-104), Compound [1-6]+(C-105), Compound [1-6]+(C-106), Compound [1-6]+(C-107), Compound [1-6]+(C-108), Compound [1-6]+(C-109), Compound [1-6]+(C-110), Compound [1-6]+(C-111), Compound [1-6]+(C-112), Compound [1-6]+(C-113), Compound [1-6]+(C-114), Compound [1-6]+(C-115), Compound [1-6]+(C-116), Compound [1-6]+(C-117), Compound [1-6]+(C-118), Compound [1-6]+(C-119), Compound [1-6]+(C-120), Compound [1-6]+(C-121), Compound [1-6]+(C-122), Compound [1-6]+(C-123), Compound [1-6]+(C-124), Compound [1-6]+(C-125), Compound [1-6]+(C-126), Compound [1-6]+(C-127), Compound [1-6]+(C-128), Compound [1-6]+(C-129), Compound [1-6]+(C-130), Compound [1-6]+(C-131), Compound [1-6]+(C-132), Compound [1-6]+(C-133), Compound [1-6]+(C-134), Compound [1-6]+(C-135), Compound [1-6]+(C-136),

Compound [1-6]+(C-137), Compound [1-6]+(C-138), Compound [1-6]+(C-139), Compound [1-6]+(C-140), Compound [1-6]+(C-141), Compound [1-6]+(C-142), Compound [1-6]+(C-143), Compound [1-6]+(C-144), Compound [1-6]+(C-145), Compound [1-6]+(C-146), Compound [1-6]+(C-147), Compound [1-6]+(C-148), Compound [1-6]+(C-149), Compound [1-6]+(C-150), Compound [1-6]+(C-151), Compound [1-6]+(C-152), Compound [1-6]+(C-153), Compound [1-6]+(C-154), Compound [1-6]+(C-155), Compound [1-6]+(C-156), Compound [1-6]+(C-157), Compound [1-6]+(C-158), Compound [1-6]+(C-159), Compound [1-6]+(C-160), Compound [1-6]+(C-161), Compound [1-6]+(C-162), Compound [1-6]+(C-163), Compound [1-6]+(C-164), Compound [1-6]+(C-165), Compound [1-6]+(C-166), Compound [1-6]+(C-167), Compound [1-6]+(C-168), Compound [1-6]+(C-169), Compound [1-6]+(C-170), Compound [1-6]+(C-171), Compound [1-6]+(C-172), Compound [1-6]+(C-173), Compound [1-6]+(C-174), Compound [1-6]+(C-175), Compound [1-6]+(C-176), Compound [1-6]+(C-177), Compound [1-6]+(C-178), Compound [1-6]+(C-179), Compound [1-6]+(C-180), Compound [1-6]+(C-181), Compound [1-6]+(C-182), Compound [1-6]+(C-183), Compound [1-6]+(C-184), Compound [1-6]+(C-185), Compound [1-6]+(C-186), Compound [1-6]+(C-187), Compound [1-6]+(C-188), Compound [1-6]+(C-189), Compound [1-6]+(C-190), Compound [1-6]+(C-191), Compound [1-6]+(C-192), Compound [1-6]+(C-193), Compound [1-6]+(C-194), Compound [1-6]+(C-195), Compound [1-6]+(C-196), Compound [1-6]+(C-197), Compound [1-6]+(C-198), Compound [1-6]+(C-199), Compound [1-6]+(C-200), Compound [1-6]+(C-201), Compound [1-6]+(C-202), Compound [1-6]+(C-203), Compound [1-6]+(C-204), Compound [1-6]+(C-205), Compound [1-6]+(C-206), Compound [1-6]+(C-207), Compound [1-6]+(C-208), Compound [1-6]+(C-209), Compound [1-6]+(C-210), Compound [1-6]+(C-211), Compound [1-6]+(C-212), Compound [1-6]+(C-213), Compound [1-6]+(C-214), Compound [1-6]+(C-215), Compound [1-6]+(C-216), Compound [1-6]+(C-217), Compound [1-6]+(C-218), Compound [1-6]+(C-219), Compound [1-6]+(C-220), Compound [1-6]+(C-221), Compound [1-6]+(C-222), Compound [1-6]+(C-223), Compound [1-6]+(C-224), Compound [1-6]+(C-225), Compound [1-6]+(C-226), Compound [1-6]+(C-227), Compound [1-6]+(C-228), Compound [1-6]+(C-229), Compound [1-6]+(C-230), Compound [1-6]+(C-231), Compound [1-6]+(C-232), Compound [1-6]+(C-233), Compound [1-6]+(C-234), Compound [1-6]+(C-235), Compound [1-6]+(C-236), Compound [1-6]+(C-237), Compound [1-6]+(C-238), Compound [1-6]+(C-239), Compound [1-6]+(C-240), Compound [1-6]+(C-241), Compound [1-6]+(C-242), Compound [1-6]+(C-243), Compound [1-6]+(C-244), Compound [1-6]+(C-245), Compound [1-6]+(C-246), Compound [1-6]+(C-247), Compound [1-6]+(C-248), Compound [1-6]+(C-249), Compound [1-6]+(C-250), Compound [1-6]+(C-251), Compound [1-6]+(C-252), Compound [1-6]+(C-253), Compound [1-6]+(C-254), Compound [1-6]+(C-255), Compound [1-6]+(C-256), Compound [1-6]+(C-257), Compound [1-6]+(C-258), Compound [1-6]+(C-259), Compound [1-6]+(C-260), Compound [1-6]+(C-261), Compound [1-6]+(C-262), Compound [1-6]+(C-263), Compound [1-6]+(C-264), Compound [1-6]+(C-265), Compound [1-6]+(C-266), Compound [1-6]+(C-267), Compound [1-6]+(C-268), Compound [1-6]+(C-269), Compound [1-6]+(C-270), Compound [1-6]+(C-271), Compound [1-6]+(C-272), Compound [1-6]+(C-273), Compound [1-6]+(C-274), Compound [1-6]+(C-275), Compound [1-6]+(C-276), Compound [1-6]+(C-277), Compound [1-6]+(C-278), Compound [1-6]+(C-279), Compound [1-6]+(C-280), Compound [1-6]+(C-281), Compound [1-6]+(C-282), Compound [1-6]+(C-283), Compound [1-6]+(C-284), Compound [1-6]+(C-285), Compound [1-6]+(C-286), Compound [1-6]+(C-287), Compound [1-6]+(C-288), Compound [1-6]+(C-289), Compound [1-6]+(C-290), Compound [1-6]+(C-291), Compound [1-6]+(C-292), Compound [1-6]+(C-293), Compound [1-6]+(C-294), Compound [1-6]+(C-295), Compound [1-6]+(C-296), Compound [1-6]+(C-297), Compound [1-6]+(C-298), Compound [1-6]+(C-299), Compound [1-6]+(C-300), Compound [1-6]+(C-301), Compound [1-6]+(C-302), Compound [1-6]+(C-303), Compound [1-6]+(C-304), Compound [1-6]+(C-305), Compound [1-6]+(C-306), Compound [1-6]+(C-307), Compound [1-6]+(C-308), Compound [1-6]+(C-309), Compound [1-6]+(C-310), Compound [1-6]+(C-311), Compound [1-6]+(C-312), Compound [1-6]+(C-313), Compound [1-6]+(C-314), Compound [1-6]+(C-315), Compound [1-6]+(C-316), Compound [1-6]+(C-317), Compound [1-6]+(C-318), Compound [1-6]+(C-319), Compound [1-6]+(C-320), Compound [1-6]+(C-321), Compound [1-6]+(C-322), Compound [1-6]+(C-323), Compound [1-6]+(C-324), Compound [1-6]+(C-325), Compound [1-6]+(C-326), Compound [1-6]+(C-327), Compound [1-6]+(C-328), Compound [1-6]+(C-329), Compound [1-6]+(C-330), Compound [1-6]+(C-331), Compound [1-6]+(C-332), Compound [1-6]+(C-333), Compound [1-6]+(C-334), Compound [1-6]+(C-335), Compound [1-6]+(C-336), Compound [1-6]+(C-337), Compound [1-6]+(C-338), Compound [1-6]+(C-339), Compound [1-6]+(C-340), Compound [1-6]+(C-341), Compound [1-6]+(C-342), Compound [1-6]+(C-343), Compound [1-6]+(C-344), Compound [1-6]+(C-345), Compound [1-6]+(C-346), Compound [1-6]+(C-347), Compound [1-6]+(C-348), Compound [1-6]+(C-349), Compound [1-6]+(C-350), Compound [1-6]+(C-351), Compound [1-6]+(C-352), Compound [1-6]+(C-353), Compound [1-6]+(C-354), Compound [1-6]+(C-355), Compound [1-6]+(C-356), Compound [1-6]+(C-357), Compound [1-6]+(C-358), Compound [1-6]+(C-359), Compound [1-6]+(C-360), Compound [1-6]+(C-361), Compound [1-6]+(C-362), Compound [1-6]+(C-363), Compound [1-6]+(C-364), Compound [1-6]+(C-365), Compound [1-6]+(C-366), Compound [1-6]+(C-367), Compound [1-6]+(C-368), Compound [1-6]+(C-369), Compound [1-6]+(C-370), Compound [1-6]+(C-371), Compound [1-6]+(C-372), Compound [1-6]+(C-373), Compound [1-6]+(C-374), Compound [1-6]+(C-375), Compound [1-6]+(C-376), Compound [1-6]+(C-377), Compound [1-6]+(C-378), Compound [1-6]+(C-379), Compound [1-6]+(C-380), Compound [1-6]+(C-381), Compound [1-6]+(C-382), Compound

[1-6]+(C-383), Compound [1-6]+(C-384), Compound [1-6]+(C-385), Compound [1-6]+(C-386), Compound [1-6]+(C-387), Compound [1-6]+(C-388), Compound [1-6]+(C-389), Compound [1-6]+(C-390), Compound [1-6]+(C-391), Compound [1-6]+(C-392), Compound [1-6]+(C-393), Compound [1-6]+(C-394), Compound [1-6]+(C-395), Compound [1-6]+(C-396), Compound [1-6]+(C-397), Compound [1-6]+(C-398), Compound [1-6]+(C-399), Compound [1-6]+(C-400), Compound [1-6]+(C-401), Compound [1-6]+(C-402), Compound [1-6]+(C-403), Compound [1-6]+(C-404), Compound [1-6]+(C-405), Compound [1-6]+(C-406), Compound [1-6]+(C-407), Compound [1-6]+(C-408), Compound [1-6]+(C-409), Compound [1-6]+(C-410), Compound [1-6]+(C-411), Compound [1-6]+(C-412), Compound [1-6]+(C-413), Compound [1-6]+(C-414), Compound [1-6]+(C-415), Compound [1-6]+(C-416), Compound [1-6]+(C-417), Compound [1-6]+(C-418), Compound [1-6]+(C-419), Compound [1-6]+(C-420), Compound [1-6]+(C-421), Compound [1-6]+(C-422), Compound [1-6]+(C-423), Compound [1-6]+(C-424), Compound [1-6]+(C-425), Compound [1-6]+(C-426), Compound [1-6]+(C-427), Compound [1-6]+(C-428), Compound [1-6]+(C-429), Compound [1-6]+(C-430), Compound [1-6]+(C-431), Compound [1-6]+(C-432), Compound [1-6]+(C-433), Compound [1-6]+(C-434), Compound [1-6]+(C-435), Compound [1-6]+(C-436), Compound [1-6]+(C-437), Compound [1-6]+(C-438), Compound [1-6]+(C-439), Compound [1-6]+(C-440), Compound [1-6]+(C-441), Compound [1-6]+(C-442), Compound [1-6]+(C-443), Compound [1-6]+(C-444), Compound [1-6]+(C-445), Compound [1-6]+(C-446), Compound [1-6]+(C-447), Compound [1-6]+(C-448), Compound [1-6]+(C-449), Compound [1-6]+(C-450), Compound [1-6]+(C-451), Compound [1-6]+(C-452), Compound [1-6]+(C-453), Compound [1-6]+(C-454), Compound [1-6]+(C-455), Compound [1-6]+(C-456), Compound [1-6]+(C-457), Compound [1-6]+(C-458), Compound [1-6]+(C-459), Compound [1-6]+(C-460), Compound [1-6]+(C-461), Compound [1-6]+(C-462), Compound [1-6]+(C-463), Compound [1-6]+(C-464), Compound [1-6]+(C-465), Compound [1-6]+(C-466), Compound [1-6]+(C-467), Compound [1-6]+(C-468), Compound [1-6]+(C-469), Compound [1-6]+(C-470), Compound [1-6]+(C-471), Compound [1-6]+(C-472), Compound [1-6]+(C-473), Compound [1-6]+(C-474), Compound [1-6]+(C-475), Compound [1-6]+(C-476), Compound [1-6]+(C-477), Compound [1-6]+(C-478), Compound [1-6]+(C-479), Compound [1-6]+(C-480), Compound [1-6]+(C-481), Compound [1-6]+(C-482), Compound [1-6]+(C-483), Compound [1-6]+(C-484), Compound [1-6]+(C-485), Compound [1-6]+(C-486), Compound [1-6]+(C-487), Compound [1-6]+(C-488), Compound [1-6]+(C-489), Compound [1-6]+(C-490), Compound [1-6]+(C-491), Compound [1-6]+(C-492), Compound [1-6]+(C-493), Compound [1-6]+(C-494), Compound [1-6]+(C-495), Compound [1-6]+(C-496), Compound [1-6]+(C-497), Compound [1-6]+(C-498), Compound [1-6]+(C-499), Compound [1-6]+(C-500), Compound [1-6]+(C-501), Compound [1-6]+(C-502), Compound [1-6]+(C-503), Compound [1-6]+(C-504), Compound [1-6]+(C-505), Compound [1-6]+(C-506), Compound [1-6]+(C-507), Compound [1-6]+(C-508), Compound [1-6]+(C-509), Compound [1-6]+(C-510), Compound [1-6]+(C-511), Compound [1-6]+(C-512), Compound [1-6]+(C-513), Compound [1-6]+(C-514), Compound [1-6]+(C-515), Compound [1-6]+(C-516), Compound [1-6]+(C-517), Compound [1-6]+(C-513), Compound [1-6]+(C-519), Compound [1-6]+(C-520), Compound [1-6]+(C-521), Compound [1-6]+(C-522), Compound [1-6]+(C-523), Compound [1-6]+(C-524), Compound [1-6]+(C-525), Compound [1-6]+(C-526), Compound [1-6]+(C-527), Compound [1-6]+(C-528), Compound [1-6]+(C-529), Compound [1-6]+(C-530), Compound [1-6]+(C-531), Compound [1-6]+(C-532), Compound [1-6]+(C-533), Compound [1-6]+(C-534), Compound [1-6]+(C-535), Compound [1-6]+(C-536), Compound [1-6]+(C-537),

Compound [1-7]+(C-001), Compound [1-7]+(C-002), Compound [1-7]+(C-003), Compound [1-7]+(C-004), Compound [1-7]+(C-005), Compound [1-7]+(C-006), Compound [1-7]+(C-007), Compound [1-7]+(C-008), Compound [1-7]+(C-009), Compound [1-7]+(C-010), Compound [1-7]+(C-011), Compound [1-7]+(C-012), Compound [1-7]+(C-013), Compound [1-7]+(C-014), Compound [1-7]+(C-015), Compound [1-7]+(C-016), Compound [1-7]+(C-017), Compound [1-7]+(C-018), Compound [1-7]+(C-019), Compound [1-7]+(C-020), Compound [1-7]+(C-021), Compound [1-7]+(C-022), Compound [1-7]+(C-023), Compound [1-7]+(C-024), Compound [1-7]+(C-025), Compound [1-7]+(C-026), Compound [1-7]+(C-027), Compound [1-7]+(C-028), Compound [1-7]+(C-029), Compound [1-7]+(C-030), Compound [1-7]+(C-031), Compound [1-7]+(C-032), Compound [1-7]+(C-033), Compound [1-7]+(C-034), Compound [1-7]+(C-035), Compound [1-7]+(C-036), Compound [1-7]+(C-037), Compound [1-7]+(C-038), Compound [1-7]+(C-039), Compound [1-7]+(C-040), Compound [1-7]+(C-041), Compound [1-7]+(C-042), Compound [1-7]+(C-043), Compound [1-7]+(C-044), Compound [1-7]+(C-045), Compound [1-7]+(C-046), Compound [1-7]+(C-047), Compound [1-7]+(C-048), Compound [1-7]+(C-049), Compound [1-7]+(C-050), Compound [1-7]+(C-051), Compound [1-7]+(C-052), Compound [1-7]+(C-053), Compound [1-7]+(C-054), Compound [1-7]+(C-055), Compound [1-7]+(C-056), Compound [1-7]+(C-057), Compound [1-7]+(C-058), Compound [1-7]+(C-059), Compound [1-7]+(C-060), Compound [1-7]+(C-061), Compound [1-7]+(C-062), Compound [1-7]+(C-063), Compound [1-7]+(C-064), Compound [1-7]+(C-065), Compound [1-7]+(C-066), Compound [1-7]+(C-067), Compound [1-7]+(C-068), Compound [1-7]+(C-069), Compound [1-7]+(C-070), Compound [1-7]+(C-071), Compound [1-7]+(C-072), Compound [1-7]+(C-073), Compound [1-7]+(C-074), Compound [1-7]+(C-075), Compound [1-7]+(C-076), Compound [1-7]+(C-077), Compound [1-7]+(C-078), Compound [1-7]+(C-079), Compound [1-7]+(C-080), Compound [1-7]+(C-081), Compound [1-7]+(C-082), Compound [1-7]+(C-083), Compound [1-7]+(C-084), Compound [1-7]+(C-085), Compound [1-7]+(C-086), Compound [1-7]+(C-087), Compound [1-7]+(C-088), Compound [1-7]+(C-089), Compound [1-7]+(C-090), Compound [1-7]+(C-091), Compound [1-7]+(C-092), Compound [1-7]+(C-093), Compound [1-7]+(C-094), Compound [1-7]+(C-095), Compound [1-7]+(C-096), Compound [1-7]+(C-097), Compound [1-7]+(C-098), Compound [1-7]+(C-099), Compound [1-7]+(C-100), Compound [1-7]+(C-101), Compound [1-7]+(C-102), Compound [1-7]+(C-103), Compound [1-7]+(C-104), Compound [1-7]+(C-105), Compound [1-7]+(C-106), Compound [1-7]+(C-107), Compound [1-7]+(C-108), Compound [1-7]+(C-109), Compound [1-7]+(C-110), Compound [1-7]+(C-111), Compound [1-7]+(C-112), Compound [1-7]+(C-113), Compound [1-7]+(C-114), Compound [1-7]+(C-115), Compound [1-7]+(C-116), Compound [1-7]+(C-117), Compound [1-7]+(C-118), Compound [1-7]+(C-119), Compound [1-7]+(C-120), Compound [1-7]+(C-121), Compound [1-7]+(C-122), Compound [1-7]+(C-123), Compound [1-7]+(C-124), Compound [1-7]+(C-125), Compound [1-7]+(C-126), Compound [1-7]+(C-127), Compound [1-7]+(C-128), Compound [1-7]+(C-129), Compound [1-7]+(C-130), Compound [1-7]+(C-131), Compound [1-7]+(C-132), Compound [1-7]+(C-133), Compound [1-7]+(C-134), Compound [1-7]+(C-135), Compound [1-7]+(C-136), Compound [1-7]+(C-137), Compound [1-7]+(C-138), Compound [1-7]+(C-139), Compound [1-7]+(C-140), Compound [1-7]+(C-141), Compound [1-7]+(C-142), Compound [1-7]+(C-143), Compound [1-7]+(C-144), Compound [1-7]+(C-145), Compound [1-7]+(C-146), Compound [1-7]+(C-147), Compound [1-7]+(C-148), Compound [1-7]+(C-149), Compound [1-7]+(C-150), Compound [1-7]+(C-151), Compound [1-7]+(C-152), Compound [1-7]+(C-153), Compound [1-7]+(C-154), Compound [1-7]+(C-155), Compound [1-7]+(C-156), Compound [1-7]+(C-157), Compound [1-7]+(C-158), Compound [1-7]+(C-159), Compound [1-7]+(C-160), Compound [1-7]+(C-161), Compound [1-7]+(C-162), Compound [1-7]+(C-163), Compound [1-7]+(C-164), Compound [1-7]+(C-165), Compound [1-7]+(C-166), Compound [1-7]+(C-167), Compound [1-7]+(C-168), Compound [1-7]+(C-169), Compound [1-7]+(C-170), Compound [1-7]+(C-171), Compound [1-7]+(C-172), Compound [1-7]+(C-173), Compound [1-7]+(C-174), Compound [1-7]+(C-175), Compound [1-7]+(C-176), Compound [1-7]+(C-177), Compound [1-7]+(C-178), Compound [1-7]+(C-179), Compound [1-7]+(C-180), Compound [1-7]+(C-181), Compound [1-7]+(C-182), Compound [1-7]+(C-183), Compound [1-7]+(C-184), Compound [1-7]+(C-185), Compound [1-7]+(C-186), Compound [1-7]+(C-187), Compound [1-7]+(C-188), Compound [1-7]+(C-189), Compound [1-7]+(C-190), Compound [1-7]+(C-191), Compound [1-7]+(C-192), Compound [1-7]+(C-193), Compound [1-7]+(C-194), Compound [1-7]+(C-195), Compound [1-7]+(C-196), Compound [1-7]+(C-197), Compound [1-7]+(C-198), Compound [1-7]+(C-199), Compound [1-7]+(C-200), Compound [1-7]+(C-201), Compound [1-7]+(C-202), Compound [1-7]+(C-203), Compound [1-7]+(C-204), Compound [1-7]+(C-205), Compound [1-7]+(C-206), Compound [1-7]+(C-207), Compound [1-7]+(C-208), Compound [1-7]+(C-209), Compound [1-7]+(C-210), Compound [1-7]+(C-211), Compound [1-7]+(C-212), Compound [1-7]+(C-213), Compound [1-7]+(C-214), Compound [1-7]+(C-215), Compound [1-7]+(C-216), Compound [1-7]+(C-217), Compound [1-7]+(C-218), Compound [1-7]+(C-219), Compound [1-7]+(C-220), Compound [1-7]+(C-221), Compound [1-7]+(C-222), Compound [1-7]+(C-223), Compound [1-7]+(C-224), Compound [1-7]+(C-225), Compound [1-7]+(C-226), Compound [1-7]+(C-227), Compound [1-7]+(C-228), Compound [1-7]+(C-229), Compound [1-7]+(C-230), Compound [1-7]+(C-231), Compound [1-7]+(C-232), Compound [1-7]+(C-233), Compound [1-7]+(C-234), Compound [1-7]+(C-235), Compound [1-7]+(C-236), Compound [1-7]+(C-237), Compound [1-7]+(C-238), Compound [1-7]+(C-239), Compound [1-7]+(C-240), Compound [1-7]+(C-241), Compound [1-7]+(C-242), Compound [1-7]+(C-243), Compound [1-7]+(C-244), Compound [1-7]+(C-245), Compound [1-7]+(C-246), Compound [1-7]+(C-247), Compound [1-7]+(C-248), Compound [1-7]+(C-249), Compound [1-7]+(C-250), Compound [1-7]+(C-251), Compound [1-7]+(C-252), Compound [1-7]+(C-253), Compound [1-7]+(C-254), Compound [1-7]+(C-255), Compound [1-7]+(C-256), Compound [1-7]+(C-257), Compound [1-7]+(C-258), Compound [1-7]+(C-259), Compound [1-7]+(C-260), Compound [1-7]+(C-261), Compound [1-7]+(C-262), Compound [1-7]+(C-263), Compound [1-7]+(C-264), Compound [1-7]+(C-265), Compound [1-7]+(C-266), Compound [1-7]+(C-267), Compound [1-7]+(C-268), Compound [1-7]+(C-269), Compound [1-7]+(C-270), Compound [1-7]+(C-271), Compound [1-7]+(C-272), Compound [1-7]+(C-273), Compound [1-7]+(C-274), Compound [1-7]+(C-275), Compound [1-7]+(C-276), Compound [1-7]+(C-277), Compound [1-7]+(C-278), Compound [1-7]+(C-279), Compound [1-7]+(C-280), Compound [1-7]+(C-281), Compound [1-7]+(C-282), Compound [1-7]+(C-283), Compound [1-7]+(C-284), Compound [1-7]+(C-285), Compound [1-7]+(C-286), Compound [1-7]+(C-287), Compound [1-7]+(C-288), Compound [1-7]+(C-289), Compound [1-7]+(C-290), Compound [1-7]+(C-291), Compound [1-7]+(C-292), Compound [1-7]+(C-293), Compound [1-7]+(C-294), Compound [1-7]+(C-295), Compound [1-7]+(C-296), Compound [1-7]+(C-297), Compound [1-7]+(C-298), Compound [1-7]+(C-299), Compound [1-7]+(C-300), Compound [1-7]+(C-301), Compound [1-7]+(C-302), Compound [1-7]+(C-303), Compound [1-7]+(C-304), Compound [1-7]+(C-305), Compound [1-7]+(C-306), Compound [1-7]+(C-307), Compound [1-7]+(C-308), Compound [1-7]+(C-309), Compound [1-7]+(C-310), Compound [1-7]+(C-311), Compound [1-7]+(C-312), Compound [1-7]+(C-313), Compound [1-7]+(C-314), Compound [1-7]+(C-315), Compound [1-7]+(C-316), Compound [1-7]+(C-317), Compound [1-7]+(C-318), Compound [1-7]+(C-319), Compound [1-7]+(C-320), Compound [1-7]+(C-321), Compound [1-7]+(C-322), Compound [1-7]+(C-323), Compound [1-7]+(C-324), Compound [1-7]+(C-325), Compound [1-7]+(C-326), Compound [1-7]+(C-327), Compound [1-7]+(C-328), Compound [1-7]+(C-329), Compound [1-7]+(C-330), Compound [1-7]+(C-331), Compound [1-7]+(C-332), Compound [1-7]+(C-333), Compound [1-7]+(C-334), Compound [1-7]+(C-335), Compound [1-7]+(C-336), Compound [1-7]+(C-337), Compound [1-7]+(C-338), Compound [1-7]+(C-339), Compound [1-7]+(C-340), Compound [1-7]+(C-341), Compound [1-7]+(C-342), Compound [1-7]+(C-343), Compound [1-7]+(C-344), Compound [1-7]+(C-345), Compound [1-7]+(C-346), Compound [1-7]+(C-347), Compound [1-7]+(C-348), Compound [1-7]+(C-349), Compound [1-7]+(C-350), Compound [1-7]+(C-351), Compound [1-7]+(C-352), Compound [1-7]+(C-353), Compound [1-7]+(C-354), Compound [1-7]+(C-355), Compound [1-7]+(C-356), Compound [1-7]+(C-357), Compound [1-7]+(C-358), Compound [1-7]+(C-359), Compound [1-7]+(C-360), Compound [1-7]+(C-361), Compound [1-7]+(C-362), Compound [1-7]+(C-363), Compound [1-7]+(C-364), Compound [1-7]+(C-365), Compound [1-7]+(C-366), Compound [1-7]+(C-367), Compound [1-7]+(C-368), Compound [1-7]+(C-369), Compound [1-7]+(C-370), Compound [1-7]+(C-371), Compound [1-7]+(C-372), Compound [1-7]+(C-373), Compound [1-7]+(C-374), Compound [1-7]+(C-375), Compound [1-7]+(C-376), Compound [1-7]+(C-377), Compound [1-7]+(C-378), Compound [1-7]+(C-379), Compound [1-7]+(C-380), Compound [1-7]+(C-381), Compound [1-7]+(C-382), Compound [1-7]+(C-383), Compound [1-7]+(C-384), Compound [1-7]+(C-385), Compound [1-7]+(C-386), Compound [1-7]+(C-387), Compound [1-7]+(C-388), Compound [1-7]+(C-389), Compound [1-7]+(C-390), Compound [1-7]+(C-391), Compound [1-7]+(C-392), Compound [1-7]+(C-393), Compound [1-7]+(C-394), Compound [1-7]+(C-395), Compound [1-7]+(C-396), Compound [1-7]+(C-397), Compound [1-7]+(C-398), Compound [1-7]+(C-399), Compound [1-7]+(C-400), Compound [1-7]+(C-401), Compound [1-7]+(C-402), Compound [1-7]+(C-403), Compound [1-7]+(C-404), Compound [1-7]+(C-405), Compound [1-7]+(C-406), Compound [1-7]+(C-407), Compound [1-7]+(C-408), Compound [1-7]+(C-409), Compound [1-7]+(C-410), Compound [1-7]+(C-411), Compound [1-7]+(C-412), Compound [1-7]+(C-413), Compound [1-7]+(C-414), Compound [1-7]+(C-415), Compound [1-7]+(C-416), Compound [1-7]+(C-417), Compound [1-7]+(C-418), Compound [1-7]+(C-419), Compound [1-7]+(C-420), Compound [1-7]+(C-421), Compound [1-7]+(C-422), Compound [1-7]+(C-423), Compound [1-7]+(C-424), Compound [1-7]+(C-425), Compound [1-7]+(C-426), Compound [1-7]+(C-427), Compound [1-7]+(C-428), Compound [1-7]+(C-429), Compound [1-7]+(C-430), Compound [1-7]+(C-431), Compound [1-7]+(C-432), Compound [1-7]+(C-433), Compound [1-7]+(C-434), Compound [1-7]+(C-435), Compound [1-7]+(C-436), Compound [1-7]+(C-437), Compound [1-7]+(C-438), Compound [1-7]+(C-439), Compound [1-7]+(C-440), Compound [1-7]+(C-441), Compound [1-7]+(C-442), Compound [1-7]+(C-443), Compound [1-7]+(C-444), Compound [1-7]+(C-445), Compound [1-7]+(C-446), Compound [1-7]+(C-447), Compound [1-7]+(C-448), Compound [1-7]+(C-449), Compound [1-7]+(C-450), Compound [1-7]+(C-451), Compound [1-7]+(C-452), Compound [1-7]+(C-453), Compound [1-7]+(C-454), Compound [1-7]+(C-455), Compound [1-7]+(C-456), Compound [1-7]+(C-457), Compound [1-7]+(C-458), Compound [1-7]+(C-459), Compound [1-7]+(C-460), Compound [1-7]+(C-461), Compound [1-7]+(C-462), Compound [1-7]+(C-463), Compound [1-7]+(C-464), Compound [1-7]+(C-465), Compound [1-7]+(C-466), Compound [1-7]+(C-467), Compound [1-7]+(C-468), Compound [1-7]+(C-469), Compound [1-7]+(C-470), Compound [1-7]+(C-471), Compound [1-7]+(C-472), Compound [1-7]+(C-473), Compound [1-7]+(C-474), Compound [1-7]+(C-475), Compound [1-7]+(C-476), Compound [1-7]+(C-477), Compound [1-7]+(C-478), Compound [1-7]+(C-479), Compound [1-7]+(C-480), Compound [1-7]+(C-481), Compound [1-7]+(C-482), Compound [1-7]+(C-483), Compound [1-7]+(C-484), Compound [1-7]+(C-485), Compound [1-7]+(C-486), Compound [1-7]+(C-487), Compound [1-7]+(C-488), Compound [1-7]+(C-489), Compound [1-7]+(C-490), Compound [1-7]+(C-491), Compound [1-7]+(C-492), Compound [1-7]+(C-493), Compound [1-7]+(C-494), Compound [1-7]+(C-495), Compound [1-7]+(C-496), Compound [1-7]+(C-497), Compound [1-7]+(C-498), Compound [1-7]+(C-499), Compound [1-7]+(C-500), Compound [1-7]+(C-501), Compound [1-7]+(C-502), Compound [1-7]+(C-503), Compound [1-7]+(C-504), Compound [1-7]+(C-505), Compound [1-7]+(C-506), Compound [1-7]+(C-507), Compound [1-7]+(C-508), Compound [1-7]+(C-509), Compound [1-7]+(C-510), Compound [1-7]+(C-511), Compound [1-7]+(C-512), Compound [1-7]+(C-513), Compound [1-7]+(C-514), Compound [1-7]+(C-515), Compound [1-7]+(C-516), Compound [1-7]+(C-517), Compound [1-7]+(C-518), Compound [1-7]+(C-519), Compound [1-7]+(C-520), Compound [1-7]+(C-521), Compound [1-7]+(C-522), Compound [1-7]+(C-523), Compound [1-7]+(C-524), Compound [1-7]+(C-525), Compound [1-7]+(C-526), Compound [1-7]+(C-527), Compound [1-7]+(C-528), Compound [1-7]+(C-529), Compound [1-7]+(C-530), Compound [1-7]+(C-531), Compound [1-7]+(C-532), Compound [1-7]+(C-533), Compound [1-7]+(C-534), Compound [1-7]+(C-535), Compound [1-7]+(C-536), Compound [1-7]+(C-537),

Compound [1-8]+(C-001), Compound [1-8]+(C-002), Compound [1-8]+(C-003), Compound [1-8]+(C-004), Compound [1-8]+(C-005), Compound [1-8]+(C-006), Compound [1-8]+(C-007), Compound [1-8]+(C-008), Compound [1-8]+(C-009), Compound [1-8]+(C-010), Compound [1-8]+(C-011), Compound [1-8]+(C-012), Compound [1-8]+(C-013), Compound [1-8]+(C-014), Compound [1-8]+(C-015), Compound [1-8]+(C-016), Compound [1-8]+(C-017), Compound [1-8]+(C-018), Compound [1-8]+(C-019), Compound [1-8]+(C-020), Compound [1-8]+(C-021), Compound [1-8]+(C-022), Compound [1-8]+(C-023), Compound [1-8]+(C-024), Compound [1-8]+(C-025), Compound [1-8]+(C-026), Compound [1-8]+(C-027), Compound [1-8]+(C-028), Compound [1-8]+(C-029), Compound [1-8]+(C-030), Compound [1-8]+(C-031), Compound [1-8]+(C-032), Compound [1-8]+(C-033), Compound [1-8]+(C-034), Compound [1-8]+(C-035), Compound [1-8]+(C-036), Compound [1-8]+(C-037), Compound [1-8]+(C-038), Compound [1-8]+(C-039), Compound [1-8]+(C-040), Compound [1-8]+(C-041), Compound [1-8]+(C-042), Compound

[1-8]+(C-043), Compound [1-8]+(C-044), Compound [1-8]+(C-045), Compound [1-8]+(C-046), Compound [1-8]+(C-047), Compound [1-8]+(C-048), Compound [1-8]+(C-049), Compound [1-8]+(C-050), Compound [1-8]+(C-051), Compound [1-8]+(C-052), Compound [1-8]+(C-053), Compound [1-8]+(C-054), Compound [1-8]+(C-055), Compound [1-8]+(C-056), Compound [1-8]+(C-057), Compound [1-8]+(C-058), Compound [1-8]+(C-059), Compound [1-8]+(C-060), Compound [1-8]+(C-061), Compound [1-8]+(C-062), Compound [1-8]+(C-063), Compound [1-8]+(C-064), Compound [1-8]+(C-065), Compound [1-8]+(C-066), Compound [1-8]+(C-067), Compound [1-8]+(C-068), Compound [1-8]+(C-069), Compound [1-8]+(C-070), Compound [1-8]+(C-071), Compound [1-8]+(C-072), Compound [1-8]+(C-073), Compound [1-8]+(C-074), Compound [1-8]+(C-075), Compound [1-8]+(C-076), Compound [1-8]+(C-077), Compound [1-8]+(C-078), Compound [1-8]+(C-079), Compound [1-8]+(C-080), Compound [1-8]+(C-081), Compound [1-8]+(C-082), Compound [1-8]+(C-083), Compound [1-8]+(C-084), Compound [1-8]+(C-085), Compound [1-8]+(C-086), Compound [1-8]+(C-087), Compound [1-8]+(C-088), Compound [1-8]+(C-089), Compound [1-8]+(C-090), Compound [1-8]+(C-091), Compound [1-8]+(C-092), Compound [1-8]+(C-093), Compound [1-8]+(C-094), Compound [1-8]+(C-095), Compound [1-8]+(C-096), Compound [1-8]+(C-097), Compound [1-8]+(C-098), Compound [1-8]+(C-099), Compound [1-8]+(C-100), Compound [1-8]+(C-101), Compound [1-8]+(C-102), Compound [1-8]+(C-103), Compound [1-8]+(C-104), Compound [1-8]+(C-105), Compound [1-8]+(C-106), Compound [1-8]+(C-107), Compound [1-8]+(C-108), Compound [1-8]+(C-109), Compound [1-8]+(C-110), Compound [1-8]+(C-111), Compound [1-8]+(C-112), Compound [1-8]+(C-113), Compound [1-8]+(C-114), Compound [1-8]+(C-115), Compound [1-8]+(C-116), Compound [1-8]+(C-117), Compound [1-8]+(C-118), Compound [1-8]+(C-119), Compound [1-8]+(C-120), Compound [1-8]+(C-121), Compound [1-8]+(C-122), Compound [1-8]+(C-123), Compound [1-8]+(C-124), Compound [1-8]+(C-125), Compound [1-8]+(C-126), Compound [1-8]+(C-127), Compound [1-8]+(C-128), Compound [1-8]+(C-129) , Compound [1-8]+(C-130), Compound [1-8]+(C-131), Compound [1-8]+(C-132), Compound [1-8]+(C-133), Compound [1-8]+(C-134), Compound [1-8]+(C-135), Compound [1-8]+(C-136), Compound [1-8]+(C-137), Compound [1-8]+(C-138), Compound [1-8]+(C-139), Compound [1-8]+(C-140), Compound [1-8]+(C-141), Compound [1-8]+(C-142), Compound [1-8]+(C-143), Compound [1-8]+(C-144), Compound [1-8]+(C-145), Compound [1-8]+(C-146), Compound [1-8]+(C-147), Compound [1-8]+(C-148), Compound [1-8]+(C-149), Compound [1-8]+(C-150), Compound [1-8]+(C-151), Compound [1-8]+(C-152), Compound [1-8]+(C-153), Compound [1-8]+(C-154), Compound [1-8]+(C-155), Compound [1-8]+(C-156), Compound [1-8]+(C-157), Compound [1-8]+(C-158), Compound [1-8]+(C-159), Compound [1-8]+(C-160), Compound [1-8]+(C-161), Compound [1-8]+(C-162), Compound [1-8]+(C-163), Compound [1-8]+(C-164), Compound [1-8]+(C-165), Compound [1-8]+(C-166), Compound [1-8]+(C-167), Compound [1-8]+(C-168), Compound [1-8]+(C-169), Compound [1-8]+(C-170), Compound [1-8]+(C-171), Compound [1-8]+(C-172), Compound [1-8]+(C-173), Compound [1-8]+(C-174), Compound [1-8]+(C-175), Compound [1-8]+(C-176), Compound [1-8]+(C-177), Compound [1-8]+(C-178), Compound [1-8]+(C-179), Compound [1-8]+(C-180), Compound [1-8]+(C-181), Compound [1-8]+(C-182), Compound [1-8]+(C-183), Compound [1-8]+(C-184), Compound [1-8]+(C-185), Compound [1-8]+(C-186), Compound [1-8]+(C-187), Compound [1-8]+(C-188), Compound [1-8]+(C-189), Compound [1-8]+(C-190), Compound [1-8]+(C-191), Compound [1-8]+(C-192), Compound [1-8]+(C-193), Compound [1-8]+(C-194), Compound [1-8]+(C-195), Compound [1-8]+(C-196), Compound [1-8]+(C-197), Compound [1-8]+(C-198), Compound [1-8]+(C-199), Compound [1-8]+(C-200), Compound [1-8]+(C-201), Compound [1-8]+(C-202), Compound [1-8]+(C-203), Compound [1-8]+(C-204), Compound [1-8]+(C-205), Compound [1-8]+(C-206), Compound [1-8]+(C-207), Compound [1-8]+(C-208), Compound [1-8]+(C-209), Compound [1-8]+(C-210), Compound [1-8]+(C-211), Compound [1-8]+(C-212), Compound [1-8]+(C-213), Compound [1-8]+(C-214), Compound [1-8]+(C-215), Compound [1-8]+(C-216), Compound [1-8]+(C-217), Compound [1-8]+(C-218), Compound [1-8]+(C-219), Compound [1-8]+(C-220), Compound [1-8]+(C-221), Compound [1-8]+(C-222), Compound [1-8]+(C-223), Compound [1-8]+(C-224), Compound [1-8]+(C-225), Compound [1-8]+(C-226), Compound [1-8]+(C-227), Compound [1-8]+(C-228), Compound [1-8]+(C-229), Compound [1-8]+(C-230), Compound [1-8]+(C-231), Compound [1-8]+(C-232), Compound [1-8]+(C-233), Compound [1-8]+(C-234), Compound [1-8]+(C-235), Compound [1-8]+(C-236), Compound [1-8]+(C-237), Compound [1-8]+(C-238), Compound [1-8]+(C-239), Compound [1-8]+(C-240), Compound [1-8]+(C-241), Compound [1-8]+(C-242), Compound [1-8]+(C-243), Compound [1-8]+(C-244), Compound [1-8]+(C-245), Compound [1-8]+(C-246), Compound [1-8]+(C-247), Compound [1-8]+(C-248), Compound [1-8]+(C-249), Compound [1-8]+(C-250), Compound [1-8]+(C-251), Compound [1-8]+(C-252), Compound [1-8]+(C-253), Compound [1-8]+(C-254), Compound [1-8]+(C-255), Compound [1-8]+(C-256), Compound [1-8]+(C-257), Compound [1-8]+(C-258), Compound [1-8]+(C-259), Compound [1-8]+(C-260), Compound [1-8]+(C-261), Compound [1-8]+(C-262), Compound [1-8]+(C-263), Compound [1-8]+(C-264), Compound [1-8]+(C-265), Compound [1-8]+(C-266), Compound [1-8]+(C-267), Compound [1-8]+(C-268), Compound [1-8]+(C-269), Compound [1-8]+(C-270), Compound [1-8]+(C-271), Compound [1-8]+(C-272), Compound [1-8]+(C-273), Compound [1-8]+(C-274), Compound [1-8]+(C-275), Compound [1-8]+(C-276), Compound [1-8]+(C-277), Compound [1-8]+(C-278), Compound [1-8]+(C-279), Compound [1-8]+(C-280), Compound [1-8]+(C-281), Compound [1-8]+(C-282), Compound [1-8]+(C-283), Compound [1-8]+(C-284), Compound [1-8]+(C-285), Compound [1-8]+(C-286), Compound [1-8]+(C-287), Compound [1-8]+(C-288), Compound [1-8]+(C-289),

Compound [1-8]+(C-290), Compound [1-8]+(C-291), Compound [1-8]+(C-292), Compound [1-8]+(C-293), Compound [1-8]+(C-294), Compound [1-8]+(C-295), Compound [1-8]+(C-296), Compound [1-8]+(C-297), Compound [1-8]+(C-298), Compound [1-8]+(C-299), Compound [1-8]+(C-300), Compound [1-8]+(C-301), Compound [1-8]+(C-302), Compound [1-8]+(C-303), Compound [1-8]+(C-304), Compound [1-8]+(C-305), Compound [1-8]+(C-306), Compound [1-8]+(C-307), Compound [1-8]+(C-308), Compound [1-8]+(C-309), Compound [1-8]+(C-310), Compound [1-8]+(C-311), Compound [1-8]+(C-312), Compound [1-8]+(C-313), Compound [1-8]+(C-314), Compound [1-8]+(C-315), Compound [1-8]+(C-316), Compound [1-8]+(C-317), Compound [1-8]+(C-318), Compound [1-8]+(C-319), Compound [1-8]+(C-320), Compound [1-8]+(C-321), Compound [1-8]+(C-322), Compound [1-8]+(C-323), Compound [1-8]+(C-324), Compound [1-8]+(C-325), Compound [1-8]+(C-326), Compound [1-8]+(C-327), Compound [1-8]+(C-328), Compound [1-8]+(C-329), Compound [1-8]+(C-330), Compound [1-8]+(C-331), Compound [1-8]+(C-332), Compound [1-8]+(C-333), Compound [1-8]+(C-334), Compound [1-8]+(C-335), Compound [1-8]+(C-336), Compound [1-8]+(C-337), Compound [1-8]+(C-338), Compound [1-8]+(C-339), Compound [1-8]+(C-340), Compound [1-8]+(C-341), Compound [1-8]+(C-342), Compound [1-8]+(C-343), Compound [1-8]+(C-344), Compound [1-8]+(C-345), Compound [1-8]+(C-346), Compound [1-8]+(C-347), Compound [1-8]+(C-348), Compound [1-8]+(C-349), Compound [1-8]+(C-350), Compound [1-8]+(C-351), Compound [1-8]+(C-352), Compound [1-8]+(C-353), Compound [1-8]+(C-354), Compound [1-8]+(C-355), Compound [1-8]+(C-356), Compound [1-8]+(C-357), Compound [1-8]+(C-358), Compound [1-8]+(C-359), Compound [1-8]+(C-360), Compound [1-8]+(C-361), Compound [1-8]+(C-362), Compound [1-8]+(C-363), Compound [1-8]+(C-364), Compound [1-8]+(C-365), Compound [1-8]+(C-366), Compound [1-8]+(C-367), Compound [1-8]+(C-368), Compound [1-8]+(C-369), Compound [1-8]+(C-370), Compound [1-8]+(C-371), Compound [1-8]+(C-372), Compound [1-8]+(C-373), Compound [1-8]+(C-374), Compound [1-8]+(C-375), Compound [1-8]+(C-376), Compound [1-8]+(C-377), Compound [1-8]+(C-378), Compound [1-8]+(C-379), Compound [1-8]+(C-380), Compound [1-8]+(C-381), Compound [1-8]+(C-382), Compound [1-8]+(C-383), Compound [1-8]+(C-384), Compound [1-8]+(C-385), Compound [1-8]+(C-386), Compound [1-8]+(C-387), Compound [1-8]+(C-388), Compound [1-8]+(C-389), Compound [1-8]+(C-390), Compound [1-8]+(C-391), Compound [1-8]+(C-392), Compound [1-8]+(C-393), Compound [1-8]+(C-394), Compound [1-8]+(C-395), Compound [1-8]+(C-396), Compound [1-8]+(C-397), Compound [1-8]+(C-398), Compound [1-8]+(C-399), Compound [1-8]+(C-400), Compound [1-8]+(C-401), Compound [1-8]+(C-402), Compound [1-8]+(C-403), Compound [1-8]+(C-404), Compound [1-8]+(C-405), Compound [1-8]+(C-406), Compound [1-8]+(C-407), Compound [1-8]+(C-408), Compound [1-8]+(C-409), Compound [1-8]+(C-410), Compound [1-8]+(C-411), Compound [1-8]+(C-412), Compound [1-8]+(C-413), Compound [1-8]+(C-414), Compound [1-8]+(C-415), Compound [1-8]+(C-416), Compound [1-8]+(C-417), Compound [1-8]+(C-418), Compound [1-8]+(C-419), Compound [1-8]+(C-420), Compound [1-8]+(C-421), Compound [1-8]+(C-422), Compound [1-8]+(C-423), Compound [1-8]+(C-424), Compound [1-8]+(C-425), Compound [1-8]+(C-426), Compound [1-8]+(C-427), Compound [1-8]+(C-428), Compound [1-8]+(C-429) , Compound [1-8]+(C-430) , Compound [1-8]+(C-431), Compound [1-8]+(C-432), Compound [1-8]+(C-433), Compound [1-8]+(C-434), Compound [1-8]+(C-435), Compound [1-8]+(C-436), Compound [1-8]+(C-437), Compound [1-8]+(C-438), Compound [1-8]+(C-439), Compound [1-8]+(C-440), Compound [1-8]+(C-441), Compound [1-8]+(C-442), Compound [1-8]+(C-443), Compound [1-8]+(C-444), Compound [1-8]+(C-445), Compound [1-8]+(C-446), Compound [1-8]+(C-447), Compound [1-8]+(C-448), Compound [1-8]+(C-449), Compound [1-8]+(C-450), Compound [1-8]+(C-451), Compound [1-8]+(C-452), Compound [1-8]+(C-453), Compound [1-8]+(C-454), Compound [1-8]+(C-455), Compound [1-8]+(C-456), Compound [1-8]+(C-457), Compound [1-8]+(C-458), Compound [1-8]+(C-459), Compound [1-8]+(C-460), Compound [1-8]+(C-461), Compound [1-8]+(C-462), Compound [1-8]+(C-463), Compound [1-8]+(C-464), Compound [1-8]+(C-465), Compound [1-8]+(C-466), Compound [1-8]+(C-467), Compound [1-8]+(C-468), Compound [1-8]+(C-469), Compound [1-8]+(C-470), Compound [1-8]+(C-471), Compound [1-8]+(C-472), Compound [1-8]+(C-473), Compound [1-8]+(C-474), Compound [1-8]+(C-475), Compound [1-8]+(C-476), Compound [1-8]+(C-477), Compound [1-8]+(C-478), Compound [1-8]+(C-479), Compound [1-8]+(C-480), Compound [1-8]+(C-481), Compound [1-8]+(C-482), Compound [1-8]+(C-483), Compound [1-8]+(C-484), Compound [1-8]+(C-485), Compound [1-8]+(C-486), Compound [1-8]+(C-487), Compound [1-8]+(C-488), Compound [1-8]+(C-489), Compound [1-8]+(C-490), Compound [1-8]+(C-491), Compound [1-8]+(C-492), Compound [1-8]+(C-493), Compound [1-8]+(C-494), Compound [1-8]+(C-495), Compound [1-8]+(C-496), Compound [1-8]+(C-497), Compound [1-8]+(C-498), Compound [1-8]+(C-499), Compound [1-8]+(C-500), Compound [1-8]+(C-501), Compound [1-8]+(C-502), Compound [1-8]+(C-503), Compound [1-8]+(C-504), Compound [1-8]+(C-505), Compound [1-8]+(C-506), Compound [1-8]+(C-507), Compound [1-8] +(C-508), Compound [1-8]+(C-509), Compound [1-8] +(C-510), Compound [1-8]+(C-511), Compound [1-8]+(C-512), Compound [1-8] +(C-513), Compound [1-8]+(C-514), Compound [1-8]+(C-515), Compound [1-8]+(C-516), Compound [1-8]+(C-517), Compound [1-8]+(C-518), Compound [1-8]+(C-519), Compound [1-8]+(C-520), Compound [1-8]+(C-521), Compound [1-8]+(C-522), Compound [1-8]+(C-523), Compound [1-8]+(C-524), Compound [1-8]+(C-525), Compound [1-8]+(C-526), Compound [1-8]+(C-527), Compound [1-8]+(C-528), Compound [1-8]+(C-529), Compound [1-8]+(C-530), Compound [1-8]+(C-531), Compound [1-8]+(C-532), Compound [1-8]+(C-533), Compound [1-8]+(C-534), Compound [1-8]+(C-535), Compound

[1-8]+(C-536), Compound [1-8]+(C-537), etc., but are not limited thereto.

Combination of the compound of the present invention and active ingredient group D

Examples of the combination with a biopesticide (active ingredient group D) include Compound [1-1]+(D-001), Compound [1-1]+(D-002), Compound [1-1]+(D-003), Compound [1-1]+(D-004), Compound [1-1]+(D-005), Compound [1-1]+(D-006), Compound [1-1]+(D-007), Compound [1-1]+(D-008), Compound [1-1]+(D-009), Compound [1-1]+(D-010), Compound [1-1]+(D-011), Compound [1-1]+(D-012), Compound [1-1]+(D-013), Compound [1-1]+(D-014), Compound [1-1]+(D-015), Compound [1-1]+(D-016), Compound [1-1]+(D-017), Compound [1-1]+(D-018), Compound [1-1]+(D-019), Compound [1-1]+(D-020), Compound [1-1]+(D-021), Compound [1-1]+(D-022), Compound [1-1]+(D-023), Compound [1-1]+(D-024), Compound [1-1]+(D-025), Compound [1-1]+(D-026), Compound [1-1]+(D-027), Compound [1-1]+(D-028), Compound [1-1]+(D-029), Compound [1-1]+(D-030), Compound [1-1]+(D-031), Compound [1-1]+(D-032), Compound [1-1]+(D-033), Compound [1-1]+(D-034), Compound [1-1]+(D-035), Compound [1-1]+(D-036), Compound [1-1]+(D-037), Compound [1-1]+(D-038), Compound [1-1]+(D-039), Compound [1-1]+(D-040), Compound [1-1]+(D-041), Compound [1-1]+(D-042), Compound [1-1]+(D-043), Compound [1-1]+(D-044), Compound [1-1]+(D-045), Compound [1-1]+(D-046), Compound [1-1]+(D-047), Compound [1-1]+(D-048), Compound [1-1]+(D-049), Compound [1-1]+(D-050), Compound [1-1]+(D-051), Compound [1-1]+(D-052), Compound [1-1]+(D-053), Compound [1-1]+(D-054), Compound [1-1]+(D-055), Compound [1-1]+(D-056), Compound [1-1]+(D-057), Compound [1-1]+(D-058), Compound [1-1]+(D-059), Compound [1-1]+(D-060), Compound [1-1]+(D-061), Compound [1-1]+(D-062), Compound [1-1]+(D-063), Compound [1-1]+(D-064), Compound [1-1]+(D-065), Compound [1-1]+(D-066), Compound [1-1]+(D-067), Compound [1-1]+(D-068), Compound [1-1]+(D-069), Compound [1-1]+(D-070), Compound [1-1]+(D-071), Compound [1-1]+(D-072), Compound [1-1]+(D-073), Compound [1-1]+(D-074), Compound [1-1]+(D-075), Compound [1-1]+(D-076), Compound [1-1]+(D-077), Compound [1-1]+(D-078), Compound [1-1]+(D-079), Compound [1-1]+(D-080), Compound [1-1]+(D-081), Compound [1-1]+(D-082), Compound [1-1]+(D-083), Compound [1-1]+(D-084), Compound [1-1]+(D-085), Compound [1-1]+(D-086), Compound [1-1]+(D-087), Compound [1-1]+(D-088), Compound [1-1]+(D-089), Compound [1-1]+(D-090), Compound [1-1]+(D-091), Compound [1-1]+(D-092), Compound [1-1]+(D-093), Compound [1-1]+(D-094), Compound [1-1]+(D-095), Compound [1-1]+(D-096), Compound [1-1]+ (D-097), Compound [1-1]+ (D-098), Compound [1-1]+(D-099), Compound [1-1]+(D-100), Compound [1-1]+(D-101), Compound [1-1]+(D-102), Compound [1-1]+(D-103), Compound [1-1]+(D-104), Compound [1-1]+(D-105), Compound [1-1]+(D-106), Compound [1-1]+ (D-107), Compound [1-1]+ (D-108), Compound [1-1]+ (D-109), Compound [1-1]+(D-110), Compound [1-1]+(D-111), Compound [1-1]+(D-112), Compound [1-1]+(D-113), Compound [1-1]+(D-114), Compound [1-1]+(D-115), Compound [1-1]+(D-116), Compound [1-1]+(D-117), Compound [1-1]+(D-118), Compound [1-1]+(D-119), Compound [1-1]+(D-120), Compound [1-1]+(D-121), Compound [1-1]+(D-122), Compound [1-1]+(D-123), Compound [1-1]+(D-124), Compound [1-1]+(D-125), Compound [1-1]+(D-126), Compound [1-1]+(D-127), Compound [1-1]+(D-128), Compound [1-1]+(D-129),

Compound [1-2]+(D-001), Compound [1-2]+(D-002), Compound [1-2]+(D-003), Compound [1-2]+(D-004), Compound [1-2]+(D-005), Compound [1-2]+(D-006), Compound [1-2]+(D-007), Compound [1-2]+(D-008), Compound [1-2]+(D-009), Compound [1-2]+(D-010), Compound [1-2]+(D-011), Compound [1-2]+(D-012), Compound [1-2]+(D-013), Compound [1-2]+(D-014), Compound [1-2]+(D-015), Compound [1-2]+(D-016), Compound [1-2]+(D-017), Compound [1-2]+(D-018), Compound [1-2]+(D-019), Compound [1-2]+(D-020), Compound [1-2]+(D-021), Compound [1-2]+(D-022), Compound [1-2]+(D-023), Compound [1-2]+(D-024), Compound [1-2]+(D-025), Compound [1-2]+(D-026), Compound [1-2]+(D-027), Compound [1-2]+(D-028), Compound [1-2]+(D-029), Compound [1-2]+(D-030), Compound [1-2]+(D-031), Compound [1-2]+(D-032), Compound [1-2]+(D-033), Compound [1-2]+(D-034), Compound [1-2]+(D-035), Compound [1-2]+(D-036), Compound [1-2]+(D-037), Compound [1-2]+(D-038), Compound [1-2]+(D-039), Compound [1-2]+(D-040), Compound [1-2]+(D-041), Compound [1-2]+(D-042), Compound [1-2]+(D-043), Compound [1-2]+(D-044), Compound [1-2]+(D-045), Compound [1-2]+(D-046), Compound [1-2]+(D-047), Compound [1-2]+(D-048), Compound [1-2]+(D-049), Compound [1-2]+(D-050) , Compound [1-2]+(D-051), Compound [1-2]+(D-052), Compound [1-2]+(D-053), Compound [1-2]+(D-054), Compound [1-2]+(D-055), Compound [1-2]+(D-056), Compound [1-2]+(D-057), Compound [1-2]+(D-058), Compound [1-2]+(D-059), Compound [1-2]+(D-060), Compound [1-2]+(D-061), Compound [1-2]+(D-062), Compound [1-2]+(D-063), Compound [1-2]+(D-064), Compound [1-2]+(D-065), Compound [1-2]+(D-066), Compound [1-2]+(D-067), Compound [1-2]+(D-068), Compound [1-2]+(D-069), Compound [1-2]+(D-070), Compound [1-2]+(D-071), Compound [1-2]+(D-072), Compound [1-2]+(D-073), Compound [1-2]+(D-074), Compound [1-2]+(D-075), Compound [1-2]+(D-076), Compound [1-2]+(D-077), Compound [1-2]+(D-078), Compound [1-2]+(D-079), Compound [1-2]+(D-080), Compound [1-2]+(D-081), Compound [1-2]+(D-082), Compound [1-2]+(D-083), Compound [1-2]+(D-084), Compound [1-2]+(D-085), Compound [1-2]+(D-086), Compound [1-2]+(D-087), Compound [1-2]+(D-088), Compound [1-2]+(D-089), Compound [1-2]+(D-090), Compound [1-2]+(D-091), Compound [1-2]+(D-092), Compound [1-2]+(D-093), Compound [1-2]+(D-094), Compound [1-2]+(D-095), Compound [1-2]+(D-096), Compound [1-2]+(D-097), Compound [1-2]+(D-098), Compound [1-2]+(D-099), Compound [1-2]+(D-100), Compound [1-2]+(D-101), Compound [1-2]+(D-102), Compound [1-2]+(D-103), Compound [1-2]+(D-104), Compound [1-2]+(D-105), Compound [1-2]+(D-106), Compound [1-2]+(D-107), Compound [1-2]+(D-108), Compound [1-2]+(D-109), Compound [1-2]+(D-110), Compound [1-2]+(D-111), Compound [1-2]+(D-112), Compound [1-2]+(D-113), Compound [1-2]+(D-114), Compound [1-2]+(D-115), Compound [1-2]+(D-116), Compound [1-2]+(D-117), Compound [1-2]+(D-118), Compound [1-2]+(D-119), Compound [1-2]+(D-120), Compound [1-2]+(D-121), Compound [1-2]+(D-122), Compound [1-2]+(D-123), Compound [1-2]+(D-124), Compound [1-2]+(D-125), Compound [1-2]+(D-126), Compound [1-2]+(D-127), Compound [1-2]+(D-128), Compound [1-2]+(D-129),

Compound [1-3]+(D-001), Compound [1-3]+(D-002), Compound [1-3]+(D-003), Compound [1-3]+(D-004), Compound [1-3]+(D-005), Compound [1-3]+(D-006), Compound [1-3]+(D-007), Compound [1-3]+(D-008), Compound [1-3]+(D-009), Compound [1-3]+(D-010), Compound [1-3]+(D-011), Compound [1-3]+(D-012), Compound [1-3]+(D-013), Compound [1-3]+(D-014), Compound [1-3]+(D-015), Compound [1-3]+(D-016), Compound [1-3]+(D-017), Compound [1-3]+(D-018), Compound [1-3]+(D-019), Compound [1-3]+(D-020), Compound [1-3]+(D-021), Compound [1-3]+(D-022), Compound [1-3]+(D-023), Compound [1-3]+(D-024), Compound [1-3]+(D-025), Compound [1-3]+(D-026), Compound [1-3]+(D-027), Compound [1-3]+(D-028), Compound [1-3]+(D-029), Compound [1-3]+(D-030), Compound [1-3]+(D-031), Compound [1-3]+(D-032), Compound [1-3]+(D-033), Compound [1-3]+(D-034), Compound [1-3]+(D-035), Compound [1-3]+(D-036), Compound [1-3]+(D-037), Compound [1-3]+(D-038), Compound [1-3]+(D-039), Compound [1-3]+(D-040), Compound [1-3]+(D-041), Compound [1-3]+(D-042), Compound [1-3]+(D-043), Compound [1-3]+(D-044), Compound [1-3]+(D-045), Compound [1-3]+(D-046), Compound [1-3]+(D-047), Compound [1-3]+(D-048), Compound [1-3]+(D-049), Compound [1-3]+(D-050), Compound [1-3]+(D-051), Compound [1-3]+(D-052), Compound [1-3]+(D-053), Compound [1-3]+(D-054), Compound [1-3]+(D-055), Compound [1-3]+(D-056), Compound [1-3]+(D-057), Compound [1-3]+(D-058), Compound [1-3]+(D-059), Compound [1-3]+(D-060), Compound [1-3]+(D-061), Compound [1-3]+(D-062), Compound [1-3]+(D-063), Compound [1-3]+(D-064), Compound [1-3]+(D-065), Compound [1-3]+(D-066), Compound [1-3]+(D-067), Compound [1-3]+(D-068), Compound [1-3]+(D-069), Compound [1-3]+(D-070), Compound [1-3]+(D-071), Compound [1-3]+(D-072), Compound [1-3]+(D-073), Compound [1-3]+(D-074), Compound [1-3]+(D-075), Compound [1-3]+(D-076), Compound [1-3]+(D-077), Compound [1-3]+(D-078), Compound [1-3]+(D-079), Compound [1-3]+(D-080), Compound [1-3]+(D-081), Compound [1-3]+(D-082), Compound [1-3]+(D-083), Compound [1-3]+(D-084), Compound [1-3]+(D-085), Compound [1-3]+(D-086), Compound [1-3]+(D-087), Compound [1-3]+(D-088), Compound [1-3]+(D-089), Compound [1-3]+(D-090), Compound [1-3]+(D-091), Compound [1-3]+(D-092), Compound [1-3]+(D-093), Compound [1-3]+(D-094), Compound [1-3]+(D-095), Compound [1-3]+(D-096), Compound [1-3]+(D-097), Compound [1-3]+(D-098), Compound [1-3]+(D-099), Compound [1-3]+(D-100), Compound [1-3]+(D-101), Compound [1-3]+(D-102), Compound [1-3]+(D-103), Compound [1-3]+(D-104), Compound [1-3]+(D-105), Compound [1-3]+(D-106), Compound [1-3]+(D-107), Compound [1-3]+(D-108), Compound [1-3]+(D-109), Compound [1-3]+(D-110), Compound [1-3]+(D-111), Compound [1-3]+(D-112), Compound [1-3]+(D-113), Compound [1-3]+(D-114), Compound [1-3]+(D-115), Compound [1-3]+(D-116), Compound [1-3]+(D-117), Compound [1-3]+(D-118), Compound [1-3]+(D-119), Compound [1-3]+(D-120), Compound [1-3]+(D-121), Compound [1-3]+(D-122), Compound [1-3]+(D-123), Compound [1-3]+(D-124), Compound [1-3]+(D-125), Compound [1-3]+(D-126), Compound [1-3]+(D-127), Compound [1-3]+(D-128), Compound [1-3]+(D-129),

Compound [1-4]+(D-001), Compound [1-4]+(D-002), Compound [1-4]+(D-003), Compound [1-4]+(D-004), Compound [1-4]+(D-005), Compound [1-4]+(D-006), Compound [1-4]+(D-007), Compound [1-4]+(D-008), Compound [1-4]+(D-009), Compound [1-4]+(D-010), Compound [1-4]+(D-011), Compound [1-4]+(D-012), Compound [1-4]+(D-013), Compound [1-4]+(D-014), Compound [1-4]+(D-015), Compound [1-4]+(D-016), Compound [1-4]+(D-017), Compound [1-4]+(D-018), Compound [1-4]+(D-019), Compound [1-4]+(D-020), Compound [1-4]+(D-021), Compound [1-4]+(D-022), Compound [1-4]+(D-023), Compound [1-4]+(D-024), Compound [1-4]+(D-025), Compound [1-4]+(D-026), Compound [1-4]+(D-027), Compound [1-4]+(D-028), Compound [1-4]+(D-029), Compound [1-4]+(D-030), Compound [1-4]+(D-031), Compound [1-4]+(D-032), Compound [1-4]+(D-033), Compound [1-4]+(D-034), Compound [1-4]+(D-035), Compound [1-4]+(D-036), Compound [1-4]+(D-037), Compound [1-4]+(D-038), Compound [1-4]+(D-039), Compound [1-4]+(D-040), Compound [1-4]+(D-041), Compound [1-4]+(D-042), Compound [1-4]+(D-043), Compound [1-4]+(D-044), Compound [1-4]+(D-045), Compound [1-4]+(D-046), Compound [1-4]+(D-047), Compound [1-4]+(D-048), Compound [1-4]+(D-049), Compound [1-4]+(D-050), Compound [1-4]+(D-051), Compound [1-4]+(D-052), Compound [1-4]+(D-053), Compound [1-4]+(D-054), Compound [1-4]+(D-055), Compound [1-4]+(D-056), Compound [1-4]+(D-057), Compound [1-4]+(D-058), Compound [1-4]+(D-059), Compound [1-4]+(D-060), Compound [1-4]+(D-061), Compound [1-4]+(D-062), Compound [1-4]+(D-063), Compound [1-4]+(D-064), Compound [1-4]+(D-065), Compound [1-4]+(D-066), Compound [1-4]+(D-067), Compound [1-4]+(D-068), Compound [1-4]+(D-069), Compound [1-4]+(D-070), Compound [1-4]+(D-071), Compound [1-4]+(D-072), Compound [1-4]+(D-073), Compound [1-4]+(D-074), Compound [1-4]+(D-075), Compound [1-4]+(D-076), Compound [1-4]+(D-077), Compound [1-4]+(D-078), Compound [1-4]+(D-079), Compound [1-4]+(D-080), Compound [1-4]+(D-081), Compound [1-4]+(D-082), Compound [1-4]+(D-083), Compound [1-4]+(D-084), Compound [1-4]+(D-085), Compound [1-4]+(D-086), Compound [1-4]+(D-087), Compound [1-4]+(D-088), Compound [1-4]+(D-089), Compound [1-4]+(D-090), Compound [1-4]+(D-091), Compound [1-4]+(D-092), Compound [1-4]+(D-093), Compound [1-4]+(D-094), Compound [1-4]+(D-095), Compound [1-4]+(D-096), Compound [1-4]+(D-097), Compound [1-4]+(D-098), Compound [1-4]+(D-099), Compound [1-4]+(D-100), Compound [1-4]+(D-101), Compound [1-4]+(D-102), Compound [1-4]+(D-103), Compound [1-4]+(D-104), Compound [1-4]+(D-105), Compound [1-4]+(D-106), Compound [1-4]+(D-107), Compound [1-4]+(D-108), Compound [1-4]+(D-109), Compound [1-4]+(D-110), Compound [1-4]+(D-111), Compound [1-4]+(D-112), Compound [1-4]+(D-113), Compound [1-4]+(D-114), Compound [1-4]+(D-115), Compound [1-4]+(D-116), Compound [1-4]+(D-117), Compound [1-4]+(D-118), Compound [1-4]+(D-119), Compound [1-4]+(D-120), Compound [1-4]+(D-121), Compound [1-4]+(D-122), Compound [1-4]+(D-123), Compound [1-4]+(D-124), Compound [1-4]+(D-125), Compound [1-4]+(D-126), Compound [1-4]+(D-127), Compound [1-4]+(D-128), Compound [1-4]+(D-129),

Compound [1-5]+(D-001), Compound [1-5]+(D-002), Compound [1-5]+(D-003), Compound [1-5]+(D-004), Compound [1-5]+(D-005), Compound [1-5]+(D-006), Compound [1-5]+(D-007), Compound [1-5]+(D-008), Compound [1-5]+(D-009), Compound [1-5]+(D-010), Compound [1-5]+(D-011), Compound [1-5]+(D-012), Compound [1-5]+(D-013), Compound [1-5]+(D-014), Compound [1-5]+(D-015), Compound [1-5]+(D-016), Compound [1-5]+(D-017), Compound [1-5]+(D-018), Compound [1-5]+(D-019), Compound [1-5]+(D-020), Compound [1-5]+(D-021), Compound [1-5]+(D-022), Compound [1-5]+(D-023), Compound [1-5]+(D-024), Compound [1-5]+(D-025), Compound [1-5]+(D-026), Compound [1-5]+(D-027), Compound [1-5]+(D-028), Compound [1-5]+(D-029), Compound [1-5]+(D-030), Compound [1-5]+(D-031), Compound [1-5]+(D-032), Compound [1-5]+(D-033), Compound [1-5]+(D-034), Compound [1-5]+(D-035), Compound [1-5]+(D-036), Compound [1-5]+(D-037), Compound [1-5]+(D-038), Compound [1-5]+(D-039), Compound [1-5]+(D-040), Compound [1-5]+(D-041), Compound [1-5]+(D-042), Compound [1-5]+(D-043), Compound [1-5]+(D-044), Compound [1-5]+(D-045), Compound [1-5]+(D-046), Compound [1-5]+(D-047), Compound [1-5]+(D-048), Compound [1-5]+(D-049), Compound [1-5]+(D-050), Compound [1-5]+(D-051), Compound [1-5]+(D-052), Compound [1-5]+(D-053), Compound [1-5]+(D-054), Compound [1-5]+(D-055), Compound [1-5]+(D-056), Compound [1-5]+(D-057), Compound [1-5]+(D-058), Compound [1-5]+(D-059), Compound [1-5]+(D-060), Compound [1-5]+(D-061), Compound [1-5]+(D-062), Compound [1-5]+(D-063), Compound [1-5]+(D-064), Compound [1-5]+(D-065), Compound [1-5]+(D-066), Compound [1-5]+(D-067), Compound [1-5]+(D-068), Compound [1-5]+(D-069), Compound [1-5]+(D-070), Compound [1-5]+(D-071), Compound [1-5]+(D-072), Compound [1-5]+(D-073), Compound [1-5]+(D-074), Compound [1-5]+(D-075), Compound [1-5]+(D-076), Compound [1-5]+(D-077), Compound [1-5]+(D-078), Compound [1-5]+(D-079), Compound [1-5]+(D-080), Compound [1-5]+(D-081), Compound [1-5]+(D-082), Compound [1-5]+(D-083), Compound [1-5]+(D-084), Compound [1-5]+(D-085), Compound [1-5]+(D-086), Compound [1-5]+(D-087), Compound [1-5]+(D-088), Compound [1-5]+(D-089), Compound [1-5]+(D-090), Compound [1-5]+(D-091), Compound [1-5]+(D-092), Compound [1-5]+(D-093), Compound [1-5]+(D-094), Compound [1-5]+(D-095), Compound [1-5]+(D-096), Compound [1-5]+(D-097), Compound [1-5]+(D-098), Compound [1-5]+(D-099), Compound [1-5]+(D-100), Compound [1-5]+(D-101), Compound [1-5]+(D-102), Compound [1-5]+(D-103), Compound [1-5]+(D-104), Compound [1-5]+(D-105), Compound [1-5]+(D-106), Compound [1-5]+(D-107), Compound [1-5]+(D-108), Compound [1-5]+(D-109), Compound [1-5]+(D-110), Compound [1-5]+(D-111), Compound [1-5]+(D-112), Compound [1-5]+(D-113), Compound [1-5]+(D-114), Compound [1-5]+(D-115), Compound [1-5]+(D-116), Compound [1-5]+(D-117), Compound [1-5]+(D-118), Compound [1-5]+(D-119), Compound [1-5]+(D-120), Compound [1-5]+(D-121), Compound [1-5]+(D-122), Compound [1-5]+(D-123), Compound [1-5]+(D-124), Compound [1-5]+(D-125), Compound [1-5]+(D-126), Compound [1-5]+(D-127), Compound [1-5]+(D-128), Compound [1-5]+(D-129),

Compound [1-6]+(D-001), Compound [1-6]+(D-002), Compound [1-6]+(D-003), Compound [1-6]+(D-004), Compound [1-6]+(D-005), Compound [1-6]+(D-006), Compound [1-6]+(D-007), Compound [1-6]+(D-008), Compound [1-6]+(D-009), Compound [1-6]+(D-010), Compound [1-6]+(D-011), Compound [1-6]+(D-012), Compound [1-6]+(D-013), Compound [1-6]+(D-014), Compound [1-6]+(D-015), Compound [1-6]+(D-016), Compound [1-6]+(D-017), Compound [1-6]+(D-018), Compound [1-6]+(D-019), Compound [1-6]+(D-020), Compound [1-6]+(D-021), Compound [1-6]+(D-022), Compound [1-6]+(D-023), Compound [1-6]+(D-024), Compound [1-6]+(D-025), Compound [1-6]+(D-026), Compound [1-6]+(D-027), Compound [1-6]+(D-028), Compound [1-6]+(D-029), Compound [1-6]+(D-030), Compound [1-6]+(D-031), Compound [1-6]+(D-032), Compound [1-6]+(D-033), Compound [1-6]+(D-034), Compound [1-6]+(D-035), Compound [1-6]+(D-036), Compound [1-6]+(D-037), Compound [1-6]+(D-038), Compound [1-6]+(D-039), Compound [1-6]+(D-040), Compound [1-6]+(D-041), Compound [1-6]+(D-042), Compound [1-6]+(D-043), Compound [1-6]+(D-044), Compound [1-6]+(D-045), Compound [1-6]+(D-046), Compound [1-6]+(D-047), Compound [1-6]+(D-048), Compound [1-6]+(D-049), Compound [1-6]+(D-050), Compound [1-6]+(D-051), Compound [1-6]+(D-052), Compound [1-6]+(D-053), Compound [1-6]+(D-054), Compound [1-6]+(D-055), Compound [1-6]+(D-056), Compound [1-6]+(D-057), Compound [1-6]+(D-058), Compound [1-6]+(D-059), Compound [1-6]+(D-060), Compound [1-6]+(D-061), Compound [1-6]+(D-062), Compound [1-6]+(D-063), Compound [1-6]+(D-064), Compound [ 1-6] + (D-065), Compound [1-6]+(D-066), Compound [1-6]+(D-067), Compound [1-6]+(D-068), Compound [1-6]+(D-069), Compound [1-6]+(D-070), Compound [1-6]+(D-071), Compound [1-6]+(D-072), Compound [1-6]+(D-073), Compound [1-6]+(D-074), Compound [1-6]+(D-075), Compound [1-6]+(D-076), Compound [1-6]+(D-077), Compound [1-6]+(D-078), Compound [1-6]+(D-079), Compound [1-6]+(D-080), Compound [1-6]+(D-081), Compound [1-6]+(D-082), Compound [1-6]+(D-083), Compound [1-6]+(D-084), Compound [1-6]+(D-085), Compound [1-6]+(D-086), Compound [1-6]+(D-087), Compound [1-6]+(D-088), Compound [1-6]+(D-089), Compound [1-6]+(D-090), Compound [1-6]+(D-091), Compound [1-6]+(D-092), Compound [1-6]+(D-093), Compound [1-6]+(D-094), Compound [1-6]+(D-095), Compound [1-6]+(D-096), Compound [1-6]+(D-097), Compound [1-6]+(D-098), Compound [1-6]+(D-099), Compound [1-6]+(D-100), Compound [1-6]+(D-101), Compound [1-6]+(D-102), Compound [1-6]+(D-103), Compound [1-6]+(D-104), Compound [1-6]+(D-105), Compound [1-6]+(D-106), Compound [1-6]+(D-107), Compound [1-6]+(D-108), Compound [1-6]+(D-109), Compound [1-6]+(D-110), Compound [1-6]+(D-111), Compound [1-6]+(D-112), Compound [1-6]+(D-113), Compound [1-6]+(D-114), Compound [1-6]+(D-115), Compound [1-6]+(D-116), Compound [1-6]+(D-117), Compound [1-6]+(D-118), Compound [1-6]+(D-119), Compound [1-6]+(D-120), Compound [1-6]+(D-121), Compound [1-6]+(D-122), Compound [1-6]+(D-123), Compound [1-6]+(D-124), Compound [1-6]+(D-125), Compound [1-6]+(D-126), Compound [1-6]+(D-127), Compound [1-6]+(D-128), Compound [1-6]+(D-129),

Compound [1-7]+(D-001), Compound [1-7]+(D-002), Compound [1-7]+(D-003), Compound [1-7]+(D-004), Compound [1-7]+(D-005), Compound [1-7]+(D-006), Compound [1-7]+(D-007), Compound [1-7]+(D-008), Compound [1-7]+(D-009), Compound [1-7]+(D-010), Compound [1-7]+(D-011), Compound [1-7]+(D-012), Compound [1-7]+(D-013), Compound [1-7]+(D-014), Compound [1-7]+(D-015), Compound [1-7]+(D-016), Compound [1-7]+(D-017), Compound [1-7]+(D-018), Compound [1-7]+(D-019), Compound [1-7]+(D-020), Compound [1-7]+(D-021), Compound [1-7]+(D-022), Compound [1-7]+(D-023), Compound [1-7]+(D-024), Compound [1-7]+(D-025), Compound [1-7]+(D-026), Compound [1-7]+(D-027), Compound [1-7]+(D-028), Compound [1-7]+(D-029), Compound [1-7]+(D-030), Compound [1-7]+(D-031), Compound [1-7]+(D-032), Compound [1-7]+(D-033), Compound [1-7]+(D-034), Compound [1-7]+(D-035), Compound [1-7]+(D-036), Compound [1-7]+(D-037), Compound [1-7]+(D-038), Compound [1-7]+(D-039), Compound [1-7]+(D-040), Compound [1-7]+(D-041), Compound [1-7]+(D-042), Compound [1-7]+(D-043), Compound [1-7]+(D-044), Compound [1-7]+(D-045), Compound [1-7]+(D-046), Compound [1-7]+(D-047), Compound [1-7]+(D-048), Compound [1-7]+(D-049), Compound [1-7]+(D-050), Compound [1-7]+(D-051), Compound [1-7]+(D-052), Compound [1-7]+(D-053), Compound [1-7]+(D-054), Compound [1-7]+(D-055), Compound [1-7]+(D-056), Compound [1-7]+(D-057), Compound [1-7]+(D-058), Compound [1-7]+(D-059), Compound [1-7]+(D-060), Compound [1-7]+(D-061), Compound [1-7]+(D-062), Compound [1-7]+(D-063), Compound [1-7]+(D-064), Compound [1-7]+(D-065), Compound [1-7]+(D-066), Compound [1-7]+(D-067), Compound [1-7]+(D-068), Compound [1-7]+(D-069), Compound [1-7]+(D-070), Compound [1-7]+(D-071), Compound [1-7]+(D-072), Compound [1-7]+(D-073), Compound [1-7]+(D-074), Compound [1-7]+(D-075), Compound [1-7]+(D-076), Compound [1-7]+(D-077), Compound [1-7]+(D-078), Compound [1-7]+(D-079), Compound [1-7]+(D-080), Compound [1-7]+(D-081), Compound [1-7]+(D-082), Compound [1-7]+(D-083), Compound [1-7]+(D-084), Compound [1-7]+(D-085), Compound [1-7]+(D-086), Compound [1-7]+(D-087), Compound [1-7]+(D-088), Compound [1-7]+(D-089), Compound [1-7]+(D-090), Compound [1-7]+(D-091), Compound [1-7]+(D-092), Compound [1-7]+(D-093), Compound [1-7]+(D-094), Compound [1-7]+(D-095), Compound [1-7]+(D-096), Compound [1-7]+(D-097), Compound [1-7]+(D-098), Compound [1-7]+(D-099), Compound [1-7]+(D-100), Compound [1-7]+(D-101), Compound [1-7]+(D-102), Compound [1-7]+(D-103), Compound [1-7]+(D-104), Compound [1-7]+(D-105), Compound [1-7]+(D-106), Compound [1-7]+(D-107), Compound [1-7]+(D-108), Compound [1-7]+(D-109), Compound [1-7]+(D-110), Compound [1-7]+(D-111), Compound [1-7]+(D-112), Compound [1-7]+(D-113), Compound [1-7]+(D-114), Compound [1-7]+(D-115), Compound [1-7]+(D-116), Compound [1-7]+(D-117), Compound [1-7]+(D-118), Compound [1-7]+(D-119), Compound [1-7]+(D-120), Compound [1-7]+(D-121), Compound [1-7]+(D-122), Compound [1-7]+(D-123), Compound [1-7]+(D-124), Compound [1-7]+(D-125), Compound [1-7]+(D-126), Compound [1-7]+(D-127), Compound [1-7]+(D-128), Compound [1-7]+(D-129),

Compound [1-8]+(D-001), Compound [1-8]+(D-002), Compound [1-8]+(D-003), Compound [1-8]+(D-004), Compound [1-8]+(D-005), Compound [1-8]+(D-006), Compound [1-8]+(D-007), Compound [1-8]+(D-008), Compound [1-8]+(D-009), Compound [1-8]+(D-010), Compound [1-8]+(D-011), Compound [1-8]+(D-012), Compound [1-8]+(D-013), Compound [1-8]+(D-014), Compound [1-8]+(D-015), Compound [1-8]+(D-016), Compound [1-8]+(D-017), Compound [1-8]+(D-018), Compound [1-8]+(D-019), Compound [1-8]+(D-020), Compound [1-8]+(D-021), Compound [1-8]+(D-022), Compound [1-8]+(D-023), Compound [1-8]+(D-024), Compound [1-8]+(D-025), Compound [1-8]+(D-026), Compound [1-8]+(D-027), Compound [1-8]+(D-028), Compound [1-8]+(D-029), Compound [1-8]+(D-030), Compound [1-8]+(D-031), Compound [1-8]+(D-032), Compound [1-8]+(D-033), Compound [1-8]+(D-034), Compound [1-8]+(D-035), Compound [1-8]+(D-036), Compound [1-8]+(D-037), Compound [1-8]+(D-038), Compound [1-8]+(D-039), Compound [1-8]+(D-040), Compound [1-8]+(D-041), Compound [1-8]+(D-042), Compound [1-8]+(D-043), Compound [1-8]+(D-044), Compound [1-8]+(D-045), Compound [1-8]+(D-046), Compound [1-8]+(D-047), Compound [1-8]+(D-048), Compound [1-8]+(D-049), Compound [1-8]+(D-050), Compound [1-8]+(D-051), Compound [1-8]+(D-052), Compound [1-8]+(D-053), Compound [1-8]+(D-054), Compound [1-8]+(D-055), Compound [1-8]+(D-056), Compound [1-8]+(D-057), Compound [1-8]+(D-058), Compound [1-8]+(D-059), Compound [1-8]+(D-060), Compound [1-8]+(D-061), Compound [1-8]+(D-062), Compound [1-8]+(D-063), Compound [1-8]+(D-064), Compound [1-8]+(D-065), Compound [1-8]+(D-066), Compound [1-8]+(D-067), Compound [1-8]+(D-068), Compound [1-8]+(D-069), Compound [1-8]+(D-070), Compound [1-8]+(D-071), Compound [1-8]+(D-072), Compound [1-8]+(D-073), Compound [1-8]+(D-074), Compound [1-8]+(D-075), Compound [1-8]+(D-076), Compound [1-8]+(D-077), Compound [1-8]+(D-078), Compound [1-8]+(D-079), Compound [1-8]+(D-080), Compound [1-8]+(D-081), Compound [1-8]+(D-082), Compound [1-8]+(D-083), Compound [1-8]+(D-084), Compound [1-8]+(D-085), Compound [1-8]+(D-086), Compound [1-8]+(D-087), Compound [1-8]+(D-088), Compound [1-8]+(D-089), Compound [1-8]+(D-090), Compound [1-8]+(D-091), Compound [1-8]+(D-092), Compound [1-8]+(D-093), Compound [1-8]+(D-094), Compound [1-8]+(D-095), Compound [1-8]+(D-096), Compound [1-8]+(D-097), Compound [1-8]+(D-098), Compound [1-8]+(D-099), Compound [1-8]+(D-100), Compound [1-8]+(D-101), Compound [1-8]+(D-102), Compound [1-8]+(D-103), Compound [1-8]+(D-104), Compound [1-8]+(D-105), Compound [1-8]+(D-106), Compound [1-8]+(D-107), Compound [1-8]+(D-108), Compound [1-8]+(D-109), Compound [1-8]+(D-110), Compound [1-8]+(D-111), Compound [1-8]+(D-112), Compound [1-8]+(D-113), Compound [1-8]+(D-114), Compound [1-8]+(D-115), Compound [1-8]+(D-116), Compound [1-8]+(D-117), Compound [1-8]+(D-118), Compound [1-8]+(D-119), Compound [1-8]+(D-120), Compound [1-8]+(D-121), Compound [1-8]+(D-122), Compound [1-8]+(D-123), Compound [1-8]+(D-124), Compound [1-8]+(D-125), Compound [1-8]+(D-126), Compound [1-8]+(D-127), Compound [1-8]+(D-128), Compound [1-8]+(D-129), etc., but are not limited thereto.

The above is examples of the combination of each of the exemplary compounds represented by the general formula (I) (Compounds 1-1 to 1-8) as the first active ingredient and each single member selected from the active ingredient groups A to D as the second active ingredient. As the second active ingredient, two or more members selected from the active ingredient groups A to D can be used in combination. In this case, two or more members selected from the same active ingredient group may be used in combination, or two or more members selected from different active ingredient groups may be used in combination.

In the present invention, when the compound represented by the general formula (I), which is the first active ingredient, and one or more compounds or biopesticides selected from the active ingredient groups A to D, which are the second active ingredients, are used in combination as a harmful organism control composition, the total amount of the active ingredients in 100 parts by mass of the composition is selected from the range of 0.01 to 80 parts by mass, preferably 0.1 to 50 parts by mass, and more preferably 0.5 to 20 parts by mass. The proportion of the one or more compounds or biopesticides selected from the active ingredient groups A to D to the compound represented by the general formula (I) in the active ingredients is selected from the range of 0.01 to 5,000 parts by mass of the one or more compounds or biopesticides selected from the active ingredient groups A to D relative to 1 part by mass of the compound represented by the general formula (I). Preferably, the proportion is in the range is 0.05 to 2,000 parts by mass, more preferably 0.1 to 200 parts by mass relative to 1 part by mass of the compound represented by the general formula (I). Still more preferably, the proportion is in the range of 0.5 to 20 parts by mass, but is not limited by these ranges.

The harmful organism control composition of the present invention may comprise or contain an additional biopesticide in addition to the active ingredient groups A to D described above.

Specific examples of the biopesticides other than the members of the active ingredient groups A to D include *Acremonium* spp. such as *Acremonium cellulolyticus* (e.g., described in JP 2007-191401 A); *Acinetobacter* spp., in particular strain OM-H10 (Accession No. FERM P-16773); *Agrobacterium* spp. such as *Agrobacterium vitis,* in particular non-pathogenic strain VAR03-1; *Alcaligenes* spp. such as *Alcaligenes faecalis,* in particular strain No. 4 (having Accession No. FERM P-15229 or described in JP H09-104606 A); *Alternaria* spp. such as *Alternaria augustiovoidea* strain AAEC05-3 (described in CN 103461388) and *Alternaria* sp. strain JTIJ-445 (described in JP H09-075070 A); *Arkansas* spp. such as *Arkansas fungus,* in particular strain 18 ARF; *Arthrobacter* spp. such as Arthrobacter sp. R-2 (having Accession No. FERM P-13690 or described in JP H07-069824 A), *Arthrobacter* sp. Gb4a (Accession No. FERM P-19020 or described in JP 2009-153526 A), *Arthrobacter* sp. Ib2a (Accession No. FERM P-19022 or described in JP 2009-153526 A), *Arthrobacter histidinolovorans* Rb5a (Accession No. FERM P-19023 or described in JP 2009-153526 A), *Arthrobacter histidinolovorans* Rb5b (Accession No. FERM P-19024 or described in JP 2009-153526 A), and *Arthrobacter oxydans* (having Accession No. FERM P-22038 or described in JP Pat. No. 5807950); *Arthrobotrys* spp. such as *Arthrobotrys dactyloides, Arthrobotrys oligospora* or a strain having Deposit No. CCTCC M2013439 or described in CN 104293677, *Arthrobotrys superba* (Corda 1839), and *Arthrobotrys nonseptata* strain YMF101852 (having Deposit No. CGMCC 10115 or described in CN 105112295); *Aschersonia aleyrodes; Aspergillus* spp. such as *Aspergillus fumigatus; Azorhizobium* spp. such as *Azorhizobium caulinodans* strain ZB-SK-5; *Azospirillum* spp. such as an *Azospirillum* sp., e.g., having Accession No. NITE BP-194 or described in JP 2009-051771 A, *Azospirillum* sp. strain B510a (e.g., described in JP 2007-084476 A), an *Azospirillum* sp. having Deposit No. FERM P-18563 or described in JP 2003-300805 A, an *Azos-*

*pirillum* sp. having Deposit No. FERM P-18564 or described in JP 2003-300805 A, an *Azospirillum* sp. having Deposit No. FERM BP-7998 or described in JP 2003-300805 A, an *Azospirillum* sp. having Deposit No. FERM BP-7999 or described in JP 2003-300805 A, an *Azospirillum* sp. having Deposit No. FERM BP-8000 or described in JP 2003-300805 A, *Azospirillum amazonense, Azospirillum brasilense* strain BR11005 (SP245) (EMBRAPA, available from Brazil), *Azospirillum brasilense* strain AZ39 (EMBRAPA, available from Brazil), *Azospirillum halopraeferens, Azospirillum irakense,* and *Azospirillum lipoferum; Azotobacter* spp. such as *Azotobacter chroococcum* strain H23, and an *Azotobacter vinelandii* strain (Deposit No. ATCC 12837);

*Bacillus* spp. such as *Bacillus* sp. strain AQ175 (Accession No. ATCC 55608), *Bacillus* sp. strain AQ177 (Accession No. ATCC 55609), *Bacillus* sp. strain AQ178 (Accession No. ATCC 53522), *Bacillus* sp. strain DAIJU-SIID2550 (Accession No. FERM BP-10114), *Bacillus* sp. strain ITB090 (Accession No. NITE BP-01725), *Bacillus* sp. strain ITB100 (Accession No. NITE BP-01726), *Bacillus* sp. strain ITB105 (Accession No. NITE BP-01727), *Bacillus* sp. strain 9011, *Bacillus acidocaldarius, Bacillus acidoterrestris, Bacillus agri, Bacillus aizawai, Bacillus albolactis, Bacillus alcalophilus, Bacillus altitudinis, Bacillus alvei, Bacillus aminoglucosidicus, Bacillus aminovorans, Bacillus amylolyticus, Bacillus amyloliquefaciens* strain AP-136 (Accession No. NRRL B-50330), *Bacillus amyloliquefaciens* strain AP-188 (Accession No. NRRL B-50331), *Bacillus amyloliquefaciens* strain AP-136 (Accession No. NRRL B-50614), *Bacillus amyloliquefaciens* strain AP-188 (Accession No. NRRL B-50615), *Bacillus amyloliquefaciens* strain AP-218 (Accession No. NRRL B-50618), *Bacillus amyloliquefaciens* strain AP-219 (Accession No. NRRL B-50619), *Bacillus amyloliquefaciens* strain AP-295 (Accession No. NRRL B-50620), *Bacillus amyloliquefaciens* strain AP-219 (Accession No. NRRL B-50332), *Bacillus amyloliquefaciens* strain AP-295 (Accession No. NRRL B-50333), *Bacillus amyloliquefaciens* strain B3, *Bacillus amyloliquefaciens* strain IN937a (e.g., described in JP 2015-504905 A), *Bacillus amyloliquefaciens* ssp. *plantarum* strain TJ1000 (Accession No. ATCC BAA-390), *Bacillus aneurinolyticus, Bacillus atrophaeus, Bacillus azotoformans, Bacillus badius,* a *Bacillus cereus* strain (having Accession No. CNCM 1-1562 or described in U.S. Pat. No. 6, 406, 690), *Bacillus chitinosporus,* in particular strain AQ746 (having Accession No. NRRL B-21618 or described in U.S. Pat. No. 5, 733, 544), *Bacillus circulans, Bacillus coagulans* strain CP3424 (Accession No. NITE BP-01692), *Bacillus coagulans* strain CP3425 (Accession No. NITE BP-01693), *Bacillus coagulans* strain TQ33, *Bacillus fastidiosus, Bacillus kurstaki, Bacillus lacticola* (Micro Flo Company), *Bacillus lactimorbus* (Micro Flo Company), *Bacillus lactis* (Micro Flo Company), *Bacillus lautus, Bacillus lentimorbus, Bacillus lentus, Bacillus medusa, Bacillus mojavensis* strainAP-209 (Accession No. NRRL B-50616), *Bacillus mojavensis* strain SR11 (having Accession No. CECT-7666 or a product produced by Probelte, Sa), *Bacillus mycoides* strain AQ726 (having Accession No. NRRL B-21664 and described in U.S. Pat. No. 5,906, 818), *Bacillus nematocida, Bacillus nigrificans* (Micro Flo Company), *Bacillus popilliae* var. *popilliae,* in particular strain DIC-2001 (Accession No. FERM P-18250), *Bacillus psychrosaccharolyticus, Bacillus pumilus* strain AQ717 (having Accession No. NRRL B-21662 and described in U.S. Pat. No. 6,001,637), *Bacillus pumilus* strain OM-F6 (Accession No. FERM P-16771), *Bacillus pumilus* strain TUAT1 (Accession No. NITE BP-1356), *Bacillus siamensis,* in particular a strain having Accession No. KCTC 13613T, *Bacillus smithii, Bacillus solisalsi,* in particular strain AP-217 (Accession No. NRRL B-50617), *Bacillus subtilis* including *Bacillus subtilis* strain FB17, *Bacillus subtilis* strain AQ153 (Accession No. ATCC 55614), *Bacillus subtilis* strain AQ743 (Accession No. NRRL B-21665), *Bacillus subtilis* strain AQ30004 (Accession No. NRRL B-50455), *Bacillus subtilis* strain C-3102 (Accession No. FERM BP-1096), *Bacillus subtilis* strain DB101, *Bacillus subtilis* strain GB03 (e.g., described in JP 2015-504905 A), *Bacillus subtilis* strain QST30002, *Bacillus subtilis* strain QST30004, *Bacillus subtilis* strain SD142, and *Bacillus subtilis* subspecies *natto* (formerly *Bacillus natto*), *Bacillus tequilensis,* in particular strain NII-0943, *Bacillus thuringiensis* strain AQ52 (having Accession No. NRRL B-21619 or described in U.S. Pat. No. 5,919,447), *Bacillus thuringiensis* strain BD#32 (having Accession No. NRRL B-21530 or described in U.S. Pat. No. 5,645,831), *Bacillus thuringiensis* strain CR-371 (Accession No. ATCC 55273), *Bacillus thuringiensis* strain N-029 (Accession No. FERM AP-21647), *Bacillus thuringiensis morrisoni, Bacillus thuringienses japonensis,* in particular strain Buibui, *Bacillus thuringiensis* subsp. *aizawai* strain GC-91, *Bacillus thuringiensis* subsp. *israelensis,* in particular serotype H-14, *Bacillus thuringienses* ssp. *galleriae, Bacillus thuringiensis* subsp. *kurstaki* strain ABTS 351, *Bacillus thuringiensis* subsp. *kurstaki* strain EG 2348, *Bacillus thuringiensis* subsp. *kurstaki* strain PB 54, *Bacillus thuringiensis* subsp. *kurstaki* strain SA-11, *Bacillus thuringiensis* subsp. *kurstaki* strain SA-12, *Bacillus thuringiensis* subsp. *thuringiensis* serotype 1 strain MPPL002, *Bacillus thuringiensis* var. *darmstadiensis* strain 24-91 (e.g., Baciturin), *Bacillus thuringiensis* var. *dendrolimus, Bacillus thuringiensis* var. *thuringiensis,* and *Bacillus uniflagellatus; Bradyrhizobium* spp. such as *Bradyrhizobium arachis, Bradyrhizobium elkanii, Bradyrhizobium liaoningense, Bradyrhizobium lupini,* and *Bradyrhizobium vigna; Brevibacillus* spp. such as *Brevibacillus brevis* (formerly *Bacillus brevis,* e.g., Brevisin) including *Brevibacillus brevis* strain SS86-3, *Brevibacillus brevis* strain SS86-4, *Brevibacillus brevis* strain SS86-5, and *Brevibacillus brevis* strain 2904, and *Brevibacillus laterosporus* (formerly *Bacillus laterosporus*) including a *Brevibacillus laterosporus* strain having Accession No. ATCC 64, *Brevibacillus laterosporus* strain BPM3, *Brevibacillus laterosporus* strain G4, *Brevibacillus laterosporus* strain NCIMB, *Brevibacillus laterosporus* strain NRS 1111, *Brevibacillus laterosporus* strain NRS 1645, *Brevibacillus laterosporus* strain NRS 1647, and *Brevibacillus laterosporus* strain 41419; *Burkholderia* spp. such as *Burkholderia cepacia; Catenaria* spp. such as *Catenaria anguillulae; Cephalosporium* spp. such as *Cephalosporium acremonium;* a *Chromobacterium subtsugae* strain having Accession No. NRRL B-30655;

*Clitocybe* spp., in particular strain SANK 15598 (Deposit No. FERM BP-7098); *Clitopilus* spp.; *Clostridium thermocellum* biovar, in particular strain SK522 (Accession No. NITE-IPOD 3459); *Clonostachys rosea* f. *rosea,* in particular strain IDAC 040913-01 (described in JP 2016-534737 A); *Cochliobolus lunatus* (e.g., Curvularia lunata, Weed Research (1987), 27, 43-47, JP H5-284963 A, *Ustilago trichophora,* or the strains described in WO 93/05656); *Colletotrichum* spp. such as *Colletotrichum truncatum; Conidiobolus obscurus; Corynebacterium* spp. such as *Corynebacterium paurometabolum; Cylindrocarpon* spp. such as *Cylindrocarpon heteronema; Cryphonectria* spp. such as *Cryphonectria parasitica; Cryptococcus* spp. such as *Cryptococcus flavescens* strain 3C (Accession No. NRRL Y-50378) and *Cryptococcus flavescens* strain 4C (Accession No. NRRL Y-50379); *Cunninghamella* spp., in particular strain Uf2 (Deposit No. FERM P-19020 or described in JP 2004-180626 A); *Dactylaria* spp. such as *Dactylaria candida; Dactylella* spp. such as *Dactylella oviparasitica; Dendryphiella* spp., in particular strain K-041(FERM P-12280 or described in JP H8-119817 A); *Detolaasinbacter* spp. such as *Detolaasinbacter tsukamotoae* strain OM-F11 (Accession No. FERM P-16772), *Detolaasinbacter shiratae* strain OM-D5 (Accession No. FERM P-16769) , and *Detolaasinbacter muratae* strain CM-14 (Accession No. FERM P-16767); *Drechmeria* spp. such as *Drechmeria coniospora; Enterobacter* spp.; *Epicoccosorus* spp. such as *Epicoccosorus nematosporus* strain JTK-003 (Deposit No. FERM BP-4906), *Epicoccosorus nematosporus* strain JTK-028 (Deposit No. FERM BP-4907), *Epicoccosorus nematosporus* strain JTK-029 (Deposit No. FERM BP-4908), *Epicoccosorus nematosporus* strain JTK-030 (Deposit No. FERM BP-4909), and *Epicoccosorus nematosporus* strain K-035 (Deposit No. FERM BP-4477); *Exserohilum* spp. such as *Exserohilum monoceras,* in particular strain JTB-808 (described in JP H9-140373 A), *Exserohilum pedicellata* strain JT-1043 (Deposit No. FERM BP-6086), *Exserohilum pedicellata* strain JT-1044 (Deposit No. FERM BP-6087), and *Exserohilum pedicellata* strain JT-1045 (Deposit No. FERM BP-6088) ; *Exophiala* spp. such as *Exophiala jeanselmei; Exophilia* spp. such as *Exophilia pisciphila; Fusarium* spp. such as *Fusarium aspergilus, Fusarium oxysporum* strain JTF-108, *Fusarium moniliforme, Fusarium subglutinans,* in particular strain HPF-1 (Accession No. FERM P-18266) , *Fusarium roseum,* and *Fusarium solani,* in particular strain Fs5; *Gigaspora* spp. such as *Gigaspora margarita* and *Gigaspora monosporum; Glomus* spp. such as *Glomus aggregatum, Glomus brasilianum, Glomus clarum, Glomus deserticola, Glomus etunicatum, Glomus intraradices, Glomus monosporum,* and *Glomus mosseae; Gluconacetobacter* spp. such as *Gluconacetobacter diazotrophicus; Haptoglossa* spp.; *Harposporium* spp. such as *Harposporium anguillullae; Herbaspirilum* spp. such as *Herbaspirilum rubrisubalbicans, Herbaspirilum seropedicae,* and a *Herbaspirilum* sp. having Accession No. NITE BP-193 or described in WO 2007/100162; *Heteroconium* spp. such as *Heteroconium chaetospira,* in particular strain BP-6134 (Deposit No. FERM BP-6134), *Heteroconium citharexyli,* and *Heteroconium solaninum; Hirsutella* spp. such as *Hirsutella citriformis, Hirsutella minnesotensis,* and *Hirsutella rhossiliensis; Isaria* spp. such as *Isaria fumosorosea; Laccaria* spp. such as *Laccaria bicolor* and *Laccaria laccata; Lactobacillus* spp. such as *Lactobacillus alimentarius, Lactobacillus casei* subsp. *casei, Lactobacillus brevis,* and *Lactobacillus plantarum; Lagenidium* spp. such as *Lagenidiumgiganteum; Lecanicillium*spp. such as *Lecanicillium lecanii* (formerly known as *Verticillium lecanii*) including conidia of *Lecanicillium lecanii* strain DAOM198499, conidia of *Lecanicillium lecanii* strain DAOM216596, and *Lecanicillium lecanii* strain OT14 (Accession No. FERM AP-21796), *Lecanicillium longisporum* strain OT21 (Accession No. FERM AP-21797), and *Lecanicillium muscarium* (formerly *Verticillium lecanii*) strain VE6/CABI (Accession No. IMI 268317/CBS102071/2.70 ARSEF5128); *Lysobacter* spp. such as *Lysobacter antibioticus* strain 13-1 (e.g., described in Biological Control 2008, 45, 288-296) and *Lysobacter enzymogenes* strain C3 (e.g., described in J Nematol. 2006 June; 38 (2) : 233-239) ; *Malbaranchea* spp., in particular Mf2 (Deposit No. FERM P-19019, e.g., described in JP 2004-180626 A); *Meristacrum* spp. such as *Meristacrum asterospermum; Mesorhizobium* spp. such as *Mesorhizobium cicer,* in particular strain CC1192 and strain WSM1497, *Mesorhizobium huakii,* in particular strain HN3015 (described in World J. Microbiol. Biotechn. (international standard serial number (ISSN) 0959-3993, 2007) 23(6), 845-851), and *Mesorhizobium loti,* in particular strain CC829 and strain SU343; *Metarhizium*spp. such as *Metarhizium flavoviride; Monacrosporium* spp. such as *Monacrosporium cionopagum, Monacrosporium drechsleri, Monacrosporium gephyropagum,* and *Monacrosporium psychrophilum; Muscodor* spp. such as *Muscodor albus* strain 620 QST 20799 (620) (having Accession No. NRRL 30547 or described in US 2012/0114610) and *Muscodor roseus* strain A3-5 (Accession No. NRRL 30548); *Myzocytium* spp.; *Nematoctonus* spp. such as *Nematoctonus geogenius* and *Nematoctonus leiosporus; Nematophthora* spp. such as *Nematophthora gynophila; Neocosmospora* spp. such as *Neocosmospora vasinfecta; Nomuraea* spp. such as *Nomuraea rileyi,* in particular strain CG128, strain GU87401, strain SA86101, strain SR86151, or strain VA9101 (e.g., described in Braz. Arch. Biol. Technol. Vol.46, No.1, 13-18); *Paenibacillus* spp. such as *Paenibacillus alvei* including *Paenibacillus alvei* strain III3DT-1A, *Paenibacillus alvei* strain III2E, *Paenibacillus alvei* strain 46C3, and *Paenibacillus alvei* strain 2771, and *Paenibacillus macerans; Paecilomyces* spp. such as *Paecilomyces farinosu* strain OT10 (Accession No. FERM AP-21795) and *Paecilomyces* sp. strain If2 (having Deposit No. FERM P-19016 or described in JP 2004-180626 A); *Pandora delphacis; Pantoea agglomerans,* in particular strain E325 (Accession No. NRRL B-21856); *Paraglomus brasilianum; Pasteuria* spp. such as *Pasteuria ramose, Pasteuria reneformis, Pasteuria reniformis,* and *Pasteuria thornei; Penicillium* spp. such as *Penicillium chrysogenum* and *Penicillium vermiculatum* strain Yuri-12 (Accession No. FERM ABP-11096); *Phlebiopsis* (or *Phlebia* or *Peniophora*) *gigantea* such as *Phlebiopsis gigantea* strain VRA 1835 (Accession No. ATCC 90304), *Phlebiopsis gigantea* strain VRA 1984 (Accession No. DSM 16201), *Phlebiopsis gigantea* strain VRA 1985 (Accession No.

DSM 16202), *Phlebiopsis gigantea* strain VRA 1986 (Accession No. DSM 16203), *Phlebiopsis gigantea* strain FOC PGB 20/5 (Accession No. IMI 390096), *Phlebiopsis gigantea* strain FOC PG SP log6 (Accession No. IMI 390097), *Phlebiopsis gigantea* strain FOC PG SP log5 (Accession No. IMI 390098), *Phlebiopsis gigantea* strain FOC PG BU3 (Accession No. IMI 390099), *Phlebiopsis gigantea* strain FOC PG BU4 (Accession No. IMI 390100), *Phlebiopsis gigantea* strain FOC PG 410.3 (Accession No. IMI 390101), *Phlebiopsis gigantea* strain FOC PG 97/1062/116/1.1 (Accession No. IMI 390102), *Phlebiopsis gigantea* strain FOC PG B22/SP1287/3.1 (Accession No. IMI 390103), and *Phlebiopsis gigantea* strain FOC PG SH1 (Accession No. IMI 390104); *Phanerochaete* spp.; *Pichia* spp. such as *Pichia anomala,* in particular strain WRL-076 (Accession No. NRRL Y-30842); *Plectosphaerella* spp. such as *Plectosphaerella cucumerina; Pseudomonas* spp. such as *Pseudomonas aeruginosa* including a *Pseudomonas aeruginosa* strain having Accession No. FERM P-16393, *Pseudomonas aeruginosa* strain PN1, and *Pseudomonas aeruginosa* strain WS-1, *Pseudomonas cepacia* (formerly known as *Burkholderia cepacia*) including *Pseudomonas cepacia* type Wisconsin strain M54 and *Pseudomonas cepacia* type Wisconsin strain J82, *Pseudomonas putida* strain CA-21, a *Pseudomonas* sp. having Accession No. AGAL NM00/09624 or described in JP 2007-332147 A, and *Pseudomonas* sp. strain AN5rif (having Accession No. AGAL NM00/09624 or described in JP 2007-332147 A); *Rhizobium* spp. such as *Rhizobium arachis, Rhizobium fredii, Rhizobium leguminosarum* including *Rhizobium leguminosarum* bv. *phaseolii, Rhizobium leguminosarum*bv. *trifolii,* and *Rhizobium leguminosarum*bv. *viceae* strain Z25 (Accession No. CECT 4585) , *Rhizobium huakuii* (e.g., described in Appl. Environ. Microbiol. 2011, 77(15), 5513-5516), *Rhizobium loti, Rhizobium lupini, Rhizobium meliloti, Rhizobium phaseoli, Rhizobium tropici,* and *Rhizobium trifolii; Rhizopogon* spp. such as *Rhizopogonluteolus, Rhizopogon tinctorus,* and Rhizopogon villosulus; *Rhodococcus* spp. such as *Rhodococcus erythroplis* strain W2 (described in Uroz et al. 2003 or JP 2010-516667 A) and *Rhodococcus globerulus,* in particular strain AQ719 (Accession No. NRRL B-21663); *Rhopalomyces* spp.; *Saprolegnia* spp.; *Sarcocystis singaporensis; Scleroderma* spp. such as *Scleroderma cepa* and *Scleroderma citrinum; Serratia* spp. such as *Serratia marcescens,* in particular strain SRM, and *Serratia marcescens,* in particular strain R35; *Sinorhizobium meliloti; Sphingobacterium* spp. such as *Sphingobacterium multivorum* strain OM-A8 (Accession No. FERM P-16768) and *Sphingobacterium* sp. strain OM-E81 (Accession No. FERM P-16770); *Stagonospora* spp. such as *Stagonospora atriplici* and *Stagonospora heteroderae; Steinernema feltiae; Streptomyces* spp. such as a *Streptomyces* sp. strain having Accession No. NRRL B-30145 or described in U.S. Pat. No. 6, 524, 577, *Streptomyces* sp. strain WYE 20 (Accession No. KCTC 0341BP) , *Streptomyces* sp. strain WYE 324 (Accession No. KCTC 0342BP), *Streptomyces colombiensis, Streptomyces galbus* strain QST6047 (having Accession No. NRRL B-30232 or described in U.S. Pat. No. 6,682,925, a.k.a. *Streptomyces griseoviridis, Streptomyces goshikiensis,* a *Streptomyces microflavus* strain (Accession No. NRRL B-50550), *Streptomyces lavendulae, Streptomyces lydicus* including *Streptomyces lydicus* strain WYCD108US, *Streptomyces prasinus* (e.g., described in Applied Microbiology 1973 Nov; 26(5):699-704), *Streptomyces rimosus,* and *Streptomyces venezuelae; Suillus* spp. such as *Suillus granulatus* and *Suillus punctatapies; Talaromyces* spp. such as *Talaromyces flavus* including *Talaromyces flavus* strain Y-9401 and *Talaromyces flavus* strain Yuri-01 (Accession No. FERM ABP-11095) ; *Thermus aquaticus* biovar, in particular strain SK542 (Accession No. NITE-IPOD 3382); *Tolypocladium* spp.; *Trametes* spp.; *Trichoderma* spp. such as *Trichoderma atroviride* including a *Trichoderma atroviride* strain having Accession No. NITE P-1419, *Trichoderma atroviride* strain SKT-2 (Accession No. FERM P-16511), *Trichoderma atroviride* strain SKT-3 (Accession No. FERM P-17021), *Trichoderma atroviride* strain T11 (having Accession No. IMI 352941 or CEC T20498), *Trichoderma atroviride* strain no. NMI No. V08/002387, *Trichoderma atroviride* strain no. NMI No. V08/002388, *Trichoderma atroviride* strain no. NMI No. V08/002389, and *Trichoderma atroviride* strain no. NMI No. V08/002390, *Trichoderma harmatum, Trichoderma harzianum* including *Trichoderma harzianum* strain 1295-22, *Trichoderma harzianum* strain ICC012, *Trichoderma harzianum* strain SK-55, and *Trichoderma harzianum* strain TSTh20, *Trichoderma insolens, Trichoderma koningii, Trichoderma longibrachiatum,* and *Trichoderma reesei; Virgibacillus pantothenticus* (formerly *Bacillus pantothenticus*), in particular, a strain having Accession No. ATCC 14576 or DSM 491; *Xanthomonas* spp. such as *Xanthomonas campestris* pv. *poae; Typhula phacorrhiza,* in particular, strain TPS-1 (Accession No. FERM P-18207); *Xenorhabdus* spp. such as *Xenorhabdus luminescens* and *Xenorhabdus nematophila;* and *Zoophtora radicans.*

In recent years, integrated pest management (IPM) technology using insect sex pheromones (e.g., communication disrupting agents against Tortricidae and Hadeninae, etc.), natural predatory insects, etc. has made progress. This technology and the composition of the present invention can be used in combination or used systematically. For example, the composition of the present invention can be used in combination with a natural predator, including *Haplothrips brevitubus, Franklinothrips vespiformis, Diglyphus isaea, Encarsia formosa, Gynaeseius liturivorus, Aphidius gifuensis* Ashmead, *Amblyseius cucumeris, Pseudaphycus malinus, Aphidius colemani, Eretmocerus eremicus, Aphidoletes aphidimyza, Amblyseius swirskii, Orius strigicollis, Eretmocerus mundus, Phytoseiulus persimilis, Aphelinus asychis, Aphelinidae* wasps, *Amblyseius degenerans, Trichogramma* spp. (wasps), *Harmonia axyridis, Orius sauteri, Dacnusa sibirica, Neochrysocharis formosa, Propylea japonica, Orius* spp., *Neoseiulus californicus, Serangium ryukyuense;* springtails, such as *F. candida* and A. *flavescens,* which prey on *Rhizoctonia* spp. (described in Springtails and infectious plant pathogenic microbes (*Rhizoctonia* spp.) (Tobimushi to Densensei Shokubutsu Byogenkin) (in Japanese) , Kagaku to Seibutsu, Vol. 51, No.4, 2013, pp. 267-269); *Anicetus beneficus, Chrysoperla nipponensis, Bathyplectes anurus,* and

*Amblydromalus limonicus.*

For example, the composition of the present invention can be used in combination with a natural predatory nematode, including *Abbreviata caucasica; Acuaria* spp.; *Agamermis decaudata; Allantonema* spp.; *Amphimermis* spp.; *Beddingia siridicola; Bovienema* spp.; *Cameronia* spp.; *Chitwoodiella ovofilamenta; Contortylenchus* spp.; *Culicimermis* spp.; *Diplotriaena* spp.; *Empidomermis* spp.; *Filipjevimermis leipsandra; Gastromermis* spp.; *Gongylonema* spp.; *Gynopoecilia pseudovipara; Heterorhabditis* spp. such as *Heterorhabditis bacteriophora* (e.g., product known as B-Green), *Heterorhabditis baujardi, Heterorhabditis heliothidis* (e.g., product known as Nematon (registered trademark)), *Heterorhabditis indica, Heterorhabditis marelatus, Heterorhabditis megidis,* and *Heterorhabditis zealandica; Hexamermis* spp.; *Hydromermis* spp.; *Isomermis* spp.; *Limnomermis* spp.; *Maupasina weissi; Mermis nigrescens; Mesomermis* spp.; *Neomesomermis* spp.; *Neoparasitylenchus rugulosi; Octomyomermis* spp.; *Parasitaphelenchus* spp.; *Parasitorhabditis* spp.; *Parasitylenchus* spp.; *Perutilimermis culicis; Phasmarhabditis hermaphrodita; Physaloptera* spp.; *Protrellatus* spp.; *Pterygodermatites* spp.; *Romanomermis* spp.; *Seuratum cadarachense; Sphaerulariopsis* spp.; *Spirura guianensis; Steinernema* spp. such as *Steinernema carpocapsae* (e.g., product known as Biocontrol) , *Steinernema feltiae* (e.g., product known as Nemasys (registered trademark)), *Steinernema glaseri* (product known as Biotopia), *Steinernema kraussei* (e.g., product known as Larvesure), *Steinernema riobrave* (e.g., product known as Biovector), *Steinernema scapterisci* (e.g., product known as Nematac S), *Steinernema scarabaei,* and *Steinernema siamkayai; Strelkovimermis peterseni; Subulura* spp.; *Sulphuretylenchus elongatus;* and *Tetrameres* spp.

For example, the composition of the present invention can be used in combination with a viral agent, including tobacco mosaic virus, *Adoxophyes orana* granulosis virus (GV) (e.g., product known as BIOFA-Capex (registered trademark)), a mixture of *Adoxophyes orana* granulosis virus (MAFF632001) and *Homona magnanima* granulosis virus (MAFF632002) (e.g., Hamaki Tenteki (registered trademark), Arysta LifeScience Corporation), *Agrotis segetum* nuclear polyhedrosis virus (NPV), *Anticarsia gemmatalis* (woolly pyrol moth) mNPV (e.g., product known as Polygen (registered trademark)), *Autographa californica* (alfalfa looper) mNPV (e.g., product known as VPN80 (registered trademark); supplier: Agricola El Sol), tea looper (*Biston suppressaria*) NPV, *Bombyx mori* NPV, *Cryptophlebia leucotreta* (false codling moth) GV (e.g., product known as Cryptex (registered trademark)), *Cydia pomonella* sp. granulosis virus such as *Cydia pomonella* granulosis virus, *Cydia pomonella* granulosis virus (CpGV) (e.g., product known as Madex Plus (registered trademark) ), *Dendrolimus punctatus* CPV (e.g., DVC WP Matsukemin, Chugai Pharmaceutical Co., Ltd.), *Helicoverpa armigera* NPV (e.g., product known as AgBiTech-ViVUS Max (registered trademark)), *Helicoverpa zea* (formerly known as *Heliothis zea)* NPV (e.g., product known as Elcar (registered trademark)), *Leucoma salicis* NPV, *Lymantria dispar* NPV (e.g., product known as Gypcheck (registered trademark)), balsam-fir sawfly *(Neodiprion abietis*) NPV (e.g., product known as Abietiv (registered trademark)), *Neodiprion lecontei* (red-headed pine sawfly) NPV (e.g., product known as Lecontvirus (registered trademark)), *Neodiprion sertifer* NPV (e.g., product known as Neocheck-S (registered trademark)), *Orgyia pseudotsugata* (Douglas-fir tussock moth) NPV (e.g., product known as Virtuss (registered trademark)), tobacco leaf miner *(Phthorimaea operculella*) GV (e.g., product known as Matapol (registered trademark)), *Pieris rapae* GV, *Plutella xylostella* GV (e.g., product known as Plutec (registered trademark)), *Spodoptera albula* (gray-streaked armyworm moth) mNPV (e.g., product known as VPN 82 (registered trademark)), true armyworm (*Spodoptera exempta*) mNPV (e.g., product known as Spodec (registered trademark)), sugarbeet armyworm (*Spodoptera exigua*) mNPV (e.g., product known as Spexit (registered trademark); supplier: Andermatt Biocontrol), fall armyworm (*Spodoptera frugiperda*) mNPV (e.g., product known as Baculovirus VPN (registered trademark)), tobacco cutworm (*Spodoptera littoralis*) NPV (product known as Spodoptrin (registered trademark) ; supplier: NPP Calliope France), oriental leafworm moth (*Spodoptera litura*) NPV (Littovir (registered trademark)), oriental leafworm moth nuclear polyhedrosis virus strain Fu-1 occlusion body (Hasumon Tenteki, Nippon Kayaku Co., Ltd.), oriental leafworm moth nuclear polyhedrosis virus clone A9 and clone C3 occlusion body (e.g., Hasumon Killer, IBIKO CORPORATION), zucchini yellow mosaic virus less virulent strain ZY-02 (e.g., "Kyoto Biken" Kyubio ZY-02 (registered trademark), Kyoto Biken Laboratories, Inc.) , zucchini yellow mosaic virus less virulent strain ZY-95 (e.g., "Kyoto Biken" Kyubio ZY-02 (registered trademark), Kyoto Biken Laboratories, Inc.), and pepper mild mottle virus less virulent strain AVP08 (e.g., Green Pepper PM (registered trademark), Kyoto Biken Laboratories, Inc.).

For example, the composition of the present invention can be used in combination with a pheromone agent, including an alumigelure-uwabalure-diamolure-beetarmylure-litlure combination agent (Konfuyuza V (registered trademark), Kyoyu Agri Co., Ltd.), a cuelure liquid agent (e.g., Cuelure (registered trademark), Sankei Chemicals Co., Ltd.), a methyl eugenol agent (e.g., Sankei Methyl Eugenol (registered trademark), Sankei Chemicals Co., Ltd.), a synanthelure agent (SukashibaconL (registered trademark), Shin-Etsu Chemical Co., Ltd.), a cossinlure agent (Bokutokon-H (registered trademark), Shin-Etsu Chemical Co., Ltd.), a tortorilure agent (Hamakikon-N (registered trademark), Shin-Etsu Chemical Co., Ltd.), an orfralure-tortorilure-peachflure combination agent (Konfuyuza R (registered trademark), KyoyuAgri Co., Ltd.), an orfralure-tortorilure-peachflure combination agent (Konfuyuza N (registered trademark), Shin-Etsu Chemical Co., Ltd.), an orfralure-tortorilure-peachflure-pirimalure combination agent (Konfuyuza MM (registered trademark), Shin-Etsu Chemical Co., Ltd.), an alemalure-orfralure-tortorilure-peachflure combination agent (Konfuyuza AA (registered trademark), Shin-Etsu Chemical Co., Ltd.), a masinissalure agent (Hetamushikon (registered trademark),

Shin-Etsu Chemical Co., Ltd.), a fallweblure agent (Nitorua (Ameshiro) (registered trademark), Idemitsu Kosan Co. , Ltd.), a quercivolure agent (Kashinagakoru (registered trademark), Sankei Chemicals Co., Ltd.), a bluwelure-lawculure combination agent (e.g., Konfuyuza G (registered trademark), Shin-Etsu Chemical Co., Ltd.), MEP-sweet vilure granules (Arimodokikoru granules (registered trademark), Sankei Chemicals Co., Ltd.), an infelure agent (Yotokon-1 (registered trademark), Shin-Etsu Chemical Co., Ltd.), okimelanolure agent (e.g., Sankei Okimeranokoru (registered trademark), Sankei Chemicals Co., Ltd.), a sakimelanolure agent (Sakimelanokoru (registered trademark), Sankei Chemicals Co., Ltd.), a beetarmylure agent (e.g., Yotokon-S (registered trademark), Shin-Etsu Chemical Co., Ltd.), a litlure agent (e.g., Ferodein SL (registered trademark), Sumitomo Chemical Co., Ltd.), and a diamolure agent (e.g., Konagakon (registered trademark), Sankei Chemicals Co., Ltd.).

For example, the composition of the present invention can be used in combination with an extract from an organism, including acacia negra extract, abscisic acid, *Chenopodium ambrosiodae* extract, arginine, alginate oligosaccharide, nepitella oil, eugenol, L-carvone, ethyl formate, chitin, chitosan (e.g., ARMOUR-ZEN, BotryZen Ltd., NZ), quillay extract; components of *Ginkgo biloba* selected from the group consisting of ginkgolide A, ginkgolide B, ginkgolide C, ginkgolide J and ginkgolide M; grapefruit seeds and flesh extract, potassium silicate, cytokinin, sanguinarine (*Macleaya cordata* extract), cis-jasmone, citral, gibberellin derivative, siccanin (a substance produced by filamentous fungus *Helminthosporium siccans*), citronella oil, citronellol, jasmonic acid, methyl jasmonate, sorbitol octanoate, neem tree or extracts from seeds of neem tree, neem oil, thymol, terpinolene, synthetically produced terpenes of extract of *Chenopodium ambrosioides* near *ambrosioides* [containing a mixture of three types of terpenes, i.e., $\alpha$-terpinene, p-cymene and limonene as harmful organism-killing ingredients] (e.g., product known as Requiem (registered trademark); supplier: Bayer CropScience LP, US), bilobalide, humic acid and fulvic acid extracted from lignite clay, pentatermanone, marigold oil, isopropyl myristate, methyl eugenol, methyl jasmonate, harpin protein, heptyl butyrate, lavandulyl senecioate, humates such as lignite coal known as leonardite, lecithin, (E,Z)-7,9-dodecadien-1-yl acetate, (E,Z)-2,4-ethyl-decadienoate (pear ester), (Z,Z,E)-7,11,13-hexadecatrienal, 2-methyl-1-butanol, (E,Z)-2,13-octadecadien-1-ol, (E,Z)-2,13-octadecadien-1-ol acetate, (E,Z)-3,13-octadecadien-1-ol, R-1-octen-3-ol, (E,Z,Z)-3,8,11-tetradecatrienyl acetate, (Z,E)-9,12-tetradecadien-1-yl acetate, Z-7-tetradecen-2-one, Z-9-tetradecen-1-yl acetate, Z-11-tetradecenal, Z-11-tetradecen-1-ol, plumbagin, which is a plant extract from *Pongamia* spp., *Calotropis* spp., *Plumbago* spp., *Maytenus* spp., *Baccharis* spp., *Rubia* spp., *Calophyllum* spp., *Urtica* spp., *Kobresia* spp. or *Caesalpinia* spp., and brassinosteroids produced from *Rhodopseudomonas sphaeroides,* in particular strain IFO-12203.

For example, the composition of the present invention can be used in combination with microbes, including *Dictyostelium* spp. such as *Dictyostelium discoideum, Dictyostelium purpureum, Dictyostelium mucoroides, Dictyostelium fasciculatum, Dictyostelium monochasioides, Dictyostelium lacteum,* and *Dictyostelium giganteum; Collimonas* spp., in particular strain D-25 (Deposit No. NITE P-1104); *Nimbya* spp. such as *Nimbya scirpicola* strain K-004 (Deposit No. FERM BP-4448); *Flavobacterium* spp.; *Heterophabditis* spp.; basidiomycetes; chytridiomycetes; oomycetes; zygomycetes; deuteromycetes; *Acarospora* spp.; *Anthoceros* spp.; *Anzia* spp.; *Arthonia* spp.; *Buellia* spp.; *Calicium* spp.; *Candelaria* spp.; *Cladonia* spp.; *Coccocarpia* spp.; *Collema* spp.; *Cyphelium* Ach. spp.; *Dibaeis* spp.; *Dictyonema* spp.; *Diploschistes* spp.; *Graphis* spp.; *Gyalecta* spp.; *Hypogymnia* spp.; *Lecanactis* spp.; *Lecanora* spp.; *Menegazzia* spp.; *Opegrapha* spp.; *Pannaria* spp.; *Parmotrema* spp.; *Physcia* spp.; *Placynthium* spp.; *Porpidia* spp.; *Pyrenula* spp.; *Ramaria* spp.; *Retaria* spp.; *Sphaerophorus* spp.; *Stereocaulon* spp.; *Sticta* spp.; *Strigula* spp.; *Teloschistes* spp.; *Thamnolia* spp. (*Thamnolia vermicularis*); *Thelotrema* spp.; *Tricholoma* spp.; *Umbilicaria* spp.; *Usnea* spp. such as *Usnea longissima, Usnea diffracta* Vain, *Usnea trichodeoides, Usnea pseudomontis-fuji,* and *Usnea pectinata; Verrucaria* spp.; *Trypethelium* spp.; Asterothyriaceae; *Heppia* spp.; *Lichina* spp.; *Aureobasidium pullulans; Metschnikowia fructicola;* and *Metschnikowia fructicola* such as *Metschnikowia fructicola* strain NRRL Y-30752; or can be used in combination with an enzyme, including chitinase, endoglycosidase, peroxidase, and uracil permease; or can be used in combination with protozoa, including *Nosema locustae* (e.g., product known as Nolo Bait (registered trademark)), *Thelohania solenopsis,* and *Vairimorpha* spp.

When the harmful organism control composition of the present invention is used, it is commonly formulated into a convenient form for application, which is prepared by the usual method for preparing agrochemical formulations. That is, the active ingredients used in the harmful organism control composition of the present invention and an appropriate inactive carrier, and if needed an adjuvant, are blended in an appropriate ratio, and through the step of dissolution, dispersion, suspension, mixing, impregnation, adsorption and/or adhesion, are formulated into an appropriate formulation selected from suspension concentrates (flowables), oil-in-water emulsions (EW formulation), oil dispersions (OD formulation), suspoemulsions (SE), microemulsions (ME), emulsifiable concentrates, soluble concentrates, wettable powders, water-dispersible granules, granules, dusts, tablets, packs, etc. If appropriate, different types of formulations may be combined, incorporated, and mixed. For example, kneaded granules can be mixed with impregnated granules, wettable powders and water-dispersible granules can be mixed and compressed into tablets, and suspension concentrates and soluble concentrates can be combined into packs.

Examples of the adjuvant include surfactants used as a dispersant, a wetting agent, a spreader, a sticking/spreading agent, etc., inactive carriers, binders, tackifiers, thickeners, colorants, antifreezing agents/reconstitution

agents, anti-caking agents, disintegrants, and stabilizing agents. If needed, preservatives, plant fragments, etc. may also be used as an additive. One of these additives may be used alone, and also two or more of them may be used in combination.

The surfactant suitable for use in the harmful organism control composition of the present invention may be any surfactant known in the art. Examples of the surfactant used as a dispersant, a wetting agent, a spreader, a sticking/spreading agent, etc. include, but are not limited to, vegetable oil-type nonionic surfactants, alcohol-type nonionic surfactants, polyoxyethylene/polyoxypropylene blockpolymer-type nonionic surfactants, alkylphenol-type nonionic surfactants, sugar ester-type nonionic surfactants, fatty acid ester-type nonionic surfactants, bisphenol-type nonionic surfactants, polyaromatic ring-type nonionic surfactants, silicone-type nonionic surfactants, and fluorine-type nonionic surfactants.

Examples of the vegetable oil-type nonionic surfactant include, but are not limited to, hydrogenated castor oil, polyoxyalkylene castor oil (e.g., polyoxyethylene castor oil, etc.), and polyoxyalkylene hydrogenated castor oil (e.g., polyoxyethylene hydrogenated castor oil, etc.).

Examples of the alcohol-type nonionic surfactant include, but are not limited to, polyoxyethylene alkyl ethers, polyoxyethylene alkyl aryl ethers, acetylene diols, and polyoxyalkylene adducts of acetylene diols.

Examples of the polyoxyethylene/polyoxypropylene block polymer-type nonionic surfactant include, but are not limited to, polyoxyethylene/polyoxypropylene block polymers, polystyrene/polyoxyethylene block polymers, alkyl polyoxyethylene/polyoxypropylene block polymer ethers, polyoxyethylene alkyl amines, and alkyl phenyl polyoxyethylene/polyoxypropylene block polymer ethers.

Examples of the alkylphenol-type nonionic surfactant include, but are not limited to, polyoxyethylene alkylphenyl ethers, polyoxyethylene dialkylphenyl ethers, polyalkylene benzylphenyl ethers, polyoxyalkylene styrylphenyl ethers, and polyoxyethylene alkylphenyl ether-formaldehyde condensates.

Examples of the sugar ester-type nonionic surfactant include, but are not limited to, polyoxyethylene sorbitan aliphatic esters, polyoxyalkylene sorbitol fatty acid esters (e.g., polyoxyethylene sorbitol fatty acid esters etc.), glycerol fatty acid esters, polyoxyethylene fatty acid amides, and sucrose fatty acid esters.

Examples of the fatty acid ester-type nonionic surfactant include, but are not limited to, sorbitan fatty acid esters, polyoxyethylene fatty acid esters, polyoxyethylene resin acid esters, and polyoxyethylene fatty acid diesters.

Examples of the bisphenol-type nonionic surfactant include, but are not limited to, polyoxybisphenyl ethers, and polyoxyethylene fatty acid bisphenyl ethers.

Examples of the polyaromatic ring-type nonionic surfactant include, but are not limited to, polyoxyalkylene benzylphenyl ethers and polyoxyalkylene styrylphenyl ethers.

Examples of the silicone-type nonionic surfactant include, but are not limited to, polyoxyethylene ether-type silicone surfactants and polyoxyethylene ester-type silicone surfactants.

Examples of the anionic surfactant that can be used include, but are not limited to, sulfate-type anionic surfactants, sulfonate-type anionic surfactants, phosphate-type anionic surfactants, and carboxylic acid-type anionic surfactants.

Examples of the sulfate-type anionic surfactant include, but are not limited to, alkyl sulfates, polyoxyethylene alkyl ether sulfates, polyoxyethylene alkyl phenyl ether sulfates, polyoxyethylene styryl phenyl ether sulfates, alkylbenzene sulfonates, alkyl aryl sulfonates, lignin sulfonates, alkyl sulfosuccinates, naphthalene sulfonates, alkyl naphthalene sulfonates, salts of naphthalene sulfonic acid-formaldehyde condensates, and polyoxyethylene/polyoxypropylene block polymer sulfates.

Examples of the sulfonate-type anionic surfactant include, but are not limited to, paraffin sulfonates, dialkyl sulfosuccinates, alkylbenzene sulfonates, monoalkyl naphthalene sulfonates, dialkyl naphthalene sulfonates, salts of alkyl naphthalene sulfonic acid-formaldehyde condensates, and alkyl diphenyl ether disulfonates.

Examples of the phosphate-type anionic surfactant include, but are not limited to, polyoxyethylene alkyl ether phosphates, polyoxyethylene alkyl phenyl ether phosphates, polyoxyethylene dialkyl phenyl ether phosphates, polyoxyethylene styryl phenyl ether phosphates, polyoxyethylene/polyoxypropylene block polymer phosphates, and alkyl phosphates.

Examples of the carboxylic acid-type anionic surfactant include, but are not limited to, fatty acid salts such as fatty acid sodium salts, fatty acid potassium salts, and fatty acid ammonium salts, polycarboxylates, polyacrylates, N-methyl-fatty acid sarcosinates, and resin acid salts such as resin acid sodium salts and resin acid potassium salts.

Examples of the cationic surfactant that can be used include, but are not limited to, alkylamine salts, ammonium-type cationic surfactants, and benzalkonium-type cationic surfactants. Examples of the alkylamine salt include, but are not limited to, laurylamine hydrochloride, stearylamine hydrochloride, oleylamine hydrochloride, stearylamine acetate, stearylaminopropylamine acetate, alkyltrimethylammonium chlorides, and alkyl dimethylbenzalkonium chlorides. Examples of the ammonium-type cationic surfactant include, but are not limited to, methyl polyoxyethylene alkylammonium chlorides, alkyl N-methylpyridinium bromides, mono- or di-alkyl methylated ammonium chlorides, and alkylpentamethylpropylenediamine chroides. Examples of the benzalkonium-type cationic surfactant include, but are not limited to,

alkyldimethylbenzalkonium chlorides, benzethonium chloride, and octylphenoxyethoxyethyl dimethylbenzylammonium chloride.

Examples of the amphoteric surfactant that can be used include, but are not limited to, amino acid-type or betaine-type amphoteric surfactants. Examples of the amino acid-type amphoteric surfactant include, but are not limited to, N-alkyl aspartates, acylsarcosine salts, and acyl-N-methyltaurine salts. Examples of the betaine-type amphoteric surfactant include, but are not limited to, dialkyl diaminoethyl betaines and alkyl dimethyl benzyl betaines. One of these surfactants may be used alone, and also two or more of them may be used in combination.

The inactive carrier may be a solid or liquid carrier. Examples of the solid carrier include natural minerals, such as quartz, clay, kaolinite (kaolin), pyrophyllite, sericite, talc, bentonite, acid clay, attapulgite, zeolite and diatomite; inorganic salts, such as calcium carbonate, ammonium sulfate, sodium sulfate and potassium chloride; organic solid carriers, such as synthetic silicic acid, synthetic silicates, starch, cellulose and plant powders (e.g., sawdust, coconut shell, corn cob, tobacco stalk, etc.); plastics carriers, such as polyethylene, polypropylene, polystyrene, polyvinylidene chloride, and polyethylene terephthalate; urea; hollow inorganic materials; hollow plastic materials; and fumed silica (white carbon) . One of these solid carriers may be used alone, and also two or more of them may be used in combination.

Examples of the liquid carrier include alcohols including monohydric alcohols, such as methanol, ethanol, propanol, isopropanol and butanol, and polyhydric alcohols, such as ethylene glycol, diethylene glycol, propylene glycol, hexylene glycol, polyethylene glycol, polypropylene glycol and glycerin; polyol compounds, such as propylene glycol ether; ketones, such as acetone, methyl ethyl ketone, methyl isobutyl ketone, diisobutyl ketone and cyclohexanone; ethers, such as ethyl ether, dioxane, ethylene glycol monoethyl ether, dipropyl ether and tetrahydrofuran; aliphatic hydrocarbons, such as normal paraffin, naphthene, isoparaffin, kerosene and mineral oil; aromatic hydrocarbons, such as benzene, toluene, xylene, solvent naphtha and alkyl naphthalene; halogenated hydrocarbons, such as dichloromethane, chloroform and carbon tetrachloride; esters, such as ethyl acetate, diisopropyl phthalate, dibutyl phthalate, dioctyl phthalate and dimethyl adipate; lactones, such as gamma-butyrolactone; amides, such as dimethylformamide, diethylformamide, dimethylacetamide and N-alkyl pyrrolidone (N-methyl pyrrolidone etc.); nitriles, such as acetonitrile; sulfur compounds, such as dimethyl sulfoxide; vegetable oils, such as soybean oil, rapeseed oil, cotton seed oil and castor oil; and water. One of these liquid carriers may be used alone, and also two or more of them may be used in combination.

The oil dispersion media exemplified below can also be used for the harmful organism control composition of the present invention. The oil dispersion media that can be used include animal oils, for example, whale oil, cod liver oil, musk oil, and mink oil. Vegetable oils that can be used include, for example, soybean oil, rapeseed oil, maize oil, corn oil, sunflower oil, cottonseed oil, linseed oil, coconut oil, palm oil, milk thistle oil, walnut oil, arachis oil, olive oil, papaya oil, camellia oil, palm oil, sesame oil, rice bran oil, peanut oil, linseed oil, tung oil, sunflower oil, castor oil, tea tree oil, and esters such as lactic acid esters. The vegetable oils further include their transesterification products, such as methyl oleate, rapeseed oil methyl ester, and rapeseed oil ethyl ester. One of these oils may be used alone, and also two or more of them may be used in combination.

Examples of the binder or the tackifier include, but are not limited to, carboxymethyl cellulose and salts thereof, dextrin, soluble starch, xanthan gum, guar gum, sucrose, polyvinyl pyrrolidone, gum arabic, polyvinyl alcohol, polyvinyl acetate, sodium polyacrylate, polyethylene glycols with an average molecular weight of about 6,000 to 20,000, polyethylene oxides with an average molecular weight of about 100,000 to 5,000,000, phospholipids (for example, cephalin, lecithin, etc.), cellulose powder, dextrin, modified starch, polyaminocarboxylic acid chelating compounds, cross-linked polyvinyl pyrrolidone, maleic acid-styrene copolymers, (meth)acrylic acid copolymers, half esters of polyhydric alcohol polymer and dicarboxylic anhydride, water soluble polystyrene sulfonates, paraffin, terpene, polyamide resins, polyacrylates, polyoxyethylene, waxes, polyvinyl alkyl ether, alkylphenol-formaldehyde condensates and synthetic resin emulsions. One of these may be used alone, and also two or more of them may be used in combination.

Examples of the thickener include, but are not limited to, water soluble polymers, such as xanthan gum, guar gum, diutan gum, carboxymethyl cellulose, polyvinyl pyrrolidone, carboxyvinyl polymers, acrylic polymers, starch derivatives and polysaccharides; and inorganic fine powders, such as high grade bentonite, fumed silica (white carbon), and alumina particles. One of these may be used alone, and also two or more of them may be used in combination.

Examples of the colorant include, but are not limited to, inorganic pigments, such as iron oxide, titanium oxide, and Prussian blue; organic dyes, such as alizarin dyes, azo dyes, and metal phthalocyanine dyes; and organic pigments, such as phthalocyanine blue and permanent red.

Examples of the antifreezing agent/reconstitution agent include, but are not limited to, polyhydric alcohols, such as ethylene glycol, diethylene glycol, propylene glycol, and glycerin.

Examples of the adjuvant serving to prevent caking or facilitate disintegration include, but are not limited to, polysaccharides (starch, alginic acid, mannose, galactose, etc.), polyvinyl pyrrolidone, fumed silica (white carbon), ester gum, petroleum resin, sodium tripolyphosphate, sodium hexametaphosphate, metal stearates, cellulose powder, dextrin, methacrylate copolymers, polyvinyl pyrrolidone, polyaminocarboxylic acid chelating compounds, sulfonated styrene-isobutylene-maleic anhydride copolymers, and starch-polyacrylonitrile graft copolymers.

Examples of the stabilizing agent include, but are not limited to, desiccants, such as zeolite, quicklime, and

magnesium oxide; antioxidants, such as phenolic compounds, amine compounds, sulfur compounds, and phosphoric acid compounds; and ultraviolet absorbers, such as salicylic acid compounds and benzophenone compounds.

Examples of the defoamer include, but are not limited to, silicone oil.

Examples of the preservative include, but are not limited to, potassium sorbate and 1,2-benzothiazolin-3-one.

Further, other adjuvants including functional spreading agents, activity enhancers such as metabolic inhibitors (piperonyl butoxide etc.), antifreezing agents (propylene glycol etc.), antioxidants (BHT etc.), and ultraviolet absorbers can also be used if needed.

The harmful organism control composition of the present invention is suitable for controlling a variety of pests which may damage paddy rice, fruit trees, vegetables, other crops, and flowering plants. Such pests are, for example, agricultural and forest pests, horticultural pests, forest and wood pests, livestock pests, stored grain pests, sanitary pests, nematodes, etc. Examples of such pests include, but are not limited to, those belonging to Lepidoptera, Hemiptera, Coleoptera, Diptera, Hymenoptera, Hymenoptera, Orthoptera, Thysanoptera, Acari, Isoptera, Blattodea, Siphonaptera, Nematoda, and Mollusca.

Specific examples of such pests include the following: the species of the order Lepidoptera such as *Parasa consocia, Anomis mesogona, Papilio xuthus, Matsumuraeses azukivora, Ostrinia scapulalis, Spodoptera exempta, Hyphantria cunea, Ostrinia furnacalis, Pseudaletia separata, Tinea translucens, Bactra furfurana, Parnara guttata, Marasmia exigua, Parnara guttata, Sesamia inferens, Brachmia triannulella, Monema flavescens, Trichoplusia ni, Pleuroptya ruralis, Cystidia couaggaria, Lampides boeticus, Cephonodes hylas, Helicoverpa armigera, Phalerodonta manleyi,*

*Eumeta japonica, Pieris brassicae, Malacosoma neustria testacea, Stathmopoda masinissa, Cuphodes diospyrosella, Archips xylosteanus, Agrotis segetum, Tetramoera schistaceana, Papilio machaon hippocrates, Endoclyta sinensis, Lyonetia prunifoliella, Phyllonorycter ringoneella, Cydia kurokoi, Eucoenogenes aestuosa, Lobesia botrana, Latoia sinica, Euzophera batangensis, Phalonidia mesotypa, Spilosoma imparilis, Glyphodes pyloalis, Olethreutes mori, Tineola bisselliella, Endoclyta excrescens, Nemapogon granellus, Synanthedon hector, Cydia pomonella, Plutella xylostella, Cnaphalocrocis medinalis, Sesamia calamistis, Scirpophaga incertulas, Pediasia teterrellus, Phthorimaea operculella, Stauropus fagi persimilis, Etiella zinckenella,*

*Spodoptera exigua, Palpifer sexnotata, Spodoptera mauritia, Scirpophaga innotata, Xestia c-nigrum, Spodoptera depravata, Ephestia kuehniella, Angerona prunaria, Clostera anastomosis, Pseudoplusia includens, Matsumuraeses falcana, Helicoverpa assulta, Autographa nigrisigna, Agrotis ipsilon, Euproctis pseudoconspersa, Adoxophyes orana, Caloptilia theivora, Homona magnanima, Ephestia elutella, Eumeta minuscula, Clostera anachoreta, Heliothis maritima, Sparganothis pilleriana, Busseola fusca, Euproctis subflava, Biston robustum, Heliothis zea, Aedia leucomelas, Narosoideus flavidorsalis, Viminia rumicis, Bucculatrix pyrivorella, Grapholita molesta, Spulerina astaurota, Ectomyelois pyrivorella, Chilo suppressalis, Acrolepiopsis sapporensis, Plodia interpunctella, Hellula undalis, Sitotroga cerealella, Spodoptera litura,* a species of the family Tortricidae (*Eucosma aporema*), *Acleris comariana, Scopelodes contractus,*

*Orgyia thyellina, Spodoptera frugiperda, Ostrinia zaguliaevi, Naranga aenescens, Andraca bipunctata, Paranthrene regalis, Acosmeryx castanea, Phyllocnistis toparcha, Endopiza viteana, Eupoecillia ambiguella, Anticarsia gemmatalis, Cnephasia cinereipalpana, Lymantria dispar, Dendrolimus spectabilis, Leguminivora glycinivorella, Maruca testulalis, Matsumuraeses phaseoli, Caloptilia soyella, Phyllocnistis citrella, Hadylepta indicata, Archips fuscocupreanus, Acanthoplusia agnata, Bambalina* sp., *Carposina niponensis, Conogethes punctiferalis, Synanthedon* sp., *Lyonetia clerkella, Papilio helenus, Colias erate poliographus, Phalera flavescens,*

the species of the family Pieridae such as *Pieris rapae crucivora* and *Pieris rapae, Euproctis similis, Acrolepiopsis suzukiella, Ostrinia nubilalis, Mamestra brassicae, Ascotis selenaria, Phtheochroides clandestina, Hoshinoa adumbratana, Odonestis pruni japonensis, Triaena intermedia, Adoxophyes orana fasciata, Grapholita inopinata, Spilonota ocellana, Spilonota lechriaspis, Illiberis pruni, Argyresthia conjugella, Caloptilia zachrysa, Archips breviplicanus, Anomis flava, Pectinophora gossypiella, Notarcha derogata, Diaphania indica, Heliothis virescens, Earias cupreoviridis* and *Tuta absoluta* (English name: tomato leaf miner), but are not limited thereto;

the species of the order Hemiptera such as *Nezara antennata, Stenotus rubrovittatus, Graphosoma rubrolineatum, Trigonotylus coelestialium, Aeschynteles maculatus, Creontiades pallidifer, Dysdercus cingulatus, Chrysomphalus ficus, Aonidiella aurantii, Graptopsaltria nigrofuscata, Blissus leucopterus, Icerya purchasi, Piezodorus hybneri, Lagynotomus elongatus, Thaia subrufa, Scotinophara lurida, Sitobion ibarae, Stariodes iwasakii, Aspidiotus destructor, Taylorilygus pallidulus, Myzus mumecola, Pseudaulacaspis prunicola, Acyrthosiphon pisum, Anacanthocoris striicornis, Ectometopterus micantulus, Eysarcoris lewisi, Molipteryx fuliginosa, Cicadella viridis, Rhopalosophum rufiabdominalis, Saissetia oleae, Trialeurodes vaporariorum, Aguriahana quercus, Lygus* spp., *Euceraphis punctipennis, Andaspis kashicola,*

*Coccus pseudomagnoliarum, Cavelerius saccharivorus, Galeatus spinifrons, Macrosiphoniella sanborni, Aonidiella citrina, Halyomorpha mista, Stephanitis fasciicarina, Trioza camphorae, Leptocorisa chinensis, Trioza quercicola, Uhlerites latius, Erythroneura comes, Paromius exiguus, Duplaspidiotus claviger, Nephotettix nigropictus, Halticiellus*

*insularis, Perkinsiella saccharicida, Psylla malivorella, Anomomeura mori, Pseudococcus longispinis, Pseudaulacaspis pentagona, Pulvinaria kuwacola, Apolygus lucorum, Togo hemipterus, Toxoptera aurantii, Saccharicoccus sacchari, Geoica lucifuga, Numata muiri, Comstockaspis perniciosa, Unaspis citri, Aulacorthum solani, Eysarcoris ventralis, Bemisia argentifolii, Cicadella spectra,*
*Aspidiotus hederae, Liorhyssus hyalinus, Calophya nigridorsalis, Sogatella furcifera, Megoura crassicauda, Brevicoryne brassicae, Aphis glycines, Leptocorisa oratorius, Nephotettix virescens, Uroeucon formosanum, Cyrtopeltis tennuis, Bemisia tabaci, Lecanium persicae, Parlatoria theae, Pseudaonidia paeoniae, Empoasca onukii, Plautia stali, Dysaphis tulipae, Macrosiphum euphorbiae, Stephanitis pyrioides, Ceroplastes ceriferus, Parlatoria camelliae, Apolygus spinolai, Nephotettix cincticeps, Glaucias subpunctatus, Orthotylus flavosparsus, Rhopalosiphum maidis, Peregrinus maidis, Eysarcoris parvus, Cimex lectularius, Psylla abieti, Nilaparvata lugens, Psylla tobirae, Eurydema rugosum, Schizaphis piricola, Psylla pyricola,*
*Parlatoreopsis pyri, Stephanitis nashi, Dysmicoccus wistariae, Lepholeucaspis japonica, Sappaphis piri, Lipaphis erysimi, Neotoxoptera formosana, Rhopalosophum nymphaeae, Edwardsiana rosae, Pinnaspis aspidistrae, Psylla alni, Speusotettix subfusculus, Alnetoidia alneti, Sogatella panicicola, Adelphocoris lineolatus, Dysdercus poecilus, Parlatoria ziziphi, Uhlerites debile, Laodelphax striatellus, Eurydema pulchrum, Cletus trigonus, Clovia punctata, Empoasca* spp., *Coccus hesperidum, Pachybrachius luridus, Planococcus kraunhiae, Stenotus binotatus, Arboridia apicalis, Macrosteles fascifrons, Dolycoris baccarum, Adelphocoris triannulatus, Viteus vitifolii, Acanthocoris sordidus, Leptocorisa acuta, Macropes obnubilus, Cletus punctiger, Riptortus clavatus, Paratrioza cockerelli, Aphrophora costalis, Lygus disponsi,*
*Lygus saundersi, Crisicoccus pini, Empoasca abietis, Crisicoccus matsumotoi, Aphis craccivora, Megacopta punctatissimum, Eysarcoris guttiger, Lepidosaphes beckii, Diaphorina citri, Toxoptera citricidus, Planococcus citri, Dialeurodes citri, Aleurocanthus spiniferus, Pseudococcus citriculus, Zyginella citri, Pulvinaria citricola, Coccus discrepans, Pseudaonidia duplex, Pulvinaria aurantii, Lecanium corni, Nezara viridula, Stenodema calcaratum, Rhopalosiphum padi, Sitobion akebiae, Schizaphis graminum, Sorhoanus tritici, Brachycaudus helichrysi, Carpocoris purpureipennis, Myzus persicae, Hyalopterus pruni, Aphis farinose yanagicola, Metasalis populi, Unaspis yanonensis, Mesohomotoma camphorae, Aphis spiraecola, Aphis pomi, Lepidosaphes ulmi, Psylla mali, Heterocordylus flavipes, Myzus malisuctus, Aphidonuguis mali, Orientus ishidai, Ovatus malicolens, Eriosoma lanigerum, Ceroplastes rubens* and *Aphis gossypii,* but are not limited thereto;
the species of the order Coleoptera such as *Xystrocera globosa, Paederus fuscipes, Eucetonia roelofsi, Callosobruchus chinensis, Cylas formicarius, Hypera postica, Echinocnemus squameus, Oulema oryzae, Donacia provosti, Lissorhoptrus oryzophilus, Colasposoma dauricum, Euscepes postfasciatus, Epilachna varivestis, Acanthoscelides obtectus, Diabrotica virgifera virgifera, Involvulus cupreus, Aulacophora femoralis, Bruchus pisorum, Epilachna vigintioctomaculata, Carpophilus dimidiatus, Cassida nebulosa, Luperomorpha tunebrosa, Phyllotreta striolata, Psacothea hilaris, Aeolesthes chrysothrix, Curculio sikkimensis, Carpophilus hemipterus, Oxycetonia jucunda, Diabrotica* spp., *Mimela splendens, Sitophilus zeamais, Tribolium castaneum, Sitophilus oryzae, Palorus subdepressus, Melolontha japonica, Anoplophora malasiaca, Neatus picipes, Leptinotarsa decemlineata, Diabrotica undecimpunctata howardi, Sphenophorus venatus, Crioceris quatuordecimpunctata, Conotrachelus nenuphar, Ceuthorhynchidius albosuturalis, Phaedon brassicae, Lasioderma serricorne, Sitona japonicus, Adoretus tenuimaculatus, Tenebrio molitor, Basilepta balyi, Hypera nigrirostris, Chaetocnema concinna, Anomala cuprea, Heptophylla picea, Epilachna vigintioctopunctata, Diabrotica longicornis, Eucetonia pilifera, Agriotes* spp., *Attagenus unicolor japonicus, Pagria signata, Anomala rufocuprea, Palorus ratzeburgii, Alphitobius laevigatus, Anthrenus verbasci, Lyctus brunneus, Tribolium confusum, Medythia nigrobilineata, Xylotrechus pyrrhoderus, Epitrix cucumeris, Tomicus piniperda, Monochamus alternatus, Popillia japonica, Epicauta gorhami, Sitophilus zeamais, Rhynchites heros, Listroderes costirostris, Callosobruchus maculatus, Phyllobius armatus, Anthonomus pomorum, Linaeidea aenea* and *Anthonomus grandis,* but are not limited thereto;
the species of the order Diptera such as *Culex pipiens pallens, Pegomya hyoscyami, Liriomyza huidobrensis, Musca domestica, Chlorops oryzae, Hydrellia sasakii, Agromyza oryzae, Hydrellia griseola, Hydrellia griseola, Ophiomyia phaseoli, Dacus cucurbitae, Drosophila suzukii, Rhacochlaena japonica, Muscina stabulans,* the species of the family Phoridae such as *Megaselia spiracularis, Clogmia albipunctata, Tipula aino, Phormia regina, Culex tritaeniorhynchus, Anopheles sinensis, Hylemya brassicae, Asphondylia* sp., *Delia platura, Delia antiqua, Rhagoletis cerasi, Culex pipiens molestus* Forskal, *Ceratitis capitata, Bradysia agrestis, Pegomya cunicularia, Liriomyza sativae, Liriomyza bryoniae, Chromatomyia horticola, Liriomyza chinensis, Culex quinquefasciatus, Aedes aegypti, Aedes albopictus, Liriomyza trifolii, Dacus dorsalis, Dacus tsuneonis, Sitodiplosis mosellana, Meromuza nigriventris, Anastrepha ludens* and *Rhagoletis pomonella,* but are not limited thereto;
the species of the order Hymenoptera such as *Pristomyrmex pungens,* Bethylid wasps, *Monomorium pharaonis, Pheidole noda, Athalia rosae, Dryocosmus kuriphilus, Formica fusca japonica,* Vespid wasps, *Athalia infumata infumata, Arge pagana, Athalia japonica, Acromyrmex* spp., *Solenopsis* spp., *Arge mali* and *Ochetellus glaber,* but are not limited thereto;

the species of the order Orthoptera such as *Homorocoryphus lineosus, Gryllotalpa* sp., *Oxya hyla intricata, Oxya yezoensis, Locusta migratoria, Oxya japonica, Homorocoryphus jezoensis* and *Teleogryllus emma,* but are not limited thereto;

the species of the order Thysanoptera such as *Selenothrips rubrocinctus, Stenchaetothrips biformis, Haplothrips aculeatus, Ponticulothrips diospyrosi, Thrips flavus, Anaphothrips obscurus, Liothrips floridensis, Thrips simplex, Thrips nigropilosus, Heliothrips haemorrhoidalis, Pseudodendrothrips mori, Microcephalothrips abdominalis, Leeuwenia pasanii, Litotetothrips pasaniae, Scirtothrips citri, Haplothrips chinensis, Mycterothrips glycines, Thrips setosus, Scirtothrips dorsalis, Dendrothrips minowai, Haplothrips niger, Thrips tabaci, Thrips alliorum, Thrips hawaiiensis, Haplothrips kurdjumovi, Chirothrips manicatus, Frankliniella intonsa, Thrips coloratus, Franklinella occidentalis, Thrips palmi, Frankliniella lilivora* and *Liothrips vaneeckei,* but are not limited thereto;

the species of the order Acari such as *Leptotrombidium akamushi, Tetranychus ludeni, Dermacentor variabilis, Tetranychus truncatus, Ornithonyssus bacoti, Demodex canis, Tetranychus viennensis, Tetranychus kanzawai,* the species of the family Ixodidae such as *Rhipicephalus sanguineus, Cheyletus malaccensis, Tyrophagus putrescentiae, Dermatophagoides farinae, Dermacentor taiwanensis, Acaphylla theavagrans, Polyphagotarsonemus latus, Aculops lycopersici, Ornithonyssus sylvairum, Tetranychus urticae, Eriophyes chibaensis, Sarcoptes scabiei, Haemaphysalis longicornis, Ixodes scapularis, Tyrophagus similis, Cheyletus eruditus, Panonychus citri, Cheyletus moorei, Brevipalpus phoenicis, Octodectes cynotis, Dermatophagoides ptrenyssnus, Haemaphysalis flava, Ixodes ovatus, Phyllocoptruta citri, Aculus schlechtendali, Panonychus ulmi, Amblyomma americanum, Dermanyssus gallinae* and *Latrodectus hasseltii,* but are not limited thereto;

the species of the order Isoptera such as *Reticulitermes miyatakei, Incisitermes minor, Coptotermes formosanus, Hodotermopsis japonica, Reticulitermes* sp., *Reticulitermes flaviceps amamianus, Glyptotermes kushimensis, Coptotermes guangzhoensis, Neotermes koshunensis, Glyptotermes kodamai, Glyptotermes satsumensis, Cryptotermes domesticus, Odontotermes formosanus, Glyptotermes nakajimai, Pericapritermes nitobei* and *Reticulitermes speratus,* but are not limited thereto;

the species of the order Blattodea such as *Periplaneta fuliginosa, Blattella germanica, Blatta orientalis, Periplaneta brunnea, Blattella lituricollis, Periplaneta japonica* and *Periplaneta americana,* but are not limited thereto;

the species of the order Siphonaptera such as *Pulex irritans, Ctenocephalides felis* and *Ceratophyllus gallinae,* but are not limited thereto;

the species of the phylum Nematoda such as *Nothotylenchus acris, Aphelenchoides besseyi, Pratylenchus penetrans, Meloidogyne hapla, Meloidogyne incognita, Globodera rostochiensis, Meloidogyne javanica, Heterodera glycines, Pratylenchus coffeae, Pratylenchus neglectus* and *Tylenchus semipenetrans,* but are not limited thereto; and

the species of the phylumMollusca such as *Pomacea canaliculata, Achatina fulica, Meghimatium bilineatum, Lehmannina valentiana, Limax flavus* and *Acusta despecta sieboldiana,* but are not limited thereto.

The harmful organism control composition of the present invention is highly effective in controlling various agricultural and horticultural diseases or plant diseases and is particularly suitable for controlling plant diseases of paddy rice, fruit trees, vegetables, other crops, and flowering plants. Such plant diseases include, for example, rice diseases, corn diseases, tobacco diseases, tea diseases, food crop diseases, brassicaceous diseases, strawberry diseases, tomato diseases, solanaceous diseases, cucurbitaceous diseases, green onion and onion diseases, root vegetable diseases, flowering plant diseases, lawn or pasture grass diseases, wheat diseases, barley diseases, potato diseases, sugar beet diseases, legume diseases, apple diseases, pear diseases, grape diseases, peach diseases, kiwi diseases, tree and flowering tree diseases, and diseases of other fruit trees, or combinations thereof, but are not limited thereto.

As for agricultural and horticultural diseases, the harmful organism control composition of the present invention is highly effective not only in killing a wide range of filamentous fungi, such as oomycetes, ascomycetes, deuteromycetes, and basidiomycetes, but also against plant pathogenic bacteria and plant viruses.

Examples of the rice disease include, but are not limited to, downy mildew (*S. macrospora*), seedling blight (R. *chinensis, T. viride*), bakanae disease (*G. fujikuroi*), blast (*M. grisea, P. oryzae*), bacterial palea browning (*Erwinia ananas*), sheath blight (*R. solani*) , brown spot (C. *miyabeanus*), browning ear (*A. padwiki*), pink coloring of rice grains (E. *nigrum*), false smut (C. *virens*), bacterial grain rot (P. *glumae*), sheath brown rot (*P. fuscovaginae*), bacterial brown stripe (*P. avenae*), bacterial seedling blight (P. *plantarii*), and bacterial leaf blight (*X. oryzae*).

Examples of the corn disease include, but are not limited to, leaf spot (*B. maydis, C. heterostrophus*) , leaf blight (*E. turcicum*), brown spot (*P. maydis*), and smut (*U. maydis*).

Examples of the tobacco disease include, but are not limited to, black shank (*P. nicotianae*/*parasitica*), downy mildew (*P. tabacina*), powdery mildew (*E. cichoracearum*), anthracnose (*C. tabacum*), brown spot (*A. longipes, A. alternata*), sooty mold (*C. salicinum*), and Olpidium seedling blight (*O. brassicae*).

Examples of the tea disease include, but are not limited to, coral spot disease (*N. cinnabarina*), white scab (*E. leucospila*), anthracnose (*C. theae-sinensis*), gray blight (*P. longiseta, P. theae*), net blister blight (*E. reticulatum*), blister blight (*E. vexans*), and bacterial shoot blight (*P. syringae* pv. *theae*).

Examples of the food crop disease include, but are not limited to, sweet potato black rot (*C. fimbriata*), sweet potato blue mold (*P. expansum*), sweet potato root rot (*T. basicora*), oat crown rust (*P. coronata*), mulberry branch blight (*S. mori*), oil palm Ganoderma disease (*G. boninense*), and date palm eyespot (*S. palmivora*).

Examples of the brassicaceous disease include, but are not limited to, brassicaceous clubroot (*P. brassicae*), brassicaceous white rust (*A. macrospora*), brassicaceous downy mildew (*P. brassicae*), brassicaceous stem rot (*S. sclerotiorum*), cabbage black leg (*P. lingam*), cabbage head rot (*T. cucumeris*), rapeseed white spot (*C. brassicicola*), Chinese cabbage white spot (*C. brassicicola*), Chinese cabbage bacterial soft rot (*Erwinia carotovora* subsp. *carotovora*), brassicaceous Alternaria leaf spot (*A. brassicae*), and cabbage black rot (*X. campestris* pv. *campestris*).

Examples of the strawberry disease include, but are not limited to, Phytophthora rot (*P. cactorum, P. nicotianae*), powdery mildew (*S. macularis*), anthracnose (*G. cingulata*), black leaf spot (*A. alternata*), and leaf spot (*M. fragariae*).

Examples of the tomato disease include, but are not limited to, late blight (*P. infestans*), anthracnose (*C. phomoides*), leaf mold (*C. fulvum*), leaf spot (*S. lycopersici*), early blight (*A. solani*), and bacterial canker (*C. michiganensis).*

Examples of the solanaceous disease include, but are not limited to, stem rot (*S. sclerotiorum*), powdery mildew (*S. furiginea*), brown spot (*P. vexans*), leaf mold (*M. nattrassii*), bell pepper Stemphyrium leaf spot (*S. lycopersici*), red pepper Stemphyrium leaf spot (*S. lycopersici*), solanaceous bacterial wilt (*P. solanacearum*), and solanaceous bacterial wilt (*P. solanacearum*).

Examples of the cucurbitaceous disease include, but are not limited to, cucurbitaceous Phytophthora rot (*P. melonis*), cucumber downy mildew (*P. cubensis*), cucumber powdery mildew (*S. furiginea*), cucumber gummy stem blight (*M. melonis*, *D. bryoniae*), watermelon gummy stem blight (*M. melonis, D. bryoniae*), cucumber stem rot (*S. sclerotiorum*), cucumber anthracnose (*C. lagenarium*), cucumber Corynespora leaf spot (C. *cassiicora*), cucumber scab (*C. cucumerinum*), cucurbitaceous Fusarium wilt (*F. oxysporum* f. sp. *cucumerinum, F. oxysporum* f. sp. *meronis*), and cucumber bacterial spot (*P. syringae* pv. *lachrymans*).

Examples of the green onion and onion disease include, but are not limited to, green onion downy mildew (*P. destructor*), green onion bacterial soft rot (*E. carotovora* subsp. *carotovora, E. chrysanthemi, E. rhapontici*), green onion rust (*P. allii*), green onion Alternaria leaf spot (*A. porri*), green onion yellow dwarf (shallot yellow stripe virus), green onion Fusarium wilt (*Fusarium oxysporum* f. sp. *cepae*), green onion damping-off (*Rhizoctonia solani*), green onion yellows (Phytoplasma), green onion Phytophthora blight (*Phytophthora nicotianae*), green onion leaf spot (*Heterosporiumallii*), green onion white rot (*Sclerotium cepivorum*), green onion black leaf blight (*Mycosphaerella allicina*), green onion smut (*Urocystis cepulae* Frost), green onion leaf blight (*Botrytis squamosa*), green onion southern blight (*Sclerotium rolfsii*), green onion white tip (*Phytophthora porri*), green onion necrotic streaks (iris yellow spot virus), green onion gray mold (*Botrytis* spp.), green onion leaf spot (*Pleospora herbarum*), green onion pink root rot (*Pyrenochaeta terrestris*), onion leaf spot (*P. herbarum*), onion watery soft rot (*S. sclerotiorum*), onion gray-mold neck rot (*B. alli*), onion Botrytis leaf blight (*B. byssoidea, B. squamosa*), onion Fusarium basal rot (*F. oxysporum* f. sp. *cepae*), onion bacterial soft rot (*E. carotovora* subsp.), onion Alternaria leaf spot (*A. porri*), onion downy mildew (*P. destructor*), onion gray mold (*B. cinerea*), onion yellow dwarf (onion yellow dwarf virus), onion leaf spot (*Pleospora herbarum*), and onion white tip (*Phytophthora porri* Foister) .

Examples of the root vegetable disease include, but are not limited to, carrot leaf blight (*A. dauci*) and radish Alternaria leaf spot (*A. brassicicola*).

Examples of the flowering plant disease include, but are not limited to, rose Phytophthora disease (*P. megasperma*), rose powdery mildew (*S. pannosa*), rose rust (*K. rosae*/*japonica*), rose black spot (*D. rosae*), chrysanthemum leaf blight (*S. chrysanthemi-indici*), chrysanthemum leaf spot (C. *chrysanthemi*), chrysanthemum rust (*P. horiana*), lettuce downy mildew (*B. lactucae*), aster downy mildew (*B. lactucae*), and crown gall (*A. tumefaciens*).

Examples of the lawn or pasture grass disease include, but are not limited to, lawn grass Pythium red blight (*P. apahanidermatum*), lawn grass summer patch (*M. poae*), lawn grass helminthosporium leaf blight (*D. poae*), lawn grass dollar spot (*S. homoeocarpa*), lawn grass anthracnose (*C. graminicora*), Curvularia leaf blight (*C. geniculata*), lawn grass large patch (*R. solani*), brown patch (*R. solani*), snow blight (*Pythium* sp., *S. borealis, M. nivalis, F. nivale, T. ishikariensis, T. incarnata*), pasture grass tar spot (*P. graminis*), alfalfa leaf spot (*P. medicaginis*), clover leaf spot (*P. trifolii*), pasture grass choke (*E. typhina*), alfalfa yellow leaf blotch (*P. medicaginis*), and alfalfa spring black stem (*P. medicaginis*).

Examples of the wheat disease include, but are not limited to, snow blight (*Pythium* sp., *M. nivalis, S. borealis, F. nivale*), snow blight (*T. ishikariensis, T. incarnata*), scab (*G. zeae, F. avenaceum, F. graminearum, F. culmorum, M. nivale),* ergot (*C. purpurea*), take-all (*G. graminis*), foot-rot (*C. gramineum*), sharp eyespot-like lesions (*C. cereale*), powdery mildew (*B. graminis* f. sp. *tritici*), glume blotch (*L. nodorum, S. nodorum*), leaf rust (*P. recondita*), stem rust (*P. graminis*), stripe rust (*P. striiformis*), eye spot (*P. herpotrichoides*), speckled leaf blotch (*S. tritici*), yellow spot (*P. tritici-repentis*), Cephalosporium stripe (*C. gramineum*), loose smut (*U. nuda*), stinking smut (*T. caries*), and flag smut (*U. agropyri*) .

Examples of the barley disease include, but are not limited to, snow blight (*Pythium* sp., *S. borealis, M. nivalis,*

*F. nivale, T. ishikariensis, T. incarnata*), scab (*G. zeae, M. nivale, F. avenaceum, F. graminearum, F. culmorum*), ergot (C. *purpurea*), take-all (*G. graminis, O. graminis*), Cephalosporium stripe (*C. gramineum*), powdery mildew (*B. graminis* f. sp. *hordei*), net blotch (*P. teres*), stripe (*P. graminea*), spot blotch (*B. sorokiniana, C. sativus*), leaf scorch (*C. herbarm*), scald (*R. secaris*), stem rust (*P. graminis*), stripe rust (*P. striiformis*), dwarf leaf rust (*P. hordei*), and covered smut (*U. hordei*).

Examples of the potato disease include, but are not limited to, powdery scab (*S. subterranea*), scab (*S. scabies*), late blight (*P. infestans*), early blight (*A. solani*), black scurf (*R. solani*), and ring rot (*C. michiganensis*).

Examples of the sugar beet disease include, but are not limited to, Aphanomyces root rot (*A. sochlioides*), leaf blight (*T. cucumeris*), root rot (*T. cucumeris*), Phoma root rot (*P. betae*), Cercospora leaf spot (*C. beticora*), Ramularia leaf spot (*R. beticora*), and rust (*U. betae*).

Examples of the legume disease include, but are not limited to, azuki bean brown stem rot (*Phialophora gregata*), azuki bean Phytophthora stem rot (*Phytophthora vignae*), azuki bean Sclerotinia rot (*Sclerotinia sclerotiorum*), azuki bean gray mold (*Botrytis cinerea*), azuki bean anthracnose (*Colletotrichum phaseolorum*), azuki bean bacterial brown spot (*Pseudomonas syringae*), azuki bean bacterial stem rot (*Pseudomonas* sp.), soybean sclerotinia rot (*S. sclerotiorum*), soybean rust (*P. pachyrhizi*), soybean downy mildew (*P. manshurica*), soybean purple stain (*C. kikuchii*), soybean pod and stem blight (*D. phaseolorum* var. *sojae*), soybean Sphaceloma scab (*E. glycines*), soybean charcoal rot (*M. phaseolina*), soybean root necrosis (*C. crotalariae*), peanut pod and root necrosis (*C. crotalariae*), peanut leaf spot (*M. personatum*), peanut scab (*S. arachidis*), peanut crown rot (*A. niger*), peanut brown leaf spot (*C. arachidicola*), green bean leaf spot (*C. arachidicola*), green bean anthracnose (*C. indemthianum*), green bean Fusarium root-rot (*F. solani* f. sp. *phaseoli*), green bean bacterial wilt (*C. flaccumfasiens*), azuki bean angular leaf spot (*P. griseola*), pea downy mildew (*P. pisi*), pea powdery mildew (*E. pisi*), broad bean Phytophthora rot (*P. nicotianae*), broad bean downy mildew (*P. viciae*), and broad bean brown spot (*A. fabae*).

Examples of the apple disease include, but are not limited to, powdery mildew (*P. leucotricha*), Valsa canker (*V. ceratosperma*), white root rot (*R. necatrix*), violet root rot (*H. mompa*), scab (*V. inaequaris*), Alternaria blotch (*A. mali*), Monilia leaf blight (*M. mali*), bitter rot (*G. cingulata*), ring rot (*Botryosphaeria* sp.), black rot (*B. obtusa, X. campestris* pv. *campestris*), fruit spot (*M. pomi*), blotch (*D. mali*), rust (*G. yamadae*), cedar-apple rust (*G. juniperi-virginianae*), Schizophyllum rot (*S. commune*), silver leaf (*C. purpurreum*), crown gall (*A. tumefaciens*), and fire blight (*E. amylovora*).

Examples of the pear disease include, but are not limited to, white root rot (*R. necatrix*), scab (*V. nashicola*), black spot (*A. kikuchiana*), rust (*G. asiaticum*), powdery mildew (*P. pyri*), ring rot (*P. piricora*), Phomopsis canker (*P. fukushii*), stem heart rot (*L. sulphureus*), crown gall (*A. tumefaciens*), and fire blight (*E. amylovora*).

Examples of the grape disease include, but are not limited to, white root rot (*R. necatrix*), gray mold (*B. cinerea*), downy mildew (*P. viticola*), powdery mildew (*U. necator*), ripe rot (*G. cingulata*), anthracnose (*E. ampelina*), leaf blight (*P. vitis*), rust (*P. ampelopsidis*), black rot (*G. bidwellii, X. campestris* pv. *campestris*), Pestalotia disease (*P. menezesiana*), California vine disease (*X. fastidiosa*), and crown gall (*A. vitis*).

Examples of the peach disease include, but are not limited to, leaf curl (*T. deformans*), brown rot (*M. fructicola*), scab (*C. carpophilum*), Phomopsis rot (*Phomopsis* sp.), Aspergillus rot (*A. niger*), leaf spot (*C. beyerinckii*), crown gall (*A. tumefaciens*), and bacterial shot hole (*X. campestris* pv. *pruni*). Examples of the citrus disease include, but are not limited to, white root rot (*R. necatrix*), gray mold (*B. cinerea*), melanose (*D. citri*), scab (*E. fawcettii*), black spot (*G. citricarpa*), Phyllosticta leaf spot (*P. beltranii*), anthracnose (*C. gloeosporioides*), green mold (*P. digitatum*), blue mold (*P. italicum*), stem heart rot (*G. applanatum*), sooty mold (*C. salicinum*), canker (*X. campestris* pv. *citri*), stubborn disease (*S. citri*), and citrus huanglongbing HLB (*C. liberibacter*).

Examples of the kiwi disease include, but are not limited to, bacterial canker (*P. syringae* pv. *actinidiaea, A. deliciosa, A. chinensis, A. arguta*).

Examples of the tree and flowering tree disease include, but are not limited to, akebia powdery mildew (*M. akebiae*), Japanese alder powdery mildew (*M. penicillata*), Graphium wilt of elms such as Dutch elm (*O. ulmi*), chestnut Endothia canker (*E. parasitica*), apricot Cytospora canker (*L. persoonii*), elm circular leaf spot (*G. ulmi*), cherry black knot (*A. morbosa*), pine needle cast (*L. pinastri*), pine needle cast (*L. pinastri*), Rhizosphaera needle blight (*R. kalkhoffii*), pine Diplodia needle blight (*S. sapinea*), cherry rust (*T. asiatica/prumi-spinosae*), willow leaf rust (*M. arctica*), poplar leaf rust (*M. medusae*), peony rust (*C. flaccidum*), oak stem sap rot (*S. hirsutum*), cypress butt rot (*H. annosum*), pine butt rot (*G. lucidum*), Armillaria root rot (*A. mellea*), stem sap rot (*T. versicolor*), pine gall rust (*C. quercum*), pine needle rust (*C. asterum*), walnut stem heart rot (*P. igniarius*), Japanese red pine Dothistroma needle blight (*D. septosporum*), Japanese black pine Dothistroma needle blight (*D. septosporum*), and cherry stem heart rot (*F. pinicora*).

Examples of the disease of other fruit trees include, but are not limited to, white root rot (*R. necatrix*), ume powdery mildew (*P. tridactyla*), ume scab (*C. carpophilum*), persimmon circular leaf spot (*M. nawae*), persimmon anthracnose (*G. kaki*), persimmon Pestalotia leaf spot (*P. diospyri*), persimmon angular leaf spot (*C. kaki*), persimmon black spot (*F. levieri*), loquat anthracnose (*C. acutatum*), banana sigatoka disease (*M. fijiensis/musicola*), banana panama disease (*F. oxysporum* f. sp. *cubense*), crown gall (*A. tumefaciens*), mango anthracnose (*C. gloeosporioides*), and diseases caused by plurivorous pathogens.

Examples of the disease caused by plurivorous pathogens include, but are not limited to, various types of damping-off (*P. ultimum, P. apahanidermatum*), various types of Phytophthora root rot (*P. cinnamomi*), white root rot (*R. necatrix*), Valsa canker (*V. ceratosperma*), Verticillium wilt (*V. dahliae*, *V. albo-atrum*), gray mold (*B. cinerea*), Sclerotinia rot (*S. sclerotiorum*), southern blight (*S. rolfsii*), damping-off of vegetables (*R. solani*), violet root rot (*H. mompa*), bacterial soft rot (*E. carotovora, E. aroideae*), and crown gall (*A. tumefaciens*).

The harmful organism control composition of the present invention is highly effective in killing resistant microbes. Examples of the resistant microbe include, but are not limited to, a gray mold fungus (*Botrytis cinerea*), a Cercospora leaf spot fungus of sugar beet (*Cercospora beticola*), a scab fungus of apples (*Venturia inaequalis*), and a scab fungus of pears (*Venturia nashicola*), which are resistant to benzimidazole microbicides such as thiophanate-methyl, benomyl, and carbendazim; and a gray mold fungus (*Botrytis cinerea*) resistant to dicarboximide microbicides (e.g., vinclozolin, procymidone, and iprodione).

Plant pathogenic bacterial diseases to which the harmful organism control composition of the present invention can be applied include, but are not limited to, cucumber bacterial spot (*P. syringae* pv. *lachrymans*), rice bacterial brown stripe (*P. avenae*), rice bacterial seedling blight (*P. plantarii*), rice bacterial grain rot (*P. glumae*), rice sheath brown rot (*P. fuscovaginae*), solanaceous bacterial wilt (*P. solanacearum*), tea bacterial shoot blight (*P. syringae* pv. *theae*), citrus canker (*X. campestris* pv. *citri*), cabbage black rot (*X. campestris* pv. *campestris*), peach bacterial shot hole (*X. campestris* pv. *pruni*), rice bacterial leaf blight (*X. oryzae*), grape black rot (*X. campestris* pv. *campestris*), apple black rot (*X. campestris* pv. *campestris*), apple fire blight (*E. amylovora*), pear fire blight (*E. amylovora*), bacterial soft rot (*E. aroideae, E. carotovora*), green bean bacterial wilt (*C. flaccumfasiens*), crown gall (*A. tumefaciens*), grape crown gall (*A. vitis*), potato scab (*S. scabies*), citrus stubborn disease (*S. citri*), tomato bacterial canker (*C. michiganensis*), potato ring rot (*C. michiganensis*), and citrus huanglongbing HLB (*C. liberibacter* or citrus greening disease).

Diseases caused by plant viruses include, but are not limited to, tomato mosaic (tobacco mosaic virus), cucumber green mottle mosaic (cucumber green mottle mosaic virus), tobacco rattle (tobacco rattle virus), wheat rosette (wheat rosette virus), barley stripe mosaic (barley stripe mosaic virus), potato spraing (potato mop-top virus), sugar beet rhizomania (beet necrotic yellow vein virus), tomato mosaic (potato virus), apple topworking disease (apple stem grooving virus), apple topworking disease (apple chlorotic leaf spot virus), tomato mosaic (potato virus Y), ume pox virus disease/sharka (plum pox virus), cucumber mosaic (zucchini yellow mosaic virus), radish mosaic (turnip mosaic virus), soybean mosaic (soybean mosaic virus), barley yellow mosaic (barley yellow mosaic virus), barley yellow dwarf (barley yellow dwarf virus), soybean dwarf (soybean dwarf virus), strawberry virus disease (strawberry mild yellow edge virus), potato leafroll (potato leafroll virus), rice waika disease (rice tungro spherical virus), cucumber mosaic (cucumber mosaic virus), alfalfa mosaic (alfalfa mosaic virus), mosaic (northern cereal mosaic virus), rice stripe (rice stripe virus), tomato spotted wilt (tomato spotted wilt virus), rice dwarf (rice dwarf virus), and rice black-streaked dwarf (rice black streaked dwarf virus).

Examples of the weed that can be controlled by the harmful organism control composition of the present invention include dicotyledonous genera such as *Ipomoea, Lindernia, Sesbania, Abutilon, Matricaria, Rorippa, Urtica, Lamium, Xanthium, Sinapis, Rotala, Veronica, Papaver, Chenopodium, Trifolium, Portulaca, Viola, Pharbitis, Galeopsis, Datura, Solanum, Capsella, Cirsium, Sonchus, Galinsoga, Stellaria, Senecio, Amaranthus, Ambrosia, Kochia, Lamium, Leipidium, Polygonum, Galium, Centaurea, Artemisia,* etc., but are not limited thereto.

Examples of the weed that can be controlled by the harmful organism control composition of the present invention include monocotyledonous genera such as *Leptochloa, Phleum, Poa, Festuca, Setaria, Eleusine, Sagittaria, Agropyron, Ischaemum, Cyperus, Avena, Bromus, Panicum, Cynodon, Monochoria, Schoenoplectus nipponicus, Alopecurus, Paspalum, Commelina, Fimbristylis, Lolium, Brachiaria, Agrostis, Eleocharis, Echinochloa esculenta, Scirpus, Digitaria, Sorghum,* etc., but are not limited thereto.

Other examples of the weed that can be controlled by the harmful organism control composition of the present invention include *Spirogyra, Amaranthus retroflexus, Amaranthus viridis, Setaria faberi, Leersia japonica, Leptochloa chinensis, Lindernia angustifolia, Lindernia procumbens, Dopatrium junceum, Ipomoea hederacea, Lindernia dubia, Sida spinosa, Polygonum pensylvanicum, Sesbania exaltata, Geranium carolinense, Conyza bonariensis, Amaranthus powellii, Polygonum cuspidatum, Abutilon theophrasti, Matricaria perforata, Polygonum longisetum, Echinochloa crus-galli, Amaranthus lividus, Solanum nigrum, Schoenoplectus juncoides* (Roxb.) Palla, *Murdannia keisak, Malva sylvestris, Bromus tectorum, Sagittaria pygmaea* Miq, *Rumex obtusifolius, Leersia oryzoides* (L.) Sw., *Setaria viridis, Cassia obtusifolia, Epilobium hirsutum, Conyza sumatrensis, Veronica persica, Spirodela polyrhiza, Xanthium canadens, Coreopsis lanceolata, Panicum dichotomiflorum, Asclepias syriaca, Euphorbia maculata, Plantago asiatica, Rudbeckia laciniata, Amaranthus palmeri, Xanthium strumarium, Avena sterilis, Eleusine indica, Sagittaria trifolia, Erodium cicutarium, Cerastium glomeratum, Matricaria matricarioides, Matricaria chamomilla, Vicia angustifolia, Bromus secalinus, Avena fatua, Commelina caroliniana, Rotala indica* Koehne, *Rumex japonicus, Paspalum distichum, Cyperus esculentus, Setaria glauca, Pueraria lobata, Eleocharis kuroguwai* Ohwi, *Ambrosia trifida, Hydrilla verticillata, Bolboschoenus maritimus* (L.) Palla, *Chrysanthemum segetum, Cyperus iria, Monochoria vaginalis, Echinochloa colona, Alisma plantago-aquatica, Oryza sativa, Polygonum lapathifolium, Agropyron repens, Sorghum vulgare, Apera spica-venti, Chenopodium album,*

*Trifolium repens, Datura stramonium, Equisetum arvense, Poa annua, Bromus japonicus, Alopecurus aequalis, Portulaca oleracea, Solidago altissima, Sorghum halepense, Brassica juncea, Taraxacum officinale, Convolvulus arvensis, Malva neglecta, Oenanthe javanica, Polygonum convolvulus, Echinochloa oryzicola* Vasing, *Ischaemum rugosum, Veronica arvensis, Cyperus difformis* L., *Amaranthus rudis, Ludwigia prostrata* Roxburgh, *Commelina communis, Panicum texanum, Euphorbia helioscopia, Rumex crispus, Capsella bursa-pastoris, Euphorbia pseudochamaesyce, Brachiaria plantaginea, Lolium multiflorum, Alopecurus myosuroides, Sinapis arvensis, Galinsoga ciliata, Stellaria media, Cyperus rotundus, Amaranthus spinosus, Polygonum persicaria, Papaver rhoeas, Helianthus annuus, Lamium purpureum, Kyllinga gracillima, Ammannia multiflora, Erigeron canadensis, Potamogeton distinctus* A. Benn, *Amaranthus tuberculatus, Viola arvensis, Ambrosia artemisiifolia, Veronica hederaefolia, Alopecurus myosuroides, Desmodium tortuosum, Plantago lanceolata, Alisma canaliculatum*A. Br.et Bouche, *Kochia scoparia, Lolium rigidum, Kochia scoparia, Ammannia coccinea, Lolium perenne, Scirpus juncoides* Roxburgh, *Lamium amplexicaule, Najas graminea, Amaranthus hybridus, Eleocharis acicularis* L., *Ipomoea lacunosa, Ipomoea purpurea, Ipomoea hederacea* var. *integriuscula, Commelina bengharensis, Monochoria korsakowii, Cyperus serotinus* Rottboel, *Elatine triandra* Schk, *Digitaria ciliaris, Digitaria sanguinalis, Sorghum bicolor, Galium aparine, Artemisia princeps, Viola tricolor, Raphanus raphanistrum, Myosotis arvensis, Alisma canaliculatum, Cyperus flaccidus,* etc., but are not limited thereto.

The useful plant for which the harmful organism control composition of the present invention can be used is not particularly limited. Examples of the useful plant include cereals (e.g., rice, barley, wheat, rye, oat, sorghum (kaoliang), corn, etc.); legumes (e.g., soybeans, azuki beans, broad beans, peas, green beans, peanuts, etc.); fruit trees and fruits (e.g., citruses such as apples, mandarin oranges, oranges, lemons, limes, grapefruits, and Chinese quinces, quinces, pears, European pears, Japanese pears, grapes, blueberries, cranberries, blackberries, raspberries, strawberries, peaches, plums, cherries, nectarines, ume (Japanese apricots), cherries, apricots, prunes, walnuts, hazelnuts, chestnuts, almonds, pistachio nuts, cashew nuts, macadamia nuts, bananas, persimmons, olives, loquats, date palms, coconut palms, oil palms, etc.); leaf and fruit vegetables (e.g., cabbage, tomatoes, spinach, kohlrabies, Chinese cabbage, bok choy, leaf mustard, broccoli, cauliflower, crown daisy, artichoke, lettuce, onions, green onions, asparagus, parsley, celery, parsnip, chard, bell peppers, eggplants, peppers, okra, Chinese chives, etc.); root vegetables (e.g., carrots, potatoes, sweet potatoes, yams, taros, radishes, turnips, lotus roots, burdock roots, garlic, rakkyo, etc.); crops for processing (e.g., cotton, hemp, paper mulberry, oriental paperbush, rapeseeds, oil palm, Barbados nuts, buckwheat, beet, hop, sugarcane, sugar beet, olives, rubber, coffee, tobacco, mulberry, tea, etc.); cucurbits (e.g., pumpkins, cucumbers, zucchinis, watermelons, oriental sweet melons, melons, etc.); pasture grass (e.g., orchardgrass, sorghum, timothy, clover, alfalfa, etc.); lawn grass (e.g., Zoysia grass (e.g., Japanese lawn grass, Korean lawn grass, etc.), Bermuda grass (*Cynodon dactylon*), bentgrass (e.g., redtop, creeping bentgrass, colonial bentgrass, etc.), bluegrass (e.g., Kentucky bluegrass, rough bluegrass, etc.), fescue (e.g., tall fescue, chewings fescue, creeping red fescue, etc.), ryegrass (e.g., annual ryegrass, perennial ryegrass, etc.), orchard grass, timothy grass, etc.); spice and aromatic crops and ornamental crops (e.g., lavender, rosemary, thyme, parsley, pepper, ginger, red pepper, horseradish, garlic, shiso, mint, basil, etc.); flowering plants (e.g., rose, carnation, chrysanthemum, lisianthus, baby's breath, sunflower, gerbera, marigold, salvia, petunia, verbena, tulip, aster, gentian, lily, pansy, cyclamen, orchid, lily of the valley, lavender, stock, ornamental kale, primula, poinsettia, gladiolus, cattleya, daisy, verbena, cymbidium, begonia, etc.); and trees (e.g., Japanese aucuba, cherry, Japanese ash, birch, flowering dogwood, eucalyptus, ginkgo, lilac, magnolia, maple, oak, poplar, Chinese redbud, Chinese sweet gum, plane, Japanese zelkova, Japanese Thuja, Momi fir, southern Japanese hemlock, temple juniper, pine, *Abies sachalinensis, Picea jezoensis,* spruce, Japanese yew, elm, buckeye, sweet viburnum, Buddhist pine, Japanese cedar, Japanese cypress, yellow cedar, croton, Japanese spindle, Japanese photinia, etc.). However, these are non-limiting examples.

The "crops" include crops provided with a useful trait by a classical breeding technique and a recently advanced gene recombination technique, for example, genetically modified crops (e.g., herbicide-tolerant crops, insect pest-resistant transgenic crops capable of producing insecticidal proteins, disease-resistant transgenic crops capable of producing inducers of disease resistance, palatability-enhanced crops, long-term preservable crops, high-yield crops, etc.).

Examples of the crop provided with herbicide tolerance by a classical breeding technique include varieties of rapeseed, wheat, sunflower, rice and corn tolerant to the imidazolinone family of ALS-inhibiting herbicides such as imazethapyr, and such crops are sold under the trade name of Clearfield (registered trademark). Also included is a variety of soybean provided with tolerance to the sulfonyl urea family of ALS-inhibiting herbicides such as thifensulfuron-methyl by a classical breeding technique, and this is sold under the trade name of STS soybean. Also included are crops provided with tolerance to acetyl-CoA carboxylase inhibitors such as trione oxime herbicides and aryloxy phenoxy propionic acid herbicides by a classical breeding technique, for example, SR corn and the like.

Examples of the crop provided with herbicide tolerance by a gene recombination technique include glyphosate-tolerant varieties of corn, soybean, cotton, rapeseed and sugar beet, and such crops are sold under the trade names such as Roundup Ready (registered trademark) and Agrisure GT (registered trademark). Also included are varieties of corn, soybean, cotton and rapeseed genetically engineered to be tolerant to glufosinate, and such crops are sold under the trade name of LibertyLink (registered trademark) etc. Also included is a variety of cotton genetically engineered to

be tolerant to bromoxynil, and this is sold under the trade name of BXN.

Crops provided with tolerance to acetyl-CoA carboxylase inhibitors are described in Proc. Natl. Acad. Sci. USA, 87, 7175-7179 (1990), and the like. Further, acetyl-CoA carboxylase mutants resistant to acetyl-CoA carboxylase inhibitors are reported in Weed Science, 53, 728-746 (2005), and the like. By introducing the gene of such an acetyl-CoA carboxylase mutant into crops by a gene recombination technique, or by introducing a resistance-conferring mutation into acetyl-CoA carboxylase of crops, crops tolerant to acetyl-CoA carboxylase inhibitors can be engineered. Alternatively, by introducing a nucleic acid causing base substitution mutation into crop cells (a typical example of this technique is chimeraplasty technique (Gura T. 1999. Repairing the Genome's Spelling Mistakes. Science 285: 316-318.)) to allow site-specific substitution mutation in the amino acids encoded by an acetyl-CoA carboxylase gene of crops, crops tolerant to acetyl-CoA carboxylase inhibitors can be engineered.

The "crops" also include crops genetically engineered to synthesize insecticidal toxins etc. Exemplary insecticidal toxins expressed in such genetically modified crops include insecticidal proteins derived from *Bacillus cereus* and *Bacillus popilliae; Bacillus* thuringiensis-derived delta-endotoxins, such as Cry1Ab, Cry1c, Cry1F, Cry1Fa2, Cry2Ab, Cry3A, Cry3Bb1 and Cry9C, and other insecticidal proteins, such as VIP1, VIP2, VIP3 and VIP3A; nematode-derived insecticidal proteins; toxins produced by animals, such as scorpion toxins, spider toxins, bee toxins and insect-specific neurotoxins; toxins of filamentous fungi; plant lectins; agglutinin; protease inhibitors, such as trypsin inhibitors, serine protease inhibitors, patatin, cystatin and papain inhibitors; ribosome inactivating proteins (RIP), such as ricin, maize RIP, abrin, saporin and bryodin; steroid metabolizing enzymes, such as 3-hydroxy steroid oxidase, ecdysteroid-UDP-glucosyltransferase and cholesterol oxidase; ecdysone inhibitors; HMG-CoAreductase; ion channel inhibitors, such as sodium channel inhibitors and calcium channel inhibitors; juvenile hormone esterase; diuretic hormone receptors; stilbene synthase; bibenzyl synthase; chitinase; and glucanase. Examples of the foregoing toxins and genetically modified crops capable of synthesizing these toxins are described in EP-A-0374753, WO 93/07278, WO 95/34656, EP-A-0427529, EP-A-451878, WO 03/052073, etc. The toxins contained in such genetically modified crops are suitable for control of pests, in particular, Coleopteran insect pests, Dipteran insect pests and Lepidopteran insect pests, and due to the toxins, the crops exhibit resistance to such pests.

Genetically modified crops which express one or more of the insecticidal toxins are already known, and some of them are commercially available. Examples of such a genetically modified crop include YieldGard (registered trademark), which is a variety of corn expressing a CrylAb toxin; YieldGard Rootworm (registered trademark), which is a variety of corn expressing a Cry3Bb1 toxin; YieldGard Plus (registered trademark), which is a variety of corn expressing CrylAb and Cry3Bb1 toxins; Herculex I (registered trademark), which is a variety of corn expressing a Cry1Fa2 toxin and phosphinothricin N-acetyltransferase (PAT) for tolerance to glufosinate; NuCOTN33B (registered trademark) and Bollgard I (registered trademark), which are varieties of cotton expressing a CrylAc toxin; Bollgard II (registered trademark), which is a variety of cotton expressing CrylAc and Cry2Ab toxins; VIPCOT (registered trademark), which is a variety of cotton expressing a VIP toxin; NewLeaf (registered trademark), which is a variety of potato expressing a Cry3A toxin; NatureGard Agrisure GT Advantage (registered trademark) (a GA21 glyphosate-tolerant trait), Agrisure CB Advantage (registered trademark) (a Bt11 corn borer (CB) trait); and Protecta (registered trademark).

Further, the "crops" also include crops genetically engineered to produce a selectively acting anti-pathogenic substance. Examples of the anti-pathogenic substance include PR proteins (PRPs; described in EP-A-0392225); ion channel inhibitors, such as sodium channel inhibitors and calcium channel inhibitors (for example, KP1, KP4 and KP6 toxins, which are produced in viruses, are known); stilbene synthase; bibenzyl synthase; chitinase; glucanase; and substances produced by microbes, such as peptide antibiotics, heterocyclic antibiotics and plant disease resistance-related protein factors (referred to as plant disease resistance genes and described in WO 03/000906). Examples of the foregoing anti-pathogenic substances and genetically modified crops capable of producing these substances are described in EP-A-0392225, WO 95/33818, EP-A-0353191, etc.

Further, the "crops" also include crops provided with a useful trait such as an improved proportion of oil components and a higher amino acid content by a gene recombination technique. Examples of such a crop include VISTIVE (registered trademark), which is a variety of soybean engineered to have a reduced linolenic acid content, high-lysine corn, and high-oil corn.

Furthermore, the "crops" also include stacked varieties with a combination of two or more selected from the above-described classical herbicide-tolerant traits, herbicide-tolerant genes, insecticidal pest-resistance genes, anti-pathogenic substance-producing genes, and useful traits including an improved proportion of oil components and a higher amino acid content. When the harmful organism control composition of the present invention is used for crops modified to be tolerant to a herbicide, systematic and/or mixed treatment with the herbicide (e.g., glyphosate or its salts, glufosinate or its salts, dicamba or its salts, imazethapyr or its salts, isoxaflutole, etc.) and the harmful organism control composition of the present invention can control weeds and pests in an integrated manner.

When the harmful organism control composition of the present invention is used to control pests and diseases, the above-described active ingredient-containing formulation is optionally diluted or suspended in water etc., and its effective amount for pest and disease control is applied directly to harmful organisms, or to crops potentially infested

with the harmful organisms, or to soil or growing media for seeding the seeds of the crops by any of the usual methods. For example, in order to control harmful organisms that may damage crops such as fruit trees, cereals and vegetables, foliar application may be performed, and also seed treatment, such as dipping, dust coating, disinfection, and calcium peroxide coating of seeds, may be performed. Further, treatment of soil or the like may also be performed to allow plants to absorb agrochemicals through their roots. Examples of such treatment include whole soil incorporation, planting row treatment, bed soil incorporation, plug seedling treatment, planting hole treatment, plant foot treatment, top dressing, rice nursery box treatment, drench treatment, soil incorporation treatment, and submerged application. In addition, application to growing media in hydroponics, smoking treatment, trunk injection, and the like can also be performed. Furthermore, spray treatment of stored grain pests, house pests, sanitary pests, forest pests, etc. can be performed, and also coating, smoking, or baiting treatment of residential building materials can be performed. Exemplary methods of seed treatment include dipping of seeds in a diluted or undiluted fluid of a liquid or solid formulation for the permeation of agrochemicals into the seeds; mixing or dust coating of seeds with a solid or liquid formulation for the adherence of the formulation onto the surfaces of the seeds; coating of seeds with a mixture of a solid or liquid formulation and an adhesive carrier such as resins and polymers; and application of a solid or liquid formulation to the vicinity of seeds at the same time as seeding. The term "seed" in the seed treatment refers to a plant body which is in the early stages of cultivation and used for plant propagation. The examples include, in addition to what is called a seed, a plant body for vegetative propagation, such as a bulb, a tuber, a seed potato, a bulbil, a propagule, a discoid stem, and a stem used for cuttage.

The term "soil" or "growing medium" in the method for using the harmful organism control composition of the present invention refers to a support medium for crop cultivation, in particular, a support medium which allows crop plants to spread their roots therein, and the materials are not particularly limited as long as they allow plants to grow. Examples of the support medium include what is called soil, seedling mats, and water, and specific examples of the materials include sand, pumice, vermiculite, diatomite, agar, gelatinous substances, high-molecular-weight substances, rock wool, glass wool, wood chip, and bark.

Exemplary methods of the application of the harmful organism control composition of the present invention to crop foliage, grain pests, house pests, sanitary pests, forest pests, etc. include spray application of liquid formulations such as emulsifiable concentrates, suspension concentrates (flowables), oil-in-water emulsions (EW formulation), oil dispersions (OD formulation), suspoemulsions (SE), or microemulsions (ME), or solid formulations such as wettable powders or water-dispersible granules after appropriate dilution in water. Also included are application of dusts or smokes. Exemplary methods of soil application include application of a water-diluted or undiluted liquid or solid formulation to the foot of plants, the vicinity of planting points, nursery beds for seedlings, or the like; application of granules to the foot of plants, the vicinity of planting points, nursery beds for seedlings, or the like; application of dusts, wettable powders, water-dispersible granules, granules, or the like onto soil and subsequent incorporation of the formulation into the whole soil before seeding or transplanting; and application of dusts, wettable powders, water-dispersible granules, granules, or the like to planting holes, planting rows, or the like before seeding or planting. However, these are non-limiting examples.

When the harmful organism control composition of the present invention is used as a formulated product such as emulsifiable concentrates, suspension concentrates (flowables), oil-in-water emulsions (EW formulation), oil dispersions (OD formulation), suspoemulsions (SE), microemulsions (ME), soluble concentrates, wettable powders, water-dispersible granules, granules, dusts, or smokes, it can be understood that the application rate of the formulation may vary with various factors, for example, the purpose, the harmful organism to be controlled, the crop to be protected, the growing conditions of the crop, the weather, the environmental conditions, the formulation type, the application method, the application site, the application timing, the proportion of the active ingredients, the weather conditions, etc. In the case of spray treatment, the application rate of the active ingredient compound is usually selected from the range of 0.01 g to 2000 g, preferably 0.1 g to 500 g per hectare or per acre. In the case of soil or drench treatment, 1 g to 1000 g of the active ingredient can be applied to the soil surrounding the crops being grown by spraying or drenching. In seed treatment, the active ingredient can be used in an amount ranging from 0.01% to 50%, preferably from 0.1% to 10% of the seed weight. In the case where emulsifiable concentrates, wettable powders or the like are applied after dilution in water or the like, the concentration may be 0.00001 to 0.1%. Granules, dusts, or others including soluble concentrates for seed treatment are usually applied without dilution.

For field crops, such as potatoes, sweet potatoes, and soybeans, preferred is treatment of their seeds, growing media in the vicinity of plants, or the like in the period from seeding to seedling stage. In the case of plants for direct-seeding cultivation in the field, direct seed treatment is preferable, and plant foot treatment during cultivation is also preferable. Specifically, granule application or drench treatment with a formulation in a water-diluted or undiluted liquid form can be performed. Another preferable treatment is incorporation of granules into growing media before seeding. In the case of plants for transplant cultivation, preferable examples of the treatment in the period from seeding to seedling stage include direct seed treatment; drench treatment of nursery beds for seedlings with a formulation in a liquid form; and granule application to nursery beds for seedlings. Also included are treatment of planting holes with granules at the time of fix planting; and incorporation of granules into growing media in the vicinity of transplanting points at the time of

fix planting.

When the harmful organism control composition of the present invention is applied to rice, it may be applied to rice seeds, seedling growing media, paddy fields, or well-drained paddy fields. The rice seeds herein refer to rice seeds in a state before seeding in soil such as paddy fields. The paddy field mentioned above is a flooded or moist paddy field. The flooded paddy field refers to a paddy field that has been plowed, watered, and tilled, and further watered as necessary. The moist paddy field refers to a paddy field after drainage of the flooded paddy field. In the moist paddy field, the water content is maintained at the same level as that of the flooded paddy field, and the soil surface is exposed.

Rice seeds treated with the composition of the present invention can be cultivated by direct seeding in well-drained paddy fields, ill-drained paddy fields, or paddy fields, or by seeding in seedling growing media such as nursery boxes. The germination of rice seeds may be induced by immersing them in water or by keeping them moist after immersion in water. The "moist" means that part or the whole of the surface of rice seeds after immersion in water can be in contact with the outside air and the moisture of the rice seeds can be retained. For example, this can be achieved by covering rice seeds with a breathable material such as rice straw or cloth after immersion of the seeds in water, and sprinkling water on top of the covering material as needed, or by keeping rice seeds in a mesh or bag material that has been used for immersion of the seeds in water. The seedling growing medium is not particularly limited as long as it is a nursery soil for rice seedlings. Non-soil media, such as nursery boxes with seedling mats, paddy rice seedling trays, and nursery beds, may be used. Alternatively, pool nursery may be used for cultivation.

In the case of the application to nursery boxes for paddy rice, the type of the formulation of the composition of the present invention may vary depending on whether the application is performed at the time of seeding, in the greening period, at the time of transplanting, or the like. For example, dusts, water-dispersible granules, granules, or the like may be used in a manner appropriate for the application timing. Such a formulation can be applied by incorporation into nursery soil. For example, dusts, water-dispersible granules, granules, or the like may be incorporated into bed soil, covering soil, or the whole nursery soil. Simply, nursery soil and such a formulation may be alternately layered. The application at the time of seeding may be performed before seeding, concurrently with seeding, after seeding, or after soil covering. In the case of paddy rice, submerged application with granules etc. to paddy fields is often performed. The application timing is not particularly limited as long as the application is performed within the period from rice seeding to transplanting. For example, treatment may be performed before soil covering at the time of seeding, treatment may be performed after soil covering at the time of seeding, bed soil incorporation may be performed before seeding, covering soil incorporation may be performed before seeding, bed soil incorporation may be performed at the time of seeding, covering soil incorporation may be performed at the time of seeding, treatment may be performed during the greening period, treatment may be performed on the day of transplantation, and treatment may be performed concurrently with transplantation. The application may be performed within the period from 7 days before transplantation to the day before transplantation. The application may be performed at any time within the period from seeding to transplanting. The period from seeding to transplanting depends on whether seedlings are young (around 2.5-leaf stage), mid-stage (around 3.5-leaf stage), or mature (around 4.5-leaf stage) seedlings. The period of seedling growth may vary depending on weather conditions, but the application can be performed in any case. Kneaded or sand-coated granules of the composition of the present invention may be applied to nursery boxes. A diluted solution of the formulation of the composition may be applied to nursery boxes by drench treatment. The formulation of the composition of the present invention can be applied by incorporation into bed soil, covering soil, or nursery soil. For example, dusts, water-dispersible granules, granules, or the like can be incorporated into bed soil, covering soil, or the whole nursery soil. Simply, nursery soil and such a formulation may be alternately layered.

Exemplary methods of the application of the harmful organism control composition of the present invention to paddy fields include application of the composition as it is or as a formulated product to the foliage of rice plants for transplant cultivation; application of the composition to paddy soil during direct-seeding cultivation; and application of the composition to the water surface of flooded paddy fields. In the case of the application to rice foliage, the application may be performed at any time during the period from seedling stage to harvesting. The method of the application to paddy fields is not particularly limited. For example, dusts, microgranules, etc. may be applied as they are. Alternatively, solid formulations, such as suspension concentrates (flowables), concentrated emulsions (OW formulations), water-dispersible granules, wettable powders, jumbos, packs, and granules, or liquid formulations, such as suspoemulsions (SE), microemulsions (ME), water-soluble powders, water-soluble granules, soluble concentrates, oil-in-water emulsions (EW formulations), oils, a water surface spreading formulation, and emulsifiable concentrates, may be applied after dilution. Usually, such a formulation is applied to flooded paddy fields. In addition, at the time of rice planting, a suitable formulation can be applied onto or injected into soil as it is or after mixed with a fertilizer. In addition, the source of water inflow to paddy fields, such as a water inlet and an irrigation system, may be treated with emulsifiable concentrates, suspension concentrates (flowables), jumbos, or the like. In this case, the application to paddy fields can be accomplished with the supply of water and thus achieved in a labor-saving manner. In the case of using spraying equipment, it can be any equipment that is usually used, and examples include hand-operated sprayers, power sprayers, tractor mounted boom sprayers, radio-controlled helicopters, manned helicopters, radio-controlled boats, etc. Alternatively, the formulation can be sprayed manually without the use of equipment.

The method of the application of the harmful organism control composition of the present invention to paddy soil includes treatment of the soil in the entire paddy field (overall treatment); treatment in the furrows made for rice seeding (in-furrow treatment), treatment directly above (0 to 10 cm) or directly below (0 to 10 cm) rice seeds; and treatment in the vicinity of rice plants or seeds in a stripe or dot pattern (side dressing) . In the case of the application to paddy soil, the composition can be applied in a mixture with agricultural materials such as paste fertilizers, granular fertilizers, etc., or applied concurrently with these materials. The application of the composition may be performed before rice seeding or transplanting, at the same time as seeding or transplanting, or immediately after seeding or transplanting. When the composition is applied at the same time as seeding or transplanting, it may be applied using an attachment mounted on a seeding or transplanting machine, or applied in other ways . In the case of overall treatment, the composition may be applied in the period from after seeding or transplanting to watering, in the mid-drying period, or the intermittent irrigation period. When the composition is used, the soil surface of paddy fields may be dry, and the soil surface may be wet but not flooded (water depth: 0 cm). In the case of the application to the water surface of flooded paddy fields, the composition may be applied at any time during the period from after seeding or transplanting to harvesting, as long as the water depth is a level maintained under ordinary rice management.

When the harmful organism control composition of the present invention is applied to paddy fields and used for rice plants in direct-seeding cultivation, or when rice seeds treated with the composition are used for direct-seeding cultivation, rice seeds can be surface-treated with coating materials such as iron powder (iron oxide powder, reduced iron powder, atomized iron powder, electrolytic iron powder, etc.), calcium peroxide, and oxoanion-donating molybdenum compounds (molybdenum, molybdenum oxide, molybdic acid and its salts, molybdophosphoric acid and its salts, and molybdosilicic acid and its salts) . Examples of the salt of molybdic acid include calcium molybdate, magnesium molybdate, ammonium molybdate, sodium molybdate, and potassium molybdate. Examples of the salt of molybdophosphoric acid include ammonium molybdophosphate, sodium molybdophosphate, and potassium molybdophosphate. Other coating materials such as tungsten-containing materials, chromium-containing materials, selenium-containing materials, and tellurium-containing materials may also be applied for surface treatment. These coating materials can be used alone or mixed in any ratio. If necessary, auxiliaries such as calcined gypsum, montmorillonite, and other mineral powders can be added to increase the bulk of the coating material and improve the adherence to rice seeds. A mixture of calcium peroxide, calcined gypsum, and mineral powder is commercially available, and an example is Calper Dust Granule 16 (manufactured by Hodogaya UPL Co., Ltd.). The formulation of the composition of the present invention can be applied by dust coating of rice seeds. Alternatively, rice seeds can be treated by dipping them in a solution containing the composition before germination or by spraying a solution containing the compound after germination.

Any of the treatment methods described above can be used in combination with a phytotoxicity reducer (also known as a safener) such as 1,8-naphthalic anhydride, isoxadifen-ethyl, furilazole, cyprosulfamide, cyometrinil, dichlormid, fenchlorazole-ethyl, thiencarbazone-methyl, fenchlorazone-ethyl, fenclorim, fluxofenim, flurazole, benoxacor, metcamifen, or mefenpyr-diethyl.

When the harmful organism control composition of the present invention is used for herbicidal treatment, crops and/or the vicinity of the crops being grown can be treated with the composition. Therefore, the composition of the present invention is applied to, for example, an area where useful plants are grown by any of the usual methods such as foliar application and soil application. The application timing is not particularly limited unless the effects of the present invention are hindered. For example, the application timing may be from the pre-emergence stage through the end of the growing stage of useful plants. Alternatively, the application timing may be the pre-emergence stage, the emergence stage, the growing stage of weeds, etc. Specific examples of soil application include spraying or dusting the composition on the soil surface before the emergence of useful plants and before the emergence of weeds; spraying or dusting the composition over the soil surface from above after the emergence of useful plants and before the emergence of weeds; spraying or dusting the composition on the soil surface between ridges or between plants after the emergence of useful plants and before the emergence of weeds; and spraying or dusting the composition over the soil surface from above after the emergence of useful plants and after the emergence of weeds. Specific examples of the application of the composition of the present invention to the plant body of weeds to be controlled (foliar application) include spraying or dusting the composition over weed foliage from above before the emergence of useful plants and after the emergence of weeds; and spraying or dusting the composition over weed foliage from above after the emergence of useful plants and after the emergence of weeds. However, these are non-limiting examples.

In the present invention, the desired harmful organism control effect can be achieved by mixing formulations each containing a single active ingredient on site and applying the mixture according to any of the treatment methods described above. Alternatively, the desired harmful organism control effect can be achieved by applying individual formulations in the same period according to any of the treatment methods described above. The same time period here not only means that treatments with individual formulations are performed at the exact same time, but also means that there may be a time lag of, for example, about a week between the treatments. Further, the treatments can be performed according to different methods. Alternatively, the desired harmful organism control effect can be achieved by applying

individual formulations at an interval according to any of the treatment methods described above. The treatment interval here is not particularly limited as long as the effects of the present invention can be exerted. In general, the treatment interval is preferably 3 months or less, and particularly preferably 2 months or less, but is not limited thereto. In this case, the first treatment may be performed with any of the active ingredients, and each treatment may be performed according to a different method.

In addition, the composition of the present invention can be used as a harmful organism control agent for places other than farmland. For example, the composition of the present invention can be used to control common weeds in post-harvest land, fallow fields, ridges, farm roads, water channels, developed pasture land, cemeteries, parks, roads, playgrounds, clear spaces surrounding buildings, reclaimed land, sides of railway tracks, forests, etc., or to control the underbrush of fruit trees such as grapes, olives, etc., or to control basal shoots of grapes. In this case, it is economically most effective to treat weeds before their early post-emergence stage, but the timing is not necessarily limited to this, and it is also possible to control weeds in the growing stage.

## EXAMPLES

Hereinafter, representative Examples and Test Examples in relation to the present invention are shown, but the present invention is not limited thereto. In the Examples, "part (s) " means part(s) by mass.

Formulation Example 1. Emulsifiable concentrate formulation

| | |
|---|---|
| Compound [1-7] | 10 parts |
| Epoxiconazole | 0.2 part |
| Xylene | 69.8 parts |
| N-methylpyrrolidone | 10 parts |
| Mixture of polyoxyethylene nonylphenyl ether and calcium alkylbenzene sulfonate | 10 parts |

The above ingredients are homogeneously mixed for dissolution to give an emulsifiable concentrate formulation.

Formulation Example 2. Flowable formulation

| | |
|---|---|
| Compound [1-7] | 20 parts |
| Fluopyram | 2 parts |
| Sorpol 3105 (manufactured by Toho Chemical Industry Co., Ltd. Japan) | 5 parts |
| Propylene glycol | 5 parts |
| Rhodopol 23 (manufactured by Rhone-Poulenc) | 2 parts |
| Water | 66 parts |

The above ingredients are homogeneously mixed and then dispersed in water to give a flowable formulation.

Formulation Example 3. Flowable formulation

| | |
|---|---|
| Compound [1-5] | 10 parts |
| Fluopyram | 10 parts |
| Sorpol 3105 (manufactured by Toho Chemical Industry Co., Ltd. Japan) | 5 parts |
| Propylene glycol | 5 parts |
| Rhodopol 23 (manufactured by Rhone-Poulenc) | 2 parts |
| Water | 68 parts |

The above ingredients are homogeneously mixed and then dispersed in water to give a flowable formulation.

Formulation Example 4. Wettable powder formulation

| | |
|---|---|
| Compound [1-7] | 2 parts |
| Fludioxonil | 2 parts |
| Kaolin and synthetic high-dispersion silicic acid | 88 parts |
| Mixture of polyoxyethylene nonylphenyl ether and calcium alkylbenzene sulfonate | 8 parts |

The above ingredients are homogeneously mixed and then pulverized to give a wettable powder formulation.

Formulation Example 5. Wettable powder formulation

| | |
|---|---|
| Compound [1-5] | 5 parts |
| Pyraziflumid | 1 part |
| Hydrous silicic acid | 30 parts |
| HITENOL N08 (manufactured by Dai-Ichi Kogyo Seiyaku Co., Ltd.) | 5 parts |
| Calcium lignosulfonate | 3 parts |
| Clay for wettable powders | 56 parts |

The active compound is impregnated with hydrous silicic acid, and then homogeneously mixed with the other ingredients to give a wettable powder formulation.

Formulation Example 6. Emulsifiable concentrate formulation

| | |
|---|---|
| Compound [1-7] | 10 parts |
| Tebuconazole | 0.1 part |
| Xylene | 69.9 parts |
| N-methylpyrrolidone | 10 parts |
| Mixture of polyoxyethylene nonylphenyl ether and calcium alkylbenzene sulfonate | 10 parts |

The above ingredients are homogeneously mixed for dissolution to give an emulsifiable concentrate formulation.

Formulation Example 7. Emulsifiable concentrate formulation

| | |
|---|---|
| Compound [1-7] | 10 parts |
| Tebuconazole | 5 parts |
| Xylene | 65 parts |
| N-methylpyrrolidone | 10 parts |
| Mixture of polyoxyethylene nonylphenyl ether and calcium alkylbenzene sulfonate | 10 parts |

The above ingredients are homogeneously mixed for dissolution to give an emulsifiable concentrate formulation.

Formulation Example 8. Emulsifiable concentrate formulation

| | |
|---|---|
| Compound [1-5] | 10 parts |
| Fluxapyroxad | 0.1 part |
| Xylene | 69.9 parts |
| N-methylpyrrolidone | 10 parts |
| Mixture of polyoxyethylene nonylphenyl ether and calcium alkylbenzene sulfonate | 10 parts |

The above ingredients are homogeneously mixed for dissolution to give an emulsifiable concentrate formulation.

Formulation Example 9. Emulsifiable concentrate formulation

| | |
|---|---|
| Compound [1-7] | 5 parts |
| Fluxapyroxad | 5 parts |
| Xylene | 70 parts |
| N-methylpyrrolidone | 10 parts |
| Mixture of polyoxyethylene nonylphenyl ether and calcium alkylbenzene sulfonate | 10 parts |

The above ingredients are homogeneously mixed for dissolution to give an emulsifiable concentrate formulation.

Formulation Example 10. Emulsifiable concentrate formulation

| | |
|---|---|
| Compound [1-5] | 5 parts |
| Pyraclostrobin | 15 parts |
| Xylene | 60 parts |
| N-methylpyrrolidone | 10 parts |
| Mixture of polyoxyethylene nonylphenyl ether and calcium alkylbenzene sulfonate | 10 parts |

The above ingredients are homogeneously mixed for dissolution to give an emulsifiable concentrate formulation.

Formulation Example 11. Emulsifiable concentrate formulation

| | |
|---|---|
| Compound [1-7] | 10 parts |
| Pyraclostrobin | 0.3 part |
| Xylene | 69.7 parts |
| N-methylpyrrolidone | 10 parts |
| Mixture of polyoxyethylene nonylphenyl ether and calcium alkylbenzene sulfonate | 10 parts |

The above ingredients are homogeneously mixed for dissolution to give an emulsifiable concentrate formulation.

Formulation Example 12. Emulsifiable concentrate formulation

| | |
|---|---|
| Compound [1-7] | 1 part |
| Isoprothiolane | 10 parts |
| SP-3005X (manufactured by Toho Chemical Industry Co., Ltd. Japan) | 15 parts |
| Xylene | 44 parts |
| N-methylpyrrolidone | 30 parts |

The above ingredients are homogeneously mixed for dissolution to give an emulsifiable concentrate formulation.

Formulation Example 13. Dust formulation

| | |
|---|---|
| Compound [1-5] | 2 parts |
| Azoxystrobin | 2 parts |
| Clay powder | 81 parts |
| Diatomite powder | 15 parts |

The above ingredients are homogeneously mixed and then pulverized to give a dust formulation.

Formulation Example 14. Dust formulation

| | |
|---|---|
| Compound [1-7] | 2 parts |
| Azoxystrobin | 0.06 part |
| Clay powder | 82.94 parts |
| Diatomite powder | 15 parts |

The above ingredients are homogeneously mixed and then pulverized to give a dust formulation.

Formulation Example 15. Granule formulation

| | |
|---|---|
| Compound [1-5] | 5 parts |
| Orysastrobin | 5 parts |
| Mixture of bentonite powder and clay powder | 85 parts |
| Calcium lignosulfonate | 5 parts |

The above ingredients are homogeneously mixed. After addition of an appropriate volume of water, the mixture is kneaded, granulated and dried to give a granule formulation.

Formulation Example 16. Flowable formulation

| | |
|---|---|
| Compound [1-7] | 10 parts |
| Prothioconazole | 2.5 parts |
| Sorpol 3105 (manufactured by Toho Chemical Industry Co., Ltd. Japan) | 5 parts |
| Propylene glycol | 2 parts |
| Rhodopol 23 (manufactured by Rhone-Poulenc) | 1 part |
| Water | 79.5 parts |

The above ingredients are homogeneously mixed and then dispersed in water to give a flowable formulation.

Test Example 1

Test for preventive efficacy against rice blast in foliage application

The agrochemical formulations diluted to predetermined concentrations were applied to the foliage of rice plants

(variety: Kinmaze) at the five-leaf stage grown in individual pots. The application rate was 50 mL per pot. On the day following the application, the plants were spray-inoculated with a spore suspension of the rice blast fungus *Pyricularia oryzae* and kept at a temperature of 20°C and a humidity of 100%. At 6 days after the inoculation, the disease severity was indexed by the scale shown below. The results are shown in Table 3 below.

Disease severity index scale

0: No manifestation of disease
1: Lesion area percentage is 1 to 10%.
2: Lesion area percentage is 11 to 20%.
3: Lesion area percentage is 21 to 30%.
4: Lesion area percentage is 31 to 40%.
5: Lesion area percentage is 41 to 50%.
6: Lesion area percentage is 51 to 60%.
7: Lesion area percentage is 61 to 70%.
8: Lesion area percentage is 71 to 80%.
9: Lesion area percentage is 81 to 90%.
10: Lesion area percentage is 91 to 100%.

[Math. 1]

Control value (Ten-point scale) = (disease severity index in non-treatment plot - disease severity index in treatment plot) × 10 / disease severity index in non-treatment plot

In addition, the disease severity indices are substituted into the Colby's equation shown below (see Colby, S.R., Weeds 15: 20-22 (1967)) to determine the expected value E for the control efficacy of the mixed use.

[Math. 2]

$$\text{Expected value } E = X + Y - (X \times Y / 100)$$

Here, the expected value E represents the expected control efficacy (e.g., herbicidal, microbicidal, or insecticidal efficacy) of combined treatment with p g/ha of the compound represented by the general formula (I) and q g/ha of any of the active ingredients A to D; X represents the control efficacy of the treatment with p g/ha of the compound represented by general formula (I); and Y represents the control efficacy of the treatment with any of the active ingredients A to D (p and q in the above represent any given value). When the actual control efficacy of combined treatment with two different harmful organism control agents is greater than the expected value E, the combination can be regarded as having synergistic effect.

[Table 3-1]

Table 3-1 Preventive efficacy against rice blast in foliage application

| Agrochemicals | Concentration (ppm) | Control value | Expected value E calculated by Colby's equation |
|---|---|---|---|
| Compound [1-7] 5EC + Fluxapyroxad 6EC | 100 + 1 | 10 | 7.0 |
| | 100 + 0.3 | 10 | 7.0 |

(continued)

| Agrochemicals | Concentration (ppm) | Control value | Expected value E calculated by Colby's equation |
|---|---|---|---|
| Compound [1-7] 5EC + Tebuconazole 25EW | 100 + 1<br>100 + 0.3 | 9.0<br>9.0 | 7.0<br>7.0 |
| Compound [1-7] 5EC + Epoxiconazole 8EC | 100 + 8<br>100 + 2<br>100 + 0.5 | 10<br>10<br>10 | 10<br>7.9<br>7.0 |
| Compound [1-7] 5EC + Diflumetorim 10EC | 100 + 10 | 10 | 9.4 |
| Compound [1-7] 5EC + Fludioxonil 20SC | 100 + 10<br>100 + 3 | 10<br>10 | 9.7<br>8.8 |
| Compound [1-7] 5%EC | 100 | 7.0 | - |
| Fluxapyroxad 6EC | 1<br>0.3 | 0.0<br>0.0 | - |
| Tebuconazole 20SC | 1<br>0.3 | 0.0<br>0.0 | - |
| Epoxiconazole 8EC | 8<br>2<br>0.5 | 10<br>3.0<br>0.0 | -<br>- |
| Diflumetorim 10EC | 10 | 8.0 | - |
| Fludioxonil 20SC | 10<br>3 | 9.0<br>6.0 | - |

[Table 3-2]

Table 3-2

| Agrochemicals | Concentration (ppm) | Control value | Expected value E calculated by Colby's equation |
|---|---|---|---|
| Compound [1-7] 5EC + Azoxystrobin 20SC | 100+3<br>100 + 0.3 | 10<br>10 | 10<br>6.4 |
| Compound [1-7] 5EC + Prothioconazole 25EC | 100 + 25<br>100 + 0.3 | 10<br>9.0 | 9.6<br>8.0 |
| Compound [1-7] 5%EC | 100 | 6.0 | - |
| Azoxystrobin 20SC | 3<br>0.3 | 10<br>1.0 | - |
| Prothioconazole 25EC | 25<br>6.25 | 9.0<br>5.0 | - |

As a result of the test for preventive efficacy against rice blast in foliage application, the control efficacy of the composition composed of compound [1-7] in combination with fluxapyroxad, tebuconazole, epoxiconazole, diflumetorim, fludioxonil, azoxystrobin, or prothioconazole was greater than the expected value E calculated by Colby's equation from the control efficacy of the individual compounds. The synergistic effect was observed.

Under the same testing conditions as above, the treatment with 100 ppm of compound [1-7] alone showed a control efficacy of 7.0, and the treatment with fluopyram alone showed a control value of 0 regardless of the concentration.

Based on the values, the expected value calculated by Colby's equation was 6.0. Actually, the combined treatment with compound [1-7] and fluopyram (100 ppm + 10 ppm or 100 ppm + 3 ppm) showed no control efficacy (control value: 0.0), indicating strong antagonistic effect.

Example 2

Test for wheat speckled leaf blotch (*Septoria tritici*)

The agrochemical formulations diluted to predetermined concentrations were applied to wheat plants at a predetermined amount with a spray gun. After air-drying, the wheat plants were spray-inoculated with a spore suspension of the wheat speckled leaf blotch fungus *Septoria tritici* ($1.0 \times 10^7$ spores/mL). After that, the wheat pots were kept in a greenhouse under light conditions at 15°C and 100% RH to induce the development of the disease. At 17 days after the inoculation, the disease area percentage was indexed on a scale of 0 to 10 to evaluate the control efficacy. The control value is expressed in percentage (%) as shown below or in index form as in Example 1. The results are shown in Table 4.

Disease severity index scale

0: No manifestation of disease
1: Lesion area percentage is 1 to 10%.
2: Lesion area percentage is 11 to 20%.
3: Lesion area percentage is 21 to 30%.
4: Lesion area percentage is 31 to 40%.
5: Lesion area percentage is 41 to 50%.
6: Lesion area percentage is 51 to 60%.
7: Lesion area percentage is 61 to 70%.
8: Lesion area percentage is 71 to 80%.
9: Lesion area percentage is 81 to 90%.
10: Lesion area percentage is 91 to 100%.

[Math. 3]

Control value (%) = (disease severity index in non-treatment plot - disease severity index in treatment plot) × 100 / disease severity index in non-treatment plot

[Table 4-1]

Table 4-1 Control efficacy against wheat speckled leaf blotch

| Agrochemicals | Concentration (ppm) | Control value (%) | Expected value E calculated by Colby's equation |
|---|---|---|---|
| Compound [1-5] 5EC + Epoxiconazole 8EC | 100 + 10 | 88 | 88.9 |
| | 100 + 3.3 | 72 | 33.4 |
| | 100 + 1.1 | 66 | 20.3 |
| | 100 + 0.4 | 41 | 20.3 |

(continued)

| Agrochemicals | Concentration (ppm) | Control value (%) | Expected value E calculated by Colby's equation |
|---|---|---|---|
| Compound [1-5] 5EC + Pyraziflumid 20SC | 100 + 20<br>100 + 6.7<br>100 + 2.2<br>100 + 0.7<br>100 + 0.2 | 100<br>100<br>100<br>95<br>78 | 100<br>99.3<br>93.5<br>62.9<br>22.5 |
| Compound [1-5] 5EC + Fluxapyroxad 6EC | 100 + 6.0<br>100 + 2.0<br>100 + 0.67<br>100 + 0.22<br>100 + 0.07 | 100<br>100<br>98<br>94<br>91 | 99.9<br>99.7<br>94.6<br>89.3<br>87.0 |
| Compound [1-5] 5%EC | 100 | 20 | - |
| Epoxiconazole 8EC | 10<br>3.3<br>1.1<br>0.4 | 86<br>16<br>0<br>0 | - |
| Pyraziflumid 20SC | 20<br>6.7<br>2.2<br>0.7 | 100<br>99<br>92<br>53 | - |
| | 0.2 | 1 | |
| Fluxapyroxad 6EC | 6.0<br>2.0<br>0.67<br>0.22<br>0.07 | 99<br>98<br>65<br>31<br>16 | - |

[Table 4-2]

Table 4-2

| Agrochemicals | Concentration (ppm) | Control value | Expected value E calculated by Colby's equation |
|---|---|---|---|
| Compound [1-7] 5EC + Fluxapyroxad 6EC | 100 + 1 | 2.0 | 0.0 |
| Compound [1-7] 5EC + Tebuconazole 25EW | 100 + 1 | 2.0 | 0.0 |
| Compound [1-7] 5EC + Epoxiconazole 8EC | 100 + 10<br>100 + 3 | 8.0<br>2.0 | 6.0<br>0.0 |
| Compound [1-7] 5%EC | 100 | 0.0 | - |
| Fluxapyroxad 6EC | 1 | 0.0 | - |
| Tebuconazole 25EW | 1 | 0.0 | - |
| Epoxiconazole 8EC | 8<br>2 | 6.0<br>0.0 | - |

(continued)

| Agrochemicals | Concentration (ppm) | Control value | Expected value E calculated by Colby's equation |
|---|---|---|---|
| | | | |
| Agrochemicals | Concentration (ppm) | Control value | Expectedvaluecalculated Colby'sequationby |
| Compound [1-7] 5EC + Fluopyram 50SC | 100 + 10 | 6.8 | 1.5 |
| Compound [1-7] 5EC + Pyraziflumid 20SC | 100 + 2 | 10.0 | 6.6 |
| Compound [1-7] 5%EC | 100 | 1.5 | |
| Fluopyram 50SC | 10 | 0.0 | |
| Pyraziflumid 20SC | 2 | 6.0 | |

As a result of the test for efficacy against wheat speckled leaf blotch, the control efficacy of the composition composed of compound [1-5] or [1-7] in combination with fluxapyroxad, tebuconazole, epoxiconazole, fluopyram, or pyraziflumid was greater than the expected value E calculated by Colby' s equation from the control efficacy of the individual compounds. The synergistic effect was observed.

Test Example 3

Test for control efficacy against cucumber anthracnose

The agrochemical formulations diluted to predetermined concentrations were applied to the foliage of cucumber plants (variety: Suuyou) at the two-leaf stage grown in individual pots. On the day following the application, the plants were spray-inoculated with a spore suspension of the cucumber anthracnose fungus *Colletotrichum orbiculare* and kept at a temperature of 20°C and a humidity of 100%. At 8 days after the inoculation, the control value was determined according to the rating scale of Test Example 1. The results are shown in Table 5. The disease severity index in the non-treatment plot was 10.0.

[Table 5-1]

Table 5-1 Control efficacy against cucumber anthracnose

| Agrochemicals | Concentration (ppm) | Control value | Expected value E calculated by Colby's equation |
|---|---|---|---|
| Compound [1-7] 5EC + Fluxapyroxad 6EC | 100+1 | 5.0 | 2.0 |
| Compound [1-7] 5EC + Tebuconazole 25EW | 100 + 0.3 | 3.0 | 2.0 |
| Compound [1-7] 5EC + Epoxiconazole 8EC | 100 + 2<br>100 + 0.5 | 4.0<br>3.0 | 2.0<br>2.0 |
| Compound [1-7] 5EC + Fludioxonil 20SC | 100 + 10<br>100 + 3 | 10<br>9.0 | 9.6<br>7.6 |
| Compound [1-7] 5EC + Pyraclostrobin 25EC | 100 + 3 | 10 | 7.6 |
| Compound [1-7] 5EC + Diflumetorim 10EC | 100 + 10 | 10 | 3.6 |

(continued)

| Agrochemicals | Concentration (ppm) | Control value | Expected value E calculated by Colby's equation |
|---|---|---|---|
| Compound [1-7] 5%EC | 100 | 2.0 | - |
| Fluxapyroxad 6EC | 1 | 0.0 | - |
| Tebuconazole 25EW | 0.3 | 0.0 | - |
| Epoxiconazole 8EC | 2<br>0.5 | 0.0<br>0.0 | -<br>- |
| Fludioxonil 20SC | 10<br>3 | 9.5<br>7.0 | - |
| Pyraclostrobin 25EC | 3 | 7.0 | - |
| Diflumetorim 10EC | 10 | 2.0 | - |

[Table 5-2]

Table 5-2

| Agrochemicals | Concentration (ppm) | Control value | Expected value E calculated by Colby's equation |
|---|---|---|---|
| Compound [1-7] 5EC + Fluopyram 50SC | 100 + 10<br>100+3 | 8.0<br>8.0 | 6.0<br>5.0 |
| Compound [1-7] 5EC + Pyraziflumid 20SC | 100 + 2<br>100 + 0.5 | 9.0<br>8.0 | 5.0<br>5.0 |
| Compound [1-7] 5EC + Azoxystrobin 20SC | 100 + 3<br>100 + 0.3 | 10<br>10 | 9.0<br>6.0 |
| Compound [1-7] 5EC + Prothioconazole 25EC | 100 + 25<br>100 + 6.25 | 10<br>10 | 10<br>9.0 |
| Compound [1-7] 5%EC | 100 | 5.0 | - |
| Fluopyram 50SC | 10<br>3 | 2.0<br>0.0 | - |
| Pyraziflumid 20SC | 2<br>0.5 | 0.0<br>0.0 | - |
| Azoxystrobin 20SC | 3<br>0.3 | 8.0<br>2.0 | -<br>- |
| Prothioconazole 25EC | 25<br>6.25 | 10<br>8.0 | - |
| Non-treatment | - | - | - |

As a result of the test for preventive efficacy against cucumber anthracnose in foliage application, the control efficacy of the composition composed of compound [1-7] in combination with fluxapyroxad, tebuconazole, epoxiconazole, fludioxonil, pyraclostrobin, diflumetorim, fluopyram, pyraziflumid, azoxystrobin, or prothioconazole was greater than the expected value E calculated by Colby's equation from the control efficacy of the individual compounds. The synergistic effect was observed.

Test Example 4

Test for control efficacy against wheat leaf rust

The agrochemical formulations diluted to predetermined concentrations were applied to wheat plants at a predetermined amount with a spray gun. After air-drying, the wheat plants were spray-inoculated with a spore suspension of the leaf rust fungus *Puccinia recondita* ($1.0 \times 10^7$ spores/mL). After that, the wheat pots were kept in a greenhouse under light conditions at 15°C and 100% RH to induce the development of the disease. At 7 days after the inoculation, the disease area percentage was indexed on a scale of 0 to 10 to evaluate the control efficacy. The results are shown in Table 6.

[Table 6-1]

Table 6-1 Control efficacy against wheat leaf rust

| Agrochemicals | Concentration (ppm) | Control value | Expected value E calculated by Colby's equation |
|---|---|---|---|
| Compound [1-7] 5EC + Epoxiconazole 8EC | 100 + 2<br>100 + 0.5 | 10.0<br>10.0 | 10.0<br>8.1 |
| Compound [1-7] 5EC + Fludioxonil 20SC | 100 + 200<br>100 + 10<br>100 + 3 | 10.0<br>6.0<br>4.0 | 6.4<br>3.5<br>3.5 |
| Compound [1-7] 5EC + Pyraclostrobin 25EC | 100 + 3<br>100 + 1 | 10.0<br>9.5 | 9.4<br>6.8 |
| Compound [1-7] 5EC + Diflumetorim 10EC | 100 + 10 | 5.5 | 4.2 |
| Compound [1-7] 5%EC | 100 | 3.5 | - |
| Epoxiconazole 8EC | 2<br>0.5 | 10.0<br>7.0 | -<br>- |
| Fludioxonil 20SC | 200<br>10<br>3 | 4.0<br>0.0<br>0.0 | - |
| Pyraclostrobin 25EC | 3<br>1 | 9.0<br>5.0 | - |
| Diflumetorim 10EC | 10 | 1.0 | - |

[Table 6-2]

Table 6-2

| Agrochemicals | Concentration (ppm) | Control value | Expected value E calculated by Colby's equation |
|---|---|---|---|
| Compound [1-7] 5EC + Pyraziflumid 20SC | 100 + 2 | 4.0 | 2.8 |
| Compound [1-7] 5EC + Azoxystrobin 20SC | 100 + 3<br>100 + 0.3 | 10<br>9.0 | 9.1<br>1.0 |
| Compound [1-7] 5EC + Prothioconazole 25EC | 100 + 25<br>100 + 6.25 | 7.0<br>2.0 | 5.5<br>1.0 |

(continued)

| Agrochemicals | Concentration (ppm) | Control value | Expected value E calculated by Colby's equation |
|---|---|---|---|
| Compound [1-7] 5%EC | 100 | 1.0 | - |
| Pyraziflumid 20SC | 2 | 2.0 | - |
| Azoxystrobin 20SC | 3<br>0.3 | 9.0<br>0.0 | -<br>- |
| Prothioconazole 25EC | 25<br>6.25 | 5.0<br>0.0 | - |

As a result of the test for preventive efficacy against wheat leaf rust in (foliage) application, the control efficacy of the composition composed of compound [1-5] or [1-7] in combination with epoxiconazole, fludioxonil, pyraclostrobin, diflumetorim, pyraziflumid, azoxystrobin, fluxapyroxad, or prothioconazole was greater than the expected value E calculated by Colby's equation from the control efficacy of the individual compounds. The synergistic effect was observed.

Test Example 5

Test for control efficacy against cucumber gray mold

The agrochemical formulations diluted to predetermined concentrations were applied to the foliage of cucumber plants (variety: Suuyou) at the one-leaf stage grown in individual pots. The application rate was 50 mL per pot. On the day following the application, 6-mm-diameter paper disks were impregnated with a spore suspension of the cucumber gray mold fungus *Botrytis cinerea* cultured on PSA medium, and inoculated onto cucumber true leaves. The pots were kept at a temperature of 20°C and a humidity of 100%. At 6 days after the inoculation, the control value was determined by the equation 4 shown below. The results are shown in Table 7.

[Math. 4]

Control value (%) = (diameter of lesion area in non-treatment plot - diameter of lesion area in treatment plot) × 100 / diameter of lesion area in non-treatment plot

[Table 7]

**Table 7 Control efficacy against cucumber gray mold**

| Agrochemicals | Concentration (ppm) | Control value | Expected value E calculated by Colby's equation |
|---|---|---|---|
| Compound [1-7] 5EC + Epoxiconazole 8EC | 100 + 67 | 100<br>84 | 100<br>77 |
| Compound [1-7] 5EC + Fludioxonil 20SC | 100 + 22<br>100 + 7 | 100<br>74 | 79<br>49 |
| Compound [1-7] 5EC + Boscalid 50WG | 100 + 22<br>100 + 7<br>100 + 2 | 100<br>87<br>87 | 59<br>58<br>53 |
| Compound [1-7] 5EC + Fenhexamid 50SC | 100 + 200<br>100 + 22<br>100 + 7 | 100<br>60<br>64 | 76<br>49<br>49 |

(continued)

| Agrochemicals | Concentration (ppm) | Control value | Expected value E calculated by Colby's equation |
|---|---|---|---|
| Compound [1-7] 5%EC | 100 | 49 | - |
| Epoxiconazole 8EC | 200<br>67 | 100<br>55 | -<br>- |
| Fludioxonil 20SC | 22<br>7 | 59<br>0 | - |
| Boscalid 50WG | 22<br>7<br>2 | 20<br>18<br>8 | - |
| Fenhexamid 50SC | 200<br>22<br>7 | 53<br>0<br>0 | - |

As a result of the test for preventive efficacy against cucumber gray mold in foliage application, the control efficacy of the composition composed of compound [1-7] in combination with epoxiconazole, fludioxonil, boscalid, or fenhexamid was greater than the expected value E calculated by Colby' s equation from the control efficacy of the individual compounds. The synergistic effect was observed.

Test Example 6

Test for control efficacy against wheat powdery mildew

The agrochemical formulations prepared from the compounds of the present invention according to Formulation Examples are diluted to predetermined concentrations in water. The diluted agrochemical formulations are applied to the foliage of wheat plants (variety: Nourin No. 61) at the one- to two-leaf stage grown in individual pots of 6 cm in diameter. The application rate is 10 mL per pot. After air-drying, the wheat plants are inoculated by dusting with conidia of the wheat powdery mildew fungus *Blumeria graminis* and kept in a greenhouse. Such treatment can be expected to provide the same control efficacy as that shown in the results of the above test for control efficacy against wheat speckled leaf blotch.

As a result of the test for preventive efficacy against wheat powdery mildew in foliage application, the control efficacy of various compositions composed of compound [1-5] or [1-7] in combination with other agrochemicals is expected to be greater than the expected value E calculated by Colby's equation from the control efficacy of the individual compounds. The synergistic effect is expected.

Test Example 7

Test for control efficacy against tomato late blight

The agrochemical formulations diluted to predetermined concentrations were applied to the foliage of tomato plants (variety: Momotaro) at the six-leaf stage grown in individual pots. The application rate was 50 mL per pot. On the day following the application, the plants were spray-inoculated with a zoospore suspension of the tomato late blight fungus *Phytophthora infestans* and kept at a temperature of 20°C and a humidity of 100%. At 7 days after the inoculation, the control value was determined according to the rating scale of Test Example 2. The results are shown in Table 9 below.

[Table 9-1]

Table 9-1 Control efficacy against tomato late blight

| Agrochemicals | Concentration (ppm) | Control value | Expected value E calculated by Colby's equation |
|---|---|---|---|
| Compound [1-7] 5EC + Fluxapyroxad 6EC | 100 + 1 | 3.0 | 1.0 |
| Compound [1-7] 5EC + Tebuconazole 25EW | 100 + 1 | 3.0 | 1.0 |
| Compound [1-7] 5EC + Pyraclostrobin 25EC | 100 + 3 | 7.0 | 4.6 |
| Compound [1-7] 5%EC | 100 | 1.0 | - |
| Fluxapyroxad 6EC | 1 | 0.0 | - |
| Tebuconazole 25EW | 1 | 0.0 | - |
| Pyraclostrobin 25EC | 3 | 4.0 | - |

[Table 9-2]

Table 9-2

| Agrochemicals | Concentration (ppm) | Control value | Expected value E calculated by Colby's equation |
|---|---|---|---|
| Compound [1-7] 5EC + Pyraziflumid 20SC | 100 + 2 | 7.0 | 5.0 |
| Compound [1-7] 5EC + Azoxystrobin 20SC | 100 + 3<br>100 + 0.3 | 10<br>10 | 6.0<br>5.0 |
| Compound [1-7] 5EC + Prothioconazole 25EC | 100 + 25 | 6.0 | 5.0 |
| Compound [1-7] 5%EC | 100 | 5.0 | - |
| Pyraziflumid 20SC | 2 | 0.0 | - |
| Azoxystrobin 20SC | 3<br>0.3 | 2.0<br>0.0 | -<br>- |
| Prothioconazole 25EC | 25 | 0.0 | - |

As a result of the test for preventive efficacy against tomato late blight in foliage application, the control efficacy of the composition composed of compound [1-7] in combination with any of the indicated agrochemicals was greater than the expected value E calculated by Colby' s equation from the control efficacy of the individual compounds. The synergistic effect is expected.

Test Example 8

Test for control efficacy against *Plutella xylostella*

*Brassica oleracea* var. *capitata* (variety: YR Seitoku) seedlings were planted in a glass greenhouse, and after reaching the 12- to 15-leaf stage, the seedlings were inoculated with 3rd-instar larvae of *Plutella xylostella.* The number of surviving larvae per three plants before agrochemical treatment was counted. A mixed formulation of compound [1-2] and flubendiamide (prepared according to Formulation Example 5) and each individual agrochemical were separately diluted to predetermined concentrations in water and applied to the *Brassica oleracea* var. *capitata* plants. The number of surviving larvae was counted at 2 and 6 days after the application, and the control efficacy was calculated by the equation 5 shown below. In addition, the expected value E was calculated by Colby's equation as described in Test

Example 1. The results are shown in Table 10 below.

[Math. 5]

$$\text{Control efficacy (\%)} = 100 - \{(Ta \times Cb)/(Tb \times Ca)\} \times 100$$

Ta = number of survivors after agrochemical treatment in treatment plot

Tb = number of survivors before agrochemical treatment in treatment plot

Ca = number of survivors after agrochemical treatment in non-treatment plot

Cb = number of survivors before agrochemical treatment in non-treatment plot

[Table 10]

Table 10 Control efficacy against *Plutella xylostella*

| Agrochemicals | Concentration (ppm) | Grade | Expected value E calculated by Colby's equation |
|---|---|---|---|
| Compound [1-7] 5EC + Pyraclostrobin 25EC | 100 + 50 | A | A |
| | 100 + 10 | A | ≦C |
| Compound [1-7] 5%EC | 100 | No grade | - |
| Pyraclostrobin 25EC | 50 | A | - |
| | 10 | No grade | - |

As a result of the test for control efficacy against *Plutella xylostella,* the control efficacy of the composition composed of compound [1-7] in combination with pyraclostrobin was greater than the expected value E calculated by Colby' s equation from the control efficacy of the individual compounds. The synergistic effect was observed. Grading was performed as described in Test Example 9 below.

Test Example 9

Test for control efficacy test against *Laodelphax striatellus*

Adults of the test insect were released onto rice plants (variety: Kinmaze, 95 days after transplantation) grown in individual 2-L pots (8 females and 5 males per pot). At 11 days after the insect release (when hatched larvae were observed), mixed formulations of compound [1-7] and other agrochemicals and each individual agrochemical (prescribed effective doses) were separately applied. After air-drying and at 10 days after the agrochemical treatment, adults of the test insect were additionally released onto the rice plants (8 females and 5 males per pot). At 30 days after the agrochemical treatment, the number of survivors was measured, and the control value was calculated by equation 6. In addition, the expected value E for the mixed use was calculated by Colby's equation as described in Test Example 1. The results are shown in Table 11 below. When the actual control efficacy of combined treatment with two different agrochemicals is greater than the expected value E, the combination can be regarded as having synergistic effect.

[Math. 6]

$$\text{Control value (\%)} = (1 - \text{number of survivors} / \text{number of survivors in control plot}) \times 100$$

Grading:

Grades based on control value

A 100%
B 90 to 90%
C 70 to 89%
D 50 to 69%

No grade less than 50%

Assuming that the control value for "no grade" is 49%, when the control values of the two different agrochemicals are both 49%, the expected value E calculated by Colby's equation is as follows: E = (49 + 49) - (49 × 49 / 100) = 73.99. The control value of 73.99 corresponds to grade C. Therefore, when both the agrochemicals are graded as no grade, the expected value is ≤ C.

[Table 11]

Table 11 Control efficacy against *Laodelphax striatellus*

| Agrochemicals | Concentration (ppm) | Grade | Expected value calculated by Colby's equation |
|---|---|---|---|
| Compound [1-7] 5EC + Azoxystrobin 10SC | 100 + 500 | A | ≦C |
| | 100 + 100 | A | ≦C |
| Compound [1-7] 5EC + Pyraclostrobin 25EC | 100 + 50 | A | A |
| | 100 + 10 | A | ≦C |
| Compound [1-7] 5%EC | 100 | No grade | - |
| Azoxystrobin 10SC | 500 | No grade | |
| | 100 | No grade | - |
| Pyraclostrobin 25EC | 50 | A | - |
| | 10 | No grade | - |

As a result of the test for control efficacy against *Laodelphax striatellus,* the control efficacy of the composition composed of compound [1-7] in combination with pyraclostrobin or azoxystrobin was greater than the expected value E calculated by Colby's equation from the control efficacy of the individual compounds. The synergistic effect was observed.

INDUSTRIAL APPLICABILITY

The composition of the present invention is highly effective in controlling a wide range of harmful organisms and thus is useful. The composition of the present invention, due to synergistic effects of the active ingredients, is particularly useful for controlling pesticide-resistant diseases and for preventing pesticide resistance development in agricultural and horticultural diseases.

## Claims

1. A harmful organism control composition comprising:

   a first active ingredient being a compound represented by general formula (I):

   [Chem. 1]

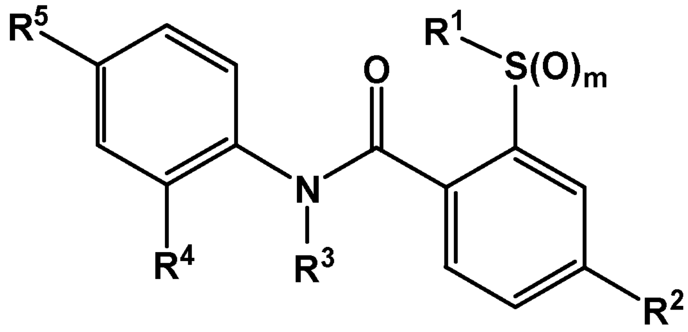

(I)

   {wherein

   $R^1$ represents a ($C_1$-$C_6$) alkyl group,
   $R^2$ represents a halogen atom, a halo ($C_1$-$C_6$) alkyl group, or a ($C_3$-$C_6$) cycloalkyl group,
   $R^3$ represents a hydrogen atom, a ($C_1$-$C_6$) alkylcarbonyl group, a ($C_1$-$C_6$) alkoxycarbonyl group, or a ($C_3$-$C_6$) cycloalkylcarbonyl group,
   $R^4$ represents a halogen atom, a ($C_1$-$C_6$) alkoxy group, or a ($C_1$-$C_6$) alkoxycarbonyl group,
   $R^5$ represents a halogen atom, a ($C_1$-$C_6$) alkyl group, a halo ($C_1$-$C_6$) alkyl group, a halo ($C_1$-$C_6$) alkoxy group, or a ($C_3$-$C_6$) cycloalkyl group, and
   m represents an integer of 0, 1, or 2}, or

   a salt thereof; and
   a second active ingredient being one or more other compounds having harmful organism control activity or salts thereof.

2. The harmful organism control composition according to claim 1, wherein the first active ingredient is the compound of general formula (I) or a salt thereof wherein $R^1$ represents a ($C_1$-$C_6$) alkyl group, $R^2$ represents a halogen atom or a halo ($C_1$-$C_6$) alkyl group, $R^3$ represents a hydrogen atom or a ($C_1$-$C_6$) alkylcarbonyl group, $R^4$ represents a halogen atom or a ($C_1$-$C_6$) alkoxycarbonyl group, $R^5$ represents a halo ($C_1$-$C_6$) alkyl group or a halo ($C_1$-$C_6$) alkoxy group, and m represents 2.

3. The harmful organism control composition according to claim 1 or 2, wherein the first active ingredient is the compound of general formula (I) or a salt thereof wherein $R^2$ represents a halo ($C_1$-$C_6$) alkyl group, and $R^5$ represents a halo ($C_1$-$C_6$) alkoxy group.

4. The harmful organism control composition according to any one of claims 1 to 3, wherein the one or more other compounds having harmful organism control activity are one or more compounds having insecticidal activity or salts thereof.

5. The harmful organism control composition according to any one of claims 1 to 3, wherein the one or more other compounds having harmful organism control activity are one or more compounds having microbicidal activity or salts thereof.

6. The harmful organism control composition according to any one of claims 1 to 3, wherein the one or more other compounds having harmful organism control activity are one or more biopesticides.

**7.** The harmful organism control composition according to any one of claims 1 to 6, wherein the amount of the one or more other compounds having harmful organism control activity is 0.01 to 5000 parts by mass relative to 1 part by mass of the compound represented by general formula (I) or a salt thereof.

**8.** A method for using a harmful organism control composition, the method comprising treating a harmful organism, a useful plant, a seed of the useful plant, soil, or growing medium with an effective amount of the harmful organism control composition according to any one of claims 1 to 7 to protect the useful plant from the harmful organism.

**9.** A method for controlling a harmful organism, the method comprising applying an effective amount of the harmful organism control composition according to any one of claims 1 to 7 to a crop, a seed of the crop, soil, or growing medium.

## INTERNATIONAL SEARCH REPORT

International application No. PCT/JP2019/042975

A. CLASSIFICATION OF SUBJECT MATTER
Int.Cl. [see extra sheet]

According to International Patent Classification (IPC) or to both national classification and IPC

B. FIELDS SEARCHED

Minimum documentation searched (classification system followed by classification symbols)
Int.Cl. A01N47/08, A01M1/00, A01N37/24, A01N37/50, A01N43/28, A01N43/36, A01N43/40, A01N43/54, A01N43/56, A01N43/60, A01N43/653, A01N47/02, A01N47/24, A01P3/00, A01P5/00, A01P7/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | WO 2015/72463 A1 (NIHON NOHYAKU CO., LTD.) 21 May 2015, claims 1-20, paragraph [0113] & EP 3070076 A1, claims 1-20, paragraph [0087] & CN 105722822 A | 1-9 |
| Y | WO 2016/182021 A1 (NIHON NOHYAKU CO., LTD.) 17 November 2016, claims 1-7, paragraph [0148] & EP 3296291 A1, claims 1-7, paragraph [0087] & CN 107531622 A | 1-9 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18.11.2019 | 03.12.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/042975

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2017-226638 A (NIHON NOHYAKU CO., LTD.) 28 December 2017, claim 1, paragraph [0078]<br>(Family: none) | 1-9 |
| Y | JP 2005-272443 A (NISSAN CHEMICAL INDUSTRIES, LTD.) 06 October 2005, claim 1<br>(Family: none) | 1-9 |
| Y | JP 2013-500981 A (MARRONE BIO INNOVATIONS, INC.) 10 January 2013, claim 1, paragraph [0003]<br>& WO 2011/014596 A2, claim 1, page 2, lines 27-30, & EP 2461695 A1 | 1-9 |
| Y | JP 2015-160813 A (KUMIAI CHEMICAL INDUSTRY CO., LTD.) 07 September 2015, claim 1<br>(Family: none) | 1-9 |

Form PCT/ISA/210 (continuation of second sheet) (January 2015)

**INTERNATIONAL SEARCH REPORT**

International application No.
PCT/JP2019/042975

(Continuation of Box No. A)

A01N47/08(2006.01)i, A01M1/00(2006.01)i, A01N37/24(2006.01)i, A01N37/50(2006.01)i, A01N43/28(2006.01)i, A01N43/36(2006.01)i, A01N43/40(2006.01)i, A01N43/54(2006.01)i, A01N43/56(2006.01)i, A01N43/60(2006.01)i, A01N43/653(2006.01)i, A01N47/02(2006.01)i, A01N47/24(2006.01)i, A01P3/00(2006.01)i, A01P5/00(2006.01)i, A01P7/04(2006.01)i

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015072463 A
- WO 2016182021 A
- JP 2017226638 A
- JP 2007191401 A
- JP H09104606 A
- CN 103461388
- JP H09075070 A
- JP H07069824 A
- JP 2009153526 A
- JP 5807950 B
- CN 104293677
- CN 105112295
- JP 2009051771 A
- JP 2007084476 A
- JP 2003300805 A
- JP 2015504905 A
- US 6406690 B
- US 5733544 A
- US 5906818 A
- US 6001637 A
- US 5919447 A
- US 5645831 A
- JP 2016534737 A
- JP H5284963 A
- WO 9305656 A
- JP 2004180626 A
- JP H8119817 A
- JP H9140373 A
- WO 2007100162 A
- US 20120114610 A
- JP 2007332147 A
- JP 2010516667 A
- US 6524577 B
- US 6682925 B
- EP 0374753 A
- WO 9307278 A
- WO 9534656 A
- EP 0427529 A
- EP 451878 A
- WO 03052073 A
- EP 0392225 A
- WO 03000906 A
- WO 9533818 A
- EP 0353191 A


### Non-patent literature cited in the description


- The Pesticide Manual. British Crop Production Council, 2015
- *The IR-4 Project Biopesticide and Organic Database for Integrated Pest Management, http://ir4app.rutgers.edu/biopestPub/labelResult2.aspx*
- Curvularia lunata. *Weed Research,* 1987, vol. 27, 43-47
- *Biological Control,* 2008, vol. 45, 288-296
- *J Nematol.,* June 2006, vol. 38 (2), 233-239
- *World J. Microbiol. Biotechn.,* 2007, vol. 23 (6), ISSN 0959-3993, 845-851
- *Braz. Arch. Biol. Technol.,* vol. 46 (1), 13-18
- *Appl. Environ. Microbiol.,* 2011, vol. 77 (15), 5513-5516
- *Applied Microbiology,* November 1973, vol. 26 (5), 699-704
- Tobimushi to Densensei Shokubutsu Byogenkin) (in Japanese). Kagaku to Seibutsu, 2013, vol. 51, 267-269
- *Proc. Natl. Acad. Sci. USA,* 1990, vol. 87, 7175-7179
- *Weed Science,* 2005, vol. 53, 728-746
- **GURA T.** Repairing the Genome's Spelling Mistakes. *Science,* 1999, vol. 285, 316-318
- **COLBY, S.R.** *Weeds,* 1967, vol. 15, 20-22